(19) **Europäisches Patentamt**

**European Patent Office**

**Office européen des brevets**

(11) **EP 1 477 921 A1**

(12) **EUROPEAN PATENT APPLICATION**

(43) Date of publication:
**17.11.2004 Bulletin 2004/47**

(51) Int Cl.⁷: $G06F\ 17/60$

(21) Application number: **04252847.1**

(22) Date of filing: **17.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **16.05.2003 US 470894 P**
**17.05.2003 US 471146 P**
**18.03.2004 US 802741**

(71) Applicant: **Emirates**
**Dubai (AE)**

(72) Inventors:
• **Venkat, Ramesh**
**Al Ghurair City Diera Dubai (AE)**

• **Anantharaman, Ramesh**
**Dubai (AE)**
• **Guntreddy, Bhaskara Rao**
**Al Ghusais Dubai (AE)**
• **Mohammed, Suraj**
**Sharjaj (AE)**
• **Joseph, Reuben, Flat No. 201**
**Dubai (AE)**

(74) Representative: **Garratt, Peter Douglas et al**
**Mathys & Squire**
**100 Gray's Inn Road**
**London WC1X 8AL (GB)**

(54) **Airline revenue planning and forecasting system and method**

(57) A system and method for estimating airline demand includes (1) accessing capacity data for a previous N years at a Point of Sale (POS) level, time period level and an Origin and Destination (O&D) level, (2) accessing flown data for a previous M years at the POS level, time period level, and O&D level, (3) accessing capacity data for a forecasting period that extends beyond a time when reservation information is available (e.g., beyond twelve months), (4) calculating at least one of actual growth factor and market growth factor, (5) deriving an effective growth based on the flown data, the capacity data for the previous N years, the capacity data for the forecasting period and the at least one of the actual growth and the market growth, and (6) generating a passenger demand forecast for a budget year based on the effective growth. The time period level is any of daily, weekly, or monthly. The capacity data includes compartment level data. The flown data includes compartment level data. A set of weighting factors may be applied to the flown data and the market data to derive the at least one of actual growth and market growth. The weighting factors may include seasonality factors. Previous year's capacity is compared to budget year capacity. In one embodiment, N = M. In some cases, N = 1. Average fares (yield) for the budget year are also estimated.

FIG. 1

EP 1 477 921 A1

**Description**

BACKGROUND OF THE INVENTION

Field of the Invention

The present invention relates to airline revenue planning, and more particularly, to an airline revenue and yield forecasting and planning system using linear programming techniques.

Description of the Related Art

Revenue management systems seek to maximize the revenue generated from a fixed service or productive capacity by selectively accepting or denying requests for capacity. For example, airlines have a network of flights with a set of seats available for sale on a given day, and customers request seats in advance of travel for various itineraries on the network. Based on the current reservations already accepted for each flight (alternatively, on the remaining capacity available), the time remaining in the sales horizon and forecasts of future demand for itineraries, airlines must decide which itineraries and fare classes to accept, and which to deny (or close out).

These decisions are detailed and complex because future demand is typically uncertain, and one must evaluate complex tradeoffs between the current and future value of capacity. Therefore, revenue management decisions are typically made, or guided by, a software system (revenue management system or revenue planning system) that incorporates a variety of advanced statistical and mathematical methods. Revenue management is widely used in the airline, hotel, car-rental, energy, natural gas pipelines, broadcasting, shipping, sports, entertainment facilities, manufacturing, equipment leasing and cargo industries. Indeed, the practice is applicable in any industry that has limited short-term capacity flexibility and variable demand.

A variety of mathematical models have been used to solve the problem of deciding which requests to accept or deny based on current capacity and forecasts of future demand. However, regardless of the mathematical model and assumptions used, revenue management software systems ultimately need an internal control logic to implement the accept/deny recommendations.

SUMMARY OF THE INVENTION

The present invention is directed to an airline revenue planning and forecasting system and method that substantially obviates one or more of the problems and disadvantages of the related art.

In one aspect there is provided a system, computer program product and method of optimizing airline revenue that includes the steps of accessing passenger and capacity constraints for a plurality of legs of a network, accessing fares for each leg, and performing a network-level linear optimization to derive a demand solution that maximizes network revenue.

The present invention also provides a system, computer program product and method for estimating airline demand including (1) accessing capacity data for a previous N years at a Point of Sale (POS) level, time period level and an Origin and Destination (O&D) level, (2) accessing flown data for a previous M years at the POS level, time period level, and O&D level, (3) accessing capacity data for a forecasting period that extends beyond twelve months, (4) calculating an actual growth factor and/or a market growth factor, (5) deriving an effective growth based on the capacity data for the previous N years, the capacity data for the forecasting period and the actual growth and/or the market growth, and (6) generating a passenger demand forecast for a budget year based on the effective growth. The time period level may be daily, weekly, or monthly. The capacity data can include compartment level data. The flown data can include compartment level data. A set of weighting factors may be applied to the flown data and the market data to derive the actual growth and/or market growth. The weighting factors may include seasonality factors. Previous year's capacity is compared to budget year capacity. In one embodiment, N = M. In some cases, N = 1. Average fares (yield) for the budget year are also estimated.

The present invention also provides a system, computer program product and method of setting sales targets for an airline that includes (1) estimating PAX demand and demand fares, (2) performing linear optimization on a network level to maximize overall network revenue based on the PAX demand and the demand fares and capacity constraints, and (3) generating PAX target and target fares for each POS for each O&D, compartment and month based on the maximized network revenue. Target fares may be calculated based on fare type, such that the fare type includes one-way fares, return fares, excursion fares, three month advance fares, and six month advance fares. Target fares may be calculated based on market segment. The market segment includes tour operator, customer type, internet bookings, holiday travelers and/or frequent flyers. Generating PAX target and target fares for each POS for each O&D, compartment and month is based on the maximized network revenue and is done on a time period level. The time period level can be daily, weekly or monthly. Generating PAX target and target fares takes into account market segments (i.e., customer type, frequent flyer, tour operators, internet bookings, holiday travelers). PAX target and target fares may be generated at a single travel agent level and/or at a sales executive/supervisor level. Targets may be generated based on a flight level (i.e., an itinerary level). The linear optimization may also take seasonality into account, may balance inbound to outbound traffic. Industry travel demand may also be excluded from the optimization step. Sensitivity analysis may be performed to determine fares at which rejected demand should be accepted. Additionally, in one embodiment, network revenue is unaffected by acceptance of rejected demand. Results of sensitivity analysis may be displayed, including rejected demand and minimum average fare for accepting the rejected demand.

The present invention also provides a system, computer program product and method of generating demand targets, including identifying network route demand, identifying currency value of the network route demand, and deciding whether a POS should adopt a volume based on a value-based strategy. Displaying routes of the network and color coding them is based on the selected strategy. The routes may be superimposed on a map. The routes may be shown as a hub and spoke diagram. Only routes of the network that account for at least X% of total network revenue could be displayed, if desired. The network may be a hub and spoke network, or a point-to-point network.

Additional features and advantages of the invention will be set forth in the description that follows. Yet further features and advantages will be apparent to a person skilled in the art based on the description set forth herein or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are incorporated in and constitute a part of this specification, illustrate exemplary embodiments of the invention and together with the description serve to explain the principles of the invention. A list of abbreviations used in describing the drawing is provided below in the Detailed Description section. In the drawings:

FIG. 1 shows building blocks of a revenue plan.
FIG. 2 shows a Revenue Plan Interface.
FIG. 3 shows a sample data granularity & span table used by a Revenue Planning System (RPS).
FIG. 4 shows an I-P-O (Input-Process-Output) of a Data Synchronization process.
FIG. 5 shows an I-P-O of Re-forecasting.
FIG. 6 shows an I-P-O of Near Period Re-forecasting.
FIG. 7 shows selected examples of special modeling cases.
FIG. 8 shows an I-P-O for Far Period Re-forecasting.
FIG. 9 shows special cases of when Passenger Growth and Capacity Growth have contrasting indicators.
FIGS. 10 and 11A show principles of Yield Re-forecasting.
FIGS. 11B and 11C show Re-forecasting Summary reports.
FIGS. 12-15U show various reports related to Re-forecasting.
FIG. 16 shows PAX Re-forecasting constraining logic.
FIGS. 17-24 show comparative results for a Yield Re-forecast Model and illustrate Yield Re-forecasting effectiveness measurement.
FIG. 25 shows an example of Re-forecast performance of a major POS.
FIGS. 26A-26H illustrate the process of using E-dialogue to arrive at a set of targets, and various features of E-dialogue functionality in the process of setting up a Revenue Plan.
FIG. 27 shows an I-P-O for PAX Demand Estimation.
FIG. 28 shows a PAX Demand Estimation logic flow chart.
FIGS. 29A-29D are screen shots that illustrate details of calculating PAX demand.
FIG. 29E illustrates capacity highlights together with new destinations.
FIG. 30 shows an example of a PAX Demand Estimation effectiveness graph.
FIG. 31A shows an I-P-O for Yield Demand Estimation.
FIG. 31B shows a graph illustrating average fare (yield) growth.
FIG. 32 shows an example of a Yield Demand Estimation.
FIG. 33 shows an example of a Yield Demand Estimation effectiveness graph.
FIG. 34 shows an example of a display of growth factors for all the O&Ds for the POSs by region and month selected.
FIG. 35 shows an example of a Yield Growth report.
FIG. 36A shows an example of the Detail and Summary report with the final demand for the months in cross tab fashion.

**FIG. 36B** summarizes the demand estimation process.

**FIG. 37** shows a Linear Programming Optimization (LPO) Model Derivation process.

**FIG. 38** shows an I-P-O of an Optimization process.

**FIG. 39** shows a Linear Programming Optimal Curve.

**FIG. 40** shows an LPO (Linear Programming Optimizer) Model Tree.

**FIG. 41** shows a sample airline route network.

**FIG. 42A** shows a Rejected Demand Report.

**FIG. 42B** summarizes the Optimization Process.

**FIG. 43** shows a Pre-Optimization Process.

**FIG. 44** shows a Post Optimization Process.

**FIG. 45** shows a diagram of users of RPS output.

**FIG. 46** shows a Revenue Plan Report.

**FIG. 47** shows a Fully Rejected Demand Report.

**FIG. 48** shows a Partially Accepted Demand Report.

**FIGS. 49AA-49AB** show a Regional Summary Report for PAX, yield and revenue.

**FIG. 49B** shows a Regional Report for Europe and North America only.

**FIG. 49C** shows a Network Summary Report for PAX, yield and revenue.

**FIGS. 49D-49E** show a Commercial Target Report.

**FIGS. 50A-51B** illustrate additional aspects of the Commercial Target Report.

**FIGS. 52A** and **52B** shows a Commercial Target Report - Outstation.

**FIG. 53** shows an O&D Capacity Comparison Report.

**FIG. 54** shows a Sector Yield Report.

**FIG. 55** shows a Quick Target Report.

**FIG. 56** shows a POS Revenue Variance Report.

**FIGS. 57** and **58** show the variance matrix in graphical form.

**FIGS. 59A** and **59B** show a Route-wise and Yield and Seat Factor (SF) Report.

**FIGS. 60A** and **60B** show a frequency distribution of fares in graphical form.

**FIGS. 61-64A** illustrate fare type details for a single Point of Sale.

**FIG. 64B** summarizes a Core Market strategy selection process.

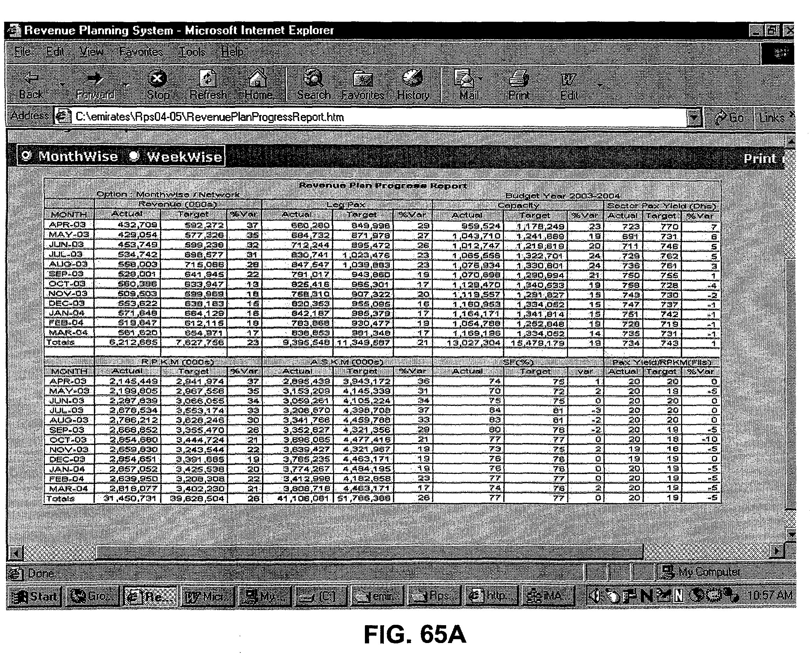

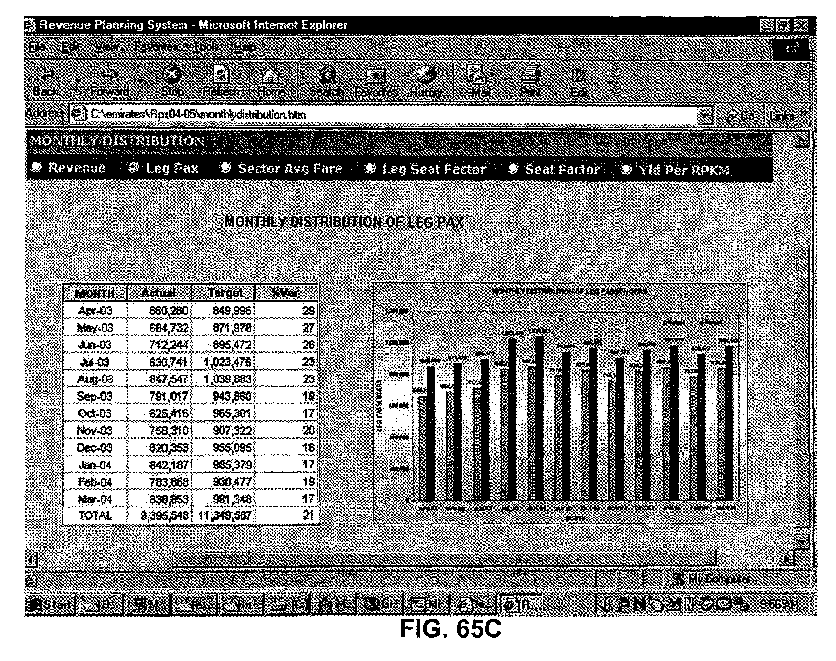

] **FIG. 65A** shows a Revenue Plan Progress Report.

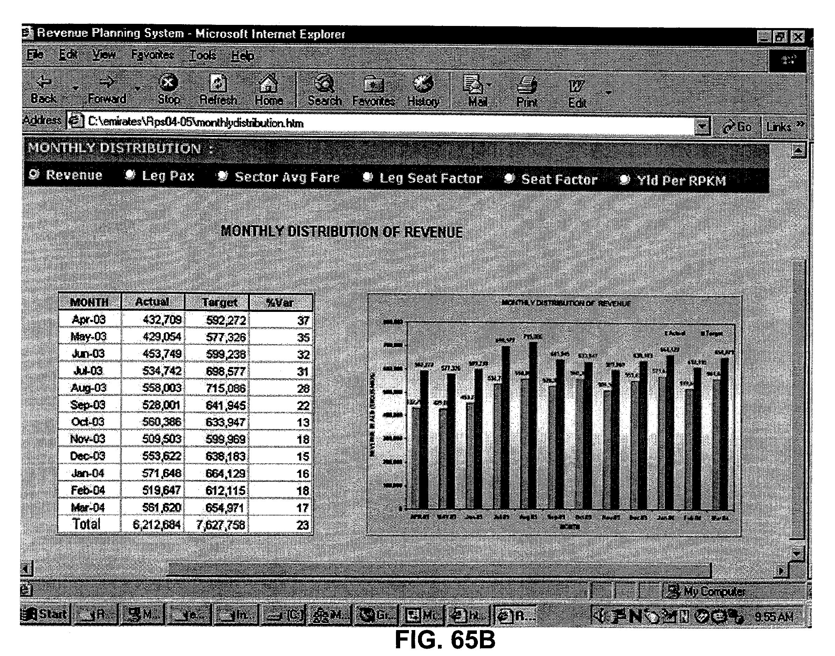

] **FIGS. 65B-65G** show examples of monthly distribution reports.

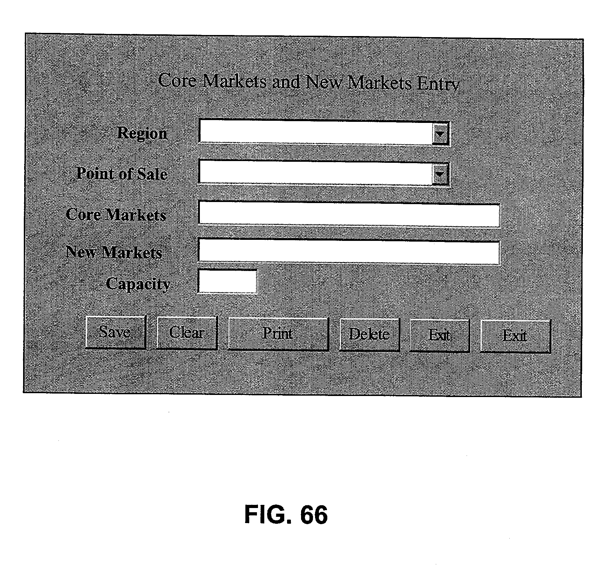

**FIG. 66** shows a Core Markets and New Markets entry screen.

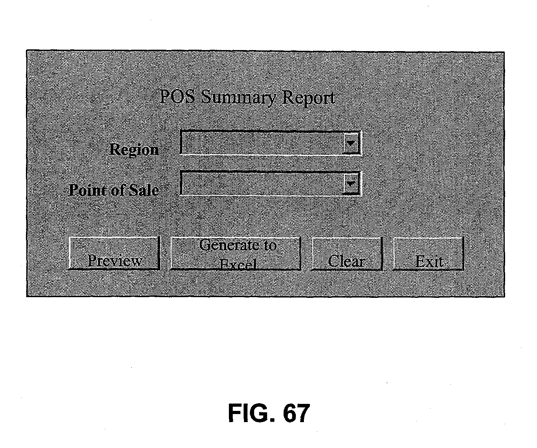

**FIG. 67** shows a POS summary report entry screen.

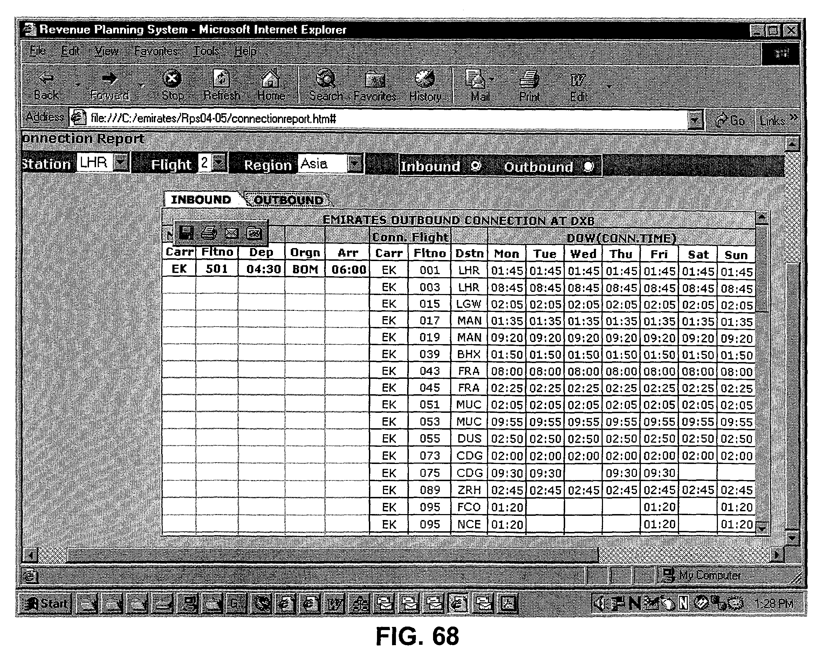

**FIG. 68** shows an Outbound connections report.

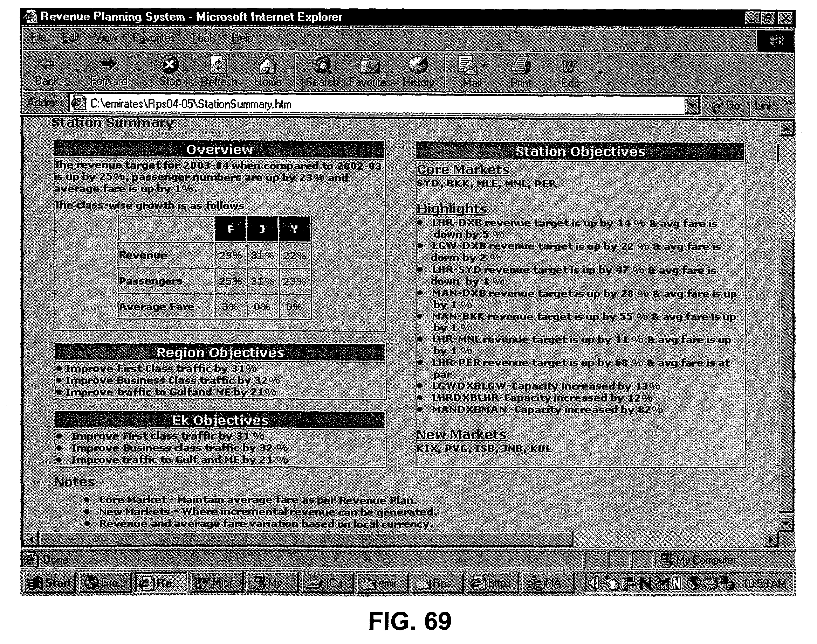

**FIG. 69** shows a Station Summary Report.

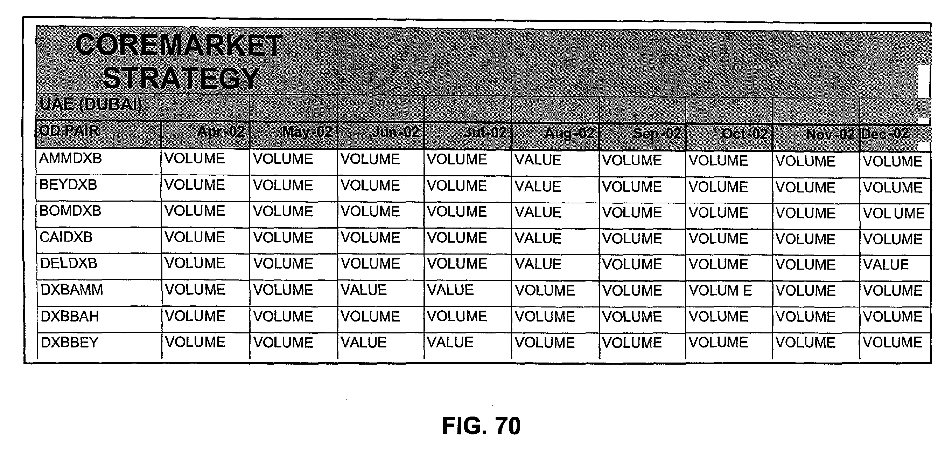

**FIG. 70** shows a Core Market Strategy Report.

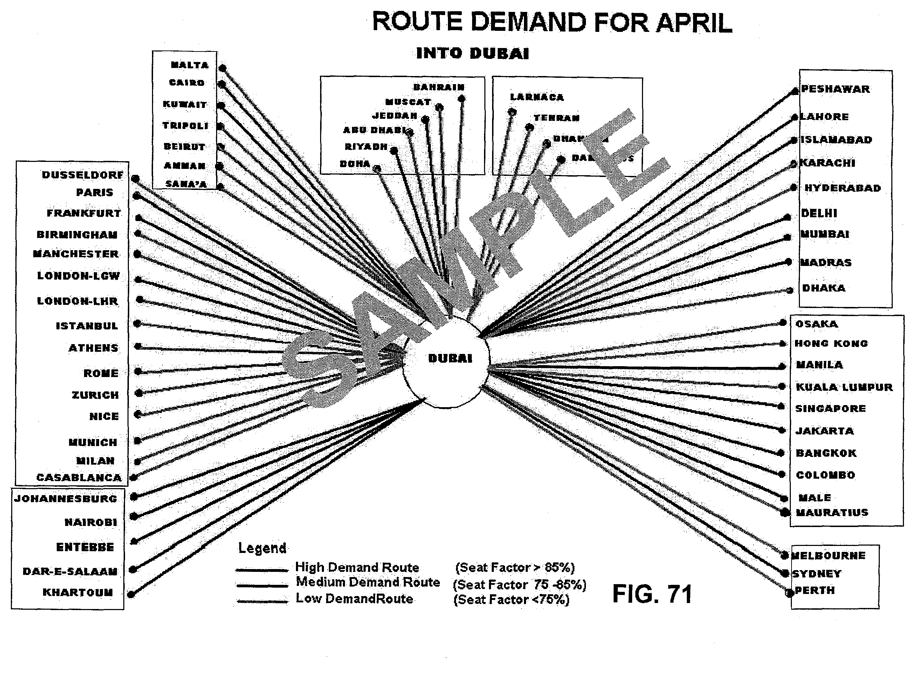

**FIG. 71** shows a hub-and-spoke type Spider Web.

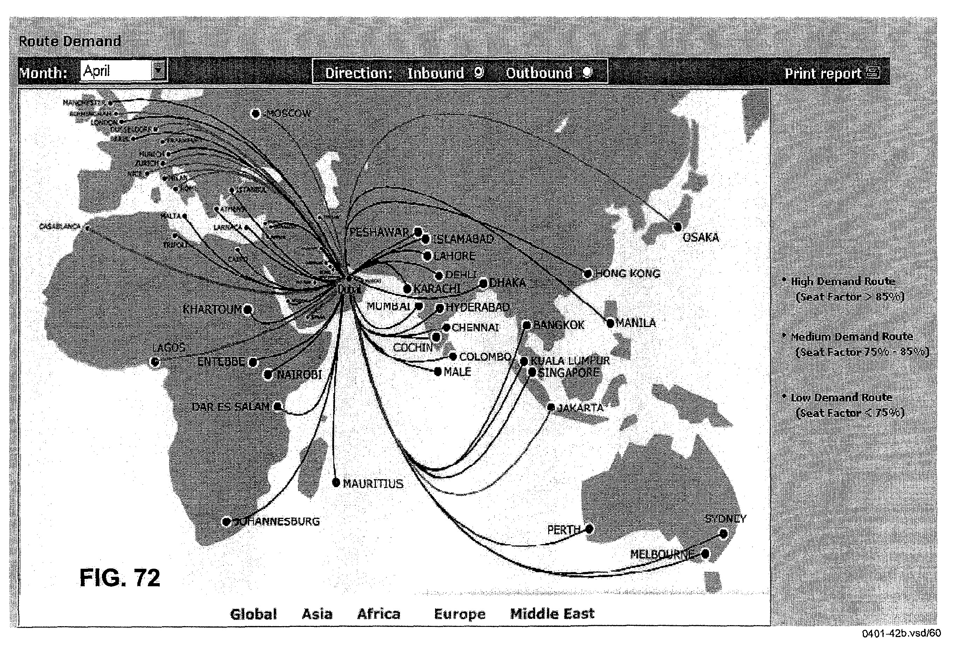

**FIG. 72** shows a Spider Web superimposed on a map.

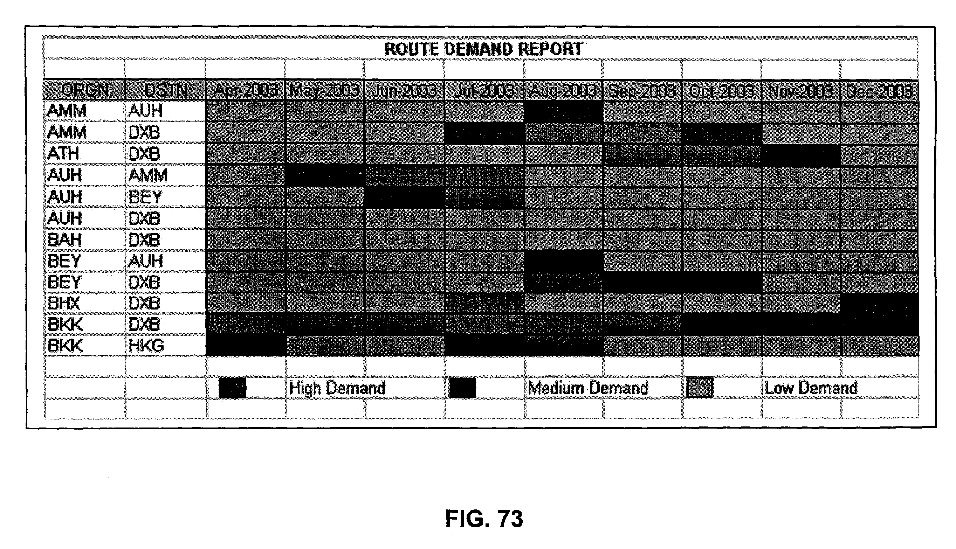

**FIG. 73** shows a Route Demand Report.

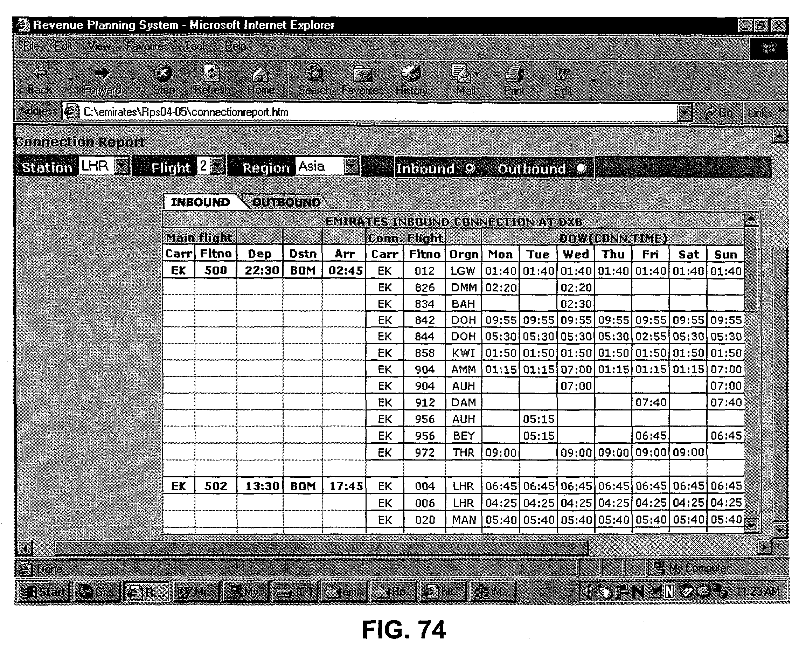

**FIG. 74** shows an Inbound Connection Report.

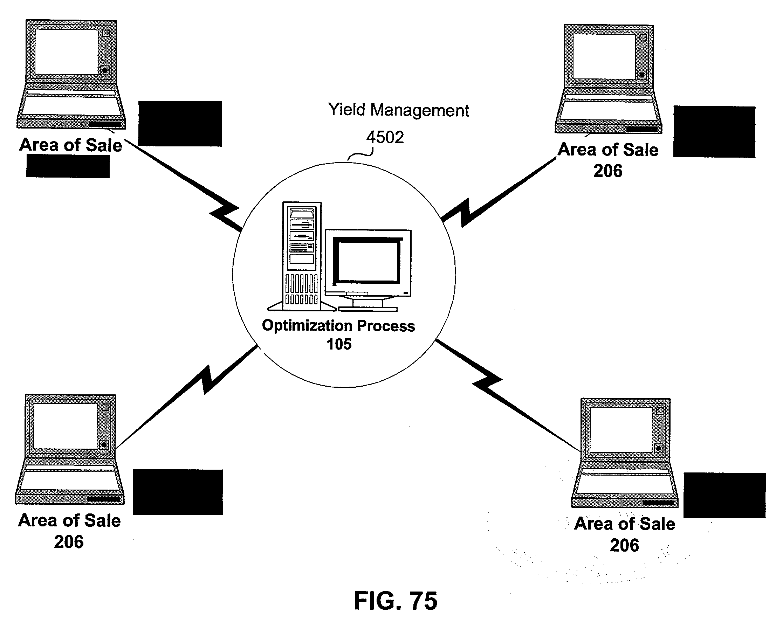

**FIG. 75** shows an Integrated Revenue Plan.

DETAILED DESCRIPTION OF THE INVENTION

Reference will now be made in detail to the embodiments of the present invention, examples of which are illustrated in the accompanying drawings.

| TABLE OF CONTENTS | |
|---|---|
| 1.0 | Abbreviations |
| 2.0 | Commercial Issues |
| 3.0 | Introduction to Revenue Planning |
| 4.0 | Revenue Plan Objectives |
| 5.0 | Building Blocks of Revenue Plan |
| 6.0 | Revenue plan interfaces |
| 7.0 | Data Synchronization 101 |

| TABLE OF CONTENTS | |
|---|---|
| 8.0 | Re-forecasting Process 102 |
| 8.1 | Re-forecasting |
| 8.1.1 | Re-forecasting PAX for months where forward bookings data is not available |
| 8.1.2 | Re-forecasting Modeling approach |
| 8.1.3 | Near Period Re-forecasting |
| 8.1.3.1 | Multiplicative Model |
| 8.1.3.2 | Pickup Model |
| 8.1.3.3 | Multiplicative Model Simulation |
| 8.1.3.4 | Pickup Model Simulation |
| 8.1.3.5 | Model Validity Inference |
| 8.1.3.6 | Special Cases Handling |
| 8.1.4 | Far Period Re-forecasting |
| 8.1.4.1 | Effective Growth Factor Model Simulation |
| 8.1.4.2 | FP Model Inference |
| 8.1.4.3 | Special Cases Handling |
| 8.2 | Yield Re-forecasting |
| 8.2.1 | Re-forecasting Yield Simulation |
| 8.2.2 | Special Cases Handling |
| 8.2.3 | Exception Reports for the Re-forecasted values |
| 8.2.3.1 | Introduction |
| 8.2.3.2 | POS Summary (PAX) |
| 8.2.3.3 | POS Summary (Yield) |
| 8.2.3.4 | Re-forecasted Data Update Facility |
| 8.2.3.5 | Re-forecasted Data Reports |
| 8.2.4 | Re-forecasting Model Inference |
| 8.3 | Re-forecast PAX Constraining Logic |
| 8.3.1.1 | Update of Re-forecasted PAX/Yield data into the Revenue data |
| 8.4 | Re-forecast Effectiveness Measurement |
| 9.0 | Demand Estimation 103 |
| 9.1 | Introduction |
| 9.2 | Demand Estimation Functional Process |
| 9.3 | Derivation of Actual Traffic Growth Factor |
| 9.4 | Derivation of Bookings Growth Factor from MIDT data |
| 9.5 | Derivation of O&D Capacity Growth Factor |
| 9.6 | Derivation of Effective Growth Factor |
| 9.7 | Facility to Manually Edit and Store Effective Growth Factors |
| 9.8 | Process to trigger the unconstraining of the baseline PAX demand |
| 9.9 | Demand Estimation for routes with less than one year flown data |
| 9.10 | Demand Estimation Derivation |
| 9.11 | PAX Demand Estimation—additional factors |
| 9.11.1 | Effective Growth Factor Derivation |
| 9.11.2 | Weighted Passenger Growth Factor (WPGF) |
| 9.11.3 | Weighted Market Share Factor (WMSF) |
| 9.11.4 | Target Market Share (TMS) |
| 9.11.5 | TMS Matrix |
| 9.11.6 | Combined Traffic Growth (CTG) |
| 9.11.7 | Capacity Growth Factor (CGF) |
| 9.11.8 | Effective Growth Factor (EGF) Example |
| 9.11.9 | PAX Demand Estimation - Sample Calculation |

| TABLE OF CONTENTS | |
|---|---|
| 9.12 | Effectiveness of Passenger Demand Estimation |
| 9.13 | Yield Demand Estimation |
| 9.13.1 | Introduction |
| 9.13.2 | Functional Requirements |
| 9.13.3 | Derivation of Yield Growth Factor |
| 9.13.4 | Process to trigger the unconstraining of the baseline demand yield |
| 9.13.5 | Yield Estimation for routes with less than one year flown data |
| 9.13.6 | Yield Demand Estimation - Sample Calculation |
| 9.14 | Effectiveness of Yield Demand Estimation |
| 9.15 | Reports For PAX demand and Yield Estimation |
| 9.15.1 | Exception Reports for displaying the PAX Growth Factors derived |
| 9.15.2 | Exception Reports for displaying the Yield Growth Factors derived |
| 9.15.3 | The Final PAX demand and Yield after the unconstraining process |
| 9.16 | Summary of Demand Estimation |
| 9.17 | Deriving a Model |
| 9.18 | Linear Programming |
| 9.19 | Optimizer Equations Example |
| 9.20 | Seasonality |
| 9.21 | Alignment of sales and revenue objectives |
| 9.22 | Special Handling for "Industry Travel" Demand |
| 9.23 | Balancing of Inbound/Outbound Traffic |
| 9.24 | Sensitivity Analysis |
| 9.25 | Summary of Optimization Process |
| 10.0 | Pre-Optimization Processes |
| 10.1 | Prorate Factor Generation 4301 |
| 10.2 | Sector-Route-Leg Link Generation 4302 |
| 10.3 | No Traffic Sector Nullification 4303 |
| 10.4 | Book Keeping Rate Update 4304 |
| 11.0 | Post Optimization Processes |
| 11.1 | Sector Revenue Generation 4401 |
| 11.2 | Leg Seat Factor Generation 4402 |
| 11.3 | Sector-Route Revenue Generation 4403 |
| 11.4 | POS Revenue Variance Generation 4404 |
| 12.0 | Management Information System |
| 12.1 | Reports |
| 12.1.1 | Revenue Plan Report |
| 12.1.2 | Fully Rejected Demand Report |
| 12.1.3 | Partially Accepted Demand Report |
| 12.1.4 | Commercial Target Report |
| 12.1.5 | Commercial Target Report - Outstation |
| 12.1.6 | O&D Capacity Comparison Report |
| 12.1.7 | Sector Yield Report |
| 12.1.8 | Leg Seat Factor Report |
| 12.1.9 | Quick Target Report |
| 12.1.10 | POS Revenue Variance Report |
| 12.1.11 | Route-wise Yield and SF report |
| 12.1.12 | Core Market Strategy Report |
| 12.1.13 | Revenue Plan Progress Report |
| 12.1.14 | Threats/Opportunities |

(continued)

| TABLE OF CONTENTS | |
| --- | --- |
| 13.0 | Additional Enhancements |
| 13.1 | Core and New Markets |
| 13.2 | POS Summary Report |
| 13.2.1 | Overview of POS Summary |
| 13.2.2 | Station Objectives |
| 14.0 | Target Pack |
| 14.1 | Commercial Target Outstations Report |
| 14.2 | Station Summary Report |
| 14.3 | Core Market Strategy Report |
| 14.4 | Spider Web |
| 14.5 | Route Demand Report |
| 14.6 | Connection Reports |
| 15.0 | Additional Features of Revenue Plan |
| 16.0 | Advantages of the invention |
| 17.0 | Conclusion |

### 1.0 Abbreviations

In the description that follows, the following abbreviations are used:

| | |
| --- | --- |
| Act | Actual |
| AOS | Area of Sale |
| ASKM | Available Seat Kilometer |
| BOM | Bombay |
| CAM | Commercial Analysis Manager |
| CGF | Capacity Growth Factor |
| Comp | Compartment (i.e., Economy, Business class, First class) |
| Cpn | Coupons |
| CTG | Combined Traffic Growth |
| CVIEW | Corporate View Software |
| DXB | Dubai |
| EDF | Effective Demand Factor |
| EGF | Effective Growth Factor |
| EGFM | Effective Growth Factor Model |
| FBLY | Forward Booking Last Year |
| FBTY | Forward Booking This Year |
| FCLY | Flown coupon Last Year |
| Fcst | Forecast |
| Flwn | Flown Coupons |
| GCC | Gulf Cooperation Council |
| I-P-O | Input-Process-Output |
| JKT | Jakarta, Indonesia |
| LGW | London Gatwick |
| LHR | London Heathrow |
| LHRDXB | London Heathrow to Dubai |
| Lyr | Last Year |
| MEA | Middle East |
| MEL | Melbourne |
| MF | Materialization Factor |
| MIDT | Market Intelligence Data Tape |
| O&D | Origin and Destination |
| PAX | Passenger |

| | |
|---|---|
| PER | Perth (Australia) |
| PGF | Passenger Growth Factor |
| POS | Point of Sale |
| PROMIS | Passenger Revenue Optimization Management Information System |
| Rev | Revenue |
| RPKM | Revenue Passenger Kilometer |
| RPS | Revenue Planning System |
| SIN | Singapore |
| SF | Seat factor |
| SYD | Sydney |
| TBK | Total Booking |
| TBK Lyr | Total Booking Last Year |
| Tgt | Target |
| TMS | Target Market Share |
| Var | Variance |
| WAPR | West Asia/Pacific Rim |
| WMGF | Weighted Market Growth Factor |
| WPGF | Weighted Passenger Growth Factor |
| YLD | Yield |
| YTD | Year-To-Date |

### *2.0 Commercial Issues*

In order to be successful, an airline needs to define "where it is going" (its strategic objectives), develop a revenue plan to "get there" (how to achieve the objectives) and then align commercial operations to deliver the revenue plan.

The present invention relates to an integrated platform to improve an airline's Revenue Planning Process and align sales efforts to corporate objectives/strategies. A Revenue Planning System (RPS) generates an Origin and Destination-based revenue plan for the airline by scientifically creating revenue targets that are aligned to commercial objectives, and optimized to ensure the best traffic mix. Once the revenue plan is created, optimized and published, the Revenue Planning System helps the airline align its ongoing sales efforts to the revenue plan by tracking and reporting performance against targets using an integrated performance monitoring toolkit.

Business objectives defined and met by the present invention include the following:

- Translating commercial objectives of an airline into a revenue plan based on scientific principles;
- Optimizing the revenue plan and formulating the most profitable traffic mix for the budget year;
- Identifying potential routes/areas of sale for the airline that will yield significant commercial benefits;
- Establishing market share targets for the budget year;
- Publishing revenue budget packs for sales at an Origin and Destination (O&D), Point of Sale (POS) and Compartment (Comp) level; and
- Facilitating monitoring of actual performance against revenue plan/targets.

The business function of the invention is therefore to provide a scientific Revenue Planning System that facilitates creation of optimized sales targets. Some of the features of the RPS are as follows:

- Comprehensive Re-forecasting process to refine passenger (PAX) and yield forecasts for the baseline year;
- Multiple mathematical models for near and far term forecasting;
- Multiple mathematical models for early and late booking markets;
- Tuning of Re-forecasts based on capacity constraints;
- Weighted average passenger, capacity and market share growth factors to build demand estimation from the Re-forecasted baseline;
- Linear programming-driven optimizer based on specialized equations;
- Network optimization based on demand estimates, yield estimates and scheduled capacity constraints;
- Generation of Point of Sale (POS), Origin and Destination (O&D), Month and Compartment level optimized targets;
- Support for collaborative work and agreement on targets across multiple organizational entities within an airline;
- Support for distribution of budget packs that include targets and relevant management reports for the global sales community; and
- Detailed MIS on the revenue plan as well as a monitoring tool which facilitates comparison of actuals against targets.

The RPS assures efficient and effective measurable sales targets. It acts as a foundation to formulate the commercial objectives, and helps the sales community to have a focused approach in day to day business. The Revenue Planning Process helps meet the growing challenges in the area of revenue generation. As the airline business is highly competitive and volatile, it is important to profitability to have a system to project the right traffic mix.

### 3.0 Introduction to Revenue Planning

Revenue planning comprises a number of interdependent cohesive processes that are developed based on an extensive study done in the field of optimization and forecasting models. The RPS is a decision-making system with built-in intelligence to project the right traffic mix that will be beneficial for an airline. The RPS identifies the market demand that is realistic and achievable. The RPS is preferably based on the Linear Programming (LP) methodology, where it optimizes the traffic mix based on the capacity, fare and demand constraints existing in different routes. The RPS enables an airline to take full advantage of its available information, thereby maximizing benefits, capitalizing on opportunities and gaining competitive advantage. The RPS is aligned with market conditions and fare structure to maximize revenue.

The RPS generates an Origin and Destination-based revenue plan for the airline by generating scientifically based revenue targets aligned to commercial objectives and optimized to ensure the best traffic mix for the budget year. The RPS helps the airline align its ongoing sales efforts to the revenue plan by tracking and reporting performance against targets using an integrated performance monitoring toolkit.

### 4.0 Revenue Plan Objectives

The objectives of the Revenue Planning Process are:

- To formulate commercial objectives;
- To formulate the optimal traffic mix for budget year;
- To identify the potential routes/area of sale for the airline's commercial benefits; and
- To establish a market share target for the budget year.

### 5.0 Building Blocks of Revenue Plan

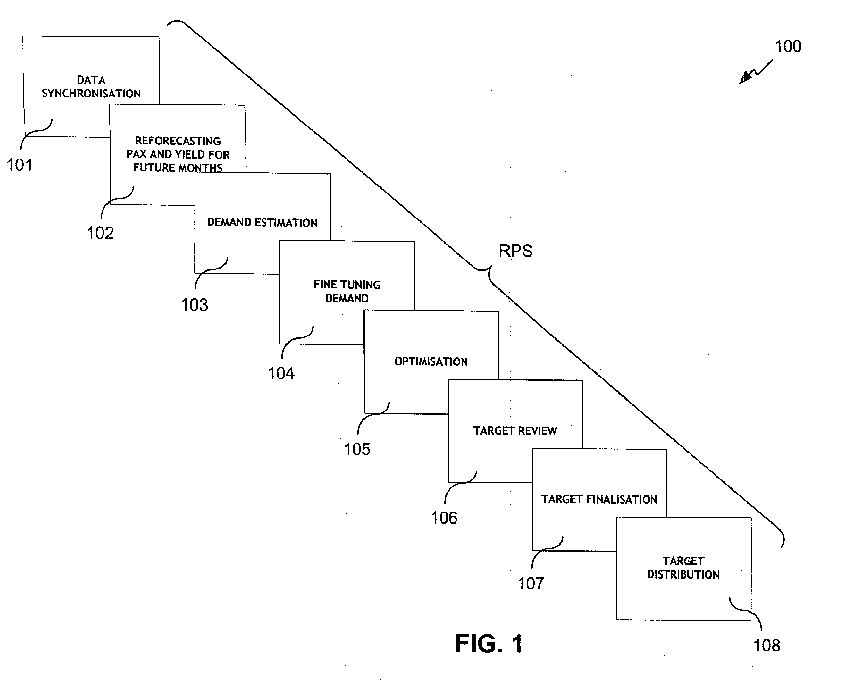

As shown in **FIG. 1**, the Revenue Planning Process includes several closely linked processes (building blocks). These processes include a data synchronization process **101**, which synchronizes flown data with CVIEW data (or another source of market data). Re-forecasting of (PAX and Yield) **102** for future months builds a base for future months demand estimation. Demand Estimation **103** estimates demand for the budget year. A Fine Tuning Process **104** identifies peaks and valleys in the demand data patterns. An Optimization Process **105** applies demand and capacity constraints to the problem of optimizing traffic mix. Target Review **106** allows area managers to provide input into the target setting process. Target Finalization **107** includes feedback from the area managers. A Distribution step **108** is where revenue targets are sent to each Area of Sale. These processes may be implemented in modular form, such that each of the steps **101-108** is a separate module.

Each process **101-108** is tightly coupled and influences subsequent process performance. One process abnormality/error can cause ripple effects in subsequent processes. At the end of each process, a go/no-go decision is made on whether or not the subsequent process can proceed.

### 6.0 Revenue plan interfaces

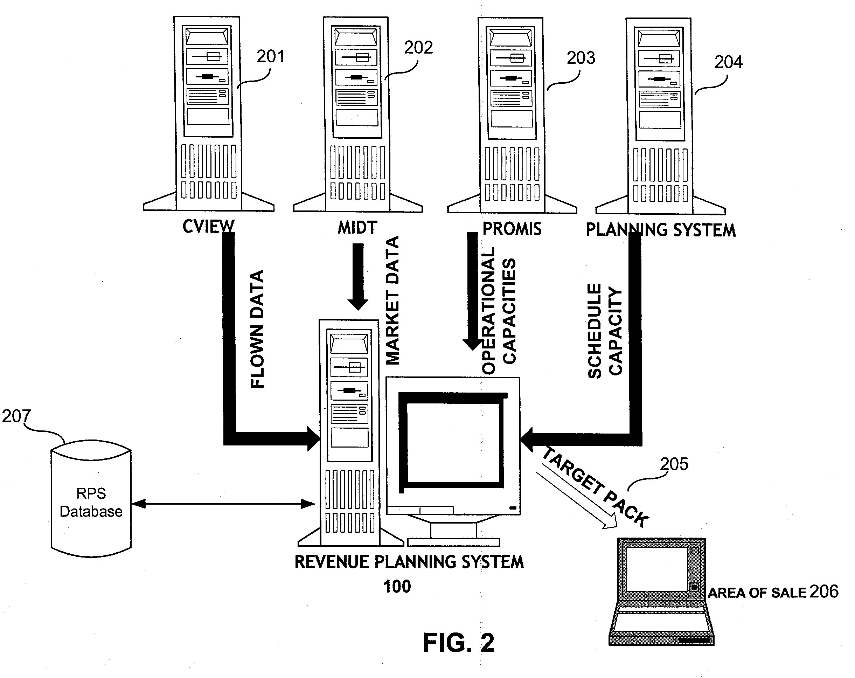

**FIG. 2** illustrates the RPS **100** interfaces, such that the RPS **100** can access the various data from the data sources. In one embodiment, the RPS 100 receives the flown data (Passenger, Yield, Revenue) from CVIEW **201** and receives market share data from MIDT **202**. A Planning System **204** feeds the budget year scheduled capacity to the RPS **100**, and PROMIS **203** feeds the operational capacities of current financial year and previous year to the RPS **100**. The output of the RPS **100** is a target pack **205**, which is sent to each area of sales **206.** An RPS database **207** is used to store various RPS-related parameters and data.

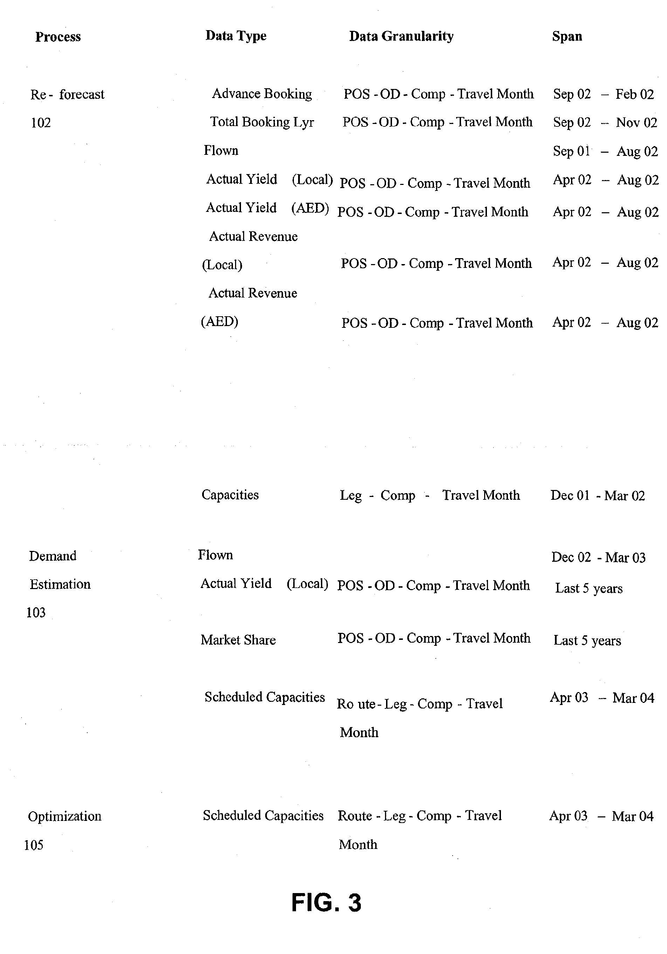

A data granularity & span table in **FIG. 3** gives an example of data received from different systems for the Revenue Planning System **100** processes. For example, as shown in **FIG. 3,** CVIEW **201** provides the following data to the RPS **100**: advance bookings, total bookings for last year, flown data, actual yield (local currency), actual yield (airlines based currency), actual revenue (local currency), and actual revenue (airlines base currency). All of the data from CVIEW **201** is provided with a level of granularity of POS-O&D-Comp-Travel Month (in other words, the data is by provided by POS and by O&D and by compartment and by travel month). As illustrated in **FIG. 3**, PROMIS **203** provides capacity data, which is provided at the level of granularity of Leg-Comp-Travel Month. The Planning System **204** provides capacity planning data at the Leg-Comp-Travel Month level of granularity and so forth.

### 7.0 Data Synchronization 101

Before a start of any process **101-108,** actual flown data (Revenue, PAX, Yield) from CVIEW **201** is loaded for flown travel months of the current budget year. This forms the base for Demand Estimation **103** of the same months in the next budget year. For example, it is done for April 02-August 02 travel months at the time of Revenue Planning Process, and this data forms the base for Demand Estimation **103** of April 03 - August 03 of the next budget year (in this example, 2003).

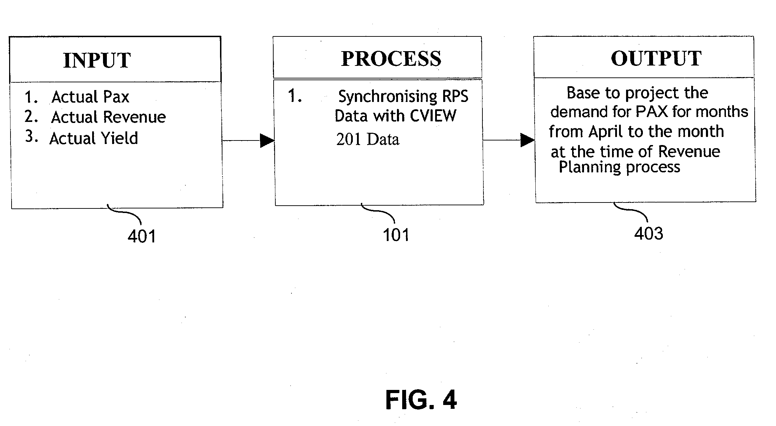

This is also illustrated in **FIG. 4,** which shows the I-P-O of the data synchronization process **101**. The data synchronization process **101** takes as input **401** actual PAX, actual revenue and actual yield. As shown at block **402**, processing involves synchronizing RPS **100** data with CVIEW **201** data. The output **403** forms a base for projecting PAX demand for months from April through the month at the time of the revenue Planning Process, in this example. The output of each process forms an input to subsequent process. Each process plays a role in producing a successful, reliable, accurate and practical Revenue Plan.

### 8.0 Re-forecasting Process 102

Subsequent to data synchronization with flown data from CVIEW **201** for the months of April 02 - August 02, Re-forecasting **102** is carried out to estimate the passenger and yield for the remaining months (i.e., September 02 - March 03) for the current financial year.

Target setting is done at the O&D and Compartment level for all the POSs across all Regions. The components that are manipulated to derive the target revenue are the PAX target and the yield (yield defined as average fare). The baseline for deriving the PAX target and yield for the target year are the flown PAX data from the months of the current financial year.

For all the months where Re-forecasting **102** is to be carried out, the target values of the current year acts as the initial baseline flown data. This data becomes the 'Actual PAX and Yield and Revenue' data. The Re-forecasting process **102** derives the forecasts, which replace these baseline values after review and confirmation by the users. On completion of the Re-forecasting process, the baseline for the target setting process (**107-108** in **FIG. 1**) is ready, i.e., all the months for the current financial year have the flown information (actual flown values for the months where flown data is available and the forecasted flown values -- through re-forecasting -- for months where flown information is not available).

The Re-forecasting Process **102** is then carried out for deriving the forecasts for PAX **(503)** and Yield **(504)** values.

### 8.1 Re-forecasting

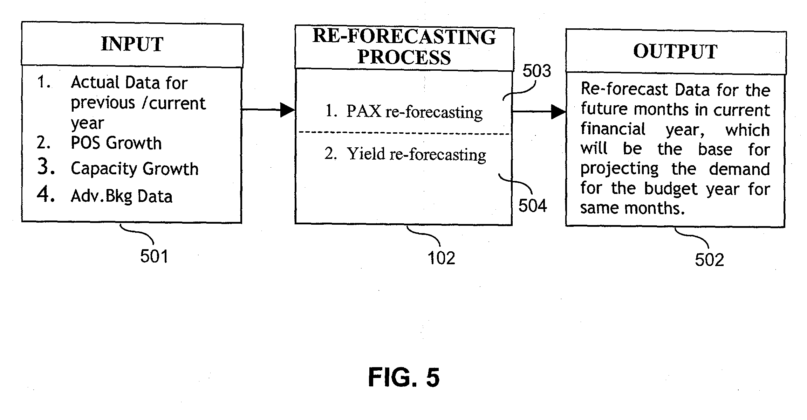

As noted above, Re-forecasting **102** is applied to PAX **(503)** and yield (**504**), as shown in **FIG. 5**. PAX Re-forecasting **503** involves estimating expected coupons for each targeted POS-O&D combinations for each compartment for the current financial year for remaining months. This forecast data forms the base for estimating PAX demand for the next financial year for same months. **FIG. 5** shows the I-P-O diagram for PAX Re-forecasting 503.

The objective is therefore to derive the estimated flown PAX for the months where the actual flown data has not been available, i.e., the future months of the current financial year where travel is yet to be made. The PAX figures are derived at the O&D and Compartment level for these months for all the POSs.

The inputs **501** (see **FIG. 5**) into PAX Re-forecasting **503** are Actual data for pervious/current year, POS Growth, capacity growth data, and advance booking data.

Advance bookings data is available from a commercial database at the Monthly and POS and O&D and compartment level for the latest snapshot date. This advance bookings data is available for the next six months from the latest snapshot date.

Advance bookings data for these months is available from the previous year at the Monthly and POS and O&D and compartment level. Flown PAX information for these months is available from the previous year at the Monthly and POS and O&D and compartment level.

The PAX Re-forecasting process **503** then derives the forecasts (PAX) for the applicable months (see output **502** in **FIG. 5**). This becomes the base for projecting PAX demand for the budget year for the same months.

PAX Re-forecasting **503** may be done using forward bookings, or it may be done without forward bookings.

A process is therefore needed that derives the forecasts for months where forward booking data is not available in the commercial database. This process uses the forward booking data to generate the forecast or the estimated flown PAX. The user can select the number of months (in one embodiment, not to exceed six, although it may be more or less than six) that the forward booking data should be used for the forecast generation and this should be parameterized. By default, six months forward booking data will be used for the forecast generation. The revenue data table is the driving table at the Month and Comp and POS and O&D level. A system parameter records the months in the revenue data that is in need of the Re-forecasted values for baselines. For each O&D picked for the months where PAX Re-forecasting is necessary, the forecasts are calculated. The formula used for the forecasting is governed by the following:

For each O&D under each POS and for each Month and for every compartment - the following conditions are checked, and the ensuing forecast formula is applied to derive the forecasted PAX:

FBTY - Forward Bookings This year

FBLY - Forward Bookings Last Year

FCLY - Flown PAX Last Year

If {(FBTY > 100 and the FBLY > 100) and ((FBTY/ FBLY) < 3) and ((FCLY/FBLY) < 3)} is TRUE then the Linear Forecast Model is used for forecasting the PAX

Forecasted PAX ={(FBTY * FCLY)/(FBLY)} * POS Forecast error => Linear Forecast Model

Else the Zero Booking Model is used

Forecasted PAX ={(FBTY + FCLY) - (FBLY)} * POS forecast error --=> Zero Booking Model

POS Forecast error values are given by the users in a spreadsheet, and may be loaded into the RPS database **207**. Here, the Zero Booking Model refers to a month (for example, a month 11 months from now), for which there are, at this point in time, no tickets purchased yet.

The forward booking data is picked up based on the snapshot date for the current year and the same date from the previous year. The process preferably checks for the availability of the forward booking data of the specified snapshot dates in the commercial database. If the snapshot date data is not available in the current or previous year, the process will display the error message, and the system parameter date should be changed for the date the data is available. (Any snapshot date in August will contain the forward booking data for the next six months, e.g., September to February).

The Re-forecasted values for PAX may be stored external to the revenue data table. The entities that need to be stored are, for example: YearMonth, Region, POS, O&D, Compartment, Currency, Baseline PAX, and Re-forecasted PAX. The baseline PAX can be populated with the values in the revenue data that have been made in the baseline, in the absence of the flown data.

### 8.1.1 Re-forecasting PAX for months where forward bookings data is not available

Typically, when the PAX Re-forecasting process **503** is being carried out in August of the current year, the forward booking data will be available for the next six months. In this case, for March 2003, the forward bookings data will normally not be available.

To derive the Re-forecasted PAX for March 2003, the flown information for March 2002 is taken from a commercial database. The year-over-year growth of the flown PAX for the months March 2001 and March 2002 is derived.

The capacity growth between the March 2002 and March 2003 is also derived. The capacity is stored in the RPS database **207** at the O&D and Compartment and Year and Month level, and capacity growth can be calculated. Data for both the current and the target year is maintained.

The Effective Growth Factor (flown PAX or the Capacity Growth Factor), which will be used to derive the re-forecasted data, is based on the following condition:

If Flown PAX Growth Factor> Capacity Growth Factor then

Effective Growth Factor = Flown PAX Growth Factor

Else if flown PAX Growth Factor < Capacity Growth Factor

then

Effective Growth Factor = Average (Flown PAX Growth Factor, Capacity Growth Factor).

The Effective Growth Factor is applied on the March 2002 flown PAX data from the commercial database, and the Re-forecasted data for March 2003 are obtained. It is also moved across to the Re-forecast data store. This process is preferably run at the beginning of the entire target setting process. This ensures that there are no new O&Ds in the system, which do not have a baseline value.

The process records details in a log, including the following:

1. Start date & time of process,

2. User id,

3. Parameter details,

4. Snapshot date which was used for picking up the forward booking data of this year and last year, and

5. POS-wise Revenue data baseline PAX totals (updated to the RPS database **207**).

### 8.1.2 Re-forecasting Modeling approach

For example, at the time of revenue planning, the start of the next budget year may be six months away. It requires expected performance of remaining months in the current budget year, which form the base for the Demand Estimation **103** of the next budget year. Accuracy of this base data will play a major role in accurately predicting the demand for the budget year.

In order to forecast the PAX demand, the current booking that each POS-O&D achieved at the time of the Re-forecast, and their expected utilization/cancellation rates, are used as a starting point. In order to project the utilization/cancellation rates of POS-O&D-Comp combinations for a particular future travel month, the Revenue Planning System **100** calls for a comparative analysis based on the actual data of the same flown months in the past. In one embodiment, CVIEW **201** does not have the comparative Forward Booking information for travel months beyond three months. Hence, it is not possible to forecast the expected coupons for travel months beyond three months. In order to overcome this, two models have been derived to forecast PAX, as discussed below (although it will be understood that the invention is not limited to these models):

Near Period forecasting (for example, forecasting PAX for the next four months, e.g., the months Sept 02, October 02, November 02, December 02); and

Far Period forecasting (for example, forecasting PAX for the three months after December 02, e.g., January 03, February 03, March 03).

### 8.1.3 Near Period Re-forecasting

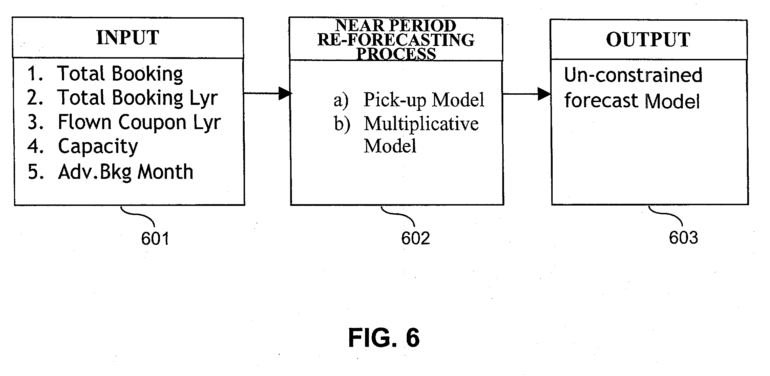

**FIG. 6** shows the I-P-O diagram for Near Period Re-forecasting. As shown in **FIG. 6**, a Near Period Re-forecasting process **602** may use a Pickup Model, or a Multiplicative Model, discussed below. Inputs to the Near Period Re-forecasting process **602** are total bookings, total bookings last year, flown coupons last year, capacity, and advanced bookings for the month. The output **603** of the Near Period Re-forecasting process **602** is an unconstrained PAX forecast.

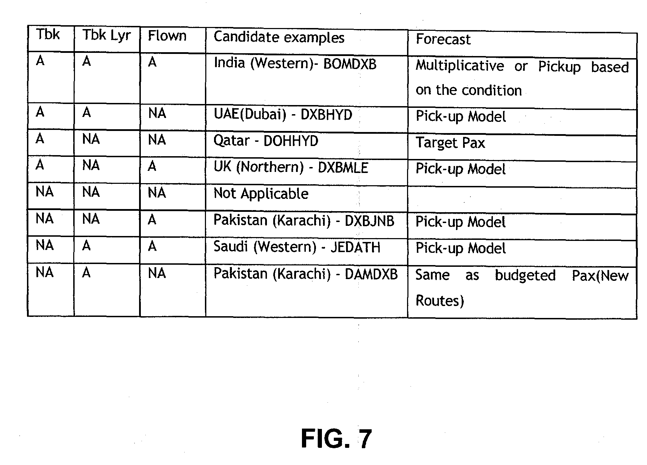

As further shown in the I-P-O diagram of **FIG. 7**, total bookings last year (Lyr), and flown coupon Lyr are used to determine a materialization factor (MF) of a given POS-O&D-Compartment combination. As PAX Re-forecasting **503** is usually done on a monthly basis, same month's but last year's data is used to determine the materialization factor.

After a detailed analysis of booking materialization and trend analysis, two Near Period methods were selected by the inventors, as noted above, which empirically proved to be optimal forecasting models, by keeping in mind the type of booking patterns expected from different markets. Two examples of Near Period Re-forecast models for PAX Re-forecasting are, Multiplicative Model for early booking markets, and Pickup Model for late bookings markets.

### 8.1.3.1 Multiplicative Model

The Multiplicative Model is typically used in early booking markets, where materialization of booking is assumed to have a linear relationship with the Total booking that each POS holds for particular O&D for a given compartment for a given travel month. Boundary conditions are set for this model to take care of exceptional booking growth and materialization.

In order to limit the exaggeration in forecasting, certain boundary conditions have been arrived at after empirical experiments. The Multiplicative Model and the assumed boundary conditions are given below:

$$\text{Forecast} = MF * TBK \ (\text{Total Booking})$$

Where:

MF (Materialization factor)  = FCLY/TBLY
FCLY                                    = Flown Coupon Last Year
TBLY                                    = Total Booking Last Year
TBK                                      = Total Booking

Boundary Conditions:

(I) Total Booking < 3 * Total Booking Last year
(II) Flown coupon Lyr < 3* Total Booking Last year.

### 8.1.3.2 Pickup Model

The Pickup Model is used whenever any POS-O&D advance booking data does not meet the boundary conditions of the Multiplicative Model, typically in late booking markets. The Pickup Model's formula is shown below.

$$Forecast = ( FCLY - TBLY + TBK ) * PGF$$

Where:

FCLY   = Flown Coupon Last Year
TBLY   = Total Booking Last Year
TBK     = Total Booking
PGF     = POS Growth Factor

Boundary conditions: TBK/TBLY < 3 and FCLY/TBLY <3. This model is also used as a Zero Booking Model.

### 8.1.3.3 Multiplicative Model Simulation

The following simulation was done for the Multiplicative Model:

| Simulation Parameters | | | | |
|---|---|---|---|---|
| SS Date: 01 May      POS: UAE (DUBAI)    OD: LHRDXB     Comp: Y Travel Month:    Jul 02 | | | | |
| TBK | TBLY | TARGET | ACTUAL FLOWN COUPONS | FCLY |
| 444 | 423 | 1,214 | 1,227 | 1,103 |

The multiplicative model simulation example above uses the following parameters: date: May 1, travel month: July 2002, POS: DXB, O&D LHRDXB, Comp: Y, TBK: 444, TBLY: 423, Target: 1214, Actual Flown: 1227, and FCLY: 1103. The simulation results are as follows:

Boundary Conditions (I) TBK/TBLY = 444/423 = 1.05 < 3
(II) FCLY/TBLY = 1,103/423 = 2.6 < 3

Since the boundary conditions are satisfied, the Multiplicative Model is used in this case. This model yields:

Materialization Factor (MF)    = FCLY/TBLY = 1,109/423 = 2.62
Forecast                                  = MF * TBK = 2.62 * 444
Actual                                      = 1,227
Forecast %Var                          = (1,164 - 1,227)/1,227
Forecast Error                          = -5.13%

### 8.1.3.4 Pickup Model Simulation

The following simulation example was done for the Pickup Model:

| Simulation Parameters | | | | |
|---|---|---|---|---|
| SS Date: 07 April | POS: UAE (DUBAI) | | OD: LHRDXB | |
| Comp:Y : Travel Month Jul 02 | | | | |
| TBK | TBLY | TARGET | ACTUAL FLOWN COUPONS | FCLY |
| 252 | 253 | 1,214 | 1,227 | 1,103 |

Boundary Conditions: (I) TBK/TBLY = 252/253 = 0.99 < 3
(II) FCLY/ TBLY = 1,103/269 = 4.35 ≮ 3

In this case, the second boundary condition doesn't hold true. Hence, the Revenue Planning System **100** selects the Pickup Model. Point of Sale Growth Factor derivation shown in the table below.

| | Jul-97 | Jul-98 | Jul-99 | Jul-00 | Jul-01 |
|---|---|---|---|---|---|
| Flown | 1,161 | 1,025 | 1,339 | 966 | 1,103 |
| Growth Factor | 9% | -12% | 31% | -28% | 14% |
| **Weights** | 0.05 | 0.15 | 0.20 | 0.25 | 0.35 |

In this example: POS: DXB, O&D: LHRDXB, Comp: Economy, Travel Month: July 03

WPGF = 0.05 * 9 + 0.15*(-12)+ 0.20 * 31 + 0.25 * (-28) + 0.35 * 14 + = 2.75%
Forecast = FCLY - TBLY + TBK = 1,103 - 253 + 252 = 1,102 = 1,102 (Actual = 1,227)
Forecast %Var = (1,102- 1,227)/1,227
Forecast Error = - 10 %

### 8.1.3.5 Model Validity Inference

It should be noted that for the same entity (DXB, LHRDXB Sector, July 02 travel month, Y compartment), the two different models were used on different snapshots (i.e., sets of data for a particular date). Thus, for 07 April snapshot, the Pickup Model was used, and for 01 May snapshot, the Multiplicative model was used. Both gave forecasts that were well within the expected range. Depending on the booking growth that a particular POS holds, suitable models can be automatically used to predict the expected passenger demand with minimum forecast errors.

### 8.1.3.6 Special Cases Handling

Some examples of special cases, where input conditions are checked to ensure that suitable models are chosen for the Re-forecasting Process **102** (see also section 8.1.4.3 below), are illustrated in **FIG. 7**. The RPS **100** checks for selection of appropriate forecasting model based on Total bookings, Total bookings Last year and Flown. The table in **FIG. 7** gives examples of forecast model selection based on input conditions.

### 8.1.4 Far Period Re-forecasting

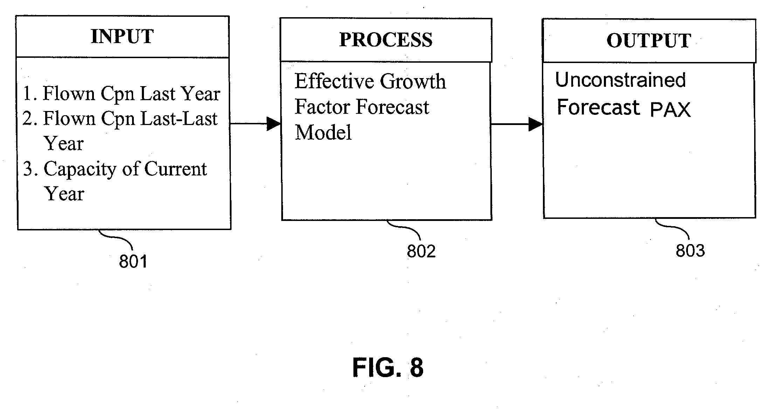

PAX Re-forecasting **503** for the month where forward booking data is not available, is carried out with the help of the POS Growth Factor and the Capacity Growth Factor. Where PAX Re-forecasting **503** is carried out in the month of September 02, comparison of forward booking data with last year is available only for the next three months, i.e., October 02, November 02, December 02. For January 03, February 03, March 03, advance booking data will not have last year booking details, hence it is not possible to use the models. It is then necessary to use another model called the Effective Growth Factor Model (EGFM). The Input-Process-Output (I-P-O) diagram of **FIG. 8** shows details of Far Period forecasting.

As shown in **FIG. 8,** the process of Far Period Re-forecasting uses an Effective Growth Factor Forecast Model **802**. Its inputs **801** are flown coupons for last year, flown coupons last last year (i.e., the year before last year) and capacity of current year. The output **803** of the model is an unconstrained PAX forecast.

Thus, PAX growth (PG) is calculated for the POS-O&D-Compartment-Year month combination by looking at the actual data for last year and the year before year. For example to forecast the PAX for March 03, March 02 and March 01 actual flown data is used to get the Passenger Growth Factor, and the Capacities for March 02 and March 03 are considered to calculate the Capacity Growth Factor. After obtaining these two factors, the Effective Growth Factor is derived.

The Effective Growth Factor Model is shown below:

```
If PGF > 0 & CGF > 0 & PGF > CGF
        then
                EGF = PGF
        Else
        EGF = (PGF + CGF )/2
        Forecast = EGF * Flown Coupon Last Year
```

Where:

EGF = Effective Growth Factor;

PGF = Passenger Growth Factor = ( Flown Coupons $_{02}$-Flown Coupons $_{01}$ ) * 100 / Flown Coupons 01;

CGF = Capacity Growth Factor = ( Capacity $_{03}$-Capacity $_{02}$ ) * 100 / Capacity $_{02}$;

Boundary conditions: PGF Upper Limit = 50%, and PGF Lower Limit

- 30%. These boundary conditions are used to remove data outliers. The forecast is then derived from the EGF as follows:

Forecast = EGF * Flown coupons Last Year.

### 8.1.4.1 Effective Growth Factor Model Simulation

In the EGFM simulation example below:

| Simulation Parameters | | | | |
| --- | --- | --- | --- | --- |
| SS Date: 01 March     POS: UAE (DUBAI)     OD : LHRDXB | | | | |
| Comp:Y    Travel Month:    Jul 02 | | | | |
| **TBK** | **Flown $_{01}$** | **Flown $_{00}$** | **Cap $_{02}$** | **Cap $_{01}$** |
| 103 | 1,103 | 966 | 24,021 | 24,534 |

PGF    = (Flown $_{01}$ - Flown $_{00}$ )/Flown $_{00}$ * 100 = (1,103 - 966 ) / 966 * 100 = 14%
CGF    = (Cap $_{02}$ - Cap $_{01}$ )/Cap $_{01}$ * 100 = (24,021 - 24,534 )/24,534 * 100 = -2%

In this case, PGF > 0 and CGF < 0, hence, EGF will be calculated as shown below:

EGF    = (PGF + CGF )/2
EGF    = (14 - 2 )/2 = 6%
        Therefore:

Forecast    = EGF * Flown 01 = 1.06 * 1,103

                            = 1,169
Actual             = 1,227
Forecast %Var    = (1,169- 1,227)/1,227
Forecast Error    = - 4.7 %

### 8.1.4.2 FP Model Inference

Experimental results show that in the Far Period, forecast error is well below 5%. This model was tried in other cases, and was found to be successful. From a simulation, it was shown that for the Late Booking Market, the RPS **100** takes the Pickup Model during the initial snapshots. When it approaches the travel month, the RPS **100** considers the Multiplicative Model. However, in the Early Booking Market, a majority of the time the RPS **100** uses the Multiplicative Model.

Of the two forecasting methodologies discussed above, the Far Period Method and the Near Period Method have shown consistent forecast errors at varying snapshots. Therefore, these can be considered as suitable to any type of booking conditions.

### 8.1.4.3 Special Cases Handling

A thorough checking should preferably be done for some special cases.

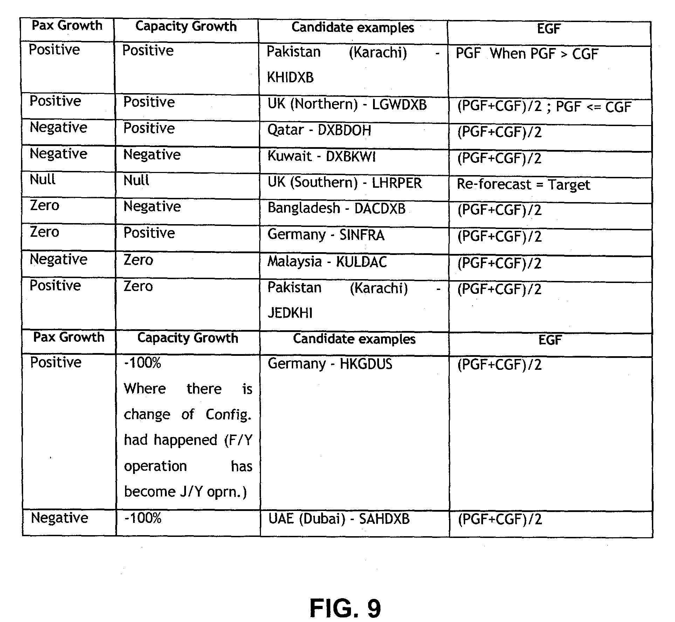

Case I: When PG (Passenger Growth) and CG (Capacity Growth) have contrasting indicators, as shown in the table of **FIG. 9**.

Case II: Offline Points have become Online Points, e.g., Mauritius, Australia (Western), Japan (Eastern) and India-Hyderabad. For these POS, the Re-forecast PAX is same as PAX target for the current budget year.

### 8.2 Yield Re-forecasting

The Yield Re-forecasting process **504** estimates the expected average fare (Yield) for each of the targeted POS-O&D combinations for each Compartment for the remaining months of the current financial year. This data forms the basis for estimating the fare demand for the same months for the next budget year.

The objective of the Yield Re-forecasting process **504** is to derive the estimated yield for the months where the actual flown data has not been received and for the future months of the current financial year where travel is yet to be made. The yield figures are derived at the O&D and Compartment level for these months for all the POSs.

The input is YTD yield variance of the available flown data with regard to the targets for the current year from the commercial database at the POS and O&D and Comp level. The Yield Re-forecasting process **504** derives the yield forecasts for the applicable months.

YTD yield variance for the flown data is taken from the commercial database. The yield variance with regard to the targets is obtained at the POS and O&D and Comp level.

A set of parameters called "capping factors" are used, and are called Upper and Lower limits.

The YTD yield variance (in %) for each Comp and POS and O&D combination is compared against these limits, and, if it fits within the band, then is applied against the baseline yield value of the POS and O&D for the month where Re-forecasting is required. After the adjustment factor is applied to the yield (i.e., the baseline yield is increased or decreased by this % value), the yield values are moved to the Re-forecast data store. If the YTD yield variance % value is beyond the capping band, then the Lower or Upper limit will be factored into the baseline (i.e., if the YTD variance % was below the lower band then the Lower limit value is used - similarly, if the Upper limit is crossed, then the Upper limit value is used).

The parameters that are normally used for the Yield Re-forecasting **504** are YearMonth, Region, POS, O&D, Compartment, Currency, Baseline Yield (Local Currency), Baseline Yield (in baseline currency), Re-forecasted Yield (Local Currency), and Re-forecasted Yield (in baseline currency).

In the Yield Re-forecasting process **504,** year-to-date actual yield and year-to-date target yield are considered in local currency (instead of, for example, the airline's base currency). This is done to reflect the real variation in yield including the fluctuations in the currency value. Once YTD values are obtained, percent variation is obtained and it is applied on the base yield of future month. In this case, base yield is the Target Yield for the current budget year.

The values are in Local Currency and/or the (baseline currency) are the values in baseline currency computed using the exchange rates in the system. There is a system parameter called the base bookkeeping month, and the exchange rates pertaining to that month is picked up for computing the conversion to the baseline currency.

The baseline yield may be populated with the values in the revenue data which have been made the baseline in the absence of the flown data.

It is preferred that this process performed before the new target setting processes **106-108**. This ensures that there are no new O&Ds in the system that do not have a baseline value.

The process records details in a log, including the following:

1. Start date & time of process
2. User id
3. Parameter details
4. Snapshot date which was used for picking up the forward booking data of this year and last year
5. POS-wise revenue data baseline average yield in baseline currency and Local Currency (updated to the RPS database 207).

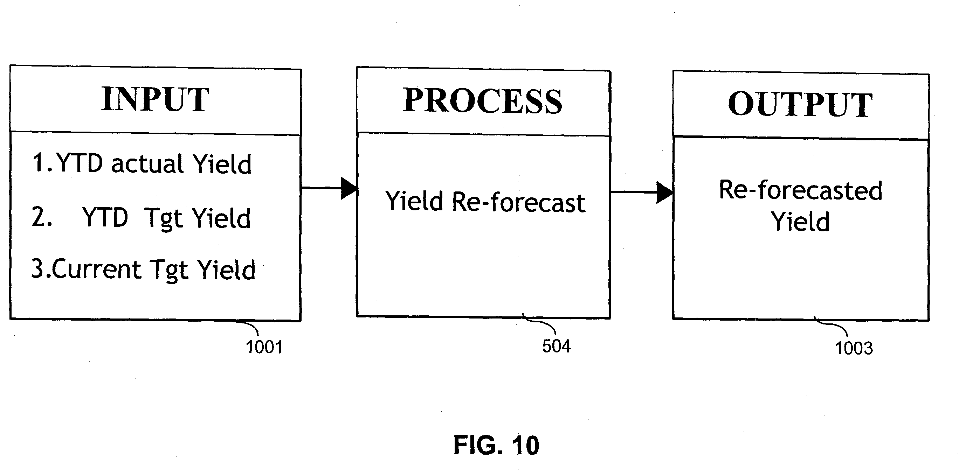

**FIG. 10** shows an I-P-O diagram of Yield Re-forecasting. As shown in **FIG. 10**, the process of Yield Re-forecasting **504** uses as inputs **1001** actual year-to-date yield, target year-to-date yield, and current target yield. The output of the Yield Re-forecasting process **504** is the re-forecasted yield **1003.**

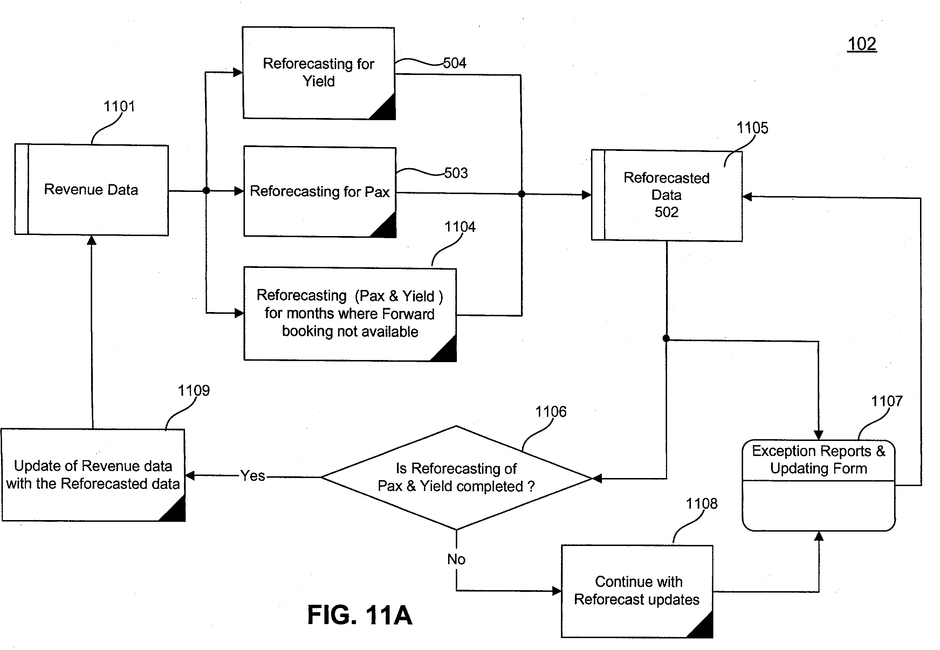

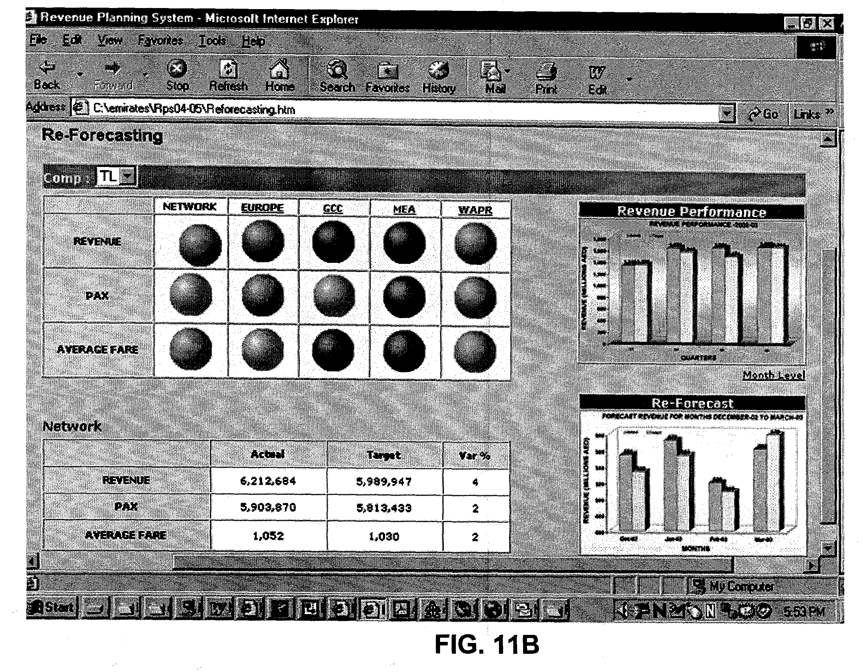

**FIG. 11A** shows the Re-forecasting Process 102 in flowchart form. This process estimates the expected average fare (yield) for each targeted POS-O&D combinations for each compartment for the current financial year for the remaining months. This forecast data forms the basis for estimating demand fare for the next budget year for the same months.

As further illustrated in the flowchart of **FIG. 11A**, the Re-forecasting process **102** starts with a set of revenue data (step **1101**). The next step involves Yield Re-forecasting (step **504**), PAX Re-forecasting (step **503**), and Re-forecasting both PAX and Yield for the months where forward booking is not available (step **1104**). Following steps **1103** and **1104**, a set of reforecasted data **502** is created (step **1105**). After that, exception reports are generated, and input forms are updated (step **1107**). The Re-forecasting process **102** may return back to step **1105,** using data in forms updated by the user. Also, after step **1105,** a decision point is reached on whether the re-forecasting of passenger and yield is completed (step **1106**). If the re-forecasting is not completed, the re-forecasting updates continue (step **1108**, and then proceed to step **1107**). If the re-forecasting is completed, the revenue data is updated with the reforecasted data (step **1109**), proceeding then back to the step **1101**.

Below is a sample Yield Re-forecast model:

```
Forecast           = YTD VAR * TGT YLD
                           Where
YTD VAR            = (YTD YLD - YTD TGT YLD) / YTD TGT YLD * 100
YTD YLD            = Year to Date Actual Yield
YTD TGT YLD       = Year to Date Target Yield
TGT YLD           = Target Yield
```

Boundary Conditions: YTD VAR > LowerLimit & < Upper Limit

Boundary conditions are applied to the YTD yield variations. These boundary conditions are set system parameters in the RPS **100**. These values can be changed at any time and the Yield Re-forecasting process **504** can be re-run. In the preferred embodiment, an Upper limit is set at +5% and a Lower limit is set at -10%.

### 8.2.1 Re-forecasting Yield Simulation

As shown in the Yield Re-forecasting Simulation example below:

| Simulation Parameters | | | |
|---|---|---|---|
| SS Date: 21 June | POS: UAE (DUBAI) | OD : LHRDXB | |
| Comp:Y    Travel Month:    Jul 02 | | | |
| YTD YLD | YTD TGT YLD | JULY TGT YLD | JULY ACTUAL YLD |
| 1,313 | 1,244 | 1,314 | 1,336 |

```
YTD VAR    = (YTD YLD - YTD TGT YLD/
             (YTD TGT YLD) * 100
             = ( 1,313 - 1,244 )/1,244 * 100
             = 5.5%
```

As it exceeds the boundary condition of upper limit of 5%, the YTD VAR is capped to 5%.

```
Forecast Yield    = YTD VAR * TGT YLD = 1.05 * 1,314 = 1,379
Actual            = 1,336
Forecast %Var     = (1,379 - 1,336)/1,336
Forecast Error    = 3 %
```

### *8.2.2 Special Cases Handling*

Case I: When Traffic/Fare mix changes, e.g., for Germany, YTD YLD variance is not capped in these cases. Actual YTD yield variance is used for yield Re-forecast.

In the Re-forecasting Yield Simulation - Currency Strengthening example below:

| Simulation Parameters Currency : EUR | | | |
|---|---|---|---|
| SS Date: 21 June    POS: Germany    OD : DUSDXB    Comp:Y Travel Month:  Jul 02 | | | |
| YTD YLD | YTD TGT YLD | JULY TGT YLD | JULY ACTUAL YLD |
| 186 | 145 | 162 | 200 |

YTD VAR    = (YTD YLD - YTD TGT YLD) / (YTD TGT YLD) * 100 = (186 - 145 )/145 * 100 = 28%

The YTD VAR exceeds the boundary condition of upper limit of 5%, but is not capped to 5%, since this represents the special case-handling scenario. Therefore, the value of 28% is retained.

Forecast Yield    = YTD VAR * TGT YLD = 1.28 * 162 = 207
Actual            = 200
Forecast %Var    = (207 - 200)/200
Forecast Error    = 3.5 %

Case II: New Routes. New O&Ds for these O&Ds, re-forecasted yield will be target yield for the current budget year.

Case III: For routes where extra frequency is implemented, yield should be reviewed for any abnormality.

Exceptional cases: For the months with zero yield for Re-forecasted months, average yield of the O&D can be used and populated during re-forecasting:

Average Yield = Sum of Actual Revenue for flown months/Sum of PAX flown. Compartment: Y

| POS | O&D | Yield | | | PAX | | | Revenue | | |
|---|---|---|---|---|---|---|---|---|---|---|
| | | April | May | June | April | May | June | April | May | June |
| POS 1 | O&D 1 | | 10 | 12 | | 10 | 10 | | 100 | 120 |

Sum of Actual Revenue = May + June = 100 +120 = 220
Sum of PAX flown = May + June = 20
Average Yield = 220/20 = 11
Therefore, the Average Yield for the month of April = 11

### *8.2.3 Exception Reports for the Re-forecasted values*

### *8.2.3.1 Introduction*

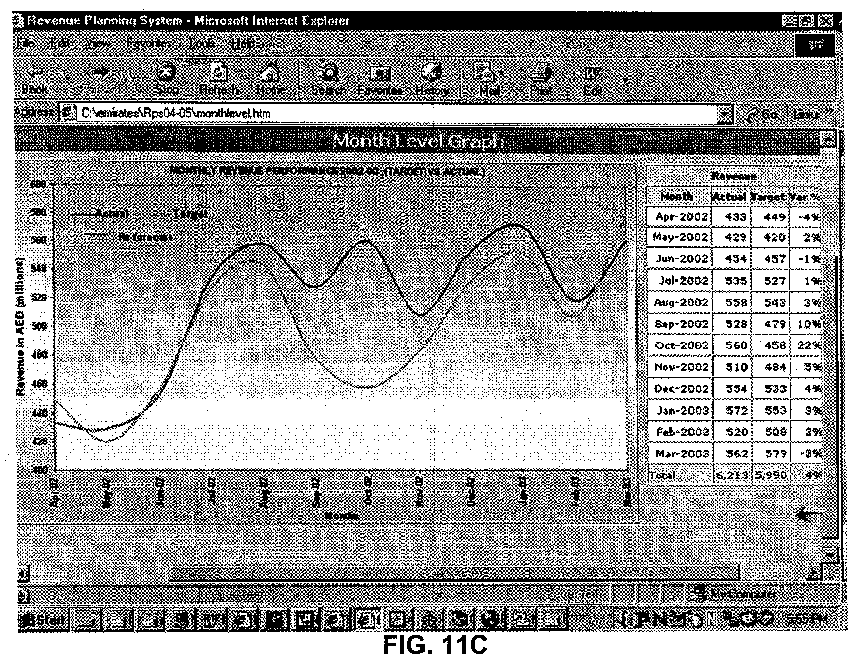

The purpose of the exception reports (see **1107** in **FIG. 11A**) is to list the POSs and O&D combinations for the PAX and Yield Re-forecasting months, that have qualified for the exception criteria. This user would then use the update form to correct the Re-forecasted values for these records. These exception reports can be generated by the RPS **100** to bring out exception records for PAX or yield. An example exception report is shown in **FIG. 11B,** which shows revenue, PAX and yield for the regions of Europe, GCC (Gulf Cooperation Council), MEA (Middle East) and WAPR (West Asia/Pacific Rim), a revenue performance graph, and a re-forecasted revenue graph. Network revenue, PAX and yield are also shown. **FIG. 11C** is a screen shot obtained by clicking on the "month level" link in **FIG. 11B.**

**Exception:** The From and To range of numbers can be the same. In this case the report will fetch records (POS and O&Ds) which are having a variance % between the Re-forecasted value and the baseline value equal or above the numeric value. By entering a different To range number (which has to be larger than the From range number), the report will fetch records (POS and O&Ds) that have a variance between the Re-forecasted value and the baseline value that fall in the From and To range specified.

**Option:** PAX Re-forecasting **503** will apply the exception criteria of variance % against the baseline\Re-forecasted PAX value and Yield will apply it against the baseline\Re-forecasted Yield values. The appropriate reports will also get generated. The Yield option can select the currency for the O&D Yield values on the report.

**POS Summary/Detailed**: The summary option lists all the POSs that are having O&Ds whose Re-forecasted values are qualifying for the exception criteria. The Detailed option displays both the POSs and the O&Ds whose Re-forecasted values are qualifying for the exception criteria. Both reports can optionally display the Re-forecasted month in a cross tab fashion.

### 8.2.3.2 POS Summary (PAX)

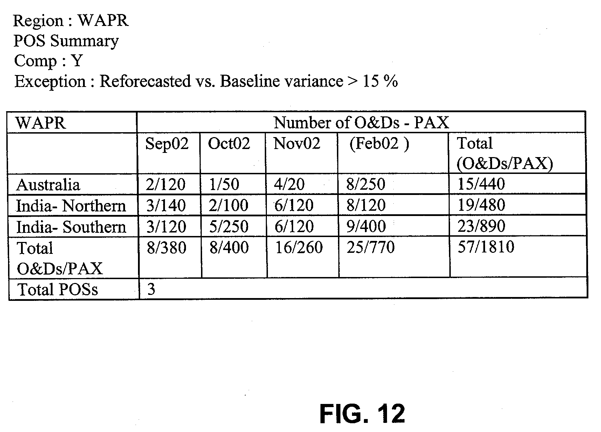

**FIGS. 12-15** show examples of Exception reports. **FIG. 12** illustrates an example of a POS Summary generated by the RPS **100**, as related to the exception report discussed above. As shown in **FIG. 12**, three POS's are shown, Australia, India (Northern) and India (Southern). Four months are shown - September 02, October 02, November 02 and February 02 are shown. In **FIG. 12**, "440" in the right hand column is the yield. "15" is the numeric value entered by the user in the 'Exception' selection.

Number of O&Ds - is the number of O&Ds for the POS which has qualified for the variance % criteria.

Similarly, PAX is the sum of the PAX values of all the O&D's that were selected.

All parameter information will appears in the report header as shown.

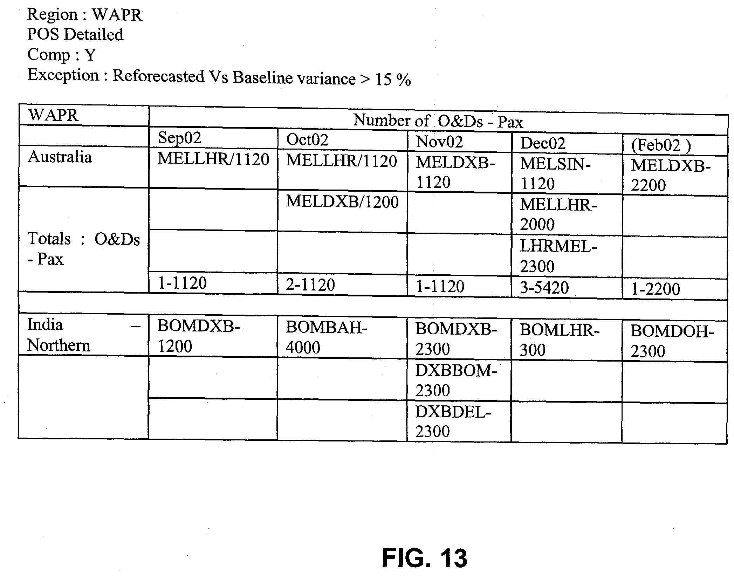

POS Detailed (PAX) report is shown in **FIG. 13.** The primary difference between the report of **FIG. 12** and the report of **FIG. 13** is the breakdown by a particular POS.

### 8.2.3.3 POS Summary (Yield)

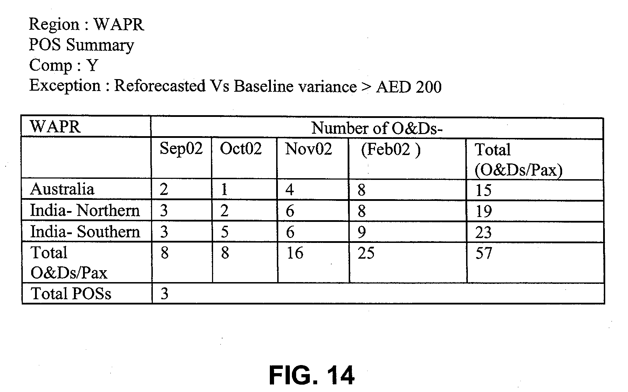

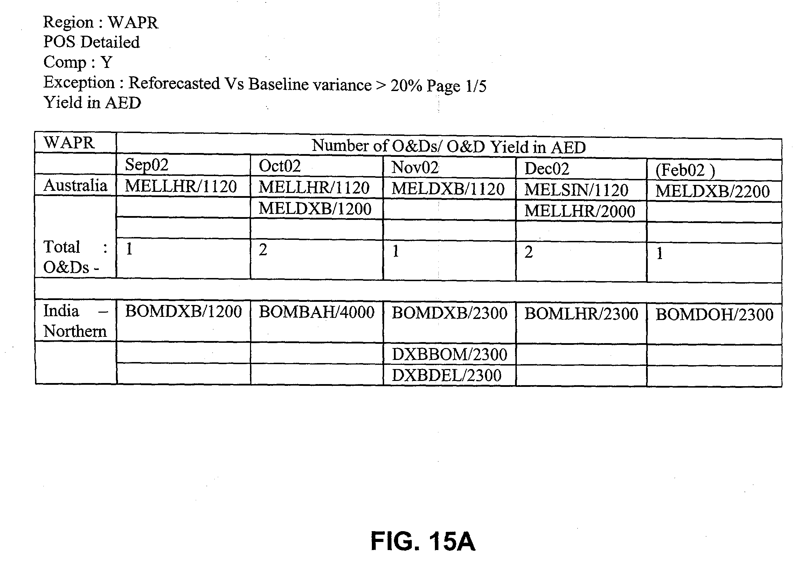

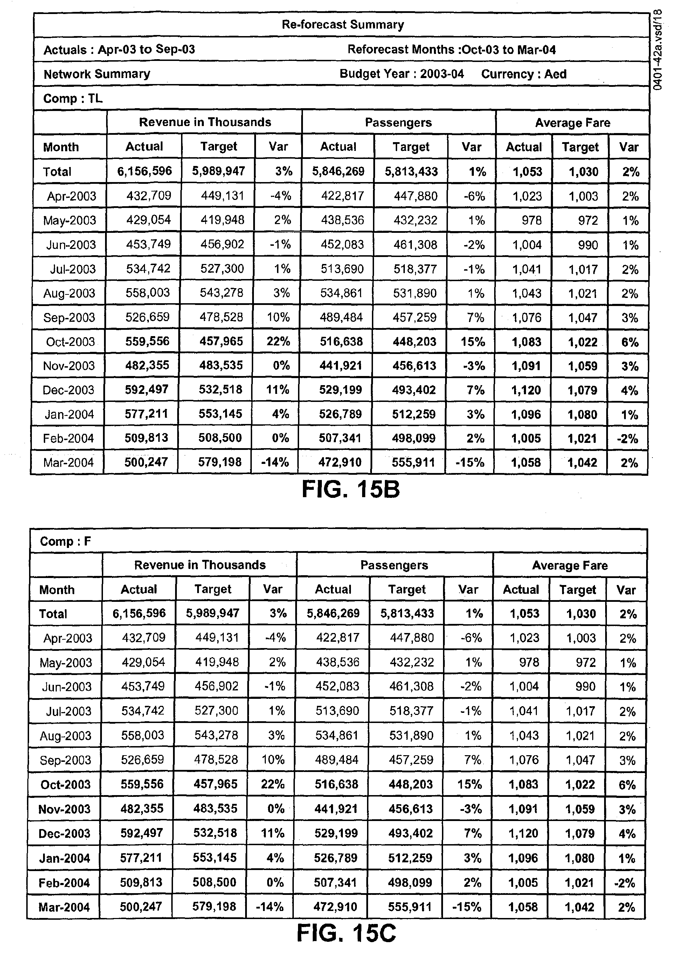

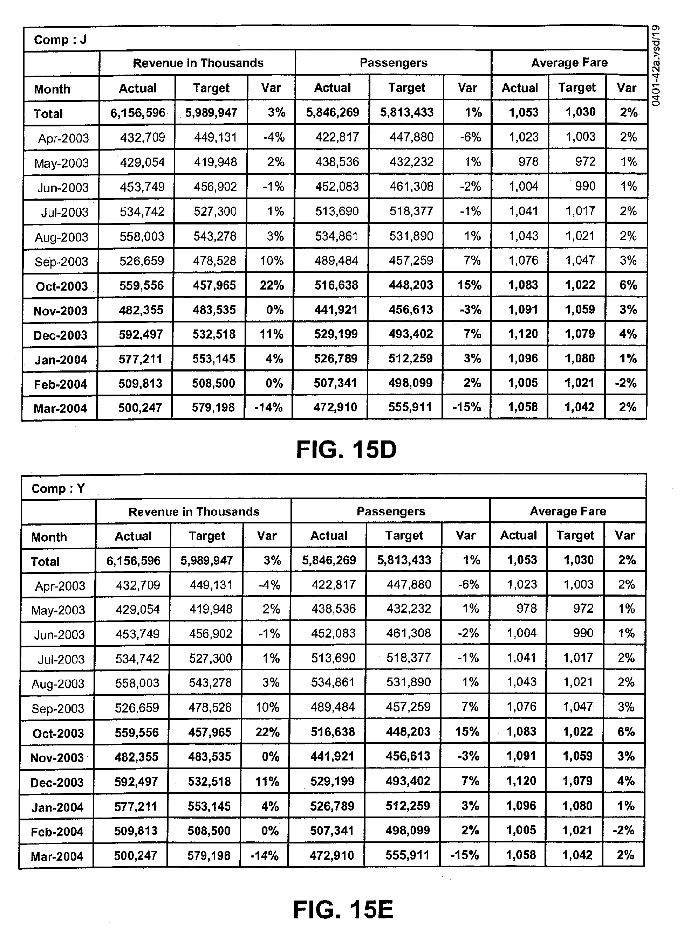

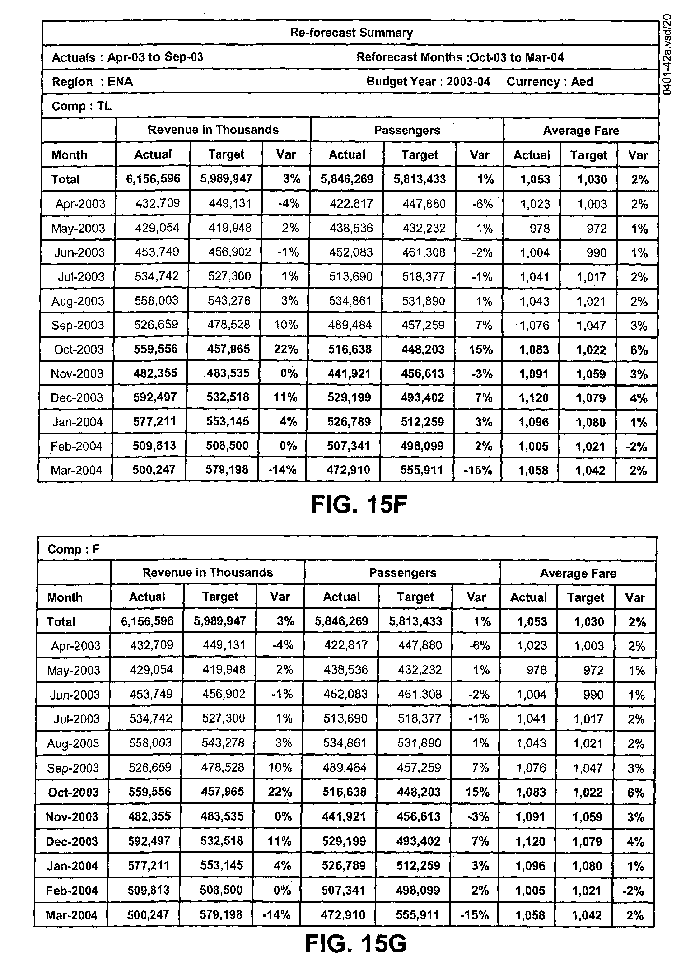

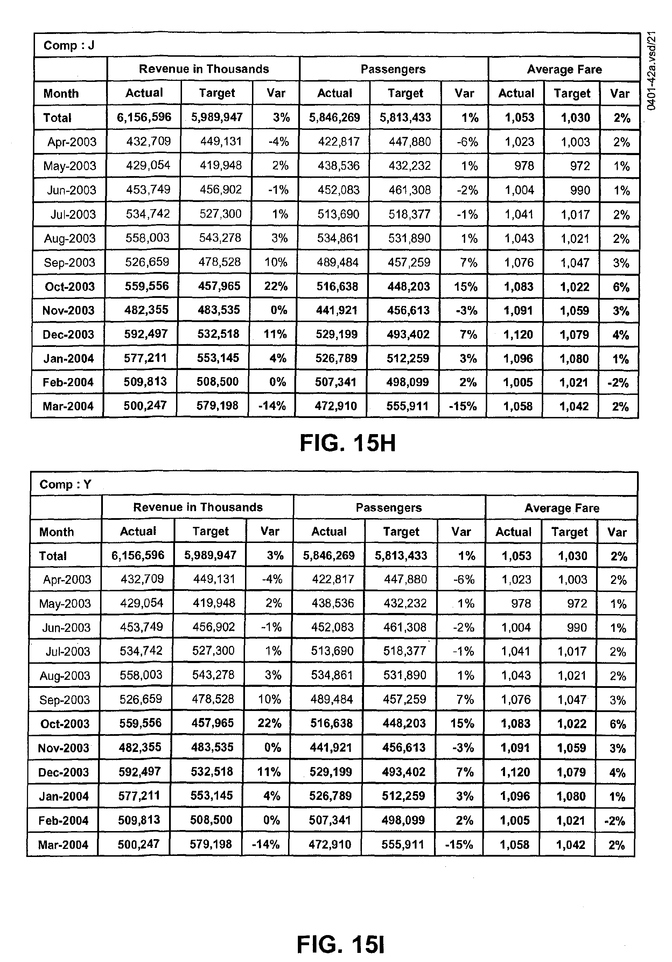

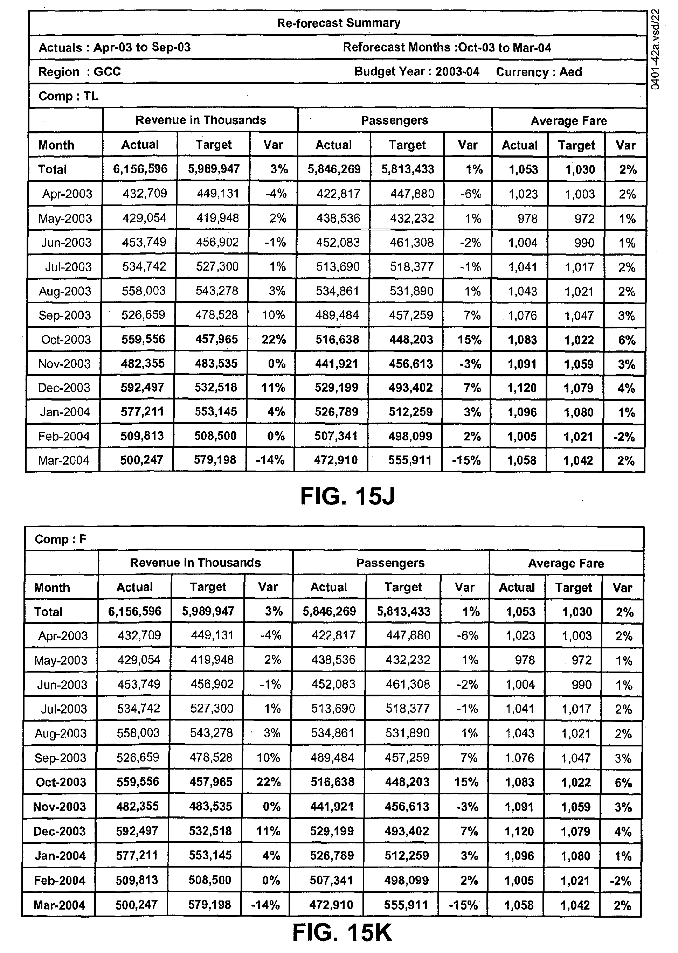

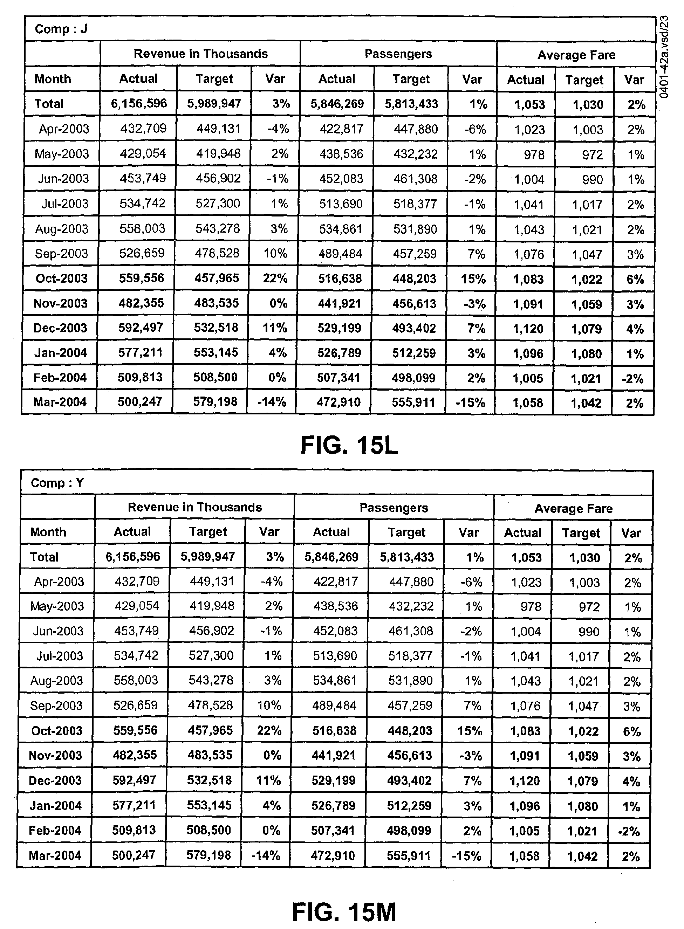

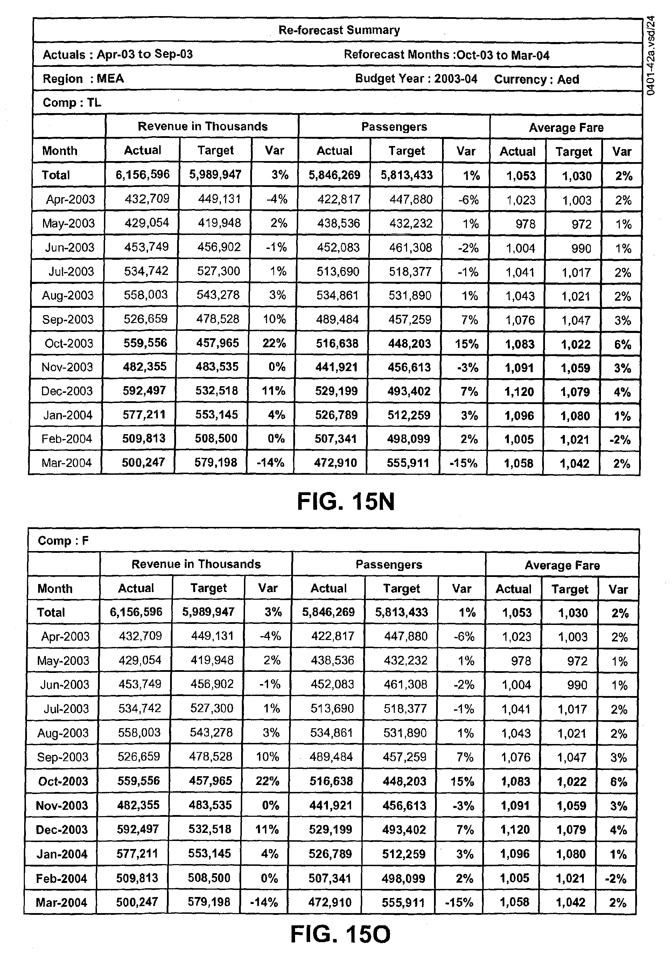

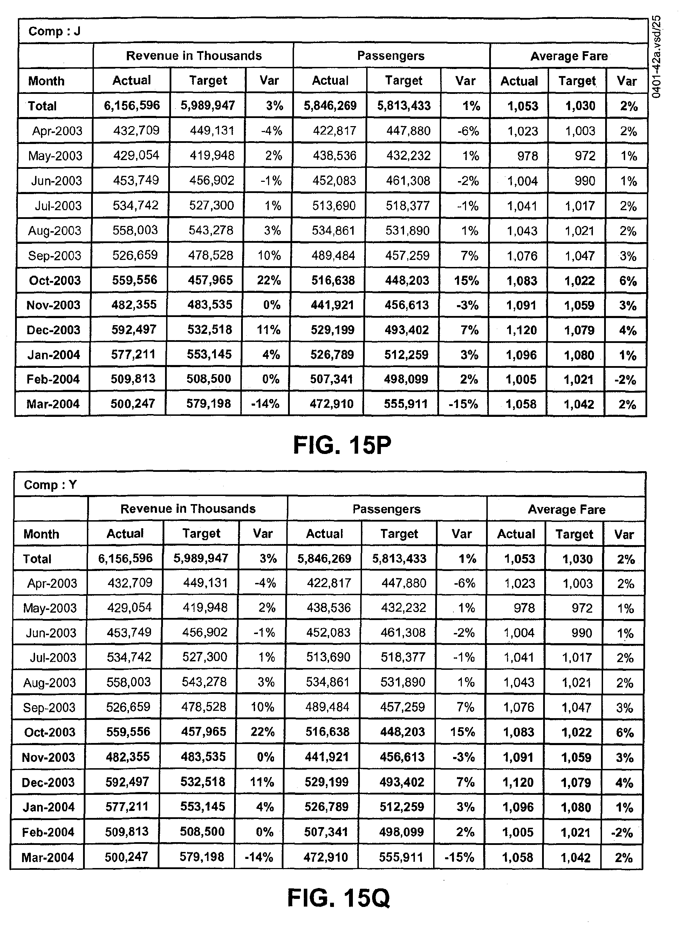

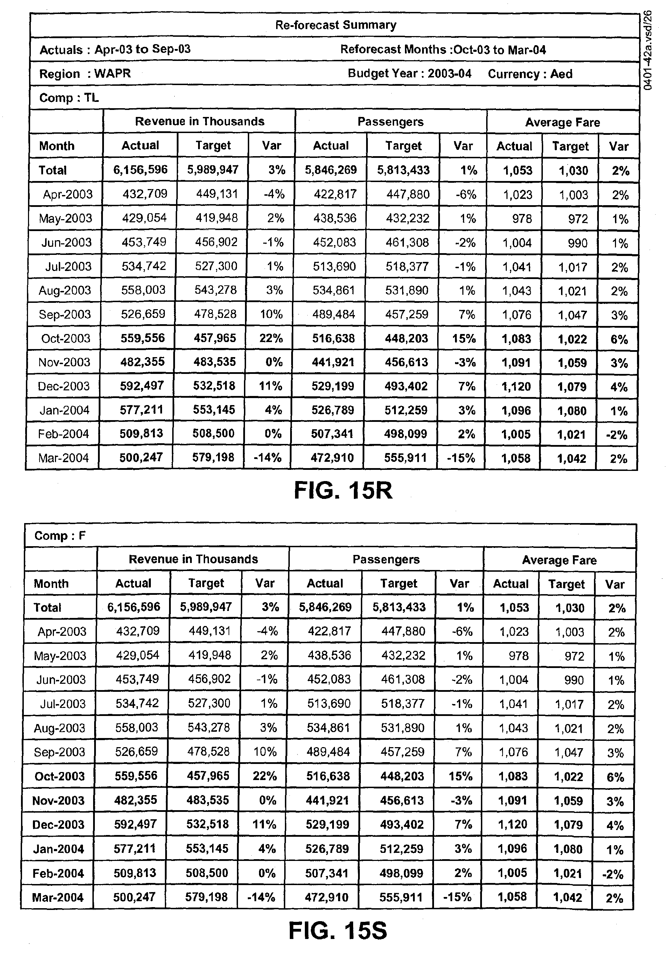

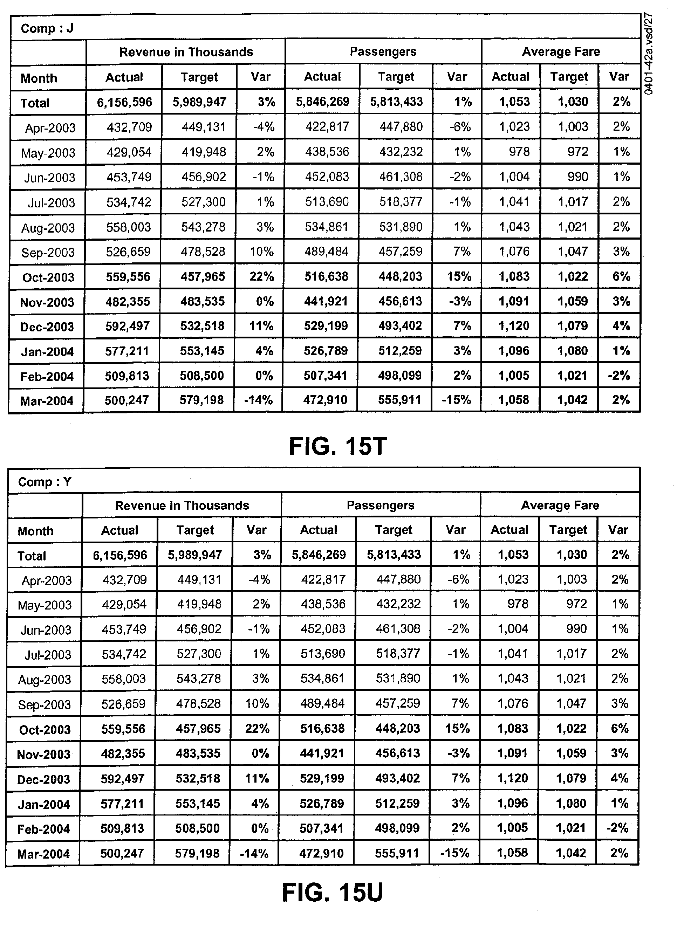

**FIG. 14** is another example of a report related to yield for general of POS's, and **FIG. 15A** is an example of a POS detailed report for a region. All parameter information will appear in the report header as shown.

**FIGS. 15B-15U** are samples of Region Summary and Network summary from Re-forecast Region Summary in spreadsheet form that can be produced by the RPS **100**. **FIGS. 15B-15E** show Re-forecast summary for the entire network for compartments TL (total), F, J and Y, respectively, **FIGS**. **15F-15I** show Re-forecast summary for the ENA (Europe-North America) for compartments TL, F, J and Y, respectively, **FIGS. 15J-15M** show Re-forecast summary for the Gulf Cooperation Council (GCC) countries for compartments TL, F, J and Y, respectively, **FIGS. 15N-15Q** show Re-forecast summary for the Middle East (MEA) for compartments TL, F, J and Y, respectively, and **FIGS. 15R-15U** show Re-forecast summary for the WAPR (West Asia/Pacific Rim) for compartments TL, F, J and Y, respectively.

### 8.2.3.4 Re-forecasted Data Update Facility

This update facility comprises two forms:

a. Query form
b. Update form

The Query form fetches the requested record for update onto the Update form. The Query form has the following selection criteria:

| Region | list of values of all Regions |
|---|---|
| POS | list of values of the POSs of the Region selected. |
| Compartment | F/J/Y |

The Update form retrieves the baseline and the Re-forecasted data for all the O&Ds from the POS and Comp selected. Both Re-forecasted PAX and Re-forecasted Yield values can be updated and saved.

An audit trail for all updates taking place via this update form can also be performed.

### 8.2.3.5 Re-forecasted Data Reports

The purpose of the Re-forecasted Data reports, which the RPS **100** can generate, is to list the details of the Re-forecasted data **502** generated by the Re-forecasting process 102. Both reports can display the Re-forecasted month in cross-tab fashion.

### 8.2.4 Re-forecasting Model Inference

Results have shown minimum forecast error, and that the selected model is well suited to yield Re-forecasting.

### 8.3 Re-forecast PAX Constraining Logic

Once the PAX Re-forecasting **503** is done, the PAX forecasts are constrained to adjusted capacity available in each route. Adjusted capacity is the capacity multiplied by a predetermined factor selected by the system administrator.

For a particular location (e.g., LHR), capacity can be mathematically represented as

$$\sum_{i=1}^{i=m} \sum_{j=1}^{j=n} P_i(LHR - Destinatinon_j) <= adjusted\ capacity\ of\ LHR - DXB$$

where i= number of POS which has LHR as origin, and

j= number of destinations originating from LHR for a POS.

For example, if LHRDXB (London—Dubai) Economy capacity utilization is assumed as 95% in the month of December 02,

Actual Economy Capacity of LHRDXB = 25,513
Adjusted Capacity = 0.95* 25,513 = 24,237

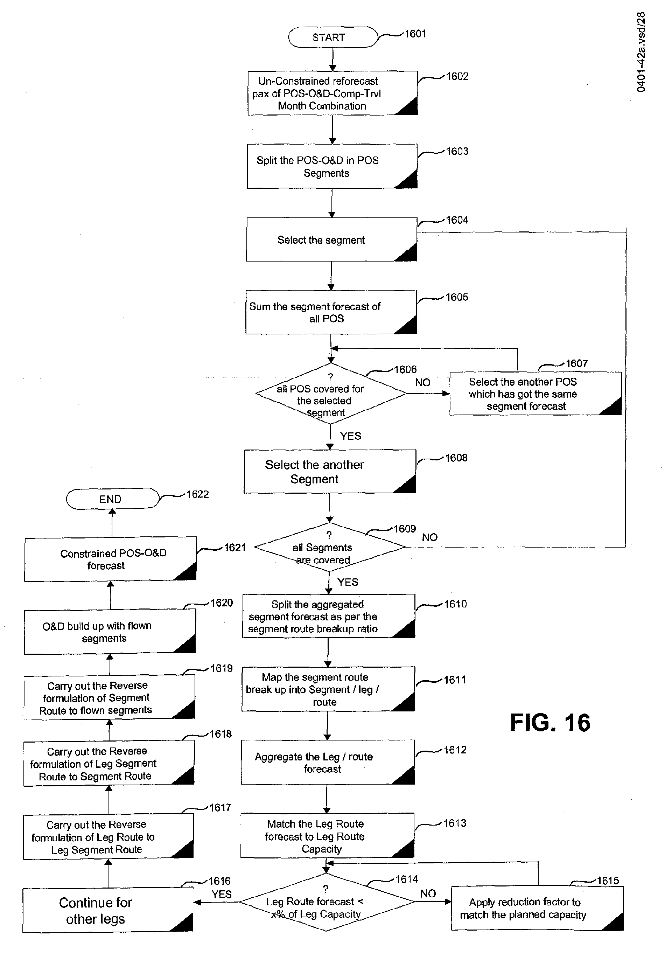

In carrying out the Re-forecasting of Economy class PAX for the month of December 02, it is desirable to ensure that forecast PAX for all POS originating from LHR to various destinations should not cross the adjusted capacity i.e. 24,237. Hence, once the PAX Re-forecast **802** is done, it is constrained as per the flow chart of **FIG. 16.** Hence, in any Leg, Re-forecast PAX will not be higher than the adjusted capacity. Adjusted capacity of all Legs is calculated based on its anticipated utilization rates.

The constraining process starts at step **1601.** At step **1602,** an unconstrained reforecasted PAX demand of POS-O&D-Comp-Travel Month combination is accessed. At step **1603**, the POS-O&D and each POS segment is split. At step **1604**, this particular segment is selected. At step **1605**, all the forecast all the segments for all the POS are summed. At step **1606**, a decision point is reached as to whether all the POSs are covered for the selected segment if no, then at step **1607**, another POS is selected that has the same segment forecast. If yes, at step **1608**, another segment is selected. If not all segments are covered (step **1609**) the process goes back to the segment selection step **1604**. If all segments are covered, the process goes to step **1610**, which includes the splitting of the aggregated segment forecast according to the segment route breakup ratio.

At step **1611**, the segment route breakup is mapped into segment and leg and route combinations. At step **1612**, the leg and route forecasts are aggregated. At step **1613**, the leg and route forecasts are matched to leg and route capacity. At step **1614**, if the leg and route forecast is less than a certain percentage of leg capacity, a reduction factor is appraised to match the planned capacity (step **1615**) if the forecast is less than the capacity, the process continues for other legs (step **1616**). At **1617,** reverse formulation of leg and route to leg segment route is carried out. At **1616,** reverse formulation of leg segment route to segment route is carried out. At step **1619,** reverse formulation of segment route to flown segments is carried out. At step **1620**, origin and destinations are built up with flown segments. At step **1621**, constrained POS-O+D forecast is created. The process ends at step **1622.**

### 8.3.1.1 Update of Re-forecasted PAX/Yield data into the Revenue data

This is a process that is triggered by the user after the Re-forecasted data has been reviewed. It updates the revenue data baseline for the Re-forecast month from the Re-forecast data store. The revenue is always recomputed using the PAX and the yield values after they have been updated by the Re-forecasting.

A system parameter "Re-forecasting Completed" indicates whether or not the PAX and Yield Re-forecasting process **102** has been completed . The update revenue data takes place only if this flag is set to 'Completed' status.

The Re-forecasting process **102** may record details in the log. The details may include the following:

1. Start date & time of process;
2. User id;
3. POS-wise Re-forecasted PAX totals (updated to revenue data).

### 8.4 Re-forecast Effectiveness Measurement

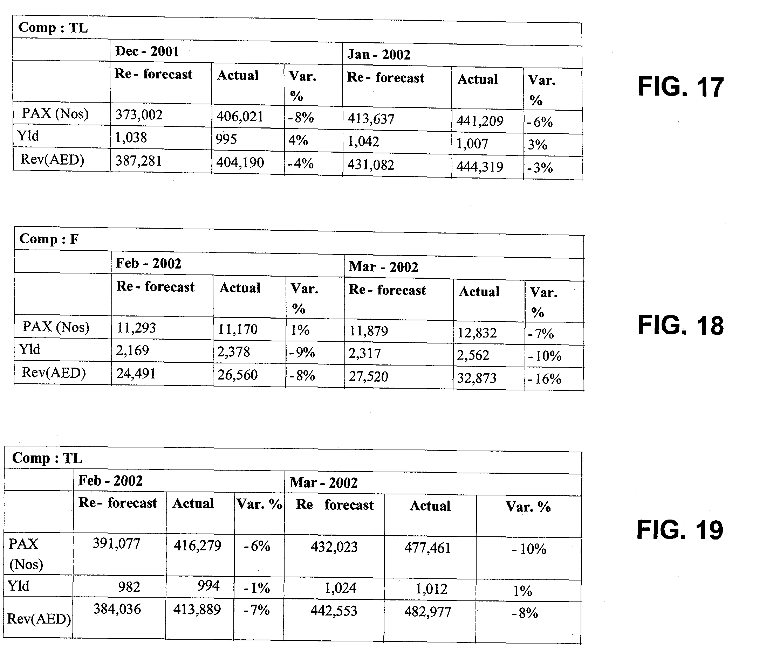

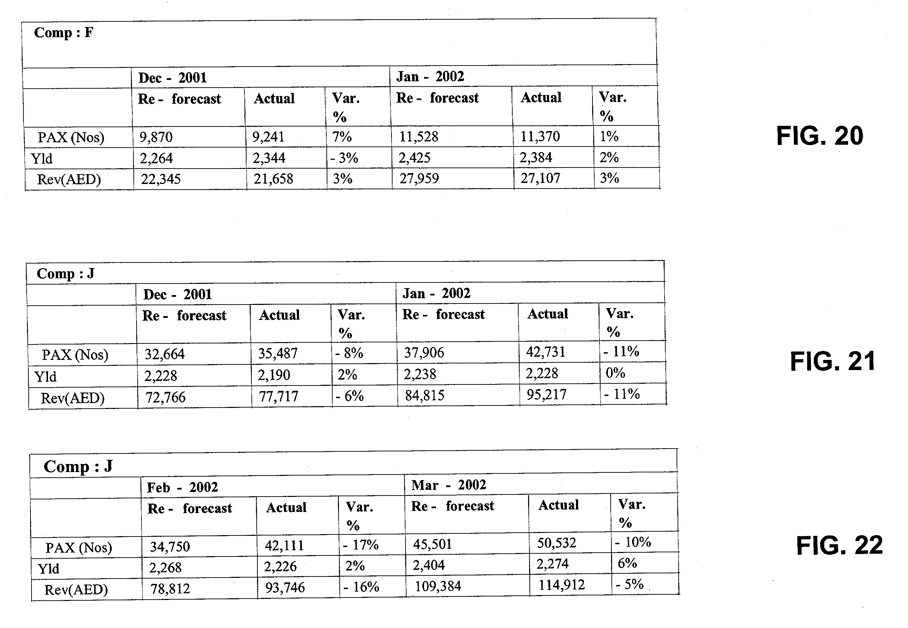

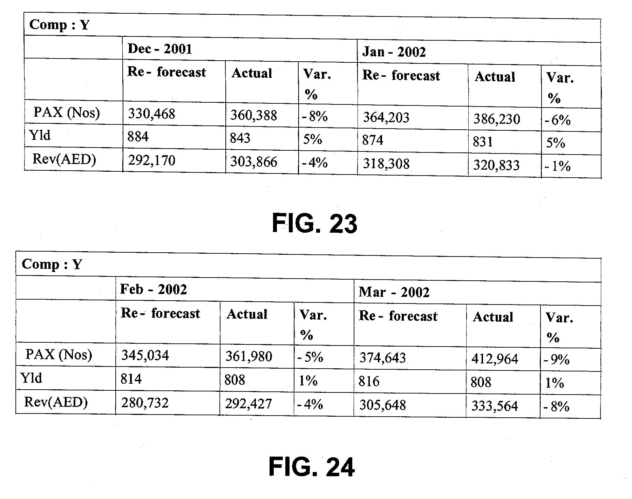

Effectiveness of Re-forecasting process **102** (PAX, Yield) is evaluated based on the last year Re-forecast data and actual data. Data for December 01, January 02, February 02, March 02 are evaluated for Total, F, J, Y compartments (i.e., First, Business, and Economy class compartments) and comparative results are given in **FIGS. 17-24**. In all cases, it has been shown empirically that the Re-forecast models are highly effective. For example, as may be seen in **FIG. 17**, the variance numbers are 6% or less. In **FIG. 20**, the variance numbers are under 3%, which is quite good.

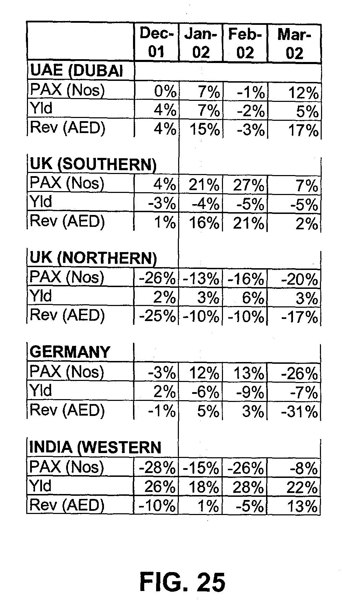

As an example, December 01 - March 02 Re-forecast performance (Comp: Economy), of one POS is shown in **FIG. 25**. This figure illustrates, in percentage terms, the effectiveness of the forecasted value (in percent, compared to actual value), for each parameter (PAX, yield and revenue), by month (horizontal "axis") and by POS (vertical axis).

### 9.0 Demand Estimation 103

### 9.1 Introduction

Demand Estimation **103** is the process of forecasting the PAX demand that should materialize in the target year. Once validated and approved after the optimization process, it forms the PAX targets to be achieved for the target year. Note that estimation is also done for the expected yield.

Demand Estimation **103** is preferably carried out at the POS and O&D and Compartment level for every month in the target year. A Demand Estimation module within the RPS **100** generates the PAX demand data for the target year for all the months of the target year at the POS and O&D and Compartment level. Inputs to the module are as follows:

Monthly Flown PAX data at the O&D, POS, Region level for the three compartments for the past 'N' years (for example, N=5);

Monthly MIDT **202** bookings data at the O&D, POS levels for the three compartments for the past 'M' years (for example, M=5, or M=N, although that need not always be the case); and

The O&D Capacity data for the current year and the target year.

### 9.2 Demand Estimation Functional Process

Demand Estimation **103** includes the following processes:

Derivation of Actual Traffic Growth factor;
Derivation of Market Share Growth factor from MIDT 202 data;
Derivation of O&D Capacity Growth Factor;
A facility to manually edit and store Effective Growth Factors;
A process to trigger the unconstraining of the baseline demand based on the factors derived;
Reports for displaying the final demand ensuing after the unconstraining process;
Exception reports for displaying the factors derived;
An audit trail for manual alterations on the factors and execution of unconstraining process; and
PAX Demand Estimation for routes with less than one year flown data.

### 9.3 Derivation of Actual Traffic Growth Factor

The RPS **100** includes a process to extract and store the Actual Traffic Growth Factor (sometimes referred to as "Actual Growth Factor") from the commercial database. This process should extract the growth rate (in %) year over year of the flown PAX from the commercial database. This growth rate (in %) is called the Growth Factor (GF).

The growth rate is used at the Compartment and Year and Month and POS and O&D level. The RPS parameter "Demand Estimation No. of Previous Years" initializes the year from which the growth factor needs to be extracted.

The GF is calculated at the O&D level only for those O&Ds that account for the top 80% revenue generation of the POS. The O&Ds, which account for the remaining 20%, the Growth Factor should be calculated at O&D level with the Growth Factor pertaining to POS. The RPS 100 calculates the previous years GF based on the system parameter of the Current Year, and the number of previous years:

The Number of Previous Years for the Actual Traffic Growth Factor = 5

The Year over Year Growth Factor for a month is computed as follows:

(This Year - Last Year / Last Year) * 100

Actual Traffic Growth Factor = Weighted Average Growth Factor for previous years defined as a system parameter.

Actual Traffic Growth Factor = (W1*G1+W2*G2+... Wn*Gn)/(W1+W2+...+Wn)

where W1 to Wn are weights for n years, and G1 to Gn are growth factors for n years.

The Actual Traffic Growth Factor computation is preferably modularized.

### 9.4 Derivation of Bookings Growth Factor from MIDT data

The RPS **100** includes a process to extract the Market Share Growth Factor, to formulate the market growth factors, and to store them.

The MIDT **202** Database is interrogated to extract the Market Share (in %) at the Compartment and Year and Month and POS and O&D level.

The O&Ds for which the Actual Traffic Growth Factor has been computed are used to retrieve O&Ds from MIDT **202**. The MIDT Market Growth Factor is computed only for the O&Ds that are retrieved.

MIDT **202** Market Share for the Number of Previous years that are initialized from the target for which the growth factor needs to be extracted are parameterized, for example:

Current Year = 2002

Number of Previous years of the MIDT Market Share = 5

Thus, for 2002, the MIDT Growth Factor should be calculated starting from 1997 through 2001:

Market Share = Monthly Bookings/Monthly Total Bookings.

The Market Share Growth Factor should reflect the year over year variation and the computation is as follows:

(This Year - Last Year / Last Year) * 100

Weighted Market Share Factor = (W1*M1+W2*M2+...

Wn*Mn)/(W1+W2+...+Wn)

Where W1 to Wn are weights for n years, and M1 to Mn are Market Share for n years.

After deriving the Growth Factor, it should be compared with the following formula and use the appropriate MIDT Growth Factor to derive the Effective Growth Factor:

If

Market Share GF < = 15%, MIDT Growth Factor = 4%

Market Share GF is between 16% to 30%, MIDT Growth

Factor = 6% Market Share GF > 30%, MIDT Growth Factor = 10%

Market Share GF is negative, MIDT Growth Factor = 10%

From the above example, the MIDT Growth Factor should be = 4%, which should be used to derive the Effective Growth Factor.

### 9.5 Derivation of O&D Capacity Growth Factor

The growth rate of the O&D capacity between the target year and the current year is extracted. These O&D capacity values for both the years are available from the RPS database 207.

The RPS database 207 is interrogated for the O&D Capacity of the target year and the current year. The O&D Capacity is extracted at the Compartment and O&D level for all the months of the target year.

The monthly growth rate and the total yearly growth rate is calculated and stored for each O&D.

The monthly year over year Capacity Growth Factor is computed as follows: (Target Month (Target Year) - Target Month (Current Year) / Target Month (Current Year)) * 100

### 9.6 Derivation of Effective Growth Factor

The RPS **100** includes a process to compute the Effective Growth Factor.

Then Target Traffic Growth Factor = Actual Traffic Growth Factor + MIDT 202 Growth Factor

If the Target Traffic Growth Factor => the Capacity Growth Factor, the Target Traffic Growth Factor is applied to the Effective Growth Factor.

Thus, Effective Growth Factor = Target Traffic Growth Factor

Example: POS: UK (Southern) O&D: DXBLGW

| Month | Actual Traffic Growth Factor in Percentage | MIDT Growth Factor in Percentage | Target Traffic Growth Factor in Percentage | Capacity Growth in Percentage | Effective Growth Factor in Percentage |
|---|---|---|---|---|---|
| April 03 | 10 | 4 | 14 | 0 | 14 |

Target Traffic Growth Factor < Capacity Growth Factor:

If the Target Traffic Growth Factor < the Capacity Growth Factor, apply an average of Target Traffic Growth Factor and Capacity Growth Factor to the Effective Growth Factor.

Effective Growth Factor = (Target Traffic Growth Factor + Capacity Growth Factor)/2.

Effective Growth Factor = (14 + 100)/2 = 114 / 2 = 57

Example: POS: UK (Southern) O&D: DXBLGW

| Month | Actual Traffic Growth Factor in Percentage | MIDT Growth Factor in Percentage | Target Traffic Growth Factor in Percentage | Capacity Growth in Percentage | Effective Growth Factor in Percentage |
|---|---|---|---|---|---|
| April 03 | 10 | 4 | 14 | 100 | 57 |
| Note: The Comp O&D Capacity should be applied at each POS level | | | | | |

Example: 'Y' - Comp 'LHRMEL' O&D the Capacity Growth Factor derived for April 03 is 50.

This is applied to POS where appropriate, to compute the Effective Growth Factor:

| POS | Compartment | O&D | Capacity Growth Factor |
|---|---|---|---|
| UK Southern | Y | LHRMEL | 50 |
| UKNorthern | Y | LHRMEL | 50 |
| UK Central | Y | LHRMEL | 50 |
| Note: Rounding up of the derived Factors follows the usual methodology, i.e., less than 0.5, round down, greater than or equal to 0.5, round up. | | | |

### 9.7 Facility to Manually Edit and Store Effective Growth

### Factors

The RPS **100** optionally includes a Query/Update Form combination, by which the Growth Factor from all the three processes (Derivation of Actual Traffic Growth Factor, Derivation of Booking Growth factor from MIDT **202** data, and Derivation of O&D Capacity Growth Factor) can be displayed and appropriate changes can be made to the Effective Growth Factor values.

This Query Form facilitates accepting the parameters to generate the query for the Effective Growth Factor, to be displayed in an Update Form.

The user can edit the Effective Growth Factor. The user can query the Effective Growth Factor based on Region, POS, and Month:

Actual Traffic Growth: This displays the growth for the 'N' years defined in the parameters, the data at the O&D, POS and Region levels for the F, J & Y Compartments. Currently 'N' = 5.

MIDT Market Share: This displays the share for 'M' years defined in the parameters, the data at the O&D, POS and Region levels for the F, J & Y Compartments. Currently 'M' = 5.

On completion of the edit of the Effective Growth Factor, the RPS **100** prompts to save on exit or to cancel (not to accept changes). The saved changes can be captured in the audit trail.

### 9.8 Process to trigger the unconstraining of the baseline PAX demand

This is a process that uses the Effective Growth Factor values for each Comp and POS and O&Ds, and inflates/deflates the baseline values to arrive at the PAX demand values for each month based on the factors derived. The trigger process computes the PAX demand based on the Effective Growth Factor at Comp and O&Ds and POS level for each month in the target year. The Revenue data should be updated at the same time. On completion of the unconstraining process, the user should be able to generate reports and view the PAX demand based on factors derived.

### 9.9 Demand Estimation for routes with less than one year flown data

The RPS **100** includes a process to compute PAX demand for the months in the current year, where the O&D were not operational, or flown data is not available.

This process computes the average PAX demand from the data of flown months available at POS-O&D-Compartment level and populates PAX data for the months where flown data is not available in the corresponding POS-O&D-Compartment level. The computation is as follows: Average PAX = Sum of Actual PAX for flown months/Number of flown months.

In the example below, the Actual PAX is available for the month of May and June and the PAX demand should be populated for the month of April.

| POS | O&D | PAX demand | | |
|---|---|---|---|---|
| | | April | May | June |
| POS 1 | O&D 1 | 15 | 10 | 20 |

Sum of Actual PAX for flown months = 10 + 20 = 30.
Number of flown months = 2 (May and June).
Average PAX = Sum of Actual PAX for flown months/Number of flown months.
Average PAX = 30 / 2 = 15.

### 9.10 Demand Estimation Derivation

Demand Estimation **103** is carried out for PAX and yield. Demand Estimation **103** considers internal growth (i.e., the airline's own traffic growth), as well as market growth (i.e., traffic on all the airlines for a particular O&D). Due weight is given to recent past growth in the market as well as the airline's own growth in estimating future trends. In some circumstances, internal growth may be used to derive market growth, and vice versa (in other words, market growth serves as a proxy for internal growth, or vice versa).

Demand Estimation **102** follows the Re-forecasting process **102.** Once the Re-forecasting **102** is done for the PAX and yield for the remaining months of the current financial year (e.g., 2002 - 2003), actual data from April 02 - August 02 and Re-forecast data from September 02 - March 03 forms or cornerstone for the demand estimations for the next budget year (e.g., 2003-2004). An optional feature allows the individual POSs to "negotiate" with sales and yield management online, in real time, and to "escalate" the issue using E-dialogue if they are unable to reach an agreement on the expected targets for the next budget year. This aids in the transparency of setting targets, allowing greater "buy in" into the targets by the sales force.

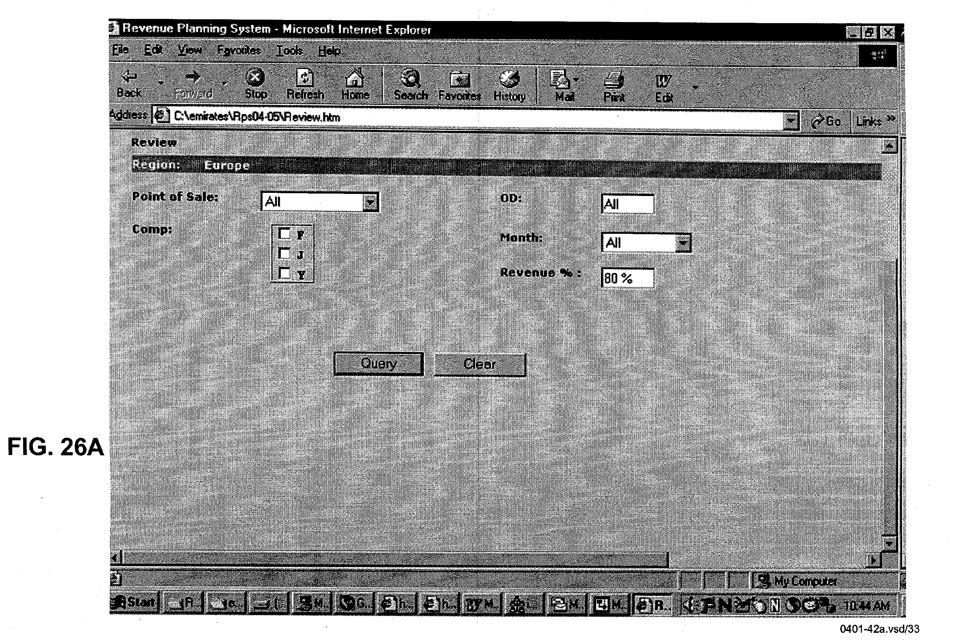

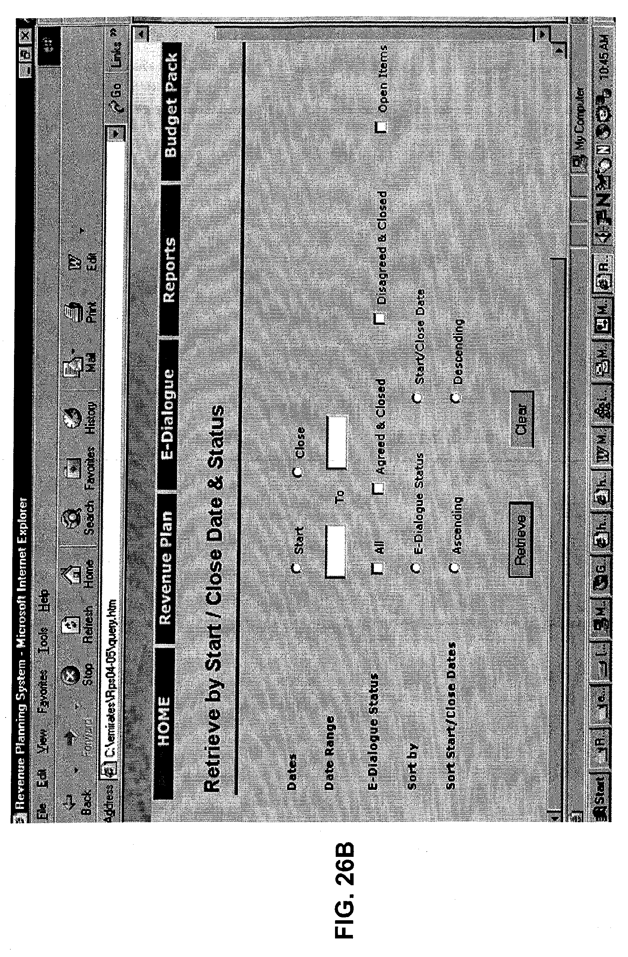

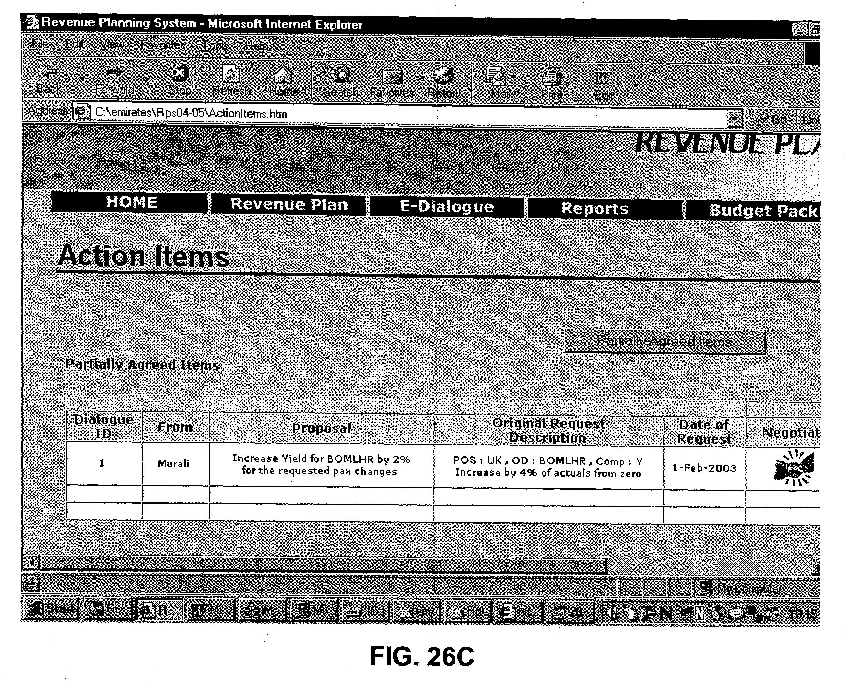

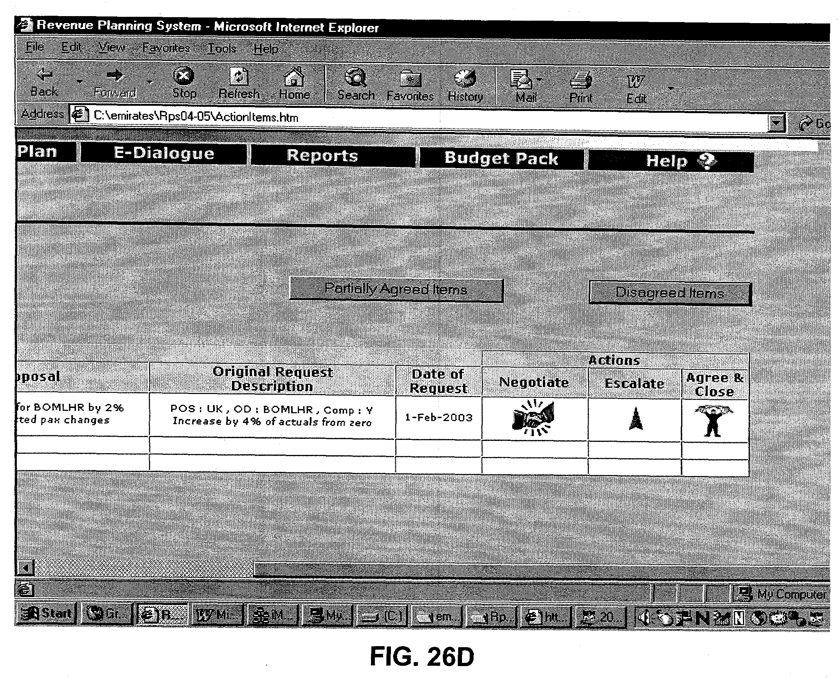

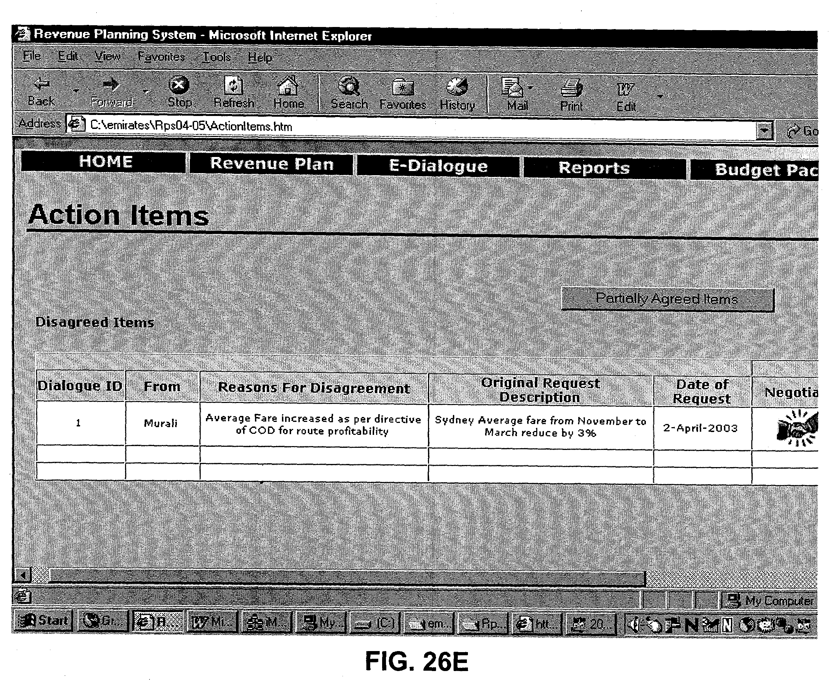

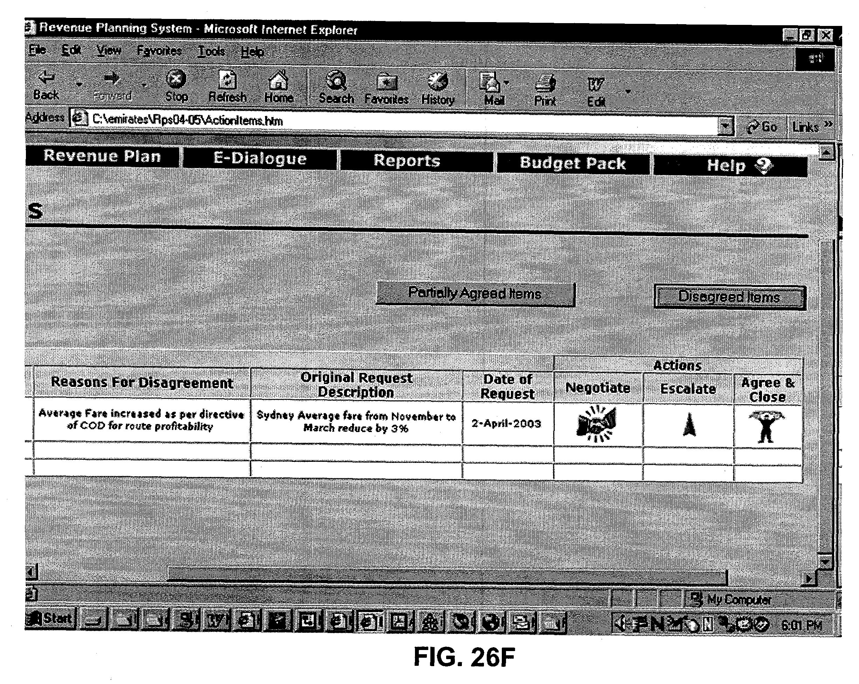

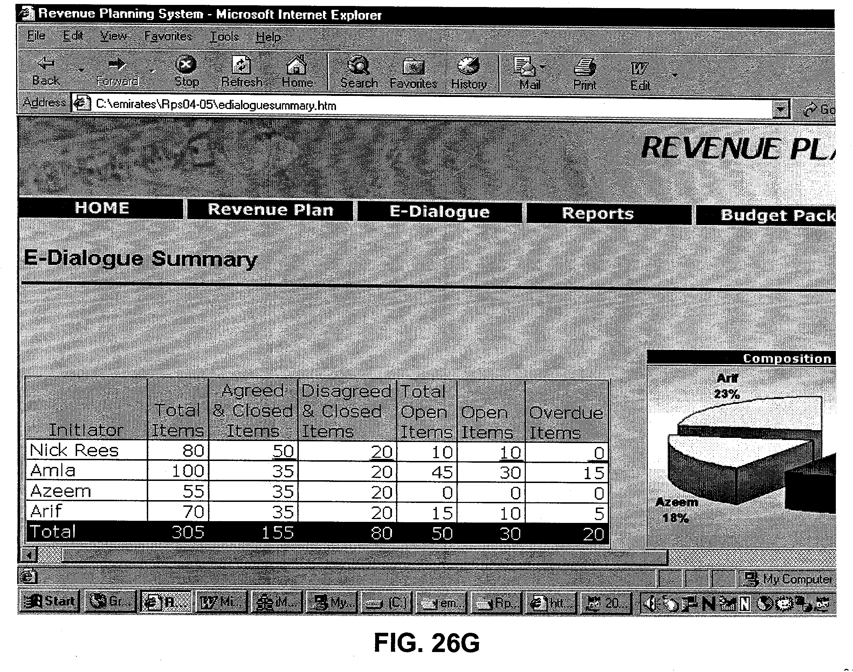

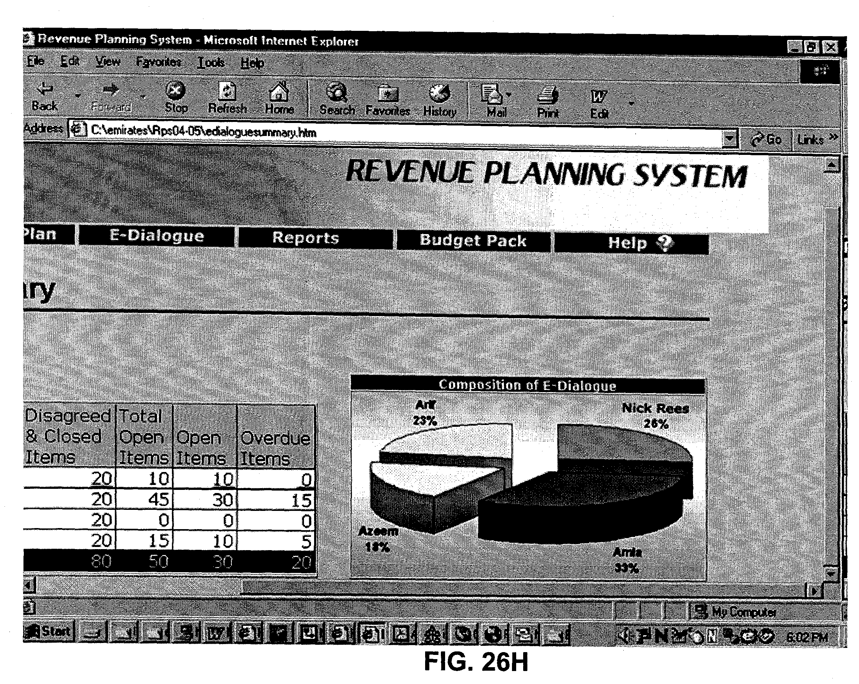

FIGS. 26A-26G illustrate the process of using E-dialogue to achieve buy-in from the various constituencies within an airline into the targets. **FIGS. 26A-26B** show an initiation (or retrieval) of an E-dialogue (and should be viewed as a single figure). As shown in **FIGS. 26C-26D,** a "partially agreed item" exists (these two figures are part of the same screen and should be viewed as a single figure). As shown in **FIG. 26E-26F,** a "disagreed item" exists (these two figures are also part of the same screen and should be viewed as a single figure). As shown in a screen shot of **FIGS. 26G-26G** (which should be viewed as a single figure), a summary of the E-dialogue is displayed, showing the agreed items, the disagreed items, and the open items. As noted above, by going through this process, the target setting process can arrive at the targets that are agreed to by the various constituencies within an airline.

### 9.11 PAX Demand Estimation—additiohal factors

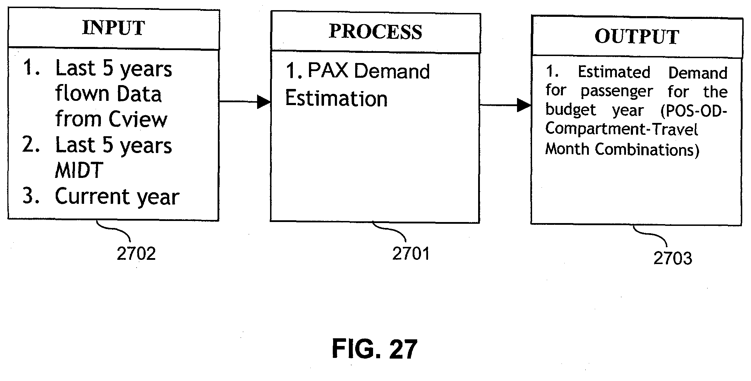

**FIG. 27** shows an I-P-O diagram of PAX Demand Estimation **2701.** As shown in the I-P-O diagram of **FIG. 27,** the primary inputs **2702** to the PAX Demand Estimation Process **2701** are the last 5 years flown coupons (O&D-Comp-Travel month-wise), the last 5 years MIDT **202** data for O&D-Comp-Travel month combinations, and O&D Capacity for the current year and the target year.

The number of years considered for the actual flown data can be entered by the user. Hence, the RPS **100** considers the number of years for the PAX Demand estimation **2701**, and the MIDT **202** data for the same number of years, currently, set as 5 years. Therefore, the RPS **100** considers last 5 years actual flown and MIDT **202** data for estimating the PAX demand for budget year (e.g., 2003-2004). The output **2703** of the PAX Demand Estimation Process **2701**, as shown in **FIG. 27** is the estimated demand for passenger traffic for the budget year for various POS-Origin and Destination-Compartment-Travel Month combinations.

### 9.11.1 Effective Growth Factor Derivation

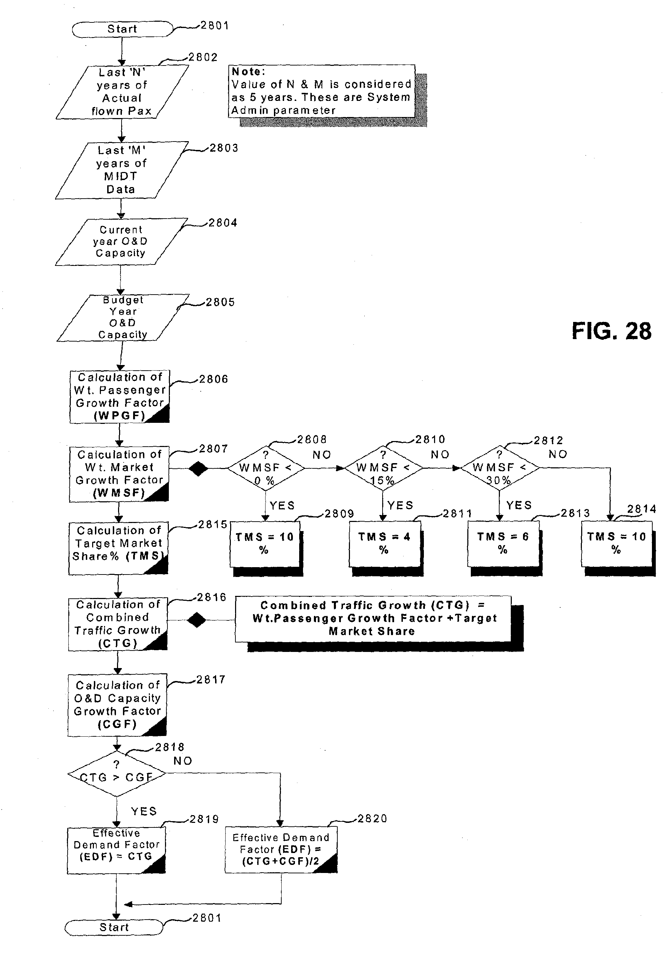

As shown in the flow chart of **FIG. 28,** for the derivation of Effective Growth Factor (EGF), which is used for determining the expected demand, actual passenger growth, market growth and capacity growth are considered. Hence, this model takes into account all influences (internal, as well as external) to accurately predict demand in the market.

Before calculating the EGF, Passenger Growth Factor and Market Growth Factor are calculated. Passenger Growth Factor (PGF) and Capacity Growth Factor (CGF) are used in deriving the Effective Passenger Growth Factor (EPGF). While calculating the passenger growth and market growth factors, weighted average method is used to give the preferential importance to the recent growth instead of simple average. After calculating the Weighted Passenger Growth Factor (WPGF), Weighted Market Growth Factor (WMGF) is determined. Depending on the Weighted Market Growth Factor, Target Market Share (TMS) is assigned. This reflects the potential to capture the market depending on the market growth. TMS is assigned on increasing rate when market share grows, to have a bigger presence in the market where the potential exists to sell it. The flow chart of **FIG. 28** depicts the steps followed in deriving the EGF, which is used in estimating the PAX demand.

As shown in **FIG. 28,** the process of estimating the Effective Growth Factor (EGF) begins at the start step **2201**. The user then inputs the number of years of actual flown passenger data (step **2202**). The user then inputs the number of years of MIDT **202** data (step **2203**). The user can then input current year origin and destination capacity (step 2204). The user then inputs the budget year origin and destination capacity (step **2205**).

The Weighted Passenger Growth Factor is then calculated (step **2206**). The Weighted Market Growth Factor is then calculated (step **2207**). A decision point is then reached as to whether the Weighted Market Share Factor is less than zero (step **2208**). If it is, then the Total Market Share (TMS) is taken as 10%. If it is not, the next decision point is whether the Weighted Market Share Factor is less than 15% (step **2210**). If it is, then the TMS is taken as 4% (step **2211**). If it is not, the next decision point is whether the weighted market share factor is less than 30% (step **2212**). If it is, then the TMS is taken as 6% (step **2213**). If it is not, the TMS is taken as 10% (step **2214**).

After calculating the weighted market share factor, and the calculation of the target market share (step **2215**), combined traffic growth is calculated (step **2216**). Origin and Destination Capacity Growth Factor is then calculated (step **2217**). If CTG > CGF (step **2218**), the effective demand factor (EDF) is taken as (CTG + CGF)/2 (step **2220**). If CTG is greater than CGF, then EGF - CTG (step **2219**). The process can then end, or optionally return to the start step **2201.**

### 9.11.2 Weighted Passenger Growth Factor (WPGF)

The Weighted Passenger Growth Factor (WPGF) is a parameter in the PAX demand estimation process **2701.** Passenger growth for the last X years (currently set as X = 5) is considered in calculating WPGF. The weighted average is considered instead of simple average. Weights have been chosen such that recent trend should have higher influence in estimating demand for budget year. Accordingly, weights have been selected in one example as shown below:

| Yr. No | Year | Weights |
|--------|------|---------|
| 1 | 1998 | 0.05 |
| 2 | 1999 | 0.15 |
| 3 | 2000 | 0.20 |
| 4 | 2001 | 0.25 |
| 5 | 2002 | 0.35 |

A sample calculation is shown below:

POS: DXB, O&D: LHRDXB, Comp: Economy, Travel Month: July 03

|  | Jul-97 | Jul-98 | Jul-99 | Jul-00 | Jul-01 | Jul-02 |
|--|--------|--------|--------|--------|--------|--------|
| Pax | 1,161 | 1,025 | 1,339 | 966 | 1,103 | 1,227 |
| Growth Factor |  | -12% | 31% | -28% | 14% | 11% |

(continued)

|  | Jul-97 | Jul-98 | Jul-99 | Jul-00 | Jul-01 | Jul-02 |
|---|---|---|---|---|---|---|
| Weights |  | 0.05 | 0.15 | 0.20 | 0.25 | 0.35 |

WPGF = 0.05 * (-12) + 0.15 * 31 + 0.20 * (-28) + 0.25 * 14 + 0.35 * 11 + = 5.8%

### 9.11.3 Weighted Market Share Factor (WMSF)

While estimating the demand for the budget year, the last 5 years' market growth can also been considered. Weights used for passenger growth may be used in this case also. These weights can be changed by the user. As with the WPGF, recent years' market growth get predominance compared to other past years. A sample calculation is shown below:

POS: DXB, O&D: LHRDXB, Comp: Economy, Travel Month: July 03

|  | Jul-97 | Jul-98 | Jul-99 | Jul-00 | Jul-01 | Jul-02 |
|---|---|---|---|---|---|---|
| EK-Pax |  |  | 1,205 | 991 | 1,351 | 1,304 |
| Total Pax |  |  | 3,407 | 3,366 | 3,591 | 3,267 |
| Market Share% |  |  | 35% | 29% | 38% | 40% |
| Weights |  |  | 0.15 | 0.20 | 0.25 | 0.35 |

WMSF = (0.35 * 0.4 + 0.25 * 0.38 + 0.20 * 0.29 + 0.15 * 0.35) = 34 %

### 9.11.4 Target Market Share (TMS)

Target Market Share (TMS) is the market share that the airline focuses on. Once the WMGF is determined, a certain Target Market Share is assigned to POS-O&D-Comp combinations by taking into consideration market potential. TMS is applied on monthly basis. The Target Market Share value depends on WMSF as given in the TMS matrix discussed below.

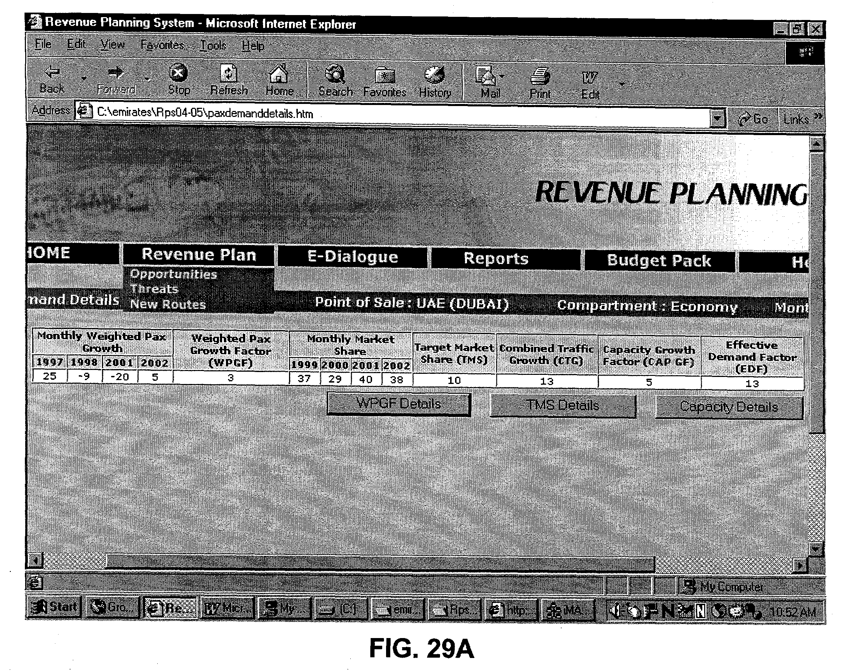

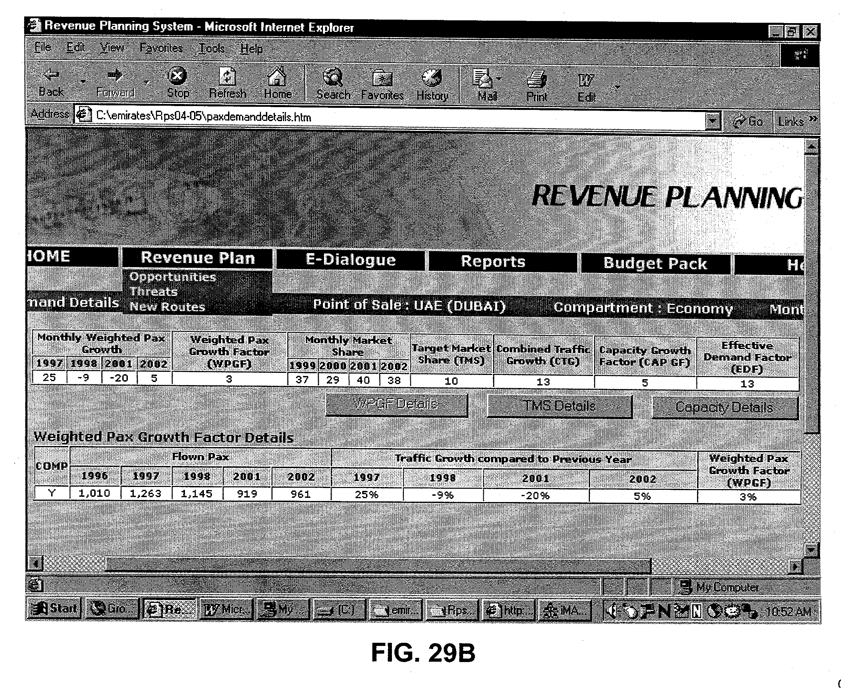

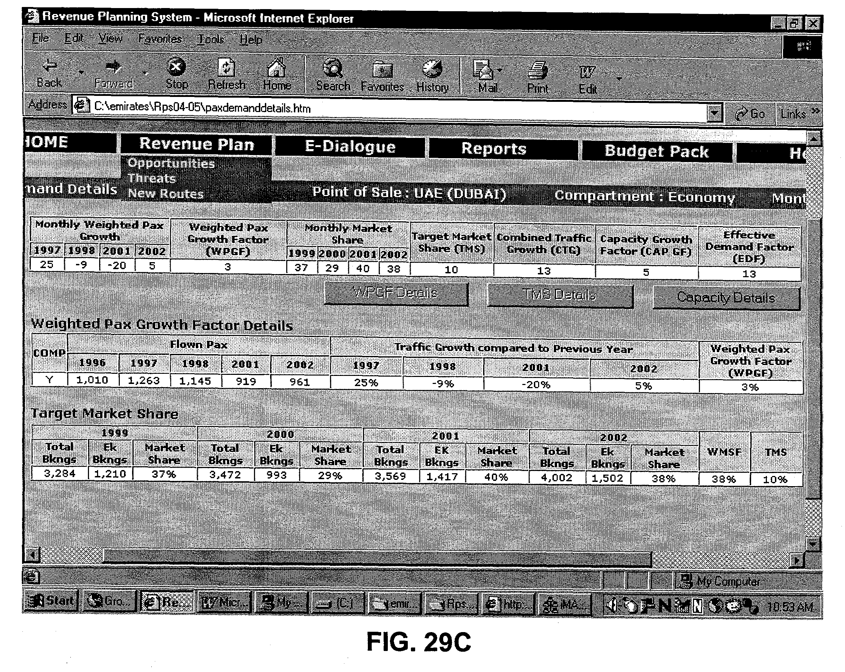

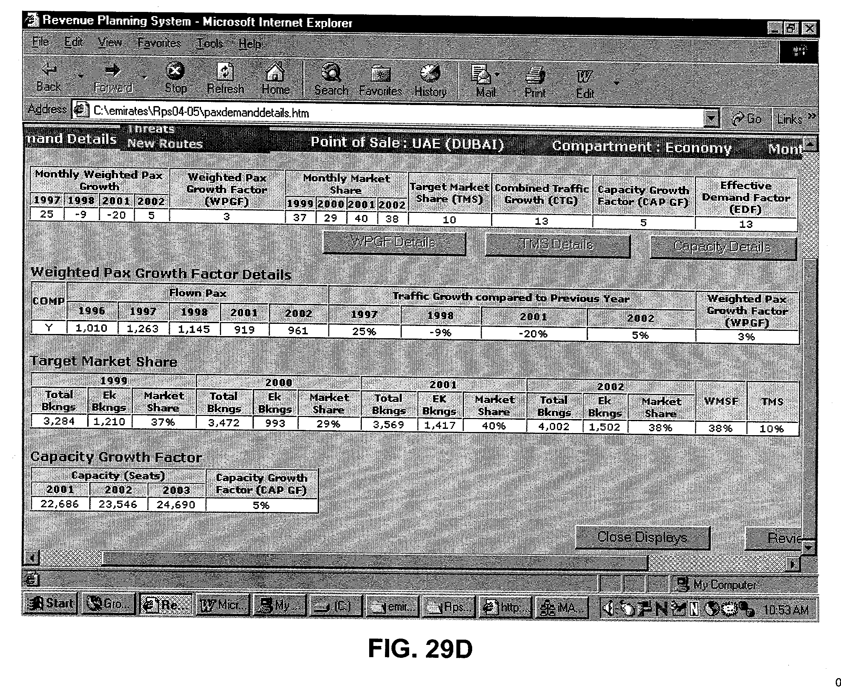

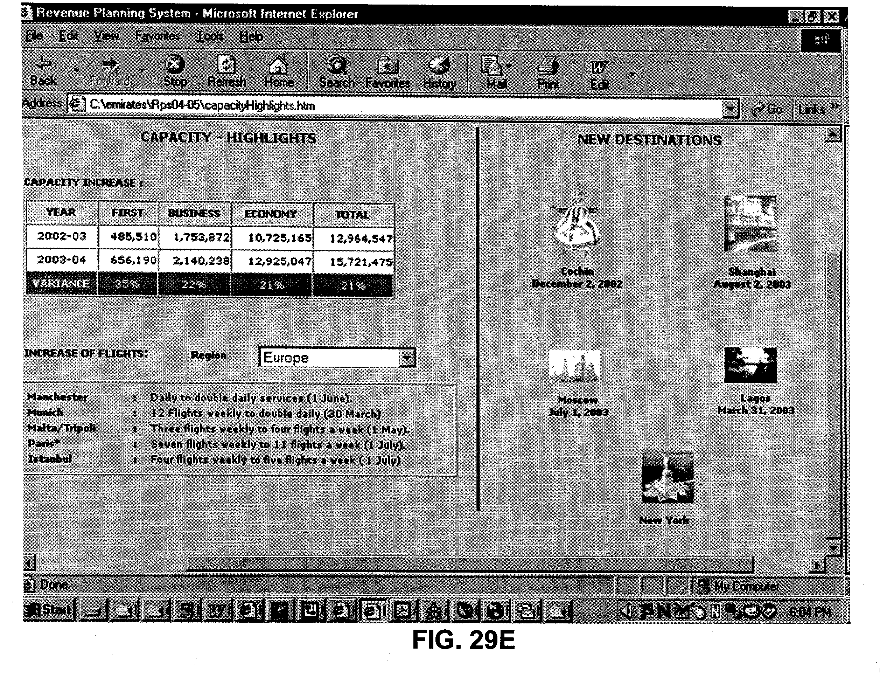

FIGS. 29A-29D are screen shots that illustrate the details of calculating the PAX demand - including WPGF, TMS, and capacity details, in tabular form, as discussed above. FIG. 29E is an illustration of capacity highlights, including breakdown by compartment, for a particular region (Europe), and new routes. This figure may be used, for example, to assist a user during E-dialogue (discussed above, see also FIGS. 26A-26G), particularly when setting targets for a new route.

### 9.11.5 TMS Matrix

The table below gives the value of Target Market Share that may be assigned for each POS-O&D-Comp-Travel Month combination, when the WMGF attains the value specified in the header.

| Less than 0% | Between 1% and 15% | Between 16% and 30% | Above 30% |
|---|---|---|---|
| 10% | 4% | 6% | 10% |

] As calculated in the above example, WMGF is 34% and it falls in the last band, which is > 30% category. Thus, Target Market Share for this market growth is 10%.

### 9.11.6 Combined Traffic Growth (CTG)

Once the WPGF and TMS are calculated, Combined Traffic Growth is calculated as shown below for each POS-O&D-Comp-Travel Month:

Combined Traffic Growth = Weighted Passenger Growth Factor + Target Market Share. A sample calculation is as follows:

| POS: DXB, O&D: LHRDXB, Comp: Economy, Travel Month: July 03

Combined Traffic Growth = 6 + 10 = 16%

### 9.11.7 Capacity Growth Factor (CGF)

For calculating the Capacity Growth Factor (CGF), capacities of current financial year and budget year are considered for O&D-Compartment-Travel Month combinations.

A sample calculation for O&D: LHRDXB, Comp: Y, Travel Month: July 03 is shown below.

|          | July - 02 | July -03 | CGF  |
|----------|-----------|----------|------|
| Capacity | 24,021    | 25,513   | 6 %  |

### 9.11.8 Effective Growth Factor (EGF) Example

As discussed above, in order to derive the EDF, Combined Traffic Growth (CTG) is compared with Capacity Growth Factor (CGF) and relevant formula is used:

IF CTG > CGF
Then Effective Demand Factor = CTG
EGF = (CTG + CGF)/2

In the example discussed above, the first condition holds true, i.e., CTF > CGF, therefore:
EGF = CTG

### 9.11.9 PAX Demand Estimation - Sample Calculation

With the help of EGF, demand can be derived by multiplying EGF by Current Year actual data.

Sample Calculation:

POS: DXB, O&D: LHRDXB, Comp: Economy, Travel Month: July 03
July 2002 Actual PAX = 1,227
Demand for July 03 = Effective Demand Factor * July 02 Actual PAX
= 1.16 * 1,227

### 9.12 Effectiveness of Passenger Demand Estimation

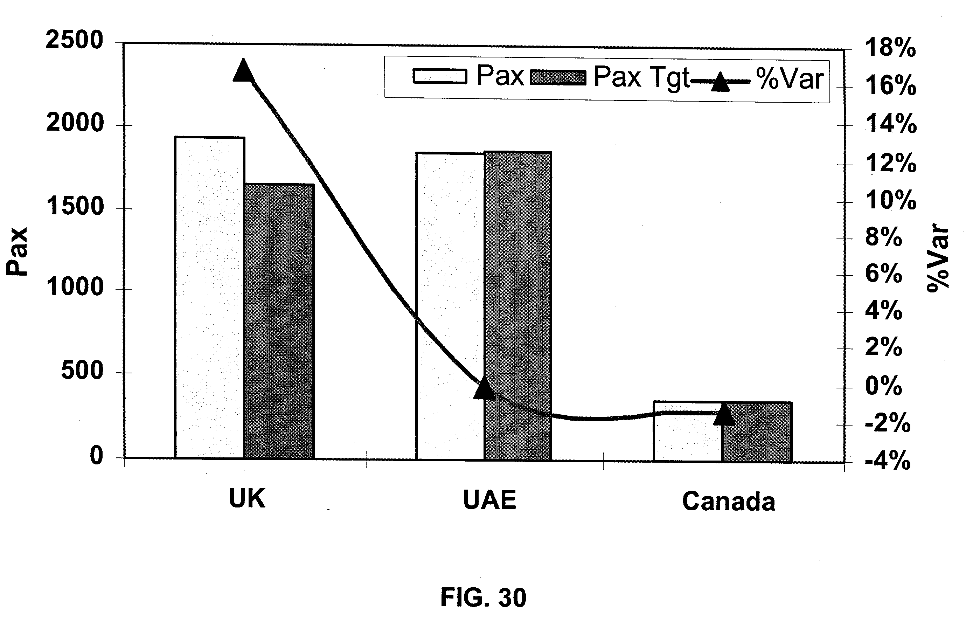

**FIG. 30** shows a Demand vs. Actual comparison for the LHRDXB route for July 02. The graph in **FIG. 30** shows the comparison of Target and Actual PAX for the top three Points of Sale in LHRDXB route. PAX target of July 02 is compared with Actual PAX July 02 (both Economy class). It clearly shows that proposed estimation method matches the market potential.

### 9.13 Yield Demand Estimation

### 9.13.1 Introduction

Yield estimation is the process of forecasting the yield that should be used to compute the Target Revenue for the target year. Yield estimation is carried out at the POS and O&D and Compartment level for every month in the target year. The yield estimation module generates the demand yield data for all the months of the target year at the POS and O&D and Compartment level.

### 9.13.2 Functional Requirements

The following are the functional requirements for the yield demand estimation:
Derivation of Yield Growth Factor; Reports for displaying the factors derived;

A process to trigger the unconstraining of the baseline PAX demand based on the Yield Growth Factor derived;

Reports for displaying the final PAX demand after the unconstraining process; and

Demand Yield Estimation for routes with less than one year of flown data.

### 9.13.3 Derivation of Yield Growth Factor

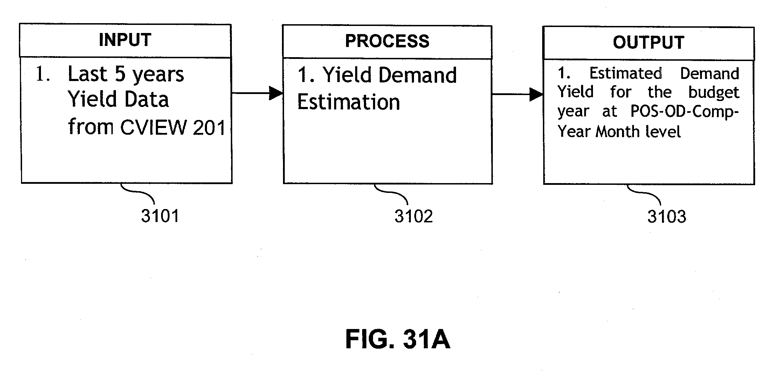

**FIG. 31A** shows an I-P-O diagram for Yield Demand Estimation. As shown in **FIG. 31A**, the Yield Demand Estimation process **3101** uses as input **3102** the last 5 years of yield data from CVIEW 201. The output **3103** of the Yield Demand Estimation process **3101** is Estimated Demand Yield for the budget year at POS Origin and Destination-Comp-Year-Month level.

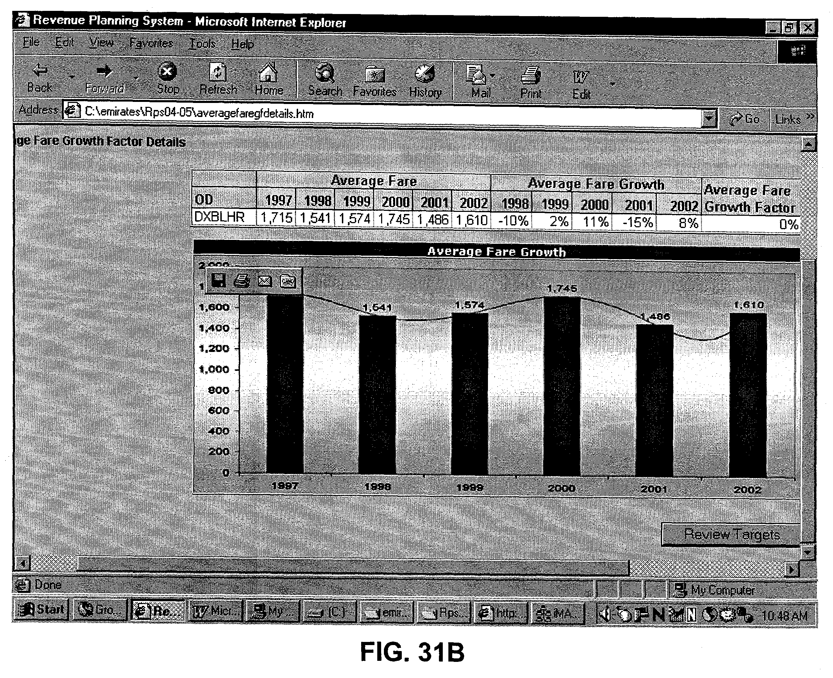

An example of a graph illustrating average fare (yield) growth is shown in **FIG. 31B**. As shown in **FIG. 31B**, average fares and average fare growth for the years 1997-2002 (here, N=5 years) is shown in tabular and graphical form. (The word "average" on the top left is cut off in the figure).

Yield Demand Estimation **3101** is based on projecting the weighted trends into the future. It takes into consideration last 'N' years, and year-over-year monthly variance of actual yield for POS-O&D-Comp combinations. As an example, 'N' may be set as 5 years.

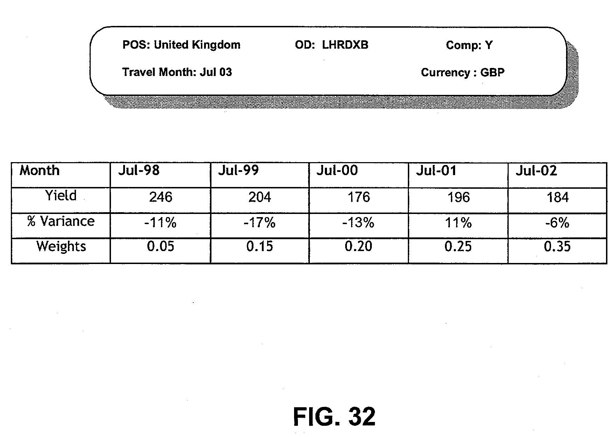

Sample weights used to calculate the weighted average are illustrated above. Once the year-over-year variances are determined, these variances are multiplied by the corresponding weights. After determining the weighted average of the yield variance, it is multiplied with the current year yield actual to get the budget year demand yield. This is illustrated in the sample calculation in **FIG. 32,** discussed in section 9.14?.

The RPS **100** includes a process to extract and store the Yield Growth Factor from the commercial database.

The growth rate is fetched at the Compartment and Year and Month and POS and O&D level. The system parameter "Demand Estimation No. of Previous years" initializes the year from which the Yield Growth Factor needs to be extracted.

The Yield Growth Factor is calculated at the O&D and POS level. The Year over Year Growth Factor for a month is computed as follows: (This Year - Last Year / Last Year) * 100

Average Yield Growth Factor = Weighted average yield growth factor of previous years defined as a parameter.

Average yield growth factor = (W1*Y1+ W2*Y2....+WnYn) /(W1+W2+.....+Wn)

Where W1, W2,.... Wn are the weights, and Y1, Y2,......Yn are the Yearly yield growth factor.

The Average Yield Growth Factor computation is preferably modularized, and the RPS **100** facilitates the change of the Growth Factor computation mechanism in the future.

The computed average yield growth factor for all the months is compared to the Yield Capping Limits before it is applied. The Upper and Lower limits for Yield Capping are parameterized as follows:

If the computed yield Growth Factor is below the Lower limit, then the Lower limit is applied.
If the computed Growth Factor is above the Upper limit, then the Upper limit is applied.
If the computed Growth Factor is between the Upper limit and the Lower limit, then the computed Yield Growth Factor is applied.
If the Upper and Lower limits are not defined, then the computed Yield Growth Factor is applied.

### 9.13.4 Process to trigger the unconstraining of the baseline demand yield

The RPS **100** includes a process that uses the final Demand Yield for each Comp and POS and O&Ds and inflates/deflates the baseline values to calculate at the Demand Yield values for each month based on the factors derived.

Demand Yield = Actual Demand + (Actual Demand * Weighted average yield growth factor)

The trigger process also computes the Target Revenue based on the final Yield Growth Factor at Comp and O&Ds and POS level for each month in the target year:

Revenue Demand = PAX demand * Demand Yield.

The Unconstraining process should be performed on the Revenue Data. On completion, the user can generate reports and view the Revenue Demand based on factors derived.

### 9.13.5 Yield Estimation for routes with less than one year flown data

The RPS **100** includes a process to compute the Demand Yield for the months in the Current Year where the O&D were not operational or Flown Data is not available.

This process computes the average yield from the data of flown months, available at POS-O&D-Compartment level, and populates the average yield for the months flown data is not available, in the corresponding POS-O&D Compartment.
Example: Compartment: Y

| POS | O&D | Yield | | | PAX | | | Revenue | | |
|---|---|---|---|---|---|---|---|---|---|---|
| | | April | May | June | April | May | June | April | May | June |
| POS 1 | O&D 1 | 11 | 10 | 12 | | 10 | 10 | | 100 | 120 |

In the above example, the Actual Yield should be available for the month of May and June and the Demand Yield should be populated for the month of April = 11. The computation is as follows:

Average Yield = Sum of Actual Revenue for flown months/Sum of PAX flown;

Sum of Actual Revenue = 100 +120 = 220;

Sum of PAX flown = 20;

Average Yield = 220/20 = 11; Yield and revenue are preferably in POS local currency.

### 9.13.6 Yield Demand Estimation - Sample Calculation

As shown in **FIG. 32,** for a particular POS-O&D combination, and the July month of the years 1998-2002, yields, percent variance, year-to-year variance and weights are shown in the Table. The example below illustrates how these numbers are used in a sample calculation.

Sample Parameters for Yield Demand Estimation 3101 are shown in **FIG. 32.** As shown in **FIG. 32,**

| | |
|---|---|
| Weighted Average of Yield Variance | $= 0.05*(-11)+0.15*(-17)+0.2*(-13) + 0.25 * 11 + 0.35 * (-6)$ |
| | $= -5.05$ % |
| Projected Yield for July 03 | = (Weighted Variance) * (July 02 Actual yield) |
| | $= (1-0.0505) * 184$ |
| | $= 175$ |

### 9.14 Effectiveness of Yield Demand Estimation

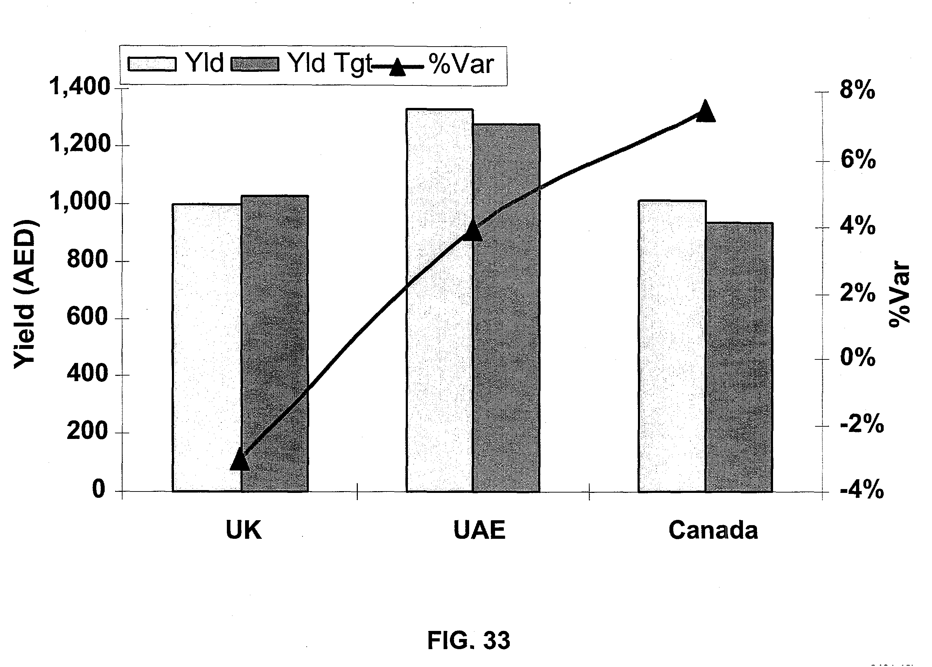

**FIG. 33** shows a yield demand estimation effectiveness graph. By way of example, considering the trend of LHRDXB yield from the United Kingdom, it clearly shows that it has negative trend over the last 5 years. Hence the projected yield for LHRDXB for United Kingdom for July 03 also matches the trend. A 5% drop in the yield in the next financial year for UK-LHRDXB-Y-July 02 combinations is expected. The effectiveness of yield estimation can be analyzed on the July 02 data, i.e., comparison of Target yield for July 02 (budgeted in the year 2001), and actual yield that different POS achieved.

From the graph of **FIG. 33**, for UK, actual yield variation with regard to target yield is -3%, for UAE it is 4%, and for Canada 7%. This demonstrates the reliability of the yield demand estimation model.

### 9.15 Reports For PAX demand and Yield Estimation

### 9.15.1 Exception Reports for displaying the PAX Growth Factors derived

The RPS **100** includes a Parameter Form/Report combination that can be used to list the factors derived by the processes of calculating Actual Traffic Growth Factor, MIDT **202** Market Share Growth Factor, and O&D Capacity Growth Factor.

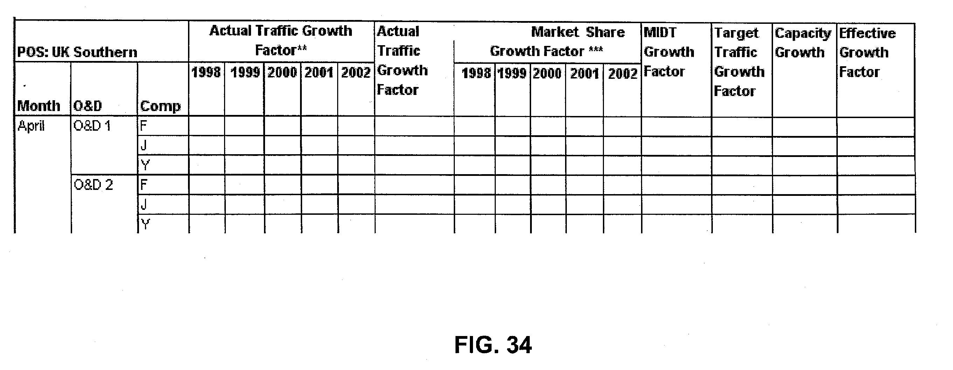

The layout for the report is shown in **FIG. 34**. **FIG. 34** displays a form for showing the Growth Factors for all the O&Ds for the POSs by Region and the month selected. Instead of displaying the Growth Factors for O&Ds, the Growth Factors may be displayed by the POS and/or by region and the month selected. The report form in **FIG. 34** shows actual Growth Factor for the given number of years, here, 5 years, or 1998-2002); Actual Traffic Growth by Origin and Destination and by Compartment; Market Share Growth Factor for the five years, MIDT Growth Factor, Target Traffic Growth Factor, Capacity Growth and Effective Growth Factor.

### 9.15.2 Exception Reports for displaying the Yield Growth Factors derived

The RPS **100** includes a Parameter Form/Report combination, which may be used to list the derived Yield Growth Factors, and facilitates acceptance of the parameters.

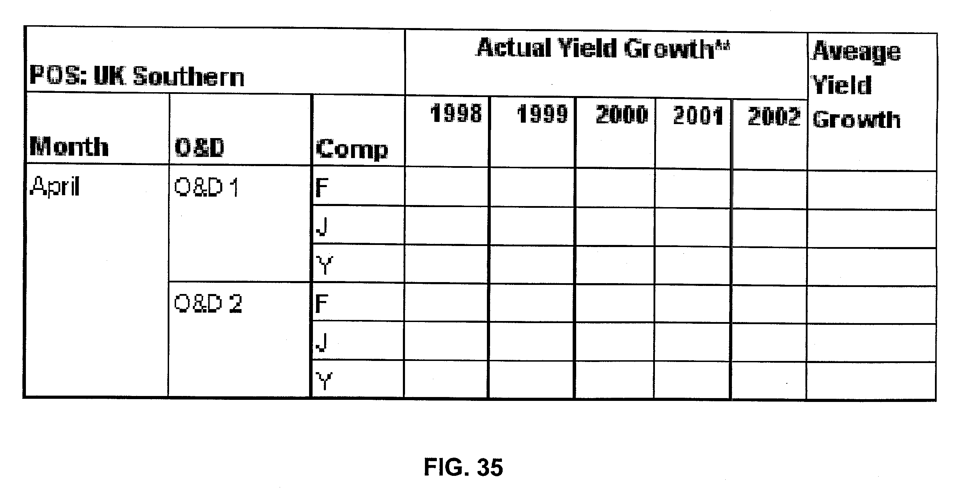

The sample reports, shown in **FIG. 35**, displays the month in cross tab fashion. As shown in **FIG. 35**, Actual Yield Growth may be displayed for a particular origin and destination, combination by compartment, for the five years at issue. Average Yield Growth is also displayed. The same report may be generated by POS, as well as by O&D level. Actual yield growth in **FIG**. **35** displays the growth for the 'N' years defined in the parameters, the data at the O&D, POS and Regional levels for the F, J & Y Compartments.

### 9.15.3 The Final PAX demand and Yield after the unconstraining process

The RPS **100** includes a Parameter Form/Report to facilitate the user running reports for the final demand ensuing after the unconstraining process. The Parameter Form facilitates acceptance of the parameters to generate the exception report for the Yield Growth Factors derived.

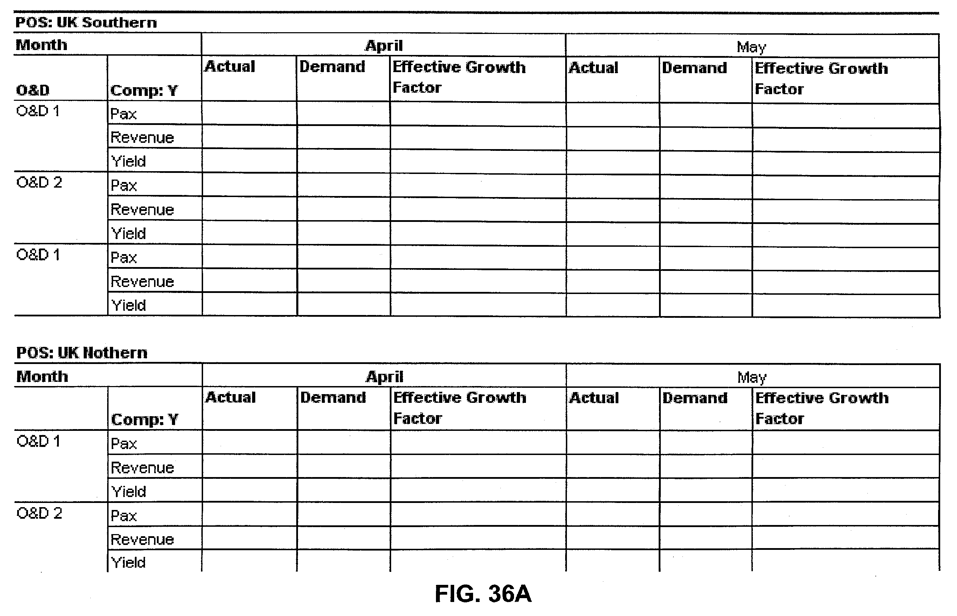

The report (see layout in **FIG. 36A**) display the final demand for the months (optionally in cross tab fashion). The revenue and yield for the POS should be displayed in the respective POS Local Currency. A similar report may be generated for the POSs by Region and the months in cross tab fashion, and which may include actual graphic, PAX demand, EGF for selected months, and may show PAX, revenue, and yield information for the selected POSs.

The O&Ds should preferably be displayed in the descending order of the Revenue Variance between the Actual and Demand in the Detailed Report. The POS should preferably be displayed in the descending order of the Revenue Variance between the Actual and Demand in the Summary Report.

### 9.16 Summary of Demand Estimation

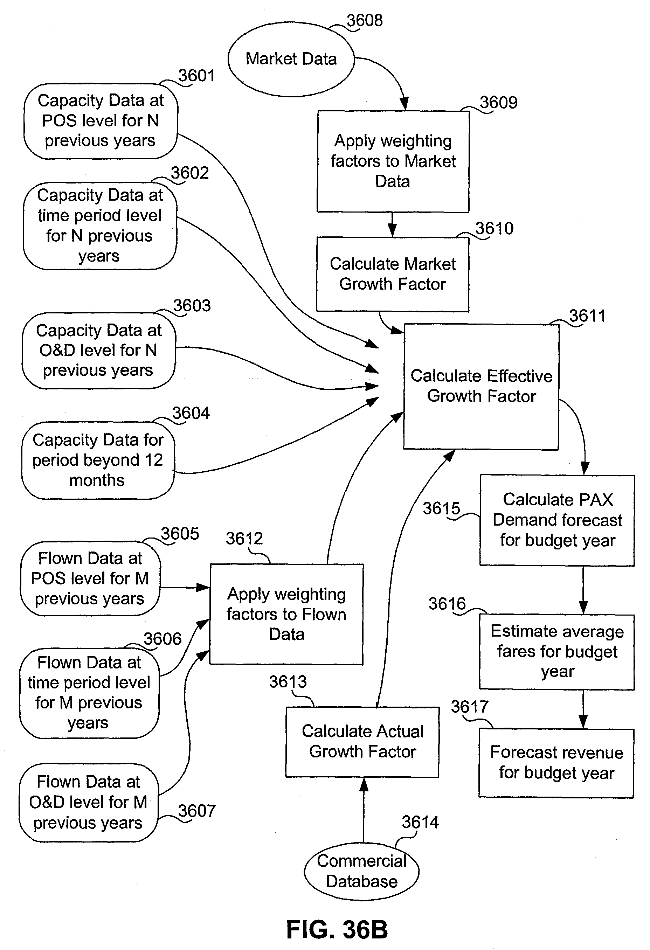

The demand forecasting process is summarized with respect to **FIG. 36B.** As shown in **FIG. 36B,** to calculate the effective growth factor (**3611**), capacity data at POS level for N previous years (**3601**), capacity data at a time period level for any previous years (**3602**), capacity data at NOD level for N previous years (**3603**) and capacity data for a period extending beyond 12 months (**3604**) are used. Also, market data **3608** is used to calculate market growth factor **3610**, with the help of waiting factors that are applied to the market data (**3609**).

Flown data at a POS level for M previous years (**3605**), flown data at a time period level for M previous year (**3606**) and flown data at O&D level for M previous years (**3607**) are used. Waiting factors are applied to flown data (**3612**), and are also used to calculate the effective growth factor (**3611**). Data from a commercial data base (**3614**) is used to calculate actual growth factor (**3613**), which is also used as an input and the calculation of the effective growth factor (**3611**). After the EGF is calculated, PAX demand forecast is calculated for the budget year (**3615**). Average fares and revenue for the budget year are estimated (**3616**) Optimization

As it is difficult to determine which traffic mix will be most beneficial for the airline under given conditions of capacity, demand, and expected average fare, Linear Optimization (LO) is used to optimize networth revenue. LO techniques deal with this type of problem by determining the optimal solution within given constraints.

Inputs to this process are market potential, average yield, and scheduled capacity. With the assistance of linear programming techniques, the RPS 100 produces the optimal traffic mix that is expected to generate the maximum revenue for the airline. The market potential is determined on a POS-O&D-Compartment - Travel Month basis, yield is based on a POS-O&D-Compartment-Travel Month basis, and capacity is based on Leg-Compartment-Travel Month basis.

Once the estimate for PAX and average fare is derived for each POS-O&D - Compartment - Travel Month combinations, it should be determined which POS-O&D demand should be accepted, and which should be rejected, under limited capacity conditions. The decision to accept or reject a demand at this stage is a significant step in the Revenue Planning Process. A deterministic model of Linear Programming (LP) can be used.

The Linear Programming Optimization model determines the best traffic mix (or "demand mix") to maximize the revenue. In this case, the constraints involve assets (i.e., aircraft), flying a leg from point A to point B. Different POSs may be selling tickets for the same leg, at different prices. For example, consider a flight from New York to London, and another flight from London to Stockholm. One POS (e.g., Greece), may be selling a ticket for the New York - London leg at $700. Another POS (e.g., Frankfurt) may be selling a ticket for the New York - London leg at $500. However, the ticket sold by Frankfurt may be for a passenger who then goes on to Stockholm, for an additional $300. In other words, both Frankfurt and Greece are selling tickets where the passenger demand "shares" a leg of the network. As another alternative, the ticket sold by Frankfurt may also include a return trip for an additional $500, while the ticket sold by Greece is a one-way ticket.

In this example, the capacity constraints may be physical constraints (i.e., how many seats in each compartment on each aircraft), as well as legal constraints (i.e., international agreements limiting the number of passengers an airline may carry per flight). The passenger (demand) constraints are the maximum number of passengers available to fly on each leg (or route, or sector) for each POS. The Linear Programming Optimization model obviously cannot allow demand that is greater than the capacity. A third constraint is fares.

As is clear from the above simplified example, a practical airline network often contains hundreds (or thousands) of such possibilities. In other words, to maximize revenue for the whole network, it is not enough to merely maximize revenue for one leg— maximizing revenue for the New York-London leg does not necessarily maximize the revenue for the "hub-and-spoke network" that consists of New York - London - Stockholm flights. Only by maximizing revenue on a network level (i.e., solving the network Linear Programming Optimization problem) is overall revenue actually maximized.

The Linear Programming Optimization model therefore determines how to maximize network revenue given the capacity, demand, and fare constraints. In the case of passengers competing for the same seat (where the passengers are willing to pay different fares), the model ensures that the overall revenue for the network (rather than at the route/leg level) is maximized.

] A budget plan (or "passenger budget plan") defines how many passengers an airline *wants* to have for the next year (or next time period), and is derived from the Linear Programming Optimization model. In other words, the Linear Programming Optimization model helps set demand targets for the next year (or next budget time period). The Linear Programming Optimization model will therefore allocate X passengers to Greece at $700, and Y passengers to Frankfurt at $500. The Linear Programming Optimization model ensures that the network revenue is maximized with the choices of X and Y.

Additionally, if it is known that for a given set of fares from a given set of POSs, the resulting load factor is less than 100%, it is possible to try a different set of fares (for example, 5% lower fares on some routes) so as to determine whether overall network revenue is maximized with a different set of fares. The targets may be set for the financial year after the current financial year, or for the next several months, or the next month, etc.

In one embodiment, capacity is aggregated on a monthly basis, although other bases are possible (e.g., weekly, daily, etc.).

A leg is a single flight from point A to point B. A sector has several legs (but only one-way). A route is a round trip (either one leg "there" and one leg "back", or one sector "there" and one sector "back"). Multiple routes and sectors can traverse a single leg. For example, in the case of Boston— New York—London—Stockholm, the New York—London leg can be traversed by the Boston—New York—London—Stockholm route, the New York—London—Stockholm route, the Boston—New York—London route, etc.

Thus, the present invention provides a system and method of setting sales targets for an airline that includes estimating PAX demand and demand fares, performing linear optimization on a network level to maximize overall network revenue based on the PAX demand and the demand fares and capacity constraints, and generating PAX target and target fares for each POS for each O&D, compartment and month based on the maximized network revenue. Target fares may be calculated based on fare type, such that the fare type includes any one of one-way fares, return fares, excursion fares, three month in advance fares, and six months fares. Target fares may be calculated based on market segment. The market segment includes any one of tour operator, customer type, internet bookings, holiday travelers and frequent flyers.

Generating PAX target and target fares for each POS for each O&D, compartment and month is based on the maximized network revenue is done on a time period level. The time period level includes any one of daily, weekly, and monthly. Generating PAX target and target fares takes into account market segments (i.e., customer type, frequent flyer, tour operators, internet bookings, holiday travelers). PAX target and fares may be generated at a single travel agent level, and/or at a sales executive/supervisor level. Targets may be generated based on a flight level (i.e., an itinerary level). The linear optimization may also take seasonality into account, may balance inbound to outbound traffic. Industry travel demand may also be excluded from the optimization step. Sensitivity analysis may be performed to determine fares at which rejected demand should be accepted.

Additionally, in one embodiment, network revenue is unaffected by acceptance of rejected demand. Results of sensitivity analysis may be displayed, including rejected demand and minimum average fare for accepting the rejected demand.

### *9.17 Deriving a Model*

A brief discussion of Linear Programming techniques is given below. Generally, there are five steps in formulating Linear Programming models:

1. Understand the problem.
2. Identify the decision variables.
3. State the objective function as a linear combination of the decision variables.
4. State the constraints as linear combinations of the decision variables.
5. Identify any upper or lower bounds on the decision variables.

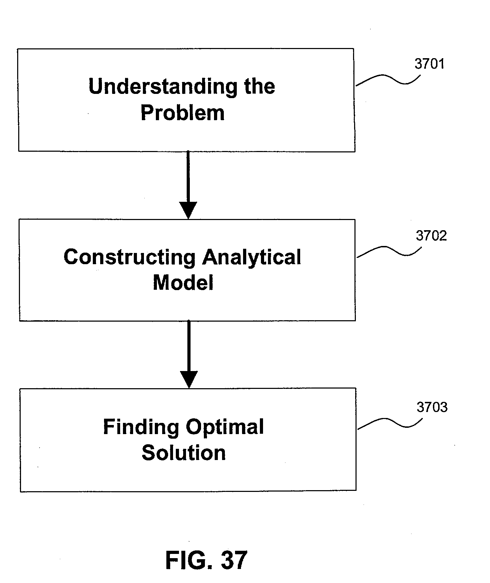

**FIG. 37** shows an example of the steps of an Linear Programming Optimization Derivation. In so doing, one should understand the problem, the objective, and the constraints involved (step **3701**).

Constructing an Analytical Model (step **3702**): this step involves the "translation" of the problem into precise mathematical language in order to make calculations and comparison of the outcomes under different possible scenarios.

Finding a Valid Optimal Solution (step **3703**): a proper solving technique is chosen, depending on the specific characteristics of the model. After the model is solved, validation of the obtained results must be done in order to avoid an unrealistic solution.

In revenue planning, the optimization process can be considered a core process, or engine. As it is complex to find out which traffic mix will be beneficial for the airline under given capacity, demand, and expected average fare constraints, a scientific method is employed to do it. Operations research techniques deal with the problem of determining an optimal solution with given constraints. These operations research techniques are will suited to the Revenue Planning Process.

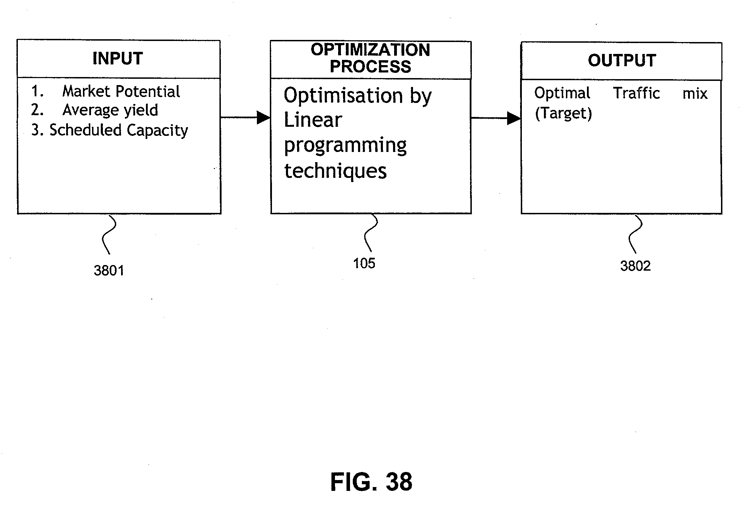

As shown in the I-P-O diagram of **FIG. 38,** inputs **3801** to the Optimization Process **105** are market potential, average yield and scheduled capacity. With the help of linear programming techniques, the Optimization Process 105 produces its output **3802**, an optimal traffic mix that expected to generate the maximum revenue. Market potential is based on POS-O&D-Compartment - Travel month basis, yield is based on POS-O&D-Compartment-Travel Month basis, and capacity is based on Leg-Compartment-Travel Month basis.

### *9.18 Linear Programming*

Linear Programming is a mathematical procedure for determining optimal allocation of scarce resources. In this particular Linear Programming problem, two classes of objects are considered: first, a limited resource such as capacity and demand, and, second, an activity, such as "maximizing revenue".

The General Form of an Optimization Problem is as follows: MAX (or MIN):

$$g(X_1, X_2, ..., X_n)$$

Subject to:

$$f_1(X_1, X_2, ..., X_n) \leq b_1$$

$$f_k(X_1, X_2, ..., X_n) \geq b_k$$

$$f_m(X_1, X_2, ..., X_n) = b_1$$

If all the functions in an optimization are linear, the problem is a Linear Programming problem.

The General Form of a Linear Programming Problem is as follows: MAX (or MIN):

$$c_1 X_1 + c_2 X_2 + ... + c_n X_n$$

Subject to:

$$c_{11} X_1 + c_{12} X_2 + ... + c_{1n} X_n \leq b_1$$

$$c_{k1} X_1 + C_{k2} X_2 + ... + C_{kn} X_n \geq b_k$$

$$c_{m1} X_1 + C_{m2} X_2 + ... + c_{mn} X_n = b_m$$

The General Form of the General Optimization Model is:
Max or Min g(x) $\Leftarrow$ Objective function such that $f_1(x) \leq b_1$ $\forall i = 1, ..., n$ $\Leftarrow$ Constraints
x $\geq$ 0 $\Leftarrow$ Vector valued non negative.

When g(x), $f_1(x)$ are linear functions - Linear Programming.

Phrased another way, a Linear Programming is a problem that can be expressed as follows (the so-called Standard Form):

where x is the vector of variables to be solved for (in this case, PAX target, Target Yield vectors), A is a matrix of known coefficients (in this case, unity), and c (unity), and b (scheduled capacity and estimated demand vectors) are vectors of known coefficients. The expression "cx" is called the objective function, and the equations "Ax<=b" are called the constraints. The above formulae can be translated in this case as:

i=n

Max z = ? PAX (aod)i * Yield (aod)i

I=1

Subject to

(a) PAX (aod)i < = demand (aod)i for i = 1 to

n

i=n

(b) ? PAX (aod)i < = Leg Capacity j where J =

1 to m

i=1 (m = no. of Legs in network)

(c ) PAX (aod)i > 0

PAX (aod)i = Passenger from POS "a" for route Origin "o" and Destination "d"

Yield (aod)i = Yield for POS "a" for route Origin "o" and Destination "d"

This is applied to individual F, J, Y compartments and different travel months. Equation (a) is the set of demand constraints and Equation (b) is the set of capacity constraints. These equations are applied for all possible Areas of Sale and O&D combinations, and all network Leg capacities. In the capacity constraint equations, all O&Ds traversing through those particular Legs are considered.

For example, to write the capacity constraint equation for LHRDXB Leg, all passengers from LHR to various Destinations belonging to different Points of Sale should be considered in this equation:

i=n

? PAX (aod)i < = LHRDXB capacity -- Capacity Constraint for LHRDXB Leg

i=1

Where i = number of possible combinations of POS-O&D

Here, passengers from UK for LHRDXB, LHRBOM, LHRMEL, etc., passengers from USA for LHRBOM, LHRDEL, LHRDXB, etc., passengers from Canada for LHRBOM, LHRMAA, etc., are all considered for all possible Area of Sale and O&D combinations.

Equation (c) ensures that optimal PAX and yield cannot have negative values. Final solutions for PAX and Yield, will be the PAX target and target yield for that POS for the specified O&D, Compartment and travel month combinations.

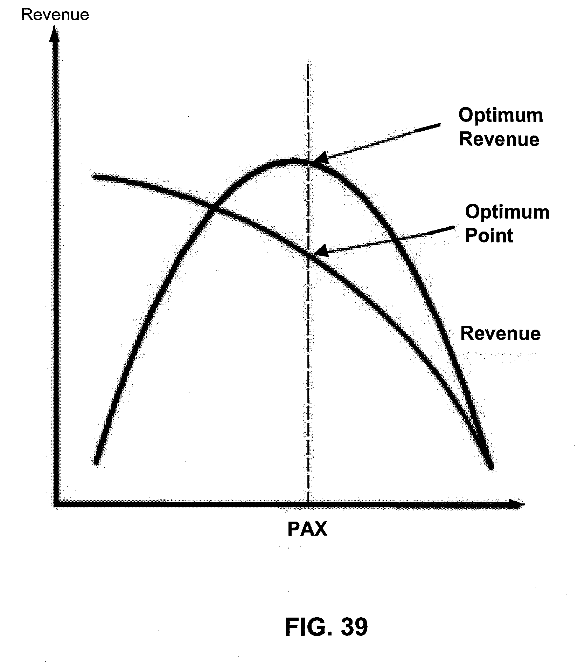

**FIG. 39** shows an Optimal Curve for a Linear Programming solution. Linear Programming model solutions will always achieve the feasible optimal solutions as shown in the above graph. In one embodiment, the RPS **100** uses LINDO software for the optimization processes and the RPS **100** provides the input parameters as per the format required for LINDO, and LINDO output is read and shown as targets.

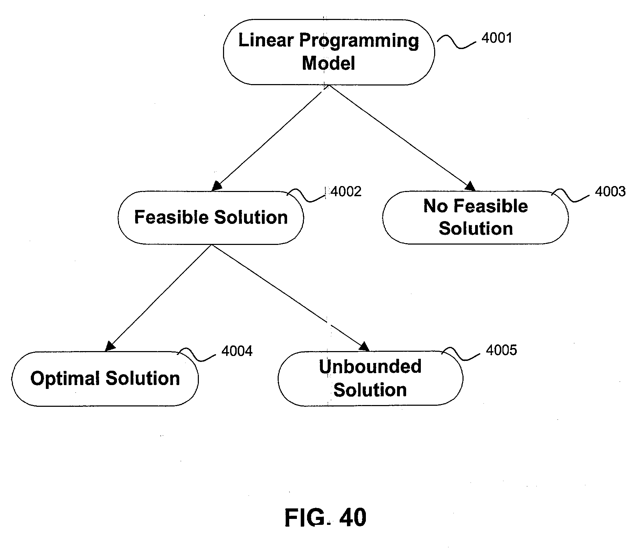

**FIG. 40** shows an Linear Programming Optimization Model Tree. As shown in **FIG. 40**, a Linear Programming model **4001** tries to achieve optimal feasible solutions **4002**. If constraints conflict with each other, it will have no feasible solutions (**4003**). If a feasible solution **4002** exists, LINDO will try to achieve an optimal solution **4004**. Unbounded solutions **4005** exist when there is no limit on the solutions, i.e., variables can attain the value of infinity. This cannot exist in this case, since PAX target cannot be infinity due to capacity constraints. Hence, LINDO always gives feasible optimal solutions **4004**.

Additionally, the linear optimization model of the present invention is particularly suitable to maximizing revenue for the entire network (for example, for an airline that operates as a hub-and-spoke system), rather than merely for a particular leg, or route.

### *9.19 Optimizer Equations Example*

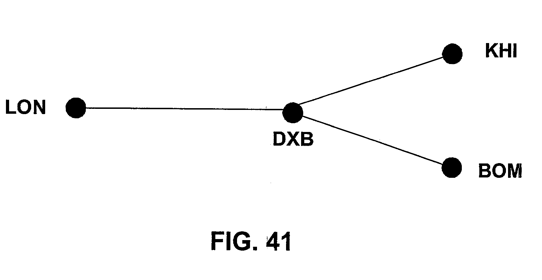

Revenue Targets (Pax, Average Fare, Revenue) are the outputs of the Linear Programming model **4001**. A sample network is illustrated in **FIG. 41**.

In this example, Leg Capacities are as follows:

| Leg | Seats |
|-----|-------|
| LONDXB | 100 |
| DXBBOM | 75 |
| DXBKHI | 75 |

Demand is as follows:

| Sector | Demand | Yield |
|--------|--------|-------|
| LONBOM | 120 | 90 |
| LONDXB | 50 | 60 |
| LONKHI | 60 | 85 |
| DXBBOM | 50 | 55 |
| DXBKHI | 40 | 50 |

It is necessary to maximize the network revenue for the above sample network, based on the capacity and demand constraints. This problem can be formulated as a standard linear programming problem, as shown below:
MAXIMISE
90 * LONBOM + 60 * LONDXB + 85 * LONKHI + 55 * DXBBOM +50 *DXBKHI
SUBJECT TO CONSTRAINTS
　　　Demand constraints
　　　LONBOM <=120
　　　LONDXB <=50
　　　LONKHI <=60
　　　DXBBOM <=50
　　　DXBKHI <=40
　　　Capacity constraints
　　　LONBOM + LONDXB + LONKHI <=100
　　　LONBOM + DXBBOM <=75
　　　LONKHI + DXBKHI <=75

Any standard linear programming software, e.g., LINDO, can be used to solve this problem. The results are as follows:

1. Maximum Network Revenue = 12,375
2. Optimal targets:

| SECTOR | TARGET |
|--------|--------|
| LONBOM | 25 |
| LONDXB | 40 |
| LONKHI | 35 |
| DXBBOM | 50 |
| DXBKHI | 40 |

3. Excess demand:

| SECTOR | EXCESS DEMAND |
|--------|---------------|
| LONBOM | 95 |
| LONDXB | 10 |

(continued)

| SECTOR | EXCESS DEMAND |
|--------|---------------|
| LONKHI | 25 |
| DXBBOM | 0 |
| DXBKHI | 0 |

### 9.20 Seasonality

There are some markets where the sale of the seat from a particular POS might in theory optimize network revenue, but makes no commercial sense. One example of this is seasonality-driven travel. Europe - Dubai-Australia leisure traffic, for instance, shows a heavy demand from Europe to Australia in December (and low demand from Australia to Europe), and the reverse in January. In other words, there may be a long lag for a particular passenger between his Europe to Australia flight, and his return. In addition, there is business-driven traffic that needs to be considered.

For purposes of this example, assume that for one passenger, the December Europe - Dubai - Australia leisure ticket is $500, and the January Australia - Dubai - Europe return ticket is also $500 (for a total of $1,000 round trip). Also, assume that there is a second passenger willing to fly one-way from Dubai to Australia in December for $700. Normally, the optimization process would treat each such one-way flight as a separate entity, and give the result that the optimum solution is selling the $700 ticket. This, of course, would result in a net network "loss" of $300. The way to avoid this loss is to reserve a certain percentage of seats for such "seasonal" traffic.

Another use of seasonality factors is to adjust for unusual events that should be discounted in long-term planning. Examples of such unusual events include wars, SARS, the September 11, 2001 terrorist attacks, etc.

### 9.21 Alignment of sales and revenue objectives

The present invention allows alignment of sales objectives and revenue objectives. Typically, the sales department of an airline sets its sales targets, and the revenue department sets its revenue targets. There is a built-in conflict between the sales side and the revenue side, because, conventionally, the sales targets do not take into account network-level revenue, but only POS-wise revenue. In the present invention, the POS sales targets are linked to the revenue targets for the POS and for the network. By setting the targets for each POS in line with the network-level revenue objectives, the sales department can have confidence that their targets are aligned with the revenue targets. The targets for each POS are set at a month, O&D and compartment level (rather than merely overall total revenue).

For instance, consider the London—Dubai—Manila route, and the London—Dubai—Australia route. The London POS may be told that it cannot sell any London—Dubai—Manila tickets, because the London— Dubai—Australia is more optimal at the network level. In other words from a network perspective, filling the London—Dubai—Manila seats and leaving the Dubai—Australia seats empty is suboptimal.

In theory, a particular POS can try to sell its "rejected demand" (i.e., the demand that a particular POS is not allowed to sell, here, London— Dubai—Manila, because at the network level, there is "better use" for that demand) for a higher fare. At some point, the fare becomes high enough so as to make up for the fact that the Dubai—Australia seat is not filled. As a practical matter, however, it is rare that the fare can be made high enough, given prevailing market conditions and competition in the airline industry. Thus, the salesperson at the London POS is discouraged (by the sales target setting process) from "chasing" the London—Dubai—Manila sales, because it is suboptimal from a network revenue perspective. The salesperson will not have targets for the London—Dubai—Manila route, because sales targets are set with network optimization in mind.

The RPS **100** also can take into account the one-way nature of some travel. For example, in some areas of the world, there is job-related travel, where the passenger might not return for a considerable period of time (e.g., over a year). In that case, it might be optimal to "protect" the available capacity (or a portion of it) for round-trip passengers (i.e., reserve a portion of capacity), rather than allow a POS to sell the one-way demand. (See also discussion of Core Markets below, where the user has the option to specify how much demand is reserved.)

Additionally, consider the case where a passenger from, for example, Cairo, wants to fly Cairo—Dubai—Australia and pay the same fare as the London—Dubai—Australia passenger. From a pure overall revenue perspective, the RPS **100** is indifferent to which passenger gets the ticket (since the fares are the same). However, in this case, because the London POS had a sales target set for the London—Dubai—Australia route, and the Cairo POS did not, the London—Dubai—Australia passenger will get preference for the resource allocation (rather than selling the demand on a first come, first serve basis), so that the London salesperson can meet his targets. This, of course, only applies if there is zero impact on network revenue—if the Cairo passenger is willing to pay a higher fare (i.e., there is an overriding revenue consideration), then the Cairo passenger will get preference.

If it is decided that there is, in fact, unexpected demand on the Cairo— Dubai—Australia route (which was not anticipated when setting the original targets), the targets for the next month may be adjusted accordingly.

In sum, revenue targeting principles are incorporated into the sales targeting process. In turn, sales targets influence real-time revenue decisions (e.g., re-forecasting on a daily or weekly or monthly basis). Long term targets can also be adjusted (e.g., six month targets, one year targets).

Note also that in one embodiment, the targets are set on a monthly basis, but they can also be set on a weekly or daily basis (or any other time period, e.g., bi-monthly), if needed.

### 9.22 Special Handling for "Industry Travel" Demand

The "Industry Travel" demand (i.e., corporate travel by airline employees, travel by employees' relatives, travel by employees of other airlines at heavy discounts due to inter-airline agreements, etc.), even though by its nature has a lower yield compared to other revenue demand, often cannot be avoided due to corporate requirements. To avoid the linear programming optimizer rejecting this traffic, modifications are done in the Linear Programming Optimization equations to ensure that this demand is accepted in the revenue plan.

### 9.23 Balancing of Ihbouud/Outbound Traffic

The Linear Programming Optimizer (LPO) handles the data one month at a time and is not sensitive to accepting the returning traffic, if the outbound traffic has been accepted the previous month.

The Linear Programming Optimization could also possibly accept high number of return traffic when the outbound traffic has been rejected the previous month. A special module in the Linear Programming Optimization specifies a minimum and maximum percentage of return traffic that should be accepted for selected POS and O&D pairs. (See also discussion above regarding one-way and seasonal travel.)

### 9.24 Sensitivity Analysis

Altering the input parameters can change optimal solutions, i.e., changing the passenger demands and yield variations in the input parameter generates different optimal solutions. Sensitivity analysis is the term applied to the process of addressing this issue. LINDO's Linear Programming solution report provides supplemental information that is useful in Sensitivity Analysis.

In this case, if the RPS **100** rejects demand from any POS for any Route, it gives the acceptable limit of yield values, so that rejected demand can be accepted and it can give new optimal solutions. Hence, in order to accept the rejected demand, input yield values should be increased. For example, fares can be changed, to see if the rejected demand is now accepted.

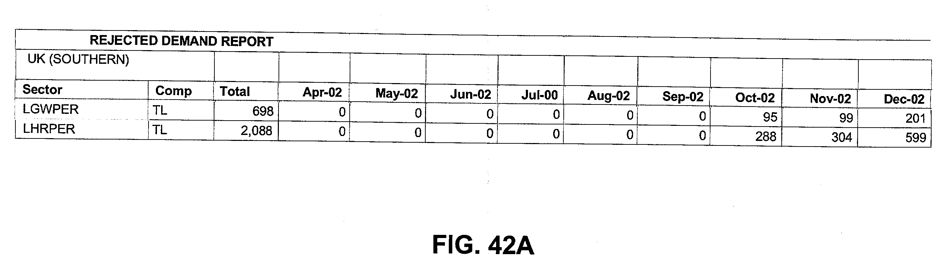

The report layout of **FIG. 42A** gives the Rejected demand report of a Point of Sale. This report gives concise details of rejected demands. It shows the travel month on the 'X' axis and each O&D, where the demand has been rejected, on the 'Y' axis. This report can be generated for individual compartments as well as at a total (aggregate) level.

The rejected demand report of **FIG. 42A** gives details of those rejected demands (compartment wise) that the optimization process has rejected completely. The user can enter the rejected demand value so that report will show those O&Ds where the rejected demand is greater than that of the parameter value. It also can display the proposed increase in the fare that will allow the rejected demand to be accepted.

The RPS **100** can also generate network-wise and region-wise and POS-wise data for a selected Travel month or for all months.

Demand details where the optimization process has partially rejected the demand can also be displayed. It also gives the proposed fare increase so that the partially rejected demand can be accepted.

In one embodiment, functional areas of Demand Estimation 103 and Re-forecasting **102** are automated, with manual exception detection and override facility. This eliminates the burden of manual analysis, which the users would have otherwise been forced to carry out before they begin setting the targets.

### 9.25 Summary of Optimization Process

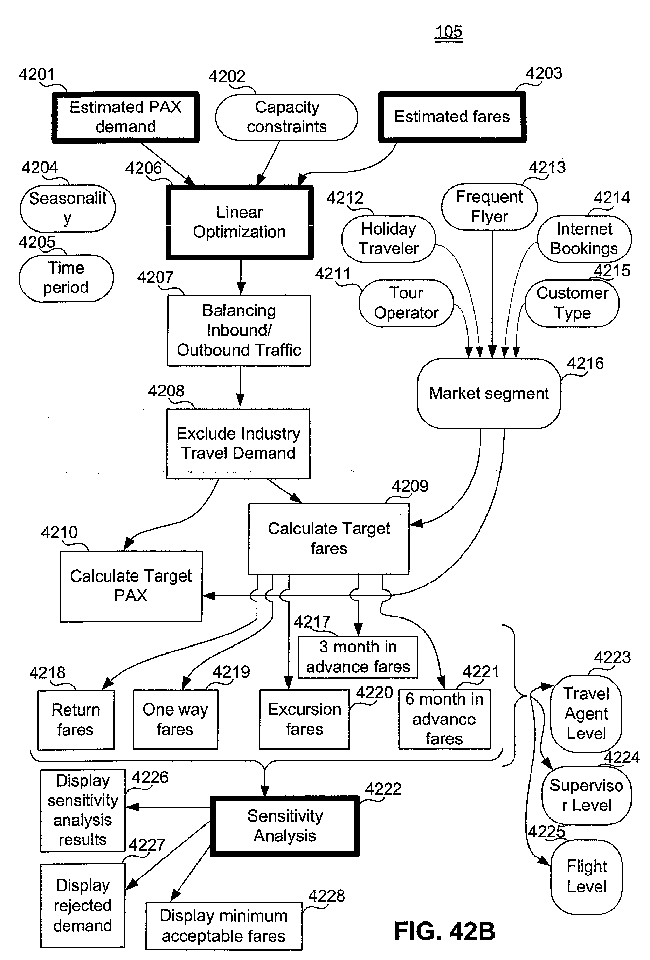

The Optimization Process **105** will be summarized using **FIG 42B.** As shown in **FIG 42B,** the linear optimization process **4206** takes as inputs, for example, estimated PAX demand **4201,** capacity constraints **4202,** and estimated fares **4203**. Seasonality factors **4204** and time period choice (e.g., weekly monthly etc.) may also be used as inputs. The linear optimization 4206 then goes through a process of balancing inbound and outbound traffic (**4207**). Industry demand may then be excluded (**4208**). Target PAX is calculated (**4210**) and target fares are calculated (**4209**). Market segment information (**4216**) may be used in PAX target calculation (**4210**) and target fare calculations (**4209**). The market segment **4216** may be, for example, tour operator **4211**, holiday traveler **4212**, frequent flyer **4213**, internet bookings **4214**, and customer type (e.g., child, adult, etc.) **4215**.

There are a number of target fares that may be calculated by the target fare calculation step **4209.** For example, these may be return fares **4218,** one way fares **4219**, excursion fares **4220**, three months in advance fares **4217**, and six months in advance fares **4221**. The various target fares may be fed into a sensitivity analysis step **4222**. The output of the sensitivity analysis step may be displayed (**4226**), rejected demand may be displayed (**4227**) (see also discussion below regarding rejected demand), and minimum acceptable fares may also be displayed (**4228**).

### 10.0 Pre-Optimization Processes

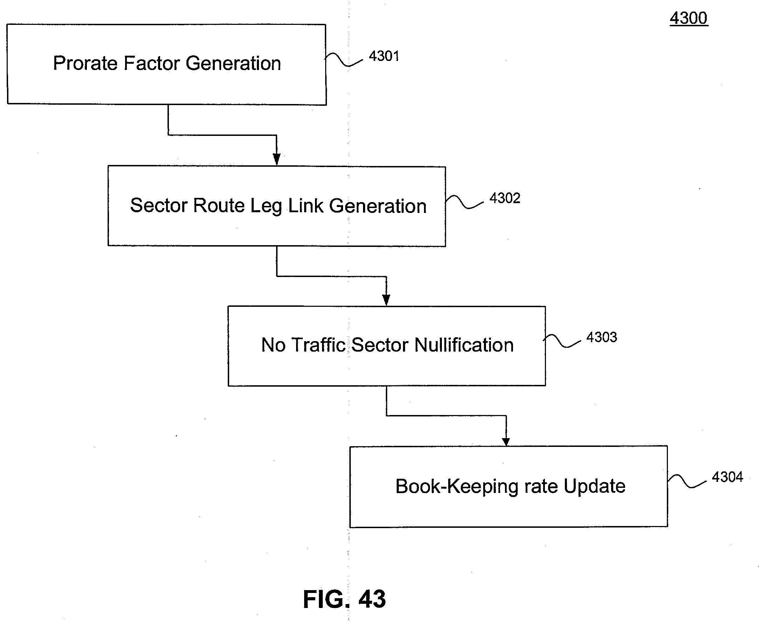

Before carrying out the Optimization Process **105,** a series of processes may be run to prepare the RPS database **207** for the optimization. **FIG. 43** shows the pre-optimization process **4300**. The pre-optimization process **4300**, as shown in **FIG. 43** includes prorate factor generation **4301**, sector route leg link generation **4302**, no traffic sector nullification **4303** and a bookkeeping rate update **4304**. These four processes are discussed below.

### 10.1 Prorate Factor Generation 4301

Prorate factor generation **4301** is used for deriving sector yield and revenue generation **4401** based on the prorate factor existing in the IATA prorate manual. Prorate factors for individual segments are retrieved, and, upon running this process, all operating segments prorate factors will be synchronized with the RPS **100**.

### 10.2 Sector-Route-Leg Link Generation 4302

Sector-Route-Leg combination is used to split the O&D passengers across different route and leg and route and sector levels. This is done to facilitate setting the passenger load on each segment and route.

### 10.3 No Traffic Sector Nullification 4303

If any no-traffic rights sectors are present in the network, demand of these sectors should be set to zero before the optimization. Otherwise, no traffic sector demand can replace the demand for O&Ds which traverse these segments. This process sets to zero the demand of no traffic sectors, if any.

### 10.4 Book Keeping Rate Update 4304

Local currency to base currency (e.g., to AED, or to U.S. dollars) conversion is done with help of an exchange rate converter in the CVIEW **201**/Planning System **204**. This facility is provided to select the exchange rate that should be used for currency conversion in yield and revenue calculation. Once the book-keeping month is selected with this process, corresponding exchange rate will be used to calculate the currency conversion.

### 11.0 Post Optimization Processes

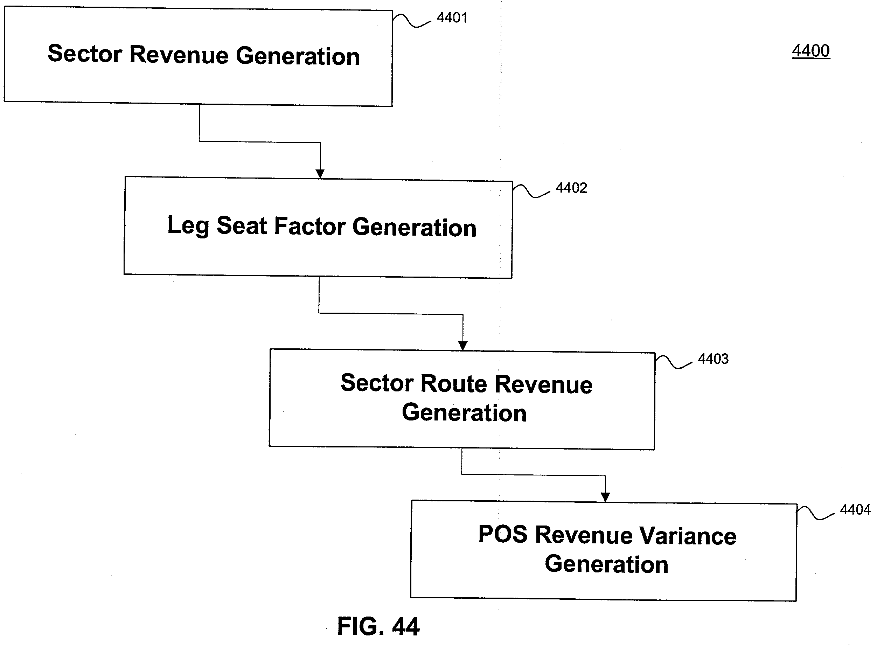

Subsequent to the Optimization Process **105,** certain processes are run to derive the data at different levels, i.e., segment, segment and route, and leg levels (see **FIG. 44**). As shown in **FIG. 44**, the post-optimization process **4400** includes the subprocesses of Sector Revenue Generation **4401**, Leg Seat Factor Generation **4402**, Sector Route Revenue Generation **4403**, and POS Revenue Variance Generation **4404**. These four processes are discussed further below.

### 11.1 Sector Revenue Generation 4401

This process converts the POS-O&D-Comp-travel month data (Target and Actual) for revenue, yield, PAX into POS-Sector-Comp-travel month. The sector level revenue, yield, PAX data are used in various MIS reports as discussed below.

### 11.2 Leg Seat Factor Generation 4402

The Leg Seat Factor (i.e., the percentage of capacity used) translates the generated sector level data into leg level data. Segment level passenger data is converted to leg level, mainly to have a comparison of seat factors existing in different routes after targeting.

### 11.3 Sector-Route Revenue Generation 4403

Once the sector level data is generated, it is apportioned into different sector and route combinations, e.g., DXBSIN data is apportioned into DXBSIN of DXB-SIN-MEL, DXB-SIN-SYD and DXB-CMB-SIN-JKT routes. This is done primarily to perform a comparative study on different routes.

### 11.4 POS Revenue Variance Generation 4404

This process makes the Revenue, PAX, Yield variance of Target with Actual at POS summarized level for each compartment in different travel months.

### 12.0 Management Information System

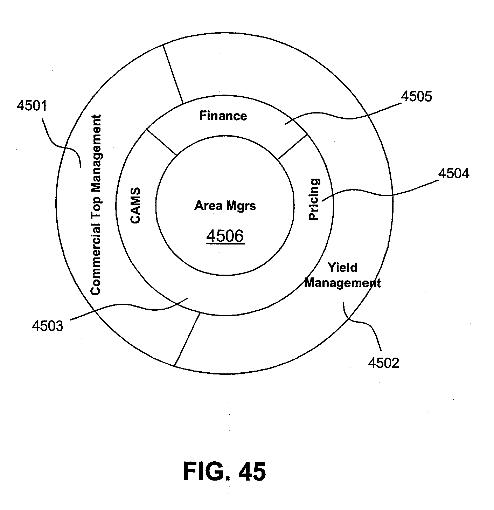

MIS reports are generated for the needs of the management at different levels. Information is categorized to meet the requirements of Top Management/Commercial Department/Online/Offline Station Managers /(Yield Management) (see user levels illustrated in **FIG. 45**). As shown in **FIG. 45**, the RPS **100** information hierarchy can include Commercial Top Management **4501**, Yield Management **4502**, CAMS **4503**, Pricing **4504**, Finance **4505** and Area Managers **4506.**

### 12.1 Reports

] Subsequent to the optimization, various sub-processes may be run to the data required for report generation.

### 12.1.1 Revenue Plan Report

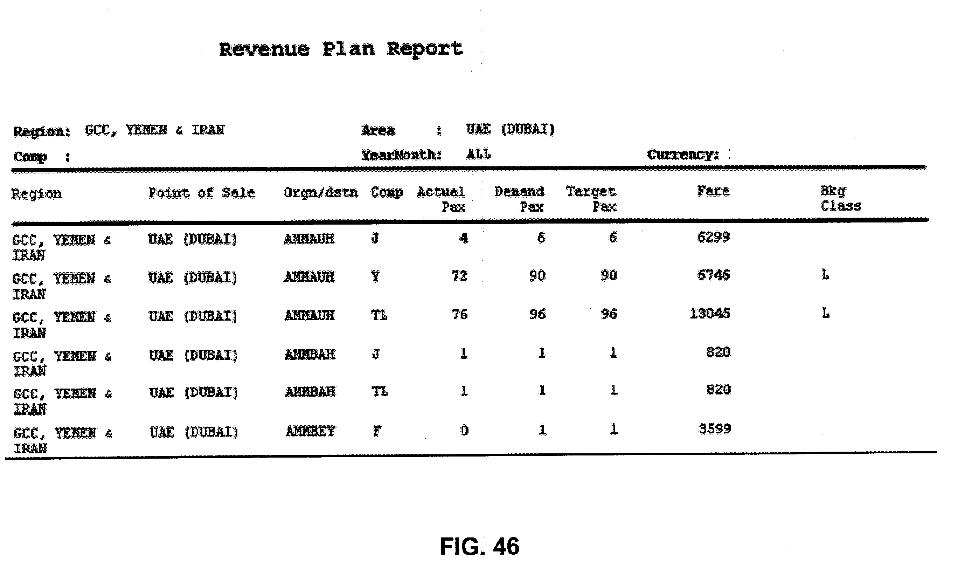

The Revenue Plan Report gives the POS-wise revenue plan in terms of actual, demand, and PAX target for each O&D-Comp-Travel month combinations with applicable booking class. It has both a preview and an Excel option (see **FIG. 46**). As shown in **FIG. 46**, the Revenue Plan Report can include demand and yield information for a particular region. The numbers for the actual PAX, PAX demand, PAX target, fares and booking classes are shown in this report.

### 12.1.2 Fully Rejected Demand Report

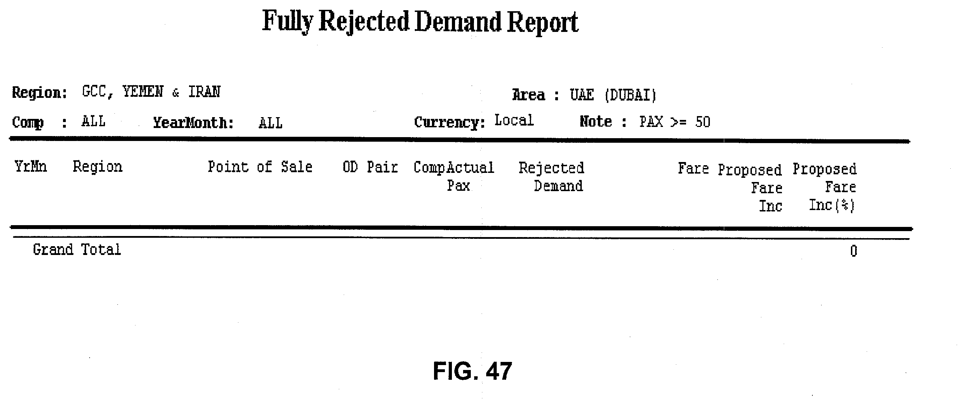

The Fully Rejected Demand Report of **FIG. 47** gives the details about the rejected demand (compartment-wise) that the optimization process has rejected completely. It is a parameterized report, where the user can give the rejected demand value, so that the report will be generated for O&Ds where rejected demand is greater than the parameter value. It also gives the proposed increase in the fare to accept the rejected demand. It can generate network-wise and region-wise and POS-wise data for selected travel month or for all months. It has both a preview and an Excel Option.

### 12.1.3 Partially Accepted Demand Report

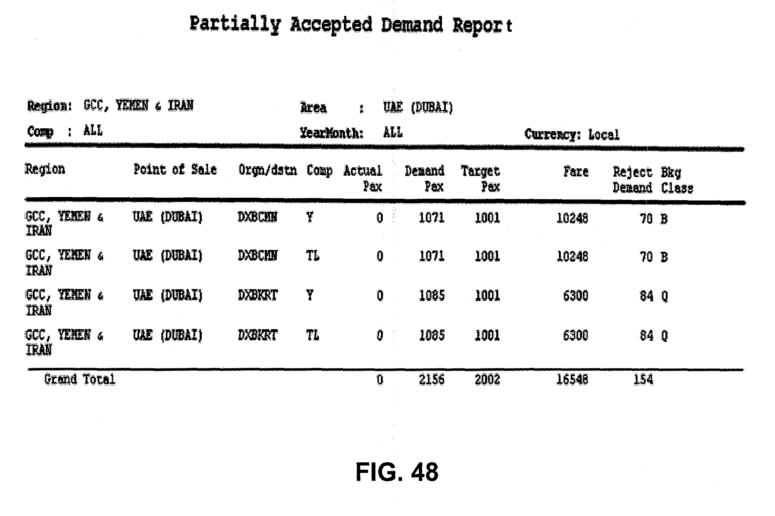

The Partially Accepted Demand Report shown in **FIG. 48** gives the demand details where optimization has rejected the demand partially. It also gives the proposed increase in fares so that partially rejected demand can be accepted.

### 12.1.4 Commercial Target Report

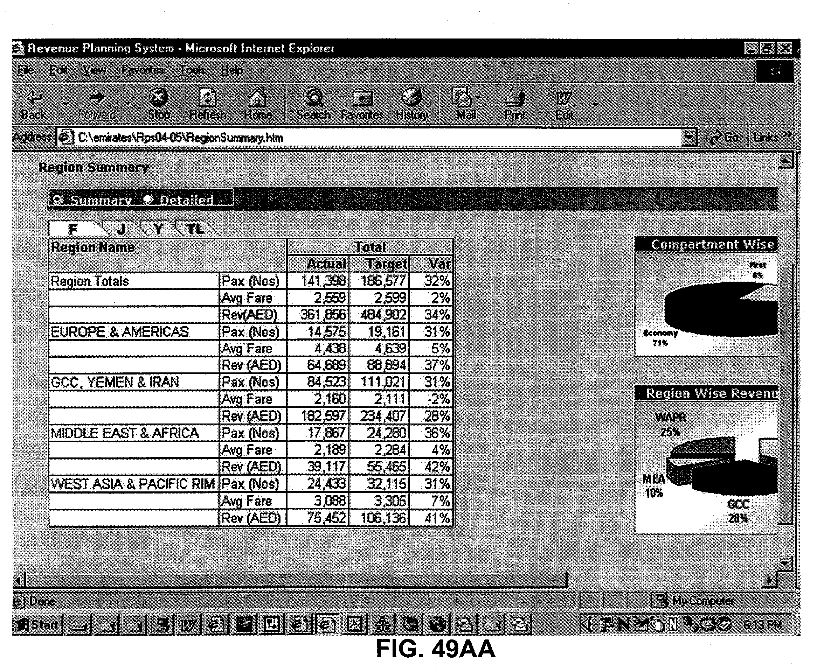

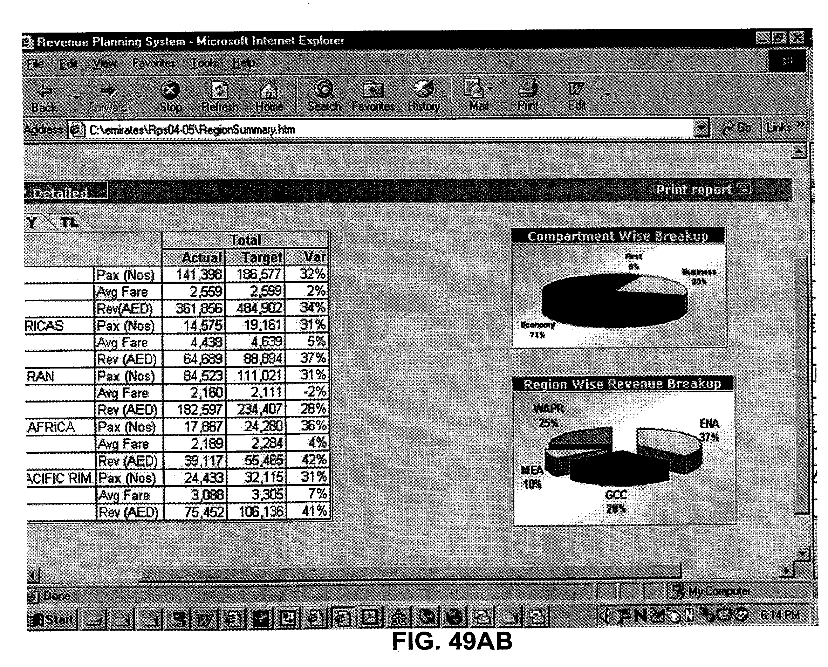

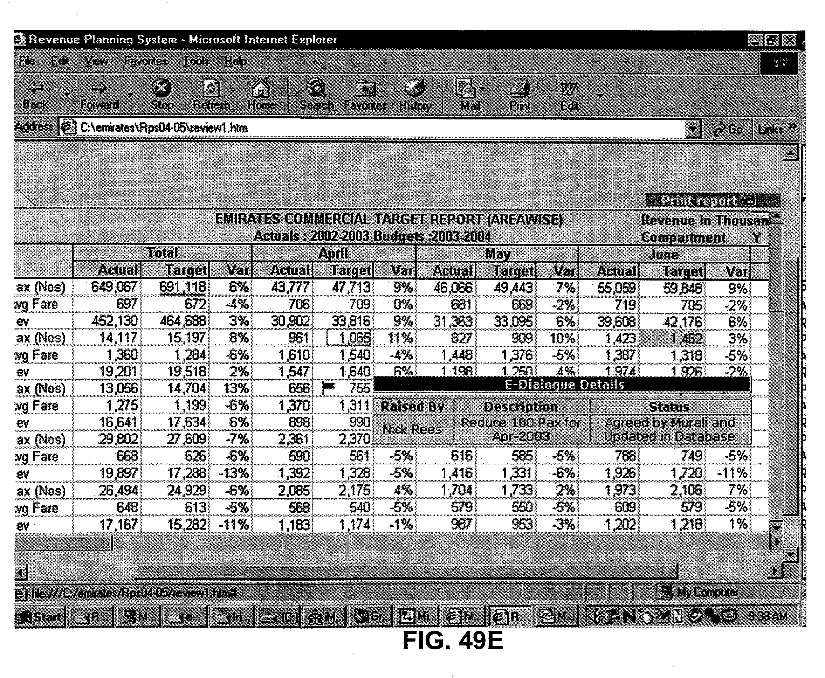

The Commercial Target Report is designed to show the comparison of actual/ target details about PAX, yield and revenue in a simple convenient place. Percentage change of target with regard to actual is also given. This report can be generated based on region summary, area-wise summary, and detailed level. An example of such a report is shown in the screen shots of **FIGS. 49AA-49AB** (which should be viewed as a single figure). As shown in **FIGS. 49AA-49AB,** Actual, Target and variance numbers for PAX, yield and revenue data are shown in the table for four regions: Europe/North America, GCC/Yemen/Iran, Middle East/Africa and WAPR (West Asia/Pacific Rim). Totals (summary of the four regions) are also shown. The two graphs on the right provide a breakdown by compartment and by region.

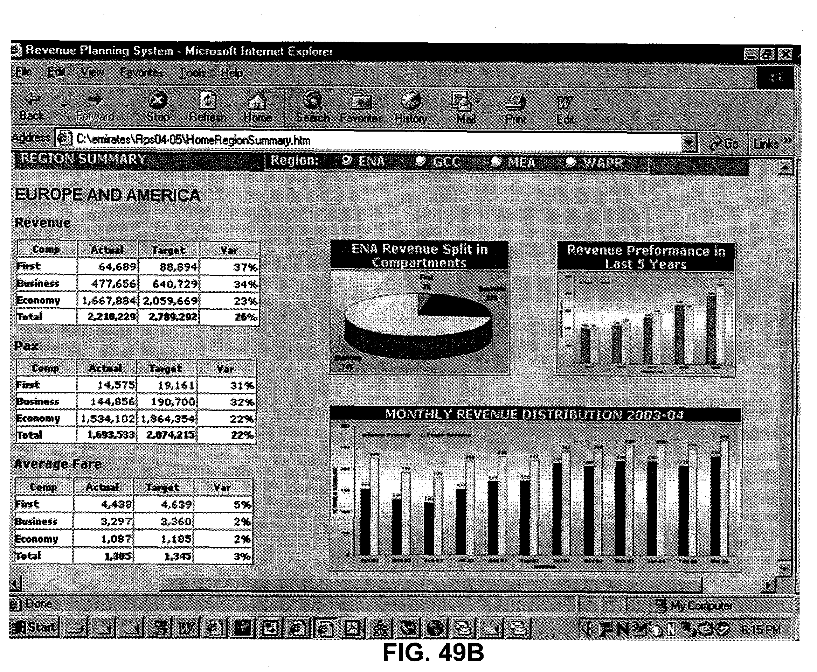

**FIG. 49B** shows a Regional Report for Europe and North America only. As shown in **FIG. 49B,** revenue, PAX and yield can be broken down by compartment (see tables on left). The data can also be presented in graphical form, historical revenue data can be shown, and monthly revenue distribution can be shown (see right half of the figure).

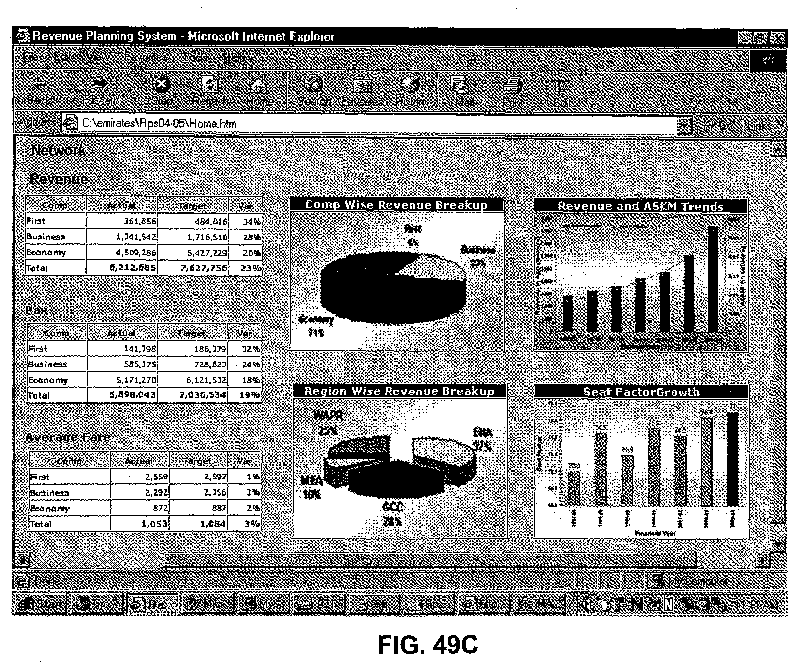

**FIG. 49C** is similar to **FIGS. 49AA-49AB,** and illustrates a network parameter summary, including revenue, PAX and average fare (yield), broken down by compartment, and by actual, target and variance data in the tables on the left. The graphs on the right illustrate breakdown of the revenue by component, revenue trends, region-wise revenue breakdown, and seat factor growth.

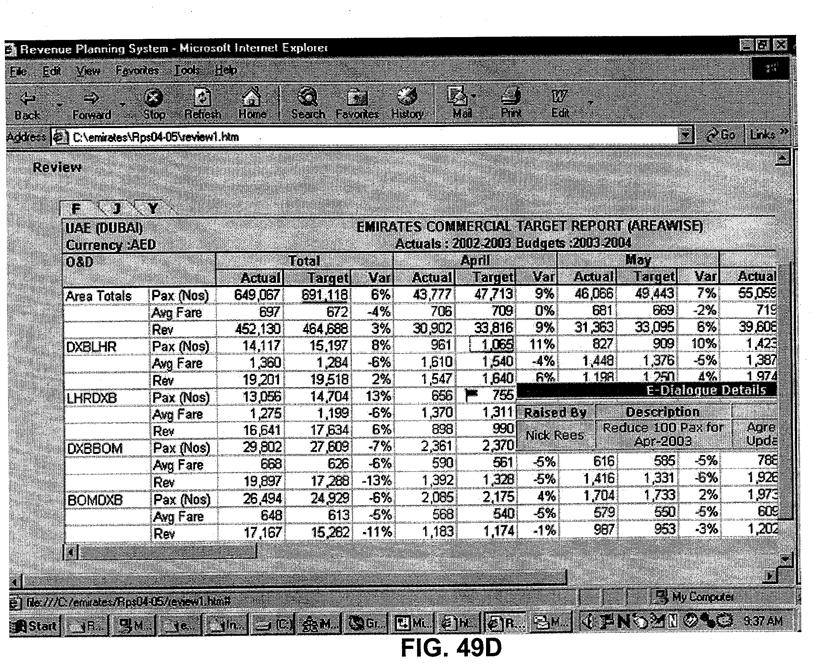

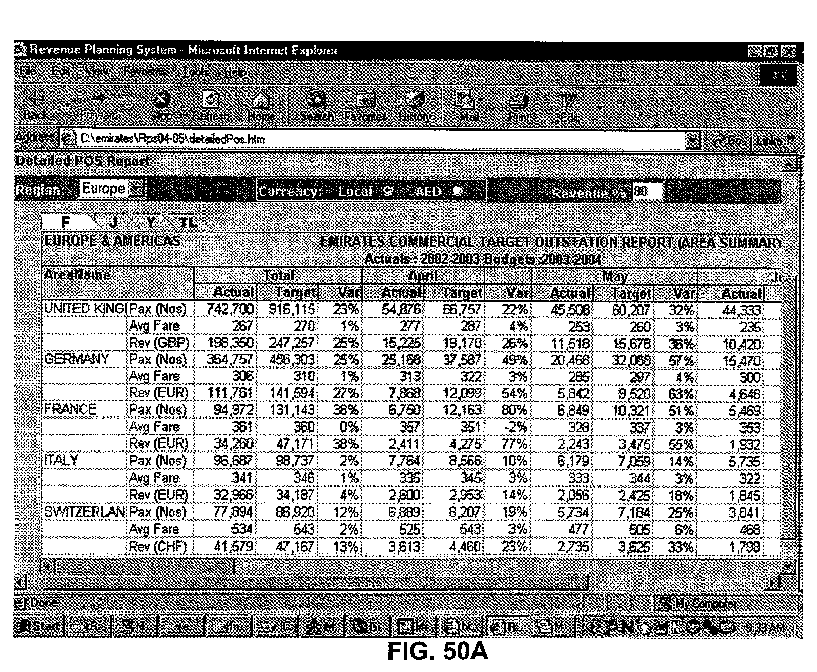

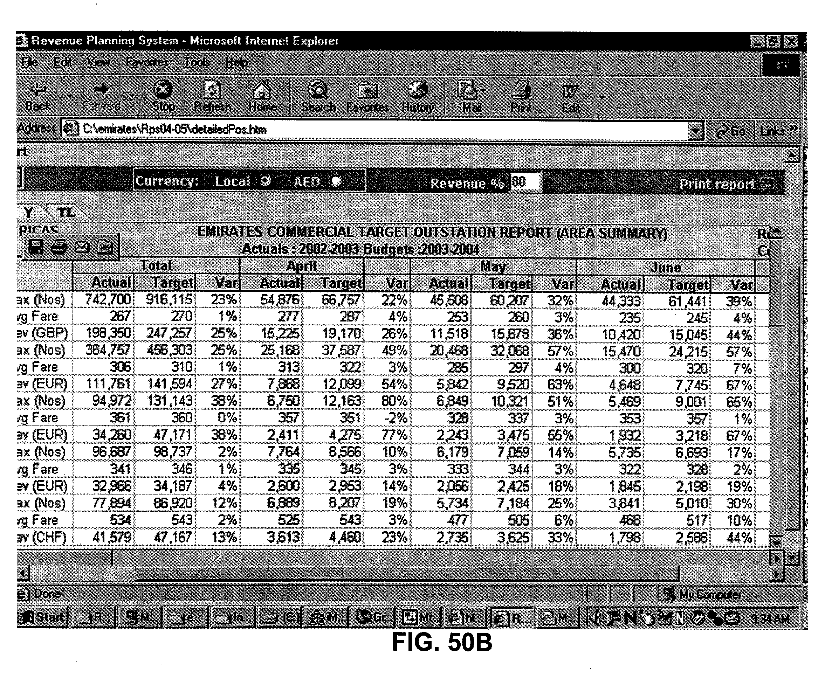

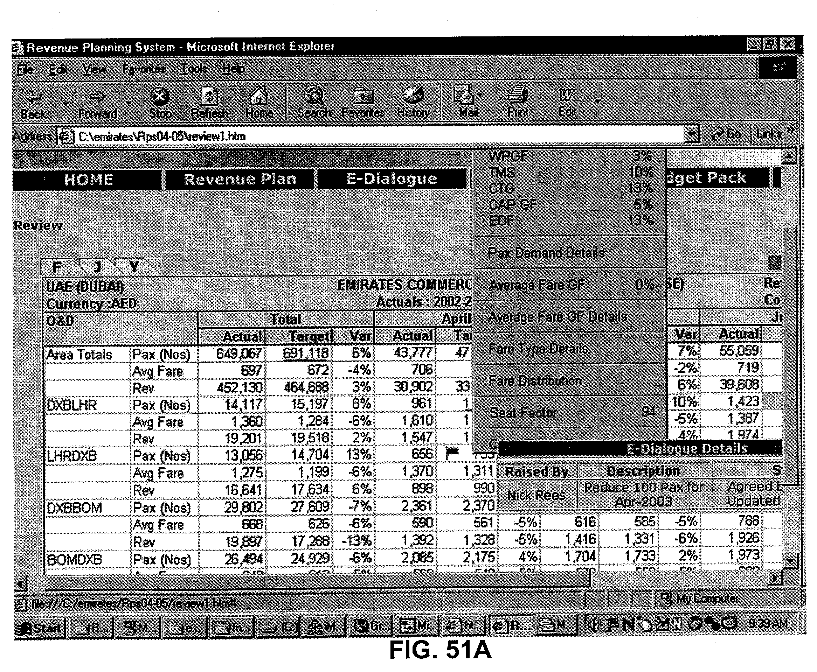

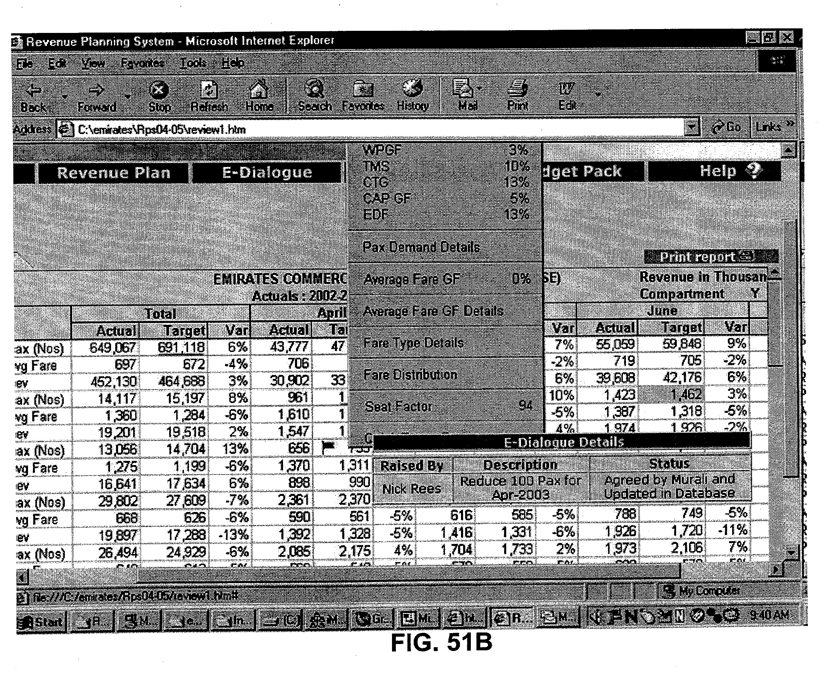

**FIGS. 49D-49E** (which should be viewed as a single figure) is an illustration of the Commercial Target Report in E-dialogue. Note in **FIGS**. **49D-49E** that certain items on the grid are specially marked.. For example, the April target for LHRDXB shows a flag, which indicates a disagreed item. Similarly, the April target for DXBLHR is underlined. **FIGS. 50A-50B** (which should be viewed as a single figure), show additional details of the Commercial Target Report. By bringing the cursor to those grid items, and "right clicking" on those items, a pop-up menu comes up (see screenshot in **FIGS. 51A-51B**), and the calculation details behind the numbers may be viewed. For example, the popup menu for the April target for LHRDXB is shown in the cell for that item. As may be seen more clearly in **FIGS. 51A-51B** (which should be viewed as a single figure), the various parameters and growth factors for that particular cell are displayed, for example, WPGF = 3%, TMS=10%, CTG = 13%, CGF= 5%, and EGF = 13%.

### 12.1.5 Commercial Target Report - Outstation

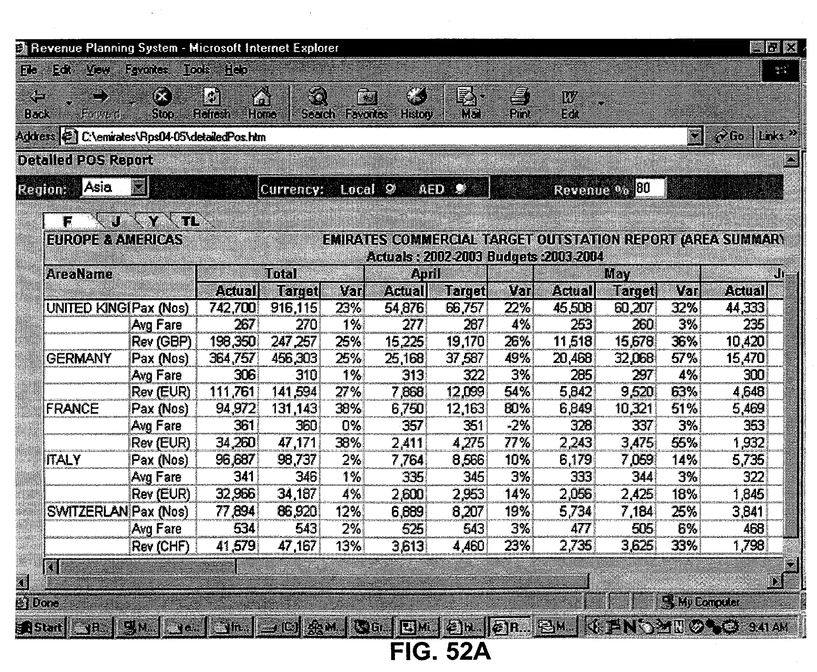

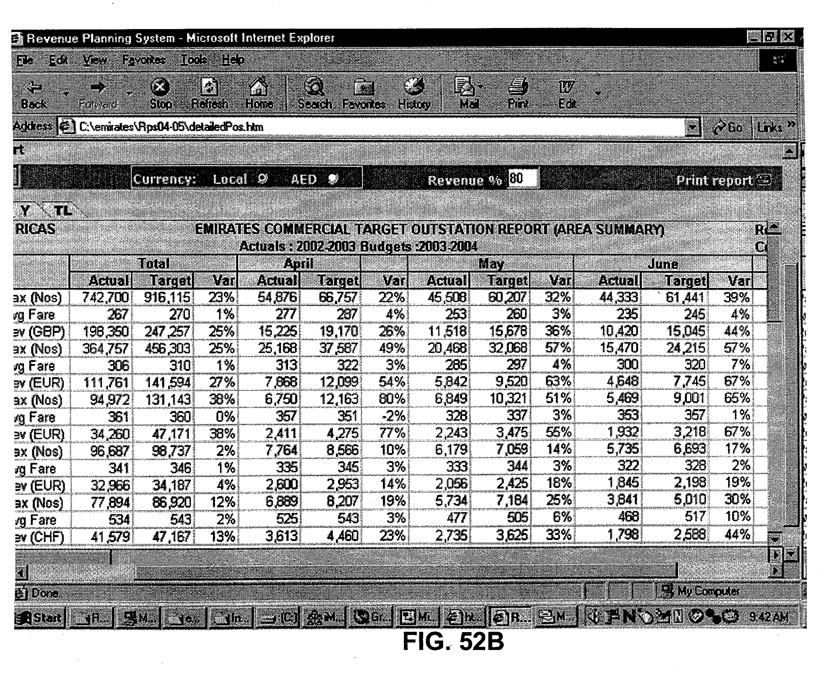

The Commercial Target Report - Outstation, shown in **FIGS. 52A-52B** (which should be viewed as a single figure) is designed in view of Area Managers' perspective. The report is similar to the Commercial Target Report of **FIG. 49D-49E**. It also has the facility to generate either in AED or local currency. A parameter is given to display the O&Ds which constitute x% of total revenue. Hence, Area managers can select the O&Ds that represent 80% of total revenue, instead of showing all O&Ds with less significant revenue importance.

### 12.1.6 O&D Capacity Comparison Report

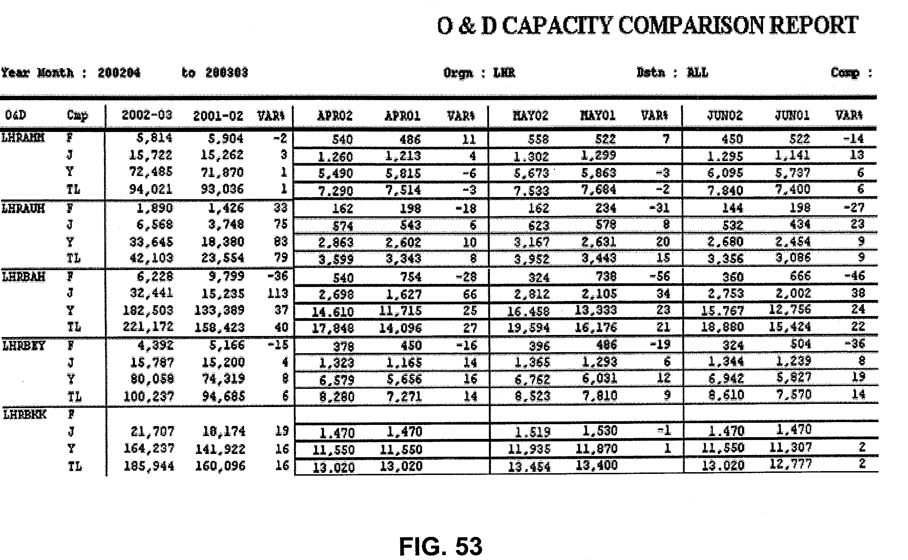

The O&D Capacity Comparison Report shown in **FIG. 53** gives the capacity comparison for O&D and Compartment and Travel Month combinations. It helps in demand estimation process where one can look into the capacity growth and fine-tune the expected demand. For example, as shown in **FIG. 53**, for each compartment, at each compartment, for the budget years 2002-2003 and 2001-2202, the variance and percentage is shown. In the center and right half of the figure, monthly numbers are shown. The report also has the Excel generation option.

### 12.1. 7 Sector Yield Report

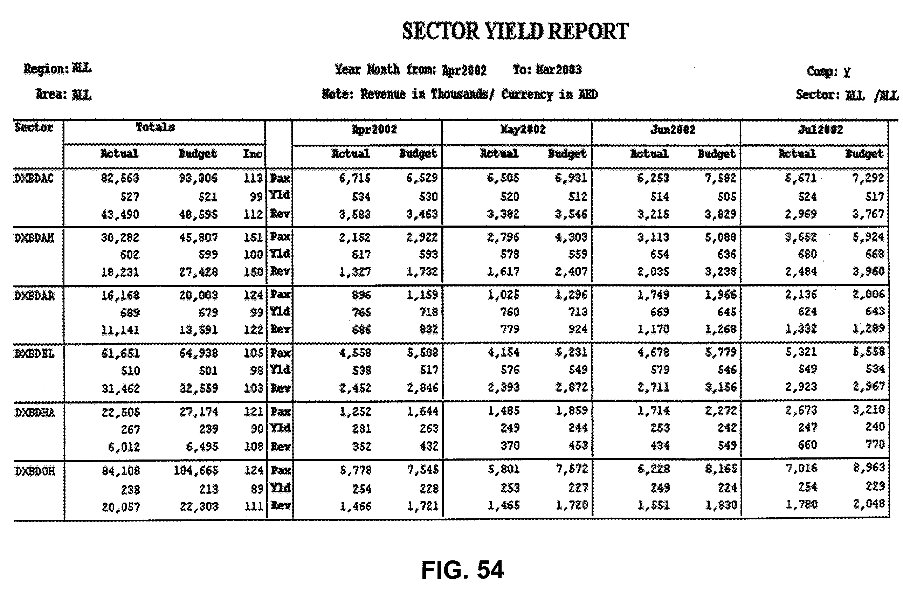

The Sector Yield Report shown in **FIG. 54** gives the PAX, yield, and revenue comparison between Target and Actual for individual sectors. A report can be generated at individual compartment level (including total) and selected travel month or full year. It can also be generated to Excel.

### 12.1.8 Leg Seat Factor Report

The route-wise Leg Seat Factor Report shown in **FIG. 54** shows how the O&D PAX target is distributed among different legs. Comparison of Target Leg Seat Factor (SF) and Actual Leg Seat Factor (SF) is done. This helps in identifying the exceptional legs where targeted seat factor is unusually high or low.

### 12.1.9 Quick Target Report

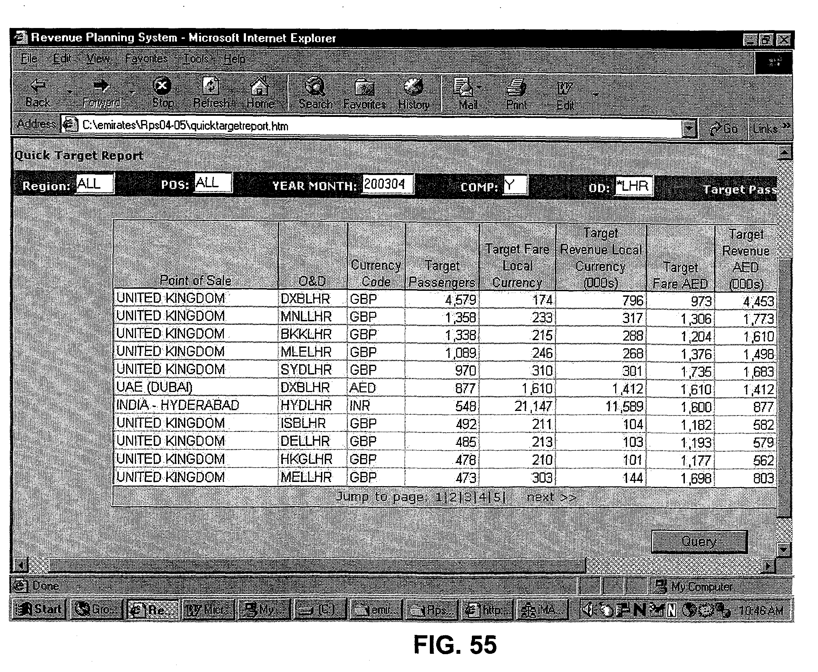

The Quick Target Report shown in **FIG. 55** gives the target figures in one page for all months. This convenient layout facilitates the user to see his/her target in one place. It can be output to Excel, and makes it easy to share information among different users.

### 12.1.10 POS Revenue Variance Report

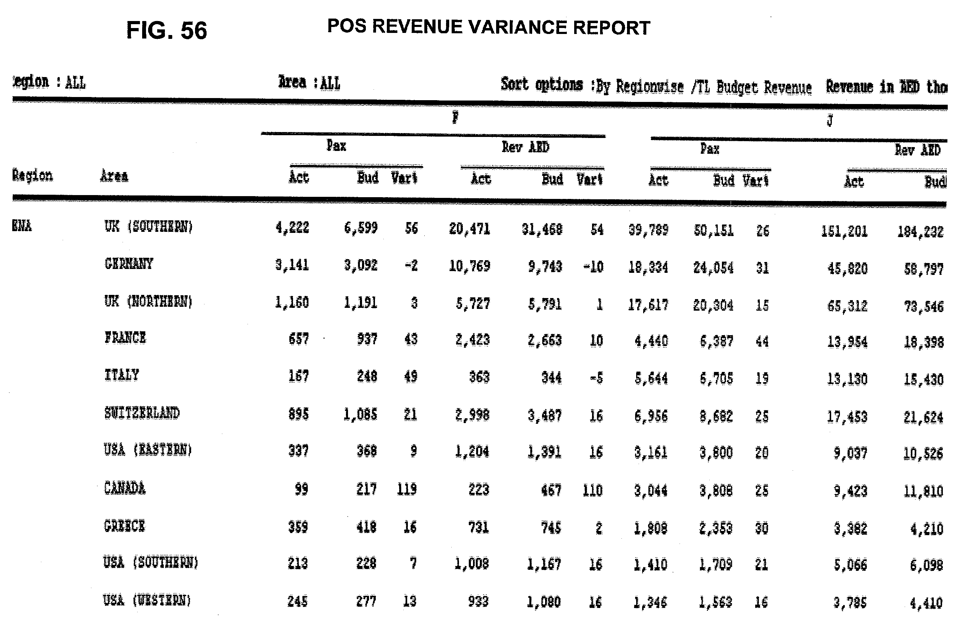

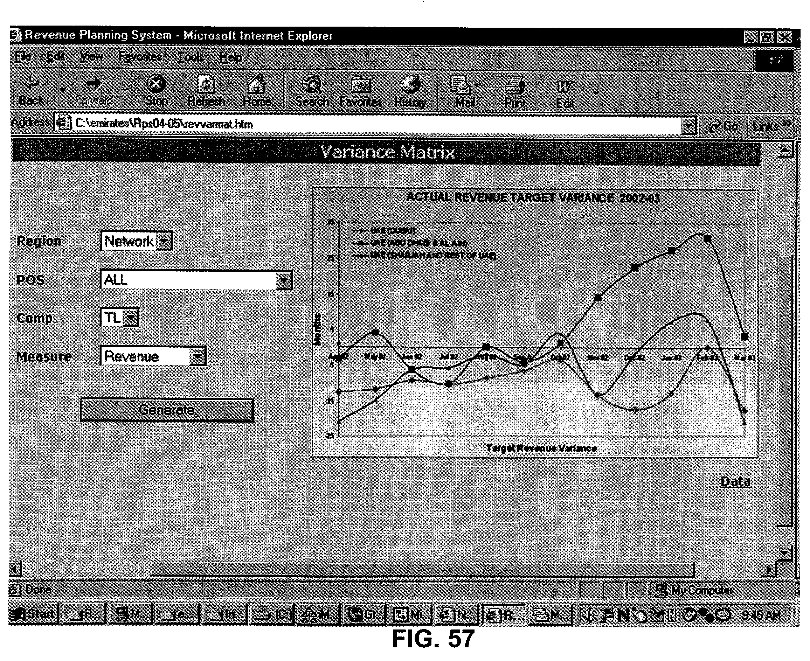

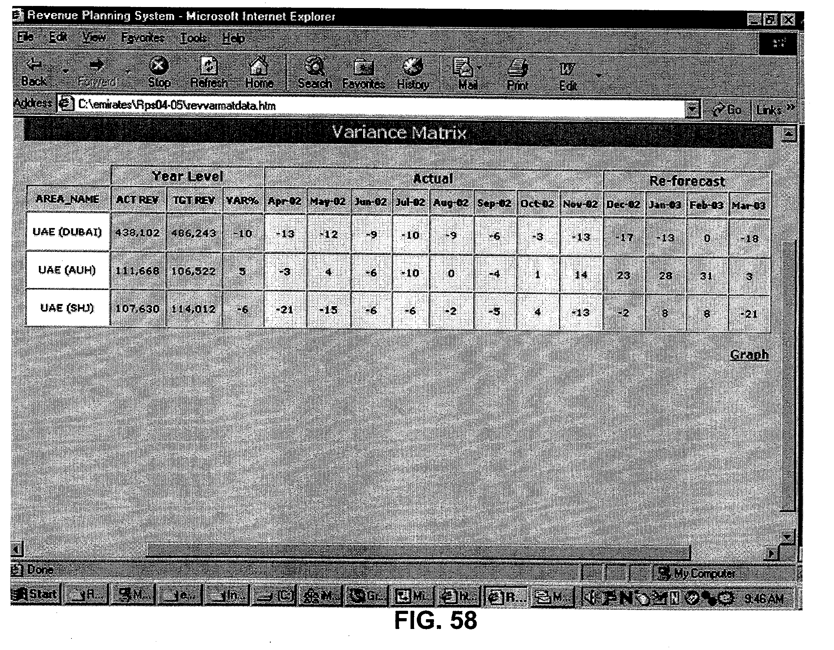

The POS Revenue Variance Report shown in **FIG. 56** gives the Target revenue vs. Actual revenue variation for different POS for different compartments. This helps in carrying out revenue analysis of different POS. Excel generation is also enabled for this report. **FIGS. 57-58** show the variance matrix in graphical form.

### 12.1.11 Route-wise Yield and SF report

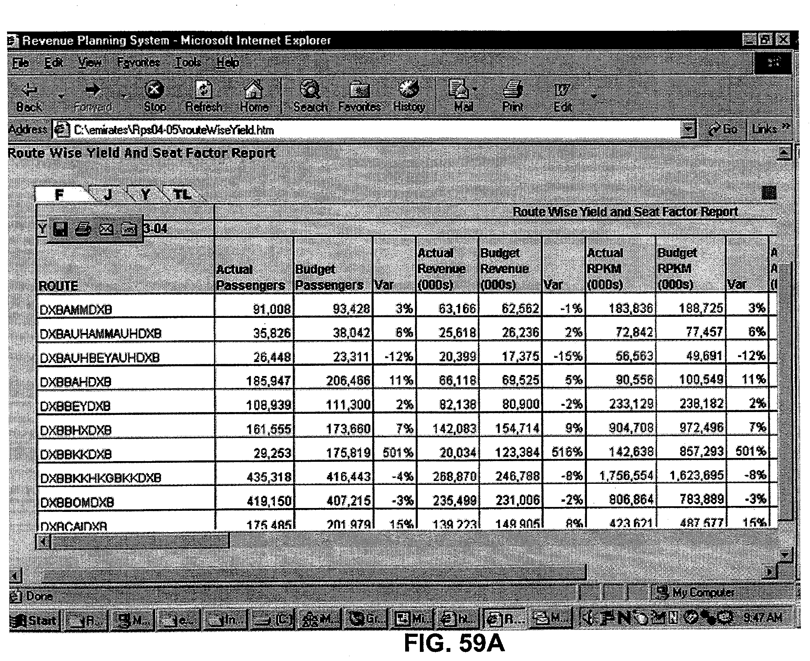

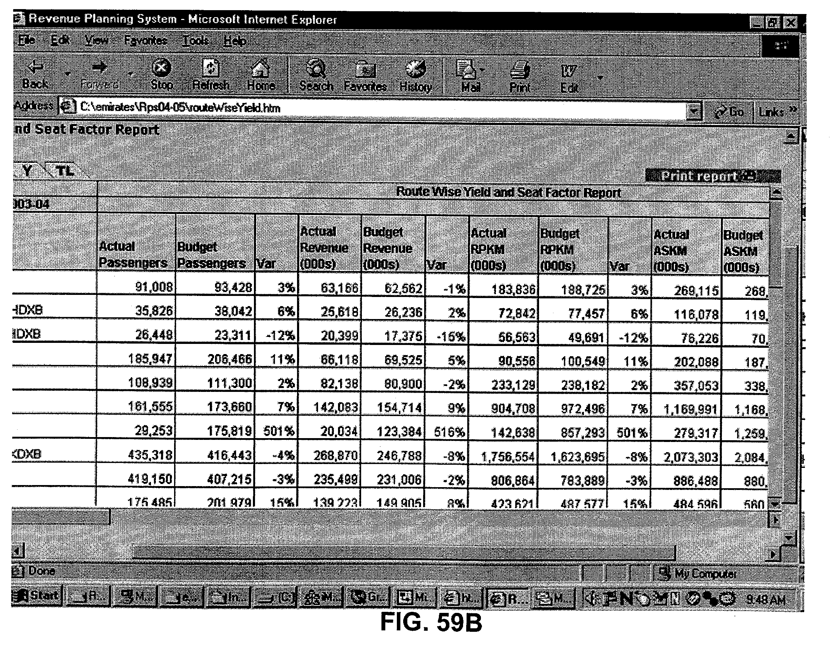

The Route-wise Yield and SF report shown in **FIGS. 59A-59B** (which should be viewed as a single figure) gives the route-wise PAX, Revenue, RPKM, ASKM, SF. A comparison is made between Target and Actual data.

### 12.1.12 Core Market Strategy Report

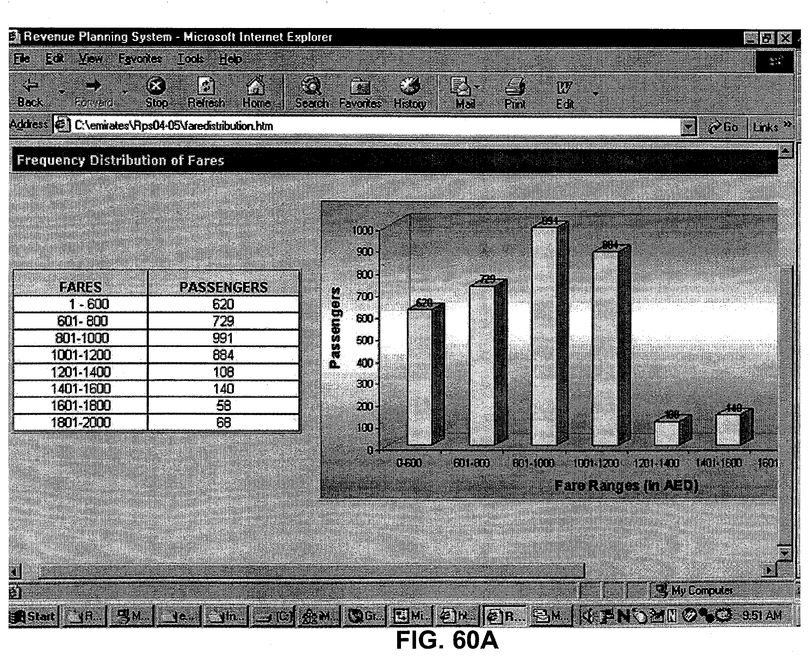

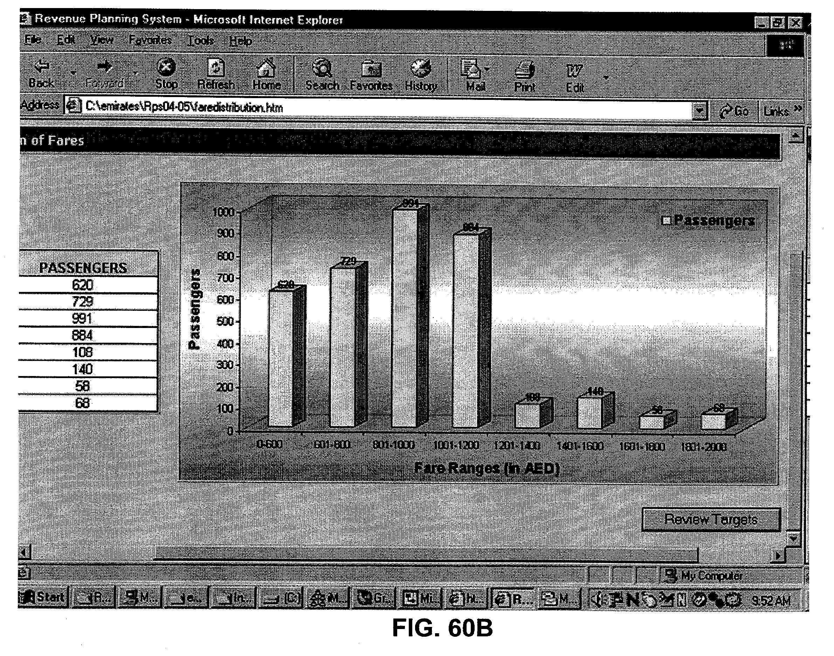

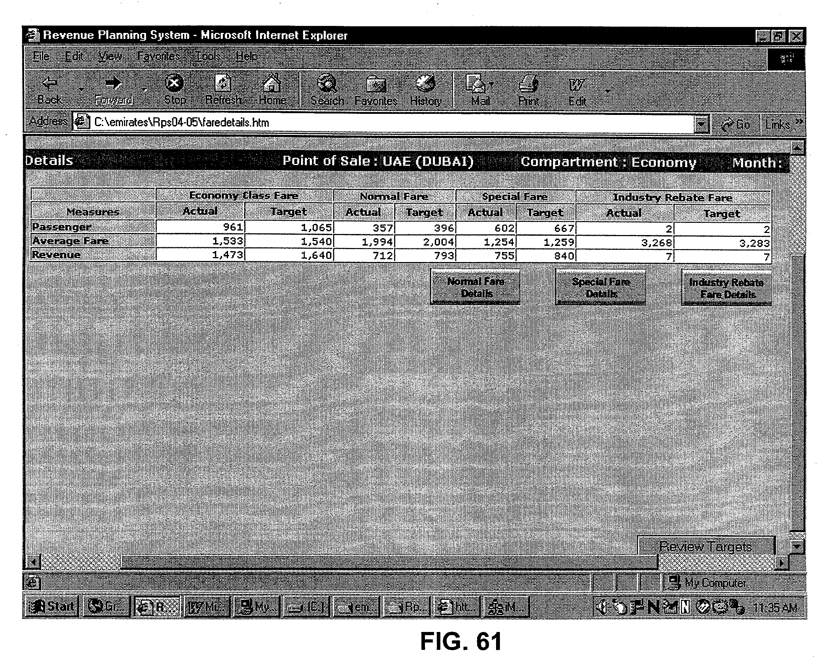

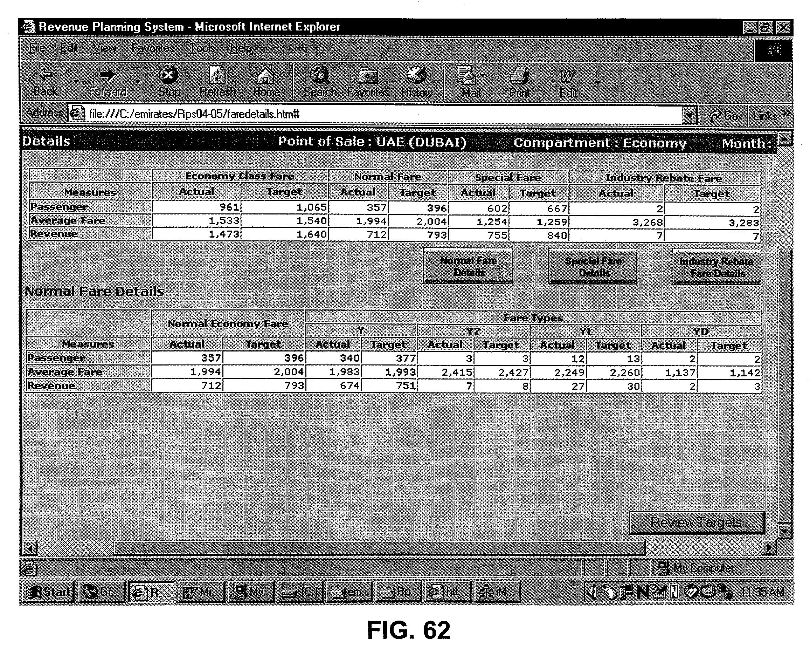

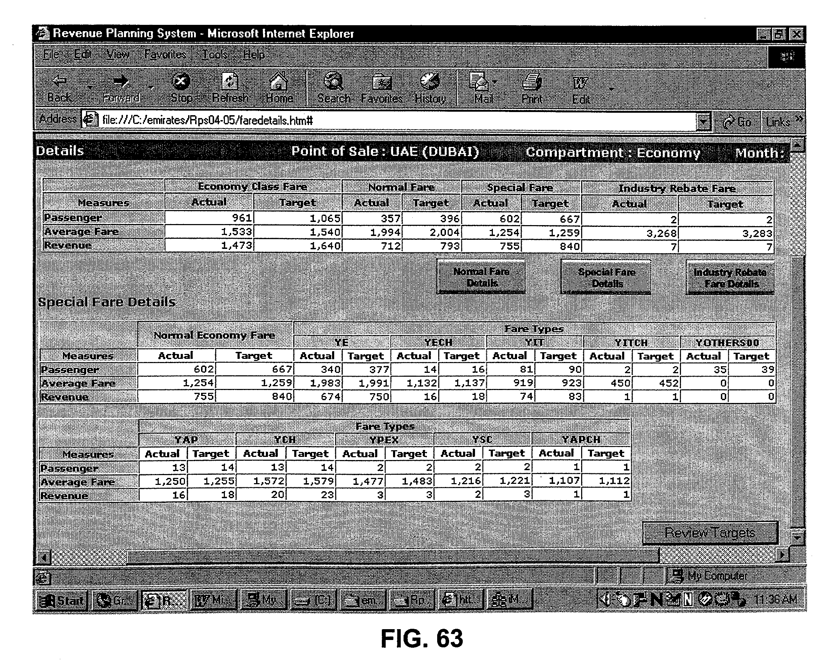

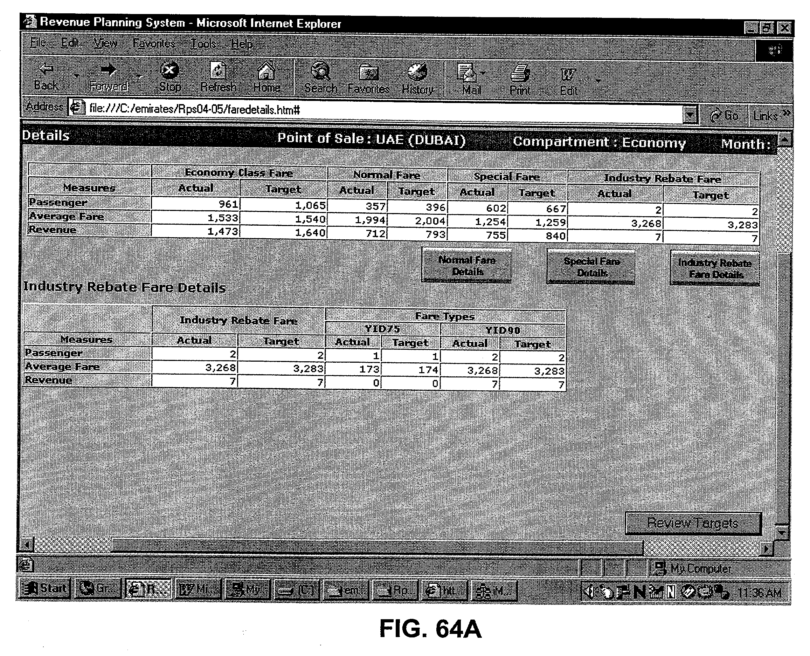

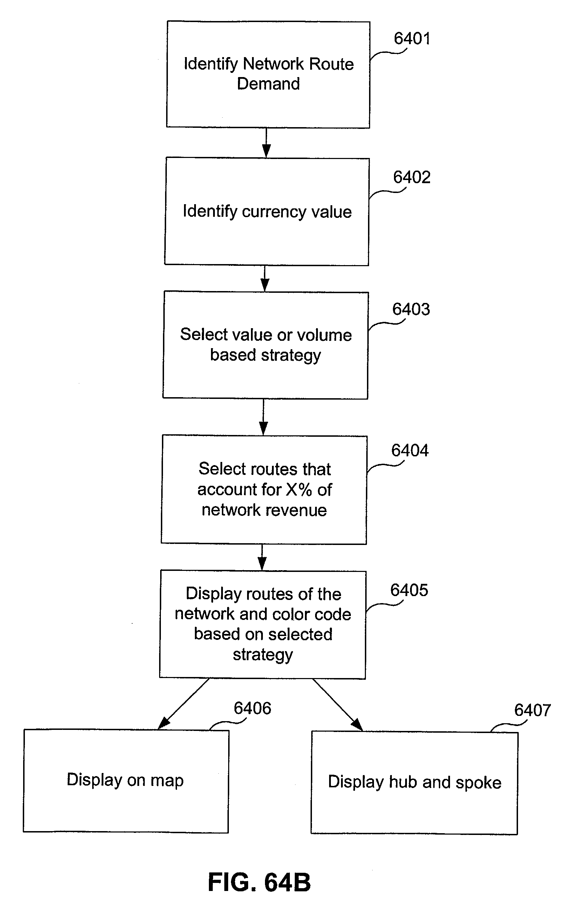

The Core Market Strategy Report gives the marketing strategy that should be adopted by the individual POS for different routes in different months. (Here, "core markets" refers to the routes that generate X% of the network revenue, for example, 80%.) It indicates whether an airline should proceed on value basis or volume basis, and is a ready reference for Area managers to adopt a particular business strategy. (Here, "value basis" refers to high demand periods, where there is no need for discounting to fill the seats and full fares can be charged, while "volume basis" refers to low demand periods, where without discounting, the seats are unlikely to be filled. (Reports such as those shown in **FIGS. 60A-64A** assist with the fare setting process. **FIGS. 60A-60B** (which should be viewed as a single figure) show a frequency distribution of fares in graphical form (in this graph, in AED). **FIGS. 61-64A** illustrate fare type details for a single Point of Sale.) The Core Market Strategy Report also includes a facility to generate the report in Excel, and to identify each O&D pair as being a volume based strategy pair or a value based strategy pair.
The core market strategy selection process is summarized with respect to **FIG. 64B.** As shown in **FIG. 64B,** network route demand is identified (**6401**). Currency value of the routes is identified (**6402**). Value based or volume based strategy is selected for each route (**6403**). Route that account for a certain percentage of network revenue are selected (**6404**). These routes may then be displayed and color coded (**6405**). The route may be displayed on the map (**6406**) or in a hub and spoke format (**6407**).

### 12.1.13 Revenue Plan Progress Report

The Revenue Plan Progress Report gives the monthly comparison of Revenue, Leg PAX demand, Capacity, Sector PAX yield, RPKM, ASKM, SF, Yield/RPKM at network level. As the month progresses, the actual column will be updated with flown data. **FIG. 65A** shows an example of a monthly revenue plan progress report. The report give the actual revenue by month, target revenue by month, the variance. The report also gives the same monthly numbers for the leg passenger, the capacity, and the sector PAX yield. A weekly version of the report may also be generated by the RPS **100.**

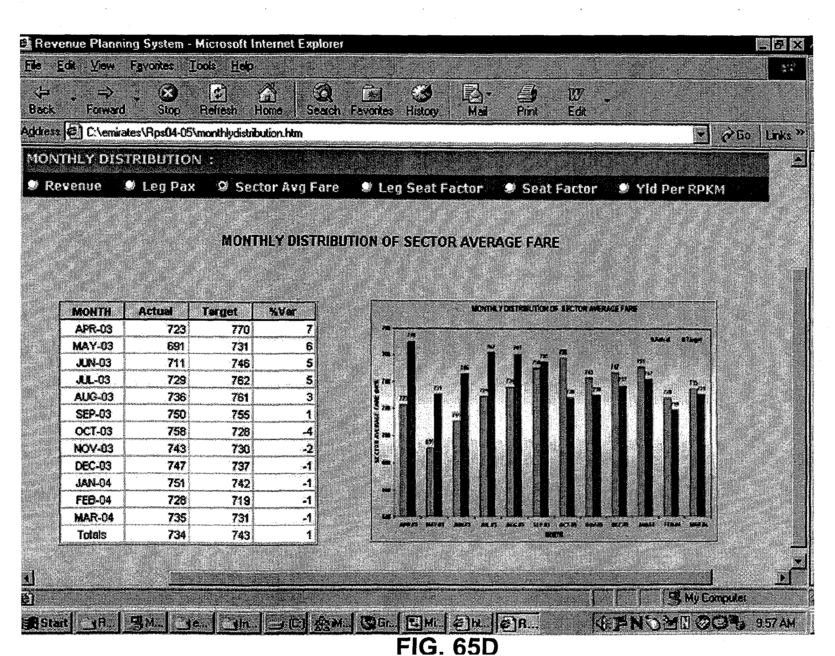

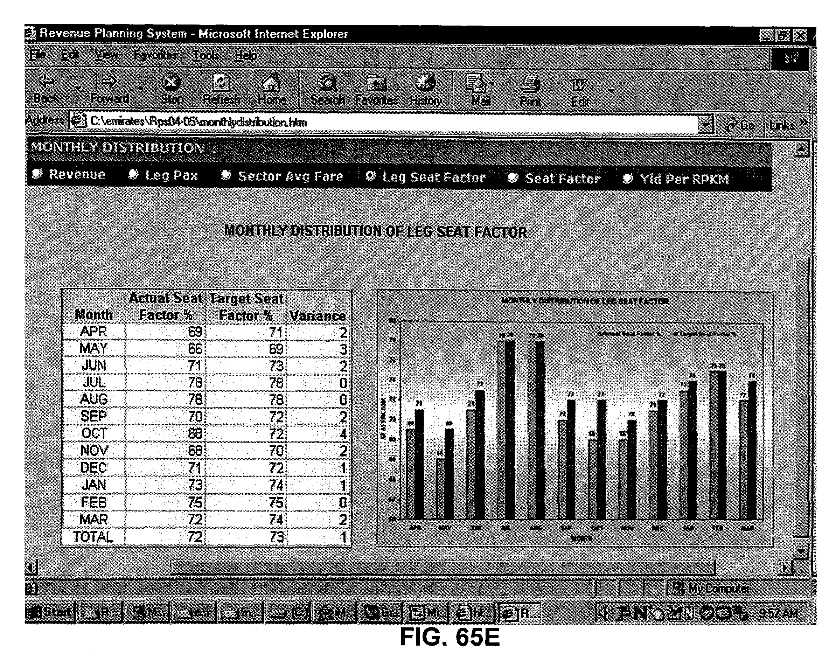

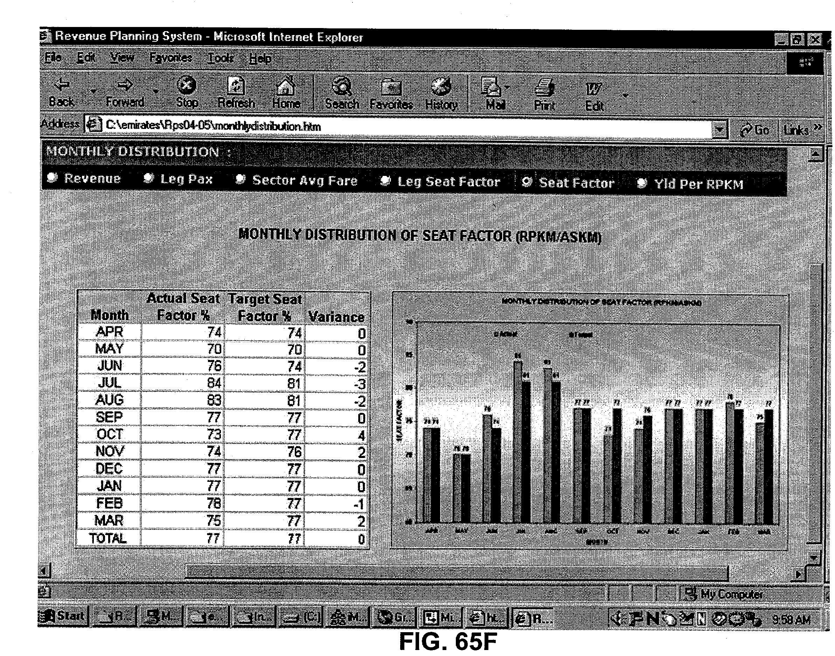

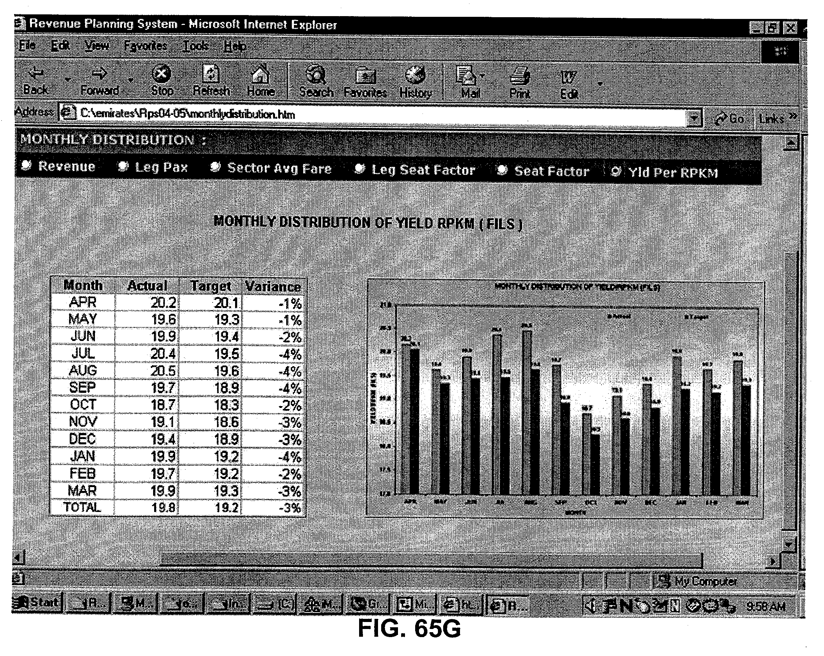

**FIGS. 65B-65G** show examples of monthly distribution reports that can be generated using the RPS 100. In each of these figures, a table on the left shows Actual, Target and Variance numbers, and a graph on the right shows the monthly data in graphical form. The figures show monthly distribution of revenue (**FIG. 65B**), monthly distribution of leg PAX (**FIG. 65C**), monthly distribution of sector average fare (yield) (**FIG. 65D**), monthly distribution of leg seat factor (SF) (**FIG. 65E**), monthly distribution of seat factor (**FIG. 65F**), monthly distribution of yield in revenue per kilometer **(FIG. 65G).**

### 12.1.14 Threats/Opportunities

The RPS **100** may also include a facility to tabulate the various threats and opportunities to the revenue plan. For example, threats may include a possible outbreak of a war, excessively high targets due to capacity increase on a certain route, or competitors increasing the frequency of flights on a certain route or reducing prices. Opportunities may include such factors as favorable conditions - for example, favorable market conditions, a change in strategy for peak months (for example, focus on summer and winter, focus on particular routes in especially lucrative markets, etc.), or withdrawal of a particular competitor from a route.

### 13.0 Additional Enhancements

The Revenue Planning System has additional enhancements which are described below.
Automation: Re-forecasting and Demand Estimation may be completely automated to reduce manual effort.
Exception Reports: there are reports to give the Re-forecasting and Demand exceptions, where manual intervention is called for. A facility is given for correcting these Re-forecasting/demand data manually.
Re-forecast Capping: after calculating the Re-forecasting data for individual POS-O&D-Comp-Travel Month combinations, it is broken down to Leg level and sum of the Leg forecast is checked against the Leg Capacity, and Re-forecast data is adjusted to meet the Capacity constraints. This can reduce the forecast errors considerably, especially in the case of early booking markets, i.e., UK (Southern), Germany, etc.
Weekly skewing: weekly targets are derived based on the seasonality instead of uniformly splitting from monthly targets. Seasonality is calculated based on the current year actual flown data.

Historical Base Change: in order to exclude the 9/11 effects on travel, the historical base is shifted to 2000 for Sep, Oct, November travel months for considering the POS materialization rates in Re-forecast PAX calculation.

Point of Sale Summary Report: this report highlights the Corporate, Region, and Area of Sale commercial objectives.

Market Share Report: it gives the target market share for a POS in different routes for each travel month. This can be generated for different compartments.

### 13.1 Core and New Markets

The present invention also provides a system and method of segregating demand targets, and includes identifying network route demand, identifying currency value of the network route demand, and deciding whether a POS should adopt a volume based or a value based strategy. The present invention also provides a system and method for displaying routes of the network and color coding them based on the selected strategy (see, e.g., discussion of Spider Web below). The routes may be superimposed on a map. The routes may be shown as a hub and spoke diagram. Only routes of the network that account for at least X% of total network revenue (i.e., "core markets") could be displayed, if desired. The network may be a hub and spoke network, or a point to point network.

A Core/New Markets' Entry Form is shown in **FIG. 66.** This is a facility to enter Core/New Markets for specified POS and Regions. The fields are as follows:

*Region* - List of valid/existing *regions* available for selection. "ALL" can be selected.

*Point of Sale* - List of valid/existing *point of sales* available for selection. The list must be restricted to the *region* selected. ("ALL" can be selected.) "ALL" must be selected *if Region* = "ALL"

*Core Markets* - Text Field for user input of Core Market Share.

*New Markets* - Text Field for user input of New Market Share.

*Capacity Growth* - Text Field for user input of New Market Share. (Can be Null.)

Buttons-

*Save* - Saves the current record.

*Clear* - Clears the screen.

If changes are made, user must be prompted before clearing.

*Print Preview* - Prints a preview of the report shown in 1.1.2. Report must be grouped by Region. Facility to print "ALL" *regions"* must be available.

*Delete* - Deletes the record. If changes are made, user must be prompted before deletion.

*Excel* - Prints output to Excel.

*Exit* - Exits from the screen.

### 13.2 POS Summary Report

As shown in **FIG. 67,** fields in this report are as follows:

Region - List of valid/existing regions available for selection. "ALL" can be selected.

Point of Sale - List of valid/existing point of sales available for selection. List must be restricted to the region selected. "ALL" can be selected. "ALL" must be selected if Region = "ALL." For POS with territory, the POS itself must be available in the POS list. E.g. - "UK". This applies to all outstation reports.

Buttons:

*Preview* - Prints a preview of the report.

*Generate to Word* - Generates information in the form of a Word document.

*Clear* - Clears the screen. If changes are made, user must be prompted before clearing.

*Exit* -Exits from the screen.

### 13.2.1 Overview of POS Summary

1) All variances to be computed for local currency in the report.

2) Compute growth for POS at F, J, Y and Total compartment levels and display figures.

Calculations (in Local Currency)

Revenue Growth = [(Target Revenue - Actual Revenue)/ Actual Revenue] * 100.

PAX Growth = [(PAX target - Actual PAX)/ Actual PAX] * 100.

Yield Growth = [(Target Yield - Actual Yield)/ Actual Yield] * 100.

### 13.2.2 Station Objectives

Core/New Markets are user entries from the entry form. (See also discussion in sections 14.3-14.4 relating to the Spider Web.) Revenue/Yield variance of the top several O&Ds are displayed, at a POS-O&D level. Here,
% Incr. in Rev. Target = [(Target Rev. - Actual Rev.)/ Actual Rev.] * 100.
% Incr. in yield Target = [(Target yield - Actual yield)/ Actual yield] * 100.

### 14. 0 Target Pack

The target setting process (**106-107** in **FIG. 1**) may be started during September of the current financial year. At that point, the flown data may be available in CVIEW **201** only up to the month of August. Forward Booking Data will be available for the next six months (September to February) for any snapshot date in August. Hence, there needs to be a mechanism in place to derive the estimated flown PAX information for the months where flown information is not available, or where the month is a future month yet to be flown. The Re-forecasting process derives this estimated flown information (or forecasts) for these months.

Once the targets are finalized, a set of information resources pertaining to revenue target and business strategy (the target pack **205**) may be sent across to each Area of Sale **206** in electronic form (see **FIG. 2**). At the same time these are updated in other commercial systems, such as CVIEW 201, etc. Discussed below are the information resources included in the target pack **205.**

### 14.1 Commercial Target Outstations Report

This report, shown in **FIG. 68** gives the F/J/Y/Total target (PAX, Yield, Revenue) in Local Currency for each O&D and each travel months, and is a ready reference for this particular Area of Sale. It also gives a comparison between target and actual figures (actual refers to the actual flown till the month where actual data is available, for remaining months, it is Re-forecast figures). Routes may be sorted in the high to low target revenue order.

### 14.2 Station Summary Report

This report shown in **FIG. 69,** gives highlights of revenue plan pertaining to the Point of Sale (i.e., a single station). It also gives the Network, Regional, and Point of Sale objectives for the budget year.

### 14.3 Core Market Strategy Report

The Core Market Strategy Report shown in **FIG. 70** gives the strategy that should be adopted in different markets in each month. The strategy is based on either volume or value.

### 14.4 Spider Web

The Spider Web report (see **FIG. 71**) gives a graphical representation of routes/expected demand in each month in budget year. This report facilitates the area of sale in identifying the individual routes demand well in advance. The Spider Web is prepared for inbound and outbound traffic demand. The Spider Web shown in **FIG. 71** is a hub-and-spoke representation, and may use color to designate the different types of routes. Alternatively, the Spider Web may be superimposed onto a map, as shown in **FIG. 72** (in the black-and-white printouts of **FIGS. 71-72**, color is shown by using different shading).

### 14.5 Route Demand Report

The Route Demand Report shown in **FIG. 73** displays the demand on various routes in color coding. The High Demand is represented with a Red Bar, Medium Demand with a Blue and Low Demand with a Green Bar (shading is used in the black/white version of **FIG. 74**).

### 14.6 Connection Reports

**FIG. 68,** discussed above, shows the outbound connection details for UK POS Outbound flights. This report gives the connecting flight details, in terms of Day of Week connection times at hub for outbound and inbound flights originating and terminating at individual POS. The report acts as a ready reference for the sales department to know the connecting flight details. FIG. 74 shows a similar Inbound Connection Report.

### 15.0 Additional Features of Revenue Plan

(a) Decentralized Demand Estimation: **FIG. 75** shows how the targeting process 106-107 can be decentralized to have stations input their demand estimation. Each POS can feed their demand by taking into consideration of local facts (competition, trend, business growth, economy growth, currency potential, type of traffic, popular fare etc.) and comparison can be made against the Yield Management-generated demand estimation. Decisions can be made whether to retain the station demand or not after a review. A web-enabled interface enables the Points of Sale to feed their demand. If any demand is rejected from any POS during the optimization, the rejected POS will be informed about the details of other POS who captured their portion of demand. Hence, a competitive PAX demand and yield from each POS can be expected.

(b) Frequency: Targets are typically set four-five months before the start of a Financial year. In order to reflect real dynamism and market fluctuations during current financial year, targets are revised two months prior to the start of every quarter.

(c) Granularity: Targeting is done for O&D-Compartment-Travel month combinations. It does not address the type of fare basis that needs to be concentrated nor which date/DOW should have different targets compared to normal trend (this can be due to the type of connections exist, special events, other competitor's pricing strategy depend on the DOW, etc.). Hence, targeting need to be done for fare basis or Class or RBD/Date or Date range combinations. Also it will give what should be group (IT/Ad-hoc) vs. individual compositions that each POS should have.

(d) Market Segment: in one embodiment, there is no distribution of targets among different market segments. Targets may be split among different segments including frequent flyers.

(e) Optimization: An objective function of the Revenue Plan is "maximizing the revenue," which gives the traffic mix for maximum network revenue. The objective function of revenue plan can be modified as "maximizing net revenue". Net revenue is revenue - cost (e.g., catering cost). Hence, the output of this objective function will be the traffic mix with maximum net revenue.

(f) POS forecasting: A detailed methodology is used in POS forecasting by taking into consideration of seasonality and split-history philosophy.

(g) Target Road Map: A Road Map for each POS details the number of bookings that it should hold at each Snapshots in order to achieve the target, so that POS can have track on the booking activity and plan accordingly.

### 16.0 Advantages of the invention

Embodiments of the present invention provide a number of advantages. For example, tangible revenue gains, arising from working the commercial organization to a revenue plan that has been scientifically optimized to ensure maximum profitability, can be realized. Pro-active identification of core and new markets that need to be targeted can be performed. Pro-active identification of class-wise growth required for each market can also be performed, allowing marketing activities to be tailored to the projected geographic and customer segmentation. Inbound and Outbound traffic demand analytics (Spider Web) on a month to month basis can be provided. A one-stop shop analytical tool is provided for monitoring performance of points of sale against their targets, with drill down/drill through facilities across business dimensions, can also be provided. On a strategic level, the present invention enhances collaboration between an airline's sales force and revenue optimization departments by providing a shared vision in the form of an agreed revenue plan.

It will be apparent to one of ordinary skill in the art that although the present invention has been described primarily in terms of the airline industry, it is equally applicable to hotel and car-rental industries, energy, natural gas pipelines, broadcasting, shipping, sports, entertainment facilities, manufacturing, equipment leasing and cargo industries, or any industry that has limited short-term capacity flexibility and variable demand.

### 17.0 Conclusion

While various embodiments of the present invention have been described above, it should be understood that they have been presented by way of example, and not limitation. It will be apparent to persons skilled in the relevant art that various changes in form and detail can be made therein without departing from the scope of the invention.

The present invention has been described above with the aid of functional building blocks and method steps illustrating the performance of specified functions and relationships thereof. The boundaries of these functional building blocks and method steps have been arbitrarily defined herein for the convenience of the description. Alternate boundaries can be defined so long as the specified functions and relationships thereof are appropriately performed. Also, the order of method steps may be rearranged. Any such alternate boundaries are thus within the scope and spirit of the claimed invention. One skilled in the art will recognize that these functional building blocks can be implemented by discrete components, application specific integrated circuits, processors executing appropriate software and the like or any combination thereof. Thus, the breadth and scope of the present invention should not be limited by any of the above-described exemplary embodiments, but should be defined only in accordance with the following claims and their equivalents.

**Claims**

1.  A system for estimating airline demand comprising:

    means for accessing capacity data for a previous N years at at least one level slected for the group consisting of a Point of Sale level, time period level and an Origin and Destination level;
    means for accessing flown data for a previous M years at the Point of Sale level, Origin and Destination level and preferably time period level, and;
    means for accessing capacity data for a forecasting period that extends beyond a time when reservation information is available;
    means for calculating at least one of actual growth and market growth;
    means for deriving an effective growth based on the capacity data for the previous N years, the capacity data for the forecasting period and optionally on the flown data, and the at least one of the actual growth and the market growth; and
    means for generating a passenger demand forecast for a budget year based on the effective growth.

2.  The system of claim **1**, wherein the time period level is any of daily, weekly, or monthly.

3.  The system of claim **1**, wherein the capacity data includes compartment level data.

4.  The system of claim **1**, wherein the flown data includes compartment level data.

5.  The system of claim **1**, further comprising means for applying a set of weighting factors to the flown data and market data to derive the at least one of actual growth and market growth.

6.  The system of claim 5, wherein the weighting factors include seasonality factors.

7.  The system of claim 1, wherein:

    the means for deriving comprises means for comparing the capacity data for the previous N years to budget year capacity; and its generating means comprises means for generating a passenger demand forecast for a budget year.

8.  The system of claim 1, wherein N = M.

9.  The system of claim 1, wherein N = 1.

10. The system of claim 1, further comprising:

    means for estimating average fares for the budget year,

    wherein the means for deriving an effective growth uses the average fares to derive the effective growth.

11. The system of claim 1, wherein the forecasting period extends beyond about twelve months.

12. A system for estimating airline fares comprising:

    means for accessing average fares for a previous N years at time period level, Point of Sale level and Origin and Destination level;
    means for deriving an effective growth based on the average fares; and
    means for using the effective growth to generate fares forecast for a next budget year.

**13.** The system of claim 12, wherein the time period level is any of daily, weekly, or monthly.

**14.** A method for estimating airline demand comprising:

accessing capacity data for a previous N years at at least one level selected from the group consisting of a Point of Sale level, time period level and an Origin and Destination level;

accessing flown data for a previous M years at the Point of Sale level, Origin and Destination level, and, preferably, time period level, and;

accessing capacity data for a forecasting period that extends beyond a time when reservation information is available;

calculating at least one of actual growth and market growth;

deriving an effective growth based on the capacity data for the previous N years, the capacity data for the forecasting period and optionally, the flown data, and the at least one of the actual growth and the market growth; and

generating a passenger demand forecast for a budget year based on the effective growth.

**15.** The method of claim **14**, wherein the time period level is any of daily, weekly, or monthly.

**16.** The method of claim **14**, wherein the capacity data includes compartment level data.

**17.** The method of claim **14**, wherein the flown data includes compartment level data.

**18.** The method of claim **14**, further including the step of applying a set of weighting factors to the flown data and market data to derive the at least one of actual growth and market growth.

**19.** The method of claim **14**, wherein the weighting factors include seasonality factors.

**20.** The method of claim **14**, wherein the deriving step includes comparing the capacity data for the previous N years to budget year capacity.

**21.** The method of claim **14**, wherein N = M.

**22.** The method of claim **14**, wherein N = 1.

**23.** The method of claim **14**, further including the step of estimating average fares for the budget year, wherein the effective growth is derived using the average fares.

**24.** A method for estimating airline fares comprising the steps of:

accessing average fares for a previous N years at time period level, Point of Sale level and Origin and Destination level;

deriving an effective growth based on the average fares; and

using the effective growth to generate a demand fares forecast for a next budget year.

**25.** A computer program product for estimating airline demand, the computer program product comprising a computer useable medium having computer program logic recorded thereon for controlling a processor to perform the method of any one of claims 14 to 24.

DATA SYNCHRONISATION

101

REFORECASTING PAX AND YIELD FOR FUTURE MONTHS

102

DEMAND ESTIMATION

103

FINE TUNING DEMAND

104

OPTIMISATION

105

TARGET REVIEW

106

TARGET FINALISATION

107

TARGET DISTRIBUTION

108

RPS

100

FIG. 1

EP 1 477 921 A1

46

**FIG. 2**

- 201 CVIEW
- 202 MIDT
- 203 PROMIS
- 204 PLANNING SYSTEM
- FLOWN DATA
- MARKET DATA
- OPERATIONAL CAPACITIES
- SCHEDULE CAPACITY
- 207 RPS Database
- REVENUE PLANNING SYSTEM 100
- TARGET PACK 205
- AREA OF SALE 206

| Process | Data Type | Data Granularity | Span |
|---|---|---|---|
| Re - forecast 102 | Advance Booking | POS - OD - Comp - Travel Month | Sep 02 — Feb 02 |
| | Total Booking Lyr | POS - OD - Comp - Travel Month | Sep 02 — Nov 02 |
| | Flown | | Sep 01 — Aug 02 |
| | Actual Yield (Local) | POS - OD - Comp - Travel Month | Apr 02 — Aug 02 |
| | Actual Yield (AED) | POS - OD - Comp - Travel Month | Apr 02 — Aug 02 |
| | Actual Revenue (Local) | POS - OD - Comp - Travel Month | Apr 02 — Aug 02 |
| | Actual Revenue (AED) | POS - OD - Comp - Travel Month | Apr 02 — Aug 02 |
| | Capacities | Leg - Comp - Travel Month | Dec 01 - Mar 02 |
| Demand Estimation 103 | Flown | | Dec 02 - Mar 03 |
| | Actual Yield (Local) | POS - OD - Comp - Travel Month | Last 5 years |
| | Market Share | POS - OD - Comp - Travel Month | Last 5 years |
| | Scheduled Capacities | Ro ute - Leg - Comp - Travel Month | Apr 03 — Mar 04 |
| Optimization 105 | Scheduled Capacities | Route - Leg - Comp - Travel Month | Apr 03 — Mar 04 |

# FIG. 3

| INPUT | PROCESS | OUTPUT |
|---|---|---|
| 1. Actual Pax<br>2. Actual Revenue<br>3. Actual Yield | 1. Synchronising RPS Data with CVIEW<br><br>201 Data | Base to project the demand for PAX for months from April to the month at the time of Revenue Planning process |

401        101        403

**FIG. 4**

EP 1 477 921 A1

| INPUT | RE-FORECASTING PROCESS | OUTPUT |
|---|---|---|
| 1. Actual Data for previous /current year<br>2. POS Growth<br>3. Capacity Growth<br>4. Adv.Bkg Data | 1. PAX re-forecasting<br>--------------------<br>2. Yield re-forecasting<br><br>503<br>504 | Re-forecast Data for the future months in current financial year, which will be the base for projecting the demand for the budget year for same months. |
| 501 | 102 | 502 |

## FIG. 5

EP 1 477 921 A1

| INPUT | NEAR PERIOD RE-FORECASTING PROCESS | OUTPUT |
|---|---|---|
| 1. Total Booking<br>2. Total Booking Lyr<br>3. Flown Coupon Lyr<br>4. Capacity<br>5. Adv.Bkg Month | a) Pick-up Model<br>b) Multiplicative Model | Un-constrained forecast Model |
| 601 | 602 | 603 |

**FIG. 6**

| Tbk | Tbk Lyr | Flown | Candidate examples | Forecast |
|-----|---------|-------|--------------------|----------|
| A | A | A | India (Western)- BOMDXB | Multiplicative or Pickup based on the condition |
| A | A | NA | UAE(Dubai) - DXBHYD | Pick-up Model |
| A | NA | NA | Qatar - DOHHYD | Target Pax |
| A | NA | A | UK (Northern) - DXBMLE | Pick-up Model |
| NA | NA | NA | Not Applicable | |
| NA | NA | A | Pakistan (Karachi) - DXBJNB | Pick-up Model |
| NA | A | A | Saudi (Western) - JEDATH | Pick-up Model |
| NA | A | NA | Pakistan (Karachi) - DAMDXB | Same as budgeted Pax(New Routes) |

## FIG. 7

**FIG. 8**

INPUT

1. Flown Cpn Last Year
2. Flown Cpn Last-Last Year
3. Capacity of Current Year

801

PROCESS

Effective Growth Factor Forecast Model

802

OUTPUT

Unconstrained Forecast PAX

803

| Pax Growth | Capacity Growth | Candidate examples | EGF |
|---|---|---|---|
| Positive | Positive | Pakistan (Karachi) - KHIDXB | PGF When PGF > CGF |
| Positive | Positive | UK (Northern) - LGWDXB | (PGF+CGF)/2 ; PGF <= CGF |
| Negative | Positive | Qatar - DXBDOH | (PGF+CGF)/2 |
| Negative | Negative | Kuwait - DXBKWI | (PGF+CGF)/2 |
| Null | Null | UK (Southern) - LHRPER | Re-forecast = Target |
| Zero | Negative | Bangladesh - DACDXB | (PGF+CGF)/2 |
| Zero | Positive | Germany - SINFRA | (PGF+CGF)/2 |
| Negative | Zero | Malaysia - KULDAC | (PGF+CGF)/2 |
| Positive | Zero | Pakistan (Karachi) - JEDKHI | (PGF+CGF)/2 |
| Pax Growth | Capacity Growth | Candidate examples | EGF |
| Positive | -100% Where there is change of Config. had happened (F/Y operation has become J/Y oprn.) | Germany - HKGDUS | (PGF+CGF)/2 |
| Negative | -100% | UAE (Dubai) - SAHDXB | (PGF+CGF)/2 |

FIG. 9

| INPUT | PROCESS | OUTPUT |
|---|---|---|
| 1. YTD actual Yield<br><br>2. YTD Tgt Yield<br><br>3. Current Tgt Yield | Yield Re-forecast | Re-forecasted Yield |

1001       504       1003

**FIG. 10**

EP 1 477 921 A1

FIG. 11A

EP 1 477 921 A1

FIG. 11B

EP 1 477 921 A1

Revenue Planning System - Microsoft Internet Explorer

File  Edit  View  Favorites  Tools  Help

Back  Forward  Stop  Refresh  Home  Search  Favorites  History  Mail  Print  Edit

Address  C:\emirates\Rps04-05\monthlevel.htm

## Month Level Graph

MONTHLY REVENUE PERFORMANCE 2002-03 (TARGET VS ACTUAL)

— Actual   — Target   — Re-forecast

Revenue in AED (millions)

Months

| | Revenue | | |
|---|---|---|---|
| Month | Actual | Target | Var % |
| Apr-2002 | 433 | 449 | -4% |
| May-2002 | 429 | 420 | 2% |
| Jun-2002 | 454 | 457 | -1% |
| Jul-2002 | 535 | 527 | 1% |
| Aug-2002 | 558 | 543 | 3% |
| Sep-2002 | 528 | 479 | 10% |
| Oct-2002 | 560 | 458 | 22% |
| Nov-2002 | 510 | 484 | 5% |
| Dec-2002 | 554 | 533 | 4% |
| Jan-2003 | 572 | 553 | 3% |
| Feb-2003 | 520 | 508 | 2% |
| Mar-2003 | 562 | 579 | -3% |
| Total | 6,213 | 5,990 | 4% |

Start   5:55 PM

FIG. 11C

Region : WAPR
POS Summary
Comp : Y
Exception : Reforecasted vs. Baseline variance > 15 %

| WAPR | Number of O&Ds - PAX | | | | |
|---|---|---|---|---|---|
| | Sep02 | Oct02 | Nov02 | (Feb02 ) | Total (O&Ds/PAX) |
| Australia | 2/120 | 1/50 | 4/20 | 8/250 | 15/440 |
| India- Northern | 3/140 | 2/100 | 6/120 | 8/120 | 19/480 |
| India- Southern | 3/120 | 5/250 | 6/120 | 9/400 | 23/890 |
| Total O&Ds/PAX | 8/380 | 8/400 | 16/260 | 25/770 | 57/1810 |
| Total POSs | 3 | | | | |

**FIG. 12**

Region : WAPR
POS Detailed
Comp : Y
Exception : Reforecasted Vs Baseline variance > 15 %

| WAPR | Number of O&Ds - Pax | | | | |
|---|---|---|---|---|---|
| | Sep02 | Oct02 | Nov02 | Dec02 | (Feb02 ) |
| Australia | MELLHR/1120 | MELLHR/1120 | MELDXB-1120 | MELSIN-1120 | MELDXB-2200 |
| Totals : O&Ds - Pax | | MELDXB/1200 | | MELLHR-2000 | |
| | | | | LHRMEL-2300 | |
| | 1-1120 | 2-1120 | 1-1120 | 3-5420 | 1-2200 |
| | | | | | |
| India — Northern | BOMDXB-1200 | BOMBAH-4000 | BOMDXB-2300 | BOMLHR-300 | BOMDOH-2300 |
| | | | DXBBOM-2300 | | |
| | | | DXBDEL-2300 | | |

**FIG. 13**

EP 1 477 921 A1

Region : WAPR
POS Summary
Comp : Y
Exception : Reforecasted Vs Baseline variance > AED 200

| WAPR | Number of O&Ds- | | | | |
|---|---|---|---|---|---|
| | Sep02 | Oct02 | Nov02 | (Feb02 ) | Total (O&Ds/Pax) |
| Australia | 2 | 1 | 4 | 8 | 15 |
| India- Northern | 3 | 2 | 6 | 8 | 19 |
| India- Southern | 3 | 5 | 6 | 9 | 23 |
| Total O&Ds/Pax | 8 | 8 | 16 | 25 | 57 |
| Total POSs | 3 | | | | |

## FIG. 14

EP 1 477 921 A1

Region : WAPR
POS Detailed
Comp : Y
Exception : Reforecasted Vs Baseline variance > 20% Page 1/5
Yield in AED

| WAPR | Number of O&Ds/ O&D Yield in AED | | | | |
|---|---|---|---|---|---|
| | Sep02 | Oct02 | Nov02 | Dec02 | (Feb02 ) |
| Australia | MELLHR/1120 | MELLHR/1120 | MELDXB/1120 | MELSIN/1120 | MELDXB/2200 |
| | | MELDXB/1200 | | MELLHR/2000 | |
| | | | | | |
| Total : O&Ds - | 1 | 2 | 1 | 2 | 1 |
| | | | | | |
| India — Northern | BOMDXB/1200 | BOMBAH/4000 | BOMDXB/2300 | BOMLHR/2300 | BOMDOH/2300 |
| | | | DXBBOM/2300 | | |
| | | | DXBDEL/2300 | | |

**FIG. 15A**

EP 1 477 921 A1

| Re-forecast Summary | | | | | | | | |
|---|---|---|---|---|---|---|---|---|
| Actuals : Apr-03 to Sep-03 | | | Reforecast Months :Oct-03 to Mar-04 | | | | | |
| Network Summary | | | Budget Year : 2003-04 Currency : Aed | | | | | |
| Comp : TL | | | | | | | | |
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

0401-42a.vsd/18

## FIG. 15B

| Comp : F | | | | | | | | |
|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15C

| Comp : J | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15D

| Comp : Y | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15E

| Re-forecast Summary | | | | | | | | |
|---|---|---|---|---|---|---|---|---|
| Actuals : Apr-03 to Sep-03 | | | | Reforecast Months :Oct-03 to Mar-04 | | | | |
| Region  : ENA | | | | Budget Year : 2003-04    Currency : Aed | | | | |
| Comp : TL | | | | | | | | |
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

*0401-42a.vsd/20*

# FIG. 15F

| Comp : F | | | | | | | | |
|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

# FIG. 15G

| Comp : J | | | | | | | | |
| --- | --- | --- | --- | --- | --- | --- | --- | --- |
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15H

| Comp : Y | | | | | | | | |
| --- | --- | --- | --- | --- | --- | --- | --- | --- |
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15I

0401-42a.vsd/21

| Re-forecast Summary | | | | | | | | |
|---|---|---|---|---|---|---|---|---|
| Actuals : Apr-03 to Sep-03 | | | Reforecast Months :Oct-03 to Mar-04 | | | | | |
| Region : GCC | | | Budget Year : 2003-04 | | Currency : Aed | | | |
| Comp : TL | | | | | | | | |
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15J

| Comp : F | | | | | | | | |
|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15K

| Comp : J | | | | | | | | | 0401-42a.vsd/23 |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15L

| Comp : Y | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15M

| Re-forecast Summary | | | | | | | | | |
|---|---|---|---|---|---|---|---|---|---|
| Actuals : Apr-03 to Sep-03 | | | | Reforecast Months :Oct-03 to Mar-04 | | | | | |
| Region : MEA | | | | Budget Year : 2003-04 | | Currency : Aed | | | |
| Comp : TL | | | | | | | | | |
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15N

| Comp : F | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15O

| Comp : J | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15P

| Comp : Y | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15Q

| Re-forecast Summary | | | | | | | | |
|---|---|---|---|---|---|---|---|---|
| Actuals : Apr-03 to Sep-03 | | | Reforecast Months :Oct-03 to Mar-04 | | | | | |
| Region : WAPR | | | Budget Year : 2003-04 | | Currency : Aed | | | |
| Comp : TL | | | | | | | | |
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15R

| Comp : F | | | | | | | | |
|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15S

| Comp : J | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15T

| Comp : Y | | | | | | | | | |
|---|---|---|---|---|---|---|---|---|---|
| | Revenue in Thousands | | | Passengers | | | Average Fare | | |
| Month | Actual | Target | Var | Actual | Target | Var | Actual | Target | Var |
| Total | 6,156,596 | 5,989,947 | 3% | 5,846,269 | 5,813,433 | 1% | 1,053 | 1,030 | 2% |
| Apr-2003 | 432,709 | 449,131 | -4% | 422,817 | 447,880 | -6% | 1,023 | 1,003 | 2% |
| May-2003 | 429,054 | 419,948 | 2% | 438,536 | 432,232 | 1% | 978 | 972 | 1% |
| Jun-2003 | 453,749 | 456,902 | -1% | 452,083 | 461,308 | -2% | 1,004 | 990 | 1% |
| Jul-2003 | 534,742 | 527,300 | 1% | 513,690 | 518,377 | -1% | 1,041 | 1,017 | 2% |
| Aug-2003 | 558,003 | 543,278 | 3% | 534,861 | 531,890 | 1% | 1,043 | 1,021 | 2% |
| Sep-2003 | 526,659 | 478,528 | 10% | 489,484 | 457,259 | 7% | 1,076 | 1,047 | 3% |
| Oct-2003 | 559,556 | 457,965 | 22% | 516,638 | 448,203 | 15% | 1,083 | 1,022 | 6% |
| Nov-2003 | 482,355 | 483,535 | 0% | 441,921 | 456,613 | -3% | 1,091 | 1,059 | 3% |
| Dec-2003 | 592,497 | 532,518 | 11% | 529,199 | 493,402 | 7% | 1,120 | 1,079 | 4% |
| Jan-2004 | 577,211 | 553,145 | 4% | 526,789 | 512,259 | 3% | 1,096 | 1,080 | 1% |
| Feb-2004 | 509,813 | 508,500 | 0% | 507,341 | 498,099 | 2% | 1,005 | 1,021 | -2% |
| Mar-2004 | 500,247 | 579,198 | -14% | 472,910 | 555,911 | -15% | 1,058 | 1,042 | 2% |

## FIG. 15U

0401-42a.vsd/27

0401-42a.vsd/28

START — 1601

Un-Constrained reforecast pax of POS-O&D-Comp-Trvl Month Combination — 1602

Split the POS-O&D in POS Segments — 1603

Select the segment — 1604

Sum the segment forecast of all POS — 1605

? all POS covered for the selected segment — 1606 — NO → Select the another POS which has got the same segment forecast — 1607

YES

Select the another Segment — 1608

? all Segments are covered — 1609 — NO

YES

Split the aggregated segment forecast as per the segment route breakup ratio — 1610

Map the segment route break up into Segment / leg / route — 1611

Aggregate the Leg / route forecast — 1612

Match the Leg Route forecast to Leg Route Capacity — 1613

? Leg Route forecast < x% of Leg Capacity — 1614 — NO → Apply reduction factor to match the planned capacity — 1615

YES — 1616

Continue for other legs — 1616

Carry out the Reverse formulation of Leg Route to Leg Segment Route — 1617

Carry out the Reverse formulation of Leg Segment Route to Segment Route — 1618

Carry out the Reverse formulation of Segment Route to flown segments — 1619

O&D build up with flown segments — 1620

Constrained POS-O&D forecast — 1621

END — 1622

FIG. 16

| Comp : TL | | | | | | |
|---|---|---|---|---|---|---|
| | Dec - 2001 | | | Jan - 2002 | | |
| | Re - forecast | Actual | Var. % | Re - forecast | Actual | Var. % |
| PAX (Nos) | 373,002 | 406,021 | -8% | 413,637 | 441,209 | -6% |
| Yld | 1,038 | 995 | 4% | 1,042 | 1,007 | 3% |
| Rev(AED) | 387,281 | 404,190 | -4% | 431,082 | 444,319 | -3% |

FIG. 17

| Comp : F | | | | | | |
|---|---|---|---|---|---|---|
| | Feb - 2002 | | | Mar - 2002 | | |
| | Re - forecast | Actual | Var. % | Re - forecast | Actual | Var. % |
| PAX (Nos) | 11,293 | 11,170 | 1% | 11,879 | 12,832 | -7% |
| Yld | 2,169 | 2,378 | -9% | 2,317 | 2,562 | -10% |
| Rev(AED) | 24,491 | 26,560 | -8% | 27,520 | 32,873 | -16% |

FIG. 18

| Comp : TL | | | | | | |
|---|---|---|---|---|---|---|
| | Feb - 2002 | | | Mar - 2002 | | |
| | Re- forecast | Actual | Var. % | Re forecast | Actual | Var. % |
| PAX (Nos) | 391,077 | 416,279 | -6% | 432,023 | 477,461 | -10% |
| Yld | 982 | 994 | -1% | 1,024 | 1,012 | 1% |
| Rev(AED) | 384,036 | 413,889 | -7% | 442,553 | 482,977 | -8% |

FIG. 19

EP 1 477 921 A1

**Comp : F**

| | Dec - 2001 | | | Jan - 2002 | | |
|---|---|---|---|---|---|---|
| | Re - forecast | Actual | Var. % | Re - forecast | Actual | Var. % |
| PAX (Nos) | 9,870 | 9,241 | 7% | 11,528 | 11,370 | 1% |
| Yld | 2,264 | 2,344 | - 3% | 2,425 | 2,384 | 2% |
| Rev(AED) | 22,345 | 21,658 | 3% | 27,959 | 27,107 | 3% |

**FIG. 20**

**Comp : J**

| | Dec - 2001 | | | Jan - 2002 | | |
|---|---|---|---|---|---|---|
| | Re - forecast | Actual | Var. % | Re - forecast | Actual | Var. % |
| PAX (Nos) | 32,664 | 35,487 | - 8% | 37,906 | 42,731 | - 11% |
| Yld | 2,228 | 2,190 | 2% | 2,238 | 2,228 | 0% |
| Rev(AED) | 72,766 | 77,717 | - 6% | 84,815 | 95,217 | - 11% |

**FIG. 21**

**Comp : J**

| | Feb - 2002 | | | Mar - 2002 | | |
|---|---|---|---|---|---|---|
| | Re - forecast | Actual | Var. % | Re - forecast | Actual | Var. % |
| PAX (Nos) | 34,750 | 42,111 | - 17% | 45,501 | 50,532 | - 10% |
| Yld | 2,268 | 2,226 | 2% | 2,404 | 2,274 | 6% |
| Rev(AED) | 78,812 | 93,746 | - 16% | 109,384 | 114,912 | - 5% |

**FIG. 22**

| Comp : Y | | | | | | |
|---|---|---|---|---|---|---|
| | Dec - 2001 | | | Jan - 2002 | | |
| | Re - forecast | Actual | Var. % | Re - forecast | Actual | Var. % |
| PAX (Nos) | 330,468 | 360,388 | - 8% | 364,203 | 386,230 | - 6% |
| Yld | 884 | 843 | 5% | 874 | 831 | 5% |
| Rev(AED) | 292,170 | 303,866 | - 4% | 318,308 | 320,833 | - 1% |

## FIG. 23

| Comp : Y | | | | | | |
|---|---|---|---|---|---|---|
| | Feb - 2002 | | | Mar - 2002 | | |
| | Re - forecast | Actual | Var. % | Re - forecast | Actual | Var. % |
| PAX (Nos) | 345,034 | 361,980 | - 5% | 374,643 | 412,964 | - 9% |
| Yld | 814 | 808 | 1% | 816 | 808 | 1% |
| Rev(AED) | 280,732 | 292,427 | - 4% | 305,648 | 333,564 | - 8% |

## FIG. 24

EP 1 477 921 A1

|  | Dec-01 | Jan-02 | Feb-02 | Mar-02 |
|---|---|---|---|---|
| **UAE (DUBAI** | | | | |
| PAX (Nos) | 0% | 7% | -1% | 12% |
| Yld | 4% | 7% | -2% | 5% |
| Rev (AED) | 4% | 15% | -3% | 17% |
| | | | | |
| **UK (SOUTHERN)** | | | | |
| PAX (Nos) | 4% | 21% | 27% | 7% |
| Yld | -3% | -4% | -5% | -5% |
| Rev (AED) | 1% | 16% | 21% | 2% |
| | | | | |
| **UK (NORTHERN)** | | | | |
| PAX (Nos) | -26% | -13% | -16% | -20% |
| Yld | 2% | 3% | 6% | 3% |
| Rev (AED) | -25% | -10% | -10% | -17% |
| | | | | |
| **GERMANY** | | | | |
| PAX (Nos) | -3% | 12% | 13% | -26% |
| Yld | 2% | -6% | -9% | -7% |
| Rev (AED) | -1% | 5% | 3% | -31% |
| | | | | |
| **INDIA (WESTERN** | | | | |
| PAX (Nos) | -28% | -15% | -26% | -8% |
| Yld | 26% | 18% | 28% | 22% |
| Rev (AED) | -10% | 1% | -5% | 13% |

# FIG. 25

EP 1 477 921 A1

**FIG. 26A**

EP 1 477 921 A1

0401-42a.vsd/33

EP 1 477 921 A1

**FIG. 26B**

Revenue Planning System - Microsoft Internet Explorer

File　Edit　View　Favorites　Tools　Help

Back　Forward　Stop　Refresh　Home　Search　Favorites　History　Mail　Print　Edit

Address　C:\emirates\Rps04-05\query.htm　Go　Links »

| HOME | Revenue Plan | E-Dialogue | Reports | Budget Pack |

## Retrieve by Start / Close Date & Status

Dates　　　　　　　　　　○ Start　　○ Close

Date Range　　　　　　　[　　　]　To　[　　　]

E-Dialogue Status　　　□ All　　□ Agreed & Closed　　□ Disagreed & Closed　　□ Open Items

Sort by　　　　　　　　○ E-Dialogue Status　　○ Start/Close Date

Sort Start/Close Dates　○ Ascending　　○ Descending

[ Retrieve ]　　[ Clear ]

My Computer

Start　　10:45 AM

**Revenue Planning System - Microsoft Internet Explorer**

File  Edit  View  Favorites  Tools  Help

Back  Forward  Stop  Refresh  Home  Search  Favorites  History  Mail  Print  Edit

Address  C:\emirates\Rps04-05\ActionItems.htm

REVENUE PL

| HOME | Revenue Plan | E-Dialogue | Reports | Budget Pack |

# Action Items

[Partially Agreed Items]

**Partially Agreed Items**

| Dialogue ID | From | Proposal | Original Request Description | Date of Request | Negotiat |
|---|---|---|---|---|---|
| 1 | Murali | Increase Yield for BOMLHR by 2% for the requested pax changes | POS : UK , OD : BOMLHR , Comp : Y Increase by 4% of actuals from zero | 1-Feb-2003 | |
| | | | | | |
| | | | | | |

Start  Gr..  R..  M..  M..  My  (C)  em..  Rp..  htt..  20..  10:15

My Computer

**FIG. 26C**

**Revenue Planning System - Microsoft Internet Explorer**

File    Edit    View    Favorites    Tools    Help

Back    Forward    Stop    Refresh    Home    Search    Favorites    History    Mail    Print    Edit

Address    C:\emirates\Rps04-05\ActionItems.htm    Go

| Plan | E-Dialogue | Reports | Budget Pack | Help |

[ Partially Agreed Items ]          [ Disagreed Items ]

| | | | | Actions | | |
|---|---|---|---|---|---|---|---|
| posal | Original Request Description | Date of Request | Negotiate | Escalate | Agree & Close |
| for BOMLHR by 2% ted pax changes | POS : UK , OD : BOMLHR , Comp : Y Increase by 4% of actuals from zero | 1-Feb-2003 | | | |
| | | | | | |
| | | | | | |

My Computer

Start    Gr.    R.    Mi.    iM.    My.    (C)    em.    Rp.    htt.    20.

**FIG. 26D**

**Revenue Planning System - Microsoft Internet Explorer**

File  Edit  View  Favorites  Tools  Help

Back | Forward | Stop | Refresh | Home | Search | Favorites | History | Mail | Print | Edit

Address | C:\emirates\Rps04-05\ActionItems.htm

| HOME | Revenue Plan | E-Dialogue | Reports | Budget Pac |

# Action Items

Partially Agreed Items

### Disagreed Items

| Dialogue ID | From | Reasons For Disagreement | Original Request Description | Date of Request | Negotia |
|---|---|---|---|---|---|
| 1 | Murali | Average Fare increased as per directive of COD for route profitability | Sydney Average fare from November to March reduce by 3% | 2-April-2003 | |
| | | | | | |
| | | | | | |

Start | Br... | A... | Mi... | M... | My... | (C:) | em... | Rp... | htt... | 20... | My Computer

**FIG. 26E**

Revenue Planning System - Microsoft Internet Explorer

File   Edit   View   Favorites   Tools   Help

Back   Forward   Stop   Refresh   Home   Search   Favorites   History   Mail   Print   Edit

Address   C:\emirates\Rps04-05\ActionItems.htm                                          Go   Links »

| Revenue Plan | E-Dialogue | Reports | Budget Pack | Help |

S

Partially Agreed Items                    Disagreed Items

| Reasons For Disagreement | Original Request Description | Date of Request | Actions | | |
|---|---|---|---|---|---|
| | | | Negotiate | Escalate | Agree & Close |
| Average Fare increased as per directive of COD for route profitability | Sydney Average fare from November to March reduce by 3% | 2-April-2003 | | | |
| | | | | | |
| | | | | | |

Start                                          6:01 PM

**FIG. 26F**

EP 1 477 921 A1

**Revenue Planning System - Microsoft Internet Explorer**

File   Edit   View   Favorites   Tools   Help

Back   Forward   Stop   Refresh   Home   Search   Favorites   History   Mail   Print   Edit

Address   C:\emirates\Rps04-05\edialoguesummary.htm

*REVENUE PL*

| HOME | Revenue Plan | E-Dialogue | Reports | Budget Pack |

## E-Dialogue Summary

| Initiator | Total Items | Agreed & Closed Items | Disagreed & Closed Items | Total Open Items | Open Items | Overdue Items |
|---|---|---|---|---|---|---|
| Nick Rees | 80 | 50 | 20 | 10 | 10 | 0 |
| Amla | 100 | 35 | 20 | 45 | 30 | 15 |
| Azeem | 55 | 35 | 20 | 0 | 0 | 0 |
| Arif | 70 | 35 | 20 | 15 | 10 | 5 |
| Total | 305 | 155 | 80 | 50 | 30 | 20 |

**Composition**

Arif 23%

Azeem 18%

Start   Gr...   A...   M...   M...   My...   (C:)   em...   Rp...   htt...   20...   My Computer

**FIG. 26G**

**FIG. 26H**

EP 1 477 921 A1

| INPUT | PROCESS | OUTPUT |
|---|---|---|
| 1. Last 5 years flown Data from Cview<br>2. Last 5 years MIDT<br>3. Current year | 1. PAX Demand Estimation | 1. Estimated Demand for passenger for the budget year (POS-OD-Compartment-Travel Month Combinations) |

2702         2701         2703

**FIG. 27**

**FIG. 28**

Start — 2801

Last 'N' years of Actual flown Pax — 2802

Note:
Value of N & M is considered as 5 years. These are System Admin parameter

Last 'M' years of MIDT Data — 2803

Current year O&D Capacity — 2804

Budget Year O&D Capacity — 2805

Calculation of Wt. Passenger Growth Factor (WPGF) — 2806

Calculation of Wt. Market Growth Factor (WMSF) — 2807

2808
WMSF < 0% — NO

2810
WMSF < 15% — NO

2812
WMSF < 30% — NO

YES — 2809
TMS = 10 %

YES — 2811
TMS = 4 %

YES — 2813
TMS = 6 %

2814
TMS = 10 %

Calculation of Target Market Share% (TMS) — 2815

Calculation of Combined Traffic Growth (CTG) — 2816

Combined Traffic Growth (CTG) = Wt.Passenger Growth Factor +Target Market Share

Calculation of O&D Capacity Growth Factor (CGF) — 2817

2818
CTG > CGF — NO

YES

Effective Demand Factor (EDF) = CTG — 2819

Effective Demand Factor (EDF) = (CTG+CGF)/2 — 2820

Start — 2801

EP 1 477 921 A1

Revenue Planning System - Microsoft Internet Explorer

File  Edit  View  Favorites  Tools  Help

Back  Forward  Stop  Refresh  Home  Search  Favorites  History  Mail  Print  Edit

Address  C:\emirates\Rps04-05\paxdemanddetails.htm  Go  Links

**REVENUE PLANNING**

| HOME | Revenue Plan | E-Dialogue | Reports | Budget Pack | H |

Opportunities
Threats
nand Details  New Routes                    Point of Sale : UAE (DUBAI)           Compartment : Economy        Mont

| Monthly Weighted Pax Growth | | | | Weighted Pax Growth Factor (WPGF) | Monthly Market Share | | | | Target Market Share (TMS) | Combined Traffic Growth (CTG) | Capacity Growth Factor (CAP GF) | Effective Demand Factor (EDF) |
|---|---|---|---|---|---|---|---|---|---|---|---|---|
| 1997 | 1998 | 2001 | 2002 | | 1999 | 2000 | 2001 | 2002 | | | | |
| 25 | -9 | -20 | 5 | 3 | 37 | 29 | 40 | 38 | 10 | 13 | 5 | 13 |

WPGF Details        TMS Details        Capacity Details

My Computer

Start  Gro...  Re...  Micr...  My...  (C:)  emi...  Rps...  http...  MA...  10:52 AM

**FIG. 29A**

Revenue Planning System - Microsoft Internet Explorer

File　Edit　View　Favorites　Tools　Help

Back　Forward　Stop　Refresh　Home　Search　Favorites　History　Mail　Print　Edit

Address　C:\emirates\Rps04-05\paxdemanddetails.htm　Go　Links »

REVENUE PLANNING

HOME　Revenue Plan　E-Dialogue　Reports　Budget Pack　He

Opportunities
Threats
nand Details　New Routes　　Point of Sale : UAE (DUBAI)　Compartment : Economy　Mont

| Monthly Weighted Pax Growth | | | | Weighted Pax Growth Factor (WPGF) | Monthly Market Share | | | | Target Market Share (TMS) | Combined Traffic Growth (CTG) | Capacity Growth Factor (CAP GF) | Effective Demand Factor (EDF) |
|---|---|---|---|---|---|---|---|---|---|---|---|---|
| 1997 | 1998 | 2001 | 2002 | | 1999 | 2000 | 2001 | 2002 | | | | |
| 25 | -9 | -20 | 5 | 3 | 37 | 29 | 40 | 38 | 10 | 13 | 5 | 13 |

WPGF Details　TMS Details　Capacity Details

**Weighted Pax Growth Factor Details**

| COMP | Flown Pax | | | | | Traffic Growth compared to Previous Year | | | | Weighted Pax Growth Factor (WPGF) |
|---|---|---|---|---|---|---|---|---|---|---|
| | 1996 | 1997 | 1998 | 2001 | 2002 | 1997 | 1998 | 2001 | 2002 | |
| Y | 1,010 | 1,263 | 1,145 | 919 | 961 | 25% | -9% | -20% | 5% | 3% |

Start　Gro...　Re...　Micr...　My...　(C:)　emir...　Rps...　http...　iMA...　10:52 AM

**FIG. 29B**

Revenue Planning System - Microsoft Internet Explorer

File　Edit　View　Favorites　Tools　Help

Back　Forward　Stop　Refresh　Home　Search　Favorites　History　Mail　Print　Edit

Address　C:\emirates\Rps04-05\paxdemanddetails.htm　　Go　Links »

| HOME | Revenue Plan | E-Dialogue | Reports | Budget Pack | H |

Opportunities
Threats
...nand Details　New Routes　　　　Point of Sale : UAE (DUBAI)　　　Compartment : Economy　　Mont

| Monthly Weighted Pax Growth | | | | Weighted Pax Growth Factor (WPGF) | Monthly Market Share | | | | Target Market Share (TMS) | Combined Traffic Growth (CTG) | Capacity Growth Factor (CAP GF) | Effective Demand Factor (EDF) |
|---|---|---|---|---|---|---|---|---|---|---|---|---|
| 1997 | 1998 | 2001 | 2002 | | 1999 | 2000 | 2001 | 2002 | | | | |
| 25 | -9 | -20 | 5 | 3 | 37 | 29 | 40 | 38 | 10 | 13 | 5 | 13 |

WPGF Details　　　TMS Details　　　Capacity Details

**Weighted Pax Growth Factor Details**

| COMP | Flown Pax | | | | | Traffic Growth compared to Previous Year | | | | Weighted Pax Growth Factor (WPGF) |
|---|---|---|---|---|---|---|---|---|---|---|
| | 1996 | 1997 | 1998 | 2001 | 2002 | 1997 | 1998 | 2001 | 2002 | |
| Y | 1,010 | 1,263 | 1,145 | 919 | 961 | 25% | -9% | -20% | 5% | 3% |

**Target Market Share**

| 1999 | | | 2000 | | | 2001 | | | 2002 | | | WMSF | TMS |
|---|---|---|---|---|---|---|---|---|---|---|---|---|---|
| Total Bkngs | Ek Bkngs | Market Share | Total Bkngs | Ek Bkngs | Market Share | Total Bkngs | Ek Bkngs | Market Share | Total Bkngs | Ek Bkngs | Market Share | | |
| 3,284 | 1,210 | 37% | 3,472 | 993 | 29% | 3,569 | 1,417 | 40% | 4,002 | 1,502 | 38% | 38% | 10% |

My Computer

Start　Gro...　Re...　Micr...　My...　(C:)　emir...　Rps...　http...　MA...　10:53 AM

**FIG. 29C**

**Revenue Planning System - Microsoft Internet Explorer**

File   Edit   View   Favorites   Tools   Help

Back   Forward   Stop   Refresh   Home   Search   Favorites   History   Mail   Print   Edit

Address   C:\emirates\Rps04-05\paxdemanddetails.htm   Go   Links »

Threats
**nand Details**   New Routes   **Point of Sale : UAE (DUBAI)**   **Compartment : Economy**   Mont

| Monthly Weighted Pax Growth | | | | Weighted Pax Growth Factor (WPGF) | Monthly Market Share | | | | Target Market Share (TMS) | Combined Traffic Growth (CTG) | Capacity Growth Factor (CAP GF) | Effective Demand Factor (EDF) |
|---|---|---|---|---|---|---|---|---|---|---|---|---|
| 1997 | 1998 | 2001 | 2002 | | 1999 | 2000 | 2001 | 2002 | | | | |
| 25 | -9 | -20 | 5 | 3 | 37 | 29 | 40 | 38 | 10 | 13 | 5 | 13 |

WPGF Details   TMS Details   Capacity Details

**Weighted Pax Growth Factor Details**

| COMP | Flown Pax | | | | | Traffic Growth compared to Previous Year | | | | Weighted Pax Growth Factor (WPGF) |
|---|---|---|---|---|---|---|---|---|---|---|
| | 1996 | 1997 | 1998 | 2001 | 2002 | 1997 | 1998 | 2001 | 2002 | |
| Y | 1,010 | 1,263 | 1,145 | 919 | 961 | 25% | -9% | -20% | 5% | 3% |

**Target Market Share**

| 1999 | | | 2000 | | | 2001 | | | 2002 | | | WMSF | TMS |
|---|---|---|---|---|---|---|---|---|---|---|---|---|---|
| Total Bkngs | Ek Bkngs | Market Share | Total Bkngs | Ek Bkngs | Market Share | Total Bkngs | EK Bkngs | Market Share | Total Bkngs | Ek Bkngs | Market Share | | |
| 3,284 | 1,210 | 37% | 3,472 | 993 | 29% | 3,569 | 1,417 | 40% | 4,002 | 1,502 | 38% | 38% | 10% |

**Capacity Growth Factor**

| Capacity (Seats) | | | Capacity Growth Factor (CAP GF) |
|---|---|---|---|
| 2001 | 2002 | 2003 | |
| 22,686 | 23,546 | 24,690 | 5% |

Close Displays   Revie

My Computer

Start   Gro...   Re...   Micr...   My...   (C:)   emir...   Rps...   http...   MA...   10:53 AM

**FIG. 29D**

0

**Revenue Planning System - Microsoft Internet Explorer**

File Edit View Favorites Tools Help

Back | Forward | Stop | Refresh | Home | Search | Favorites | History | Mail | Print | Edit

Address: C:\emirates\Rps04-05\capacityHighlights.htm

## CAPACITY - HIGHLIGHTS

**CAPACITY INCREASE :**

| YEAR | FIRST | BUSINESS | ECONOMY | TOTAL |
|---|---|---|---|---|
| 2002-03 | 485,510 | 1,753,872 | 10,725,165 | 12,964,547 |
| 2003-04 | 656,190 | 2,140,238 | 12,925,047 | 15,721,475 |
| VARIANCE | 35% | 22% | 21% | 21% |

**INCREASE OF FLIGHTS:**     Region     [Europe]

| | | |
|---|---|---|
| Manchester | : | Daily to double daily services (1 June). |
| Munich | : | 12 Flights weekly to double daily (30 March) |
| Malta/Tripoli | : | Three flights weekly to four flights a week (1 May). |
| Paris* | : | Seven flights weekly to 11 flights a week (1 July). |
| Istanbul | : | Four flights weekly to five flights a week (1 July) |

## NEW DESTINATIONS

Cochin
December 2, 2002

Shanghai
August 2, 2003

Moscow
July 1, 2003

Lagos
March 31, 2003

New York

Done     My Computer

Start     6:04 PM

## FIG. 29E

**FIG. 30**

EP 1 477 921 A1

EP 1 477 921 A1

| INPUT | PROCESS | OUTPUT |
|---|---|---|
| 1. Last 5 years Yield Data from CVIEW 201 | 1. Yield Demand Estimation | 1. Estimated Demand Yield for the budget year at POS-OD-Comp-Year Month level |

3101               3102               3103

**FIG. 31A**

**Revenue Planning System - Microsoft Internet Explorer**

File   Edit   View   Favorites   Tools   Help

Back   Forward   Stop   Refresh   Home   Search   Favorites   History   Mail   Print   Edit

Address C:\emirates\Rps04-05\averagefaregfdetails.htm    Go   Links »

ge Fare Growth Factor Details

| OD | Average Fare | | | | | | Average Fare Growth | | | | | Average Fare Growth Factor |
|---|---|---|---|---|---|---|---|---|---|---|---|---|
| | 1997 | 1998 | 1999 | 2000 | 2001 | 2002 | 1998 | 1999 | 2000 | 2001 | 2002 | |
| DXBLHR | 1,715 | 1,541 | 1,574 | 1,745 | 1,486 | 1,610 | -10% | 2% | 11% | -15% | 8% | 0% |

**Average Fare Growth**

Review Targets

Done    My Computer

Start   Gro...   Re...   Micr...   My...   (C:)   emir...   Rps...   http:   MA...   10.48 AM

**FIG. 31B**

POS: United Kingdom          OD:  LHRDXB          Comp: Y

Travel Month: Jul 03                              Currency : GBP

| Month | Jul-98 | Jul-99 | Jul-00 | Jul-01 | Jul-02 |
|-------|--------|--------|--------|--------|--------|
| Yield | 246 | 204 | 176 | 196 | 184 |
| % Variance | -11% | -17% | -13% | 11% | -6% |
| Weights | 0.05 | 0.15 | 0.20 | 0.25 | 0.35 |

# FIG. 32

FIG. 33

| Month | O&D | Comp | Actual Traffic Growth Factor** | | | | | Actual Traffic Growth Factor | Market Share Growth Factor *** | | | | | MIDT Growth Factor | Target Traffic Growth Factor | Capacity Growth | Effective Growth Factor |
|---|---|---|---|---|---|---|---|---|---|---|---|---|---|---|---|---|---|
| POS: UK Southern | | | 1998 | 1999 | 2000 | 2001 | 2002 | | 1998 | 1999 | 2000 | 2001 | 2002 | | | | |
| April | O&D 1 | F | | | | | | | | | | | | | | | |
| | | J | | | | | | | | | | | | | | | |
| | | Y | | | | | | | | | | | | | | | |
| | O&D 2 | F | | | | | | | | | | | | | | | |
| | | J | | | | | | | | | | | | | | | |
| | | Y | | | | | | | | | | | | | | | |

FIG. 34

| POS: UK Southern | | | Actual Yield Growth** | | | | | Aveage Yield Growth |
|---|---|---|---|---|---|---|---|---|
| Month | O&D | Comp | 1998 | 1999 | 2000 | 2001 | 2002 | |
| April | O&D 1 | F | | | | | | |
| | | J | | | | | | |
| | | Y | | | | | | |
| | O&D 2 | F | | | | | | |
| | | J | | | | | | |
| | | Y | | | | | | |

FIG. 35

EP 1 477 921 A1

**POS: UK Southern**

| Month | | April | | | May | | |
|---|---|---|---|---|---|---|---|
| | | Actual | Demand | Effective Growth Factor | Actual | Demand | Effective Growth Factor |
| O&D | Comp: Y | | | | | | |
| O&D 1 | Pax | | | | | | |
| | Revenue | | | | | | |
| | Yield | | | | | | |
| O&D 2 | Pax | | | | | | |
| | Revenue | | | | | | |
| | Yield | | | | | | |
| O&D 1 | Pax | | | | | | |
| | Revenue | | | | | | |
| | Yield | | | | | | |

**POS: UK Nothern**

| Month | | April | | | May | | |
|---|---|---|---|---|---|---|---|
| | | Actual | Demand | Effective Growth Factor | Actual | Demand | Effective Growth Factor |
| | Comp: Y | | | | | | |
| O&D 1 | Pax | | | | | | |
| | Revenue | | | | | | |
| | Yield | | | | | | |
| O&D 2 | Pax | | | | | | |
| | Revenue | | | | | | |
| | Yield | | | | | | |

**FIG. 36A**

EP 1 477 921 A1

3608

Market Data

3601

Capacity Data at POS level for N previous years

3602

Capacity Data at time period level for N previous years

3603

Capacity Data at O&D level for N previous years

3604

Capacity Data for period beyond 12 months

3609

Apply weighting factors to Market Data

3610

Calculate Market Growth Factor

3611

Calculate Effective Growth Factor

3605

Flown Data at POS level for M previous years

3612

Apply weighting factors to Flown Data

3606

Flown Data at time period level for M previous years

3607

Flown Data at O&D level for M previous years

3613

Calculate Actual Growth Factor

3614

Commercial Database

3615

Calculate PAX Demand forecast for budget year

3616

Estimate average fares for budget year

3617

Forecast revenue for budget year

## FIG. 36B

```
┌─────────────────────────┐
│                         │      3701
│   Understanding the     │
│       Problem           │
│                         │
└─────────────────────────┘
             │
             ▼
┌─────────────────────────┐
│                         │      3702
│  Constructing Analytical│
│        Model            │
│                         │
└─────────────────────────┘
             │
             ▼
┌─────────────────────────┐
│                         │      3703
│   Finding Optimal       │
│      Solution           │
│                         │
└─────────────────────────┘
```

FIG. 37

EP 1 477 921 A1

| INPUT | OPTIMIZATION PROCESS | OUTPUT |
|---|---|---|
| 1. Market Potential<br>2. Average yield<br>3. Scheduled Capacity | Optimisation by Linear programming techniques | Optimal Traffic mix (Target) |

3801

105

3802

**FIG. 38**

**FIG. 39**

FIG. 40

EP 1 477 921 A1

FIG. 41

| REJECTED DEMAND REPORT | | | | | | | | | | | |
|---|---|---|---|---|---|---|---|---|---|---|---|
| UK (SOUTHERN) | | | | | | | | | | | |
| Sector | Comp | Total | Apr-02 | May-02 | Jun-02 | Jul-00 | Aug-02 | Sep-02 | Oct-02 | Nov-02 | Dec-02 |
| LGWPER | TL | 698 | 0 | 0 | 0 | 0 | 0 | 0 | 95 | 99 | 201 |
| LHRPER | TL | 2,088 | 0 | 0 | 0 | 0 | 0 | 0 | 288 | 304 | 599 |

# FIG. 42A

105

4201 Estimated PAX demand

4202 Capacity constraints

4203 Estimated fares

4204 Seasonality

4205 Time period

4206 Linear Optimization

4212 Holiday Traveler

4213 Frequent Flyer

4214 Internet Bookings

4211 Tour Operator

4215 Customer Type

4207 Balancing Inbound/ Outbound Traffic

4216 Market segment

4208 Exclude Industry Travel Demand

4209 Calculate Target fares

4210 Calculate Target PAX

4217 3 month in advance fares

4218 Return fares

4219 One way fares

4220 Excursion fares

4221 6 month in advance fares

4223 Travel Agent Level

4224 Supervisor Level

4225 Flight Level

4226 Display sensitivity analysis results

4227 Display rejected demand

4222 Sensitivity Analysis

4228 Display minimum acceptable fares

**FIG. 42B**

FIG. 43

EP 1 477 921 A1

```
┌─────────────────────────────────┐
│                                 │  ～ 4401
│   Sector Revenue Generation     │                        4400
│                                 │
└─────────────────────────────────┘
                │
                ▼
        ┌─────────────────────────────────┐
        │                                 │  ～ 4402
        │   Leg Seat Factor Generation    │
        │                                 │
        └─────────────────────────────────┘
                        │
                        ▼
                ┌─────────────────────────────────┐
                │                                 │  ～ 4403
                │    Sector Route Revenue         │
                │        Generation               │
                └─────────────────────────────────┘
                                │
                                ▼
                        ┌─────────────────────────────────┐
                        │                                 │  ～ 4404
                        │    POS Revenue Variance         │
                        │        Generation               │
                        └─────────────────────────────────┘
```

FIG. 44

FIG. 45

# Revenue Plan Report

**Region:** GCC, YEMEN & IRAN      **Area** : UAE (DUBAI)

**Comp** :      **YearMonth:** ALL      **Currency:** :

| Region | Point of Sale | Orgn/dstn | Comp | Actual Pax | Demand Pax | Target Pax | Fare | Bkg Class |
|---|---|---|---|---|---|---|---|---|
| GCC, YEMEN & IRAN | UAE (DUBAI) | AMMAUH | J | 4 | 6 | 6 | 6299 | |
| GCC, YEMEN & IRAN | UAE (DUBAI) | AMMAUH | Y | 72 | 90 | 90 | 6746 | L |
| GCC, YEMEN & IRAN | UAE (DUBAI) | AMMAUH | TL | 76 | 96 | 96 | 13045 | L |
| GCC, YEMEN & IRAN | UAE (DUBAI) | AMMBAH | J | 1 | 1 | 1 | 820 | |
| GCC, YEMEN & IRAN | UAE (DUBAI) | AMMBAH | TL | 1 | 1 | 1 | 820 | |
| GCC, YEMEN & IRAN | UAE (DUBAI) | AMMBEY | F | 0 | 1 | 1 | 3599 | |

## FIG. 46

EP 1 477 921 A1

# Fully Rejected Demand Report

EP 1 477 921 A1

**Region:** GCC, YEMEN & IRAN       **Area** : UAE (DUBAI)

**Comp** : ALL     **YearMonth:** ALL     **Currency:** Local     **Note** : PAX >= 50

| YrMn | Region | Point of Sale | OD Pair | CompActual Pax | Rejected Demand | Fare | Proposed Fare Inc | Proposed Fare Inc(%) |
|------|--------|---------------|---------|----------------|-----------------|------|-------------------|----------------------|
| Grand Total | | | | | | | | 0 |

FIG. 47

# Partially Accepted Demand Report

Region: GCC, YEMEN & IRAN      Area   :   UAE (DUBAI)

Comp : ALL      YearMonth:   ALL      Currency: Local

| Region | Point of Sale | Orgn/dstn | Comp | Actual Pax | Demand Pax | Target Pax | Fare | Reject Demand | Bkg Class |
|--------|---------------|-----------|------|-----------|-----------|-----------|------|--------|-------|
| GCC, YEMEN & IRAN | UAE (DUBAI) | DXBCHN | Y | 0 | 1071 | 1001 | 10248 | 70 | B |
| GCC, YEMEN & IRAN | UAE (DUBAI) | DXBCHN | TL | 0 | 1071 | 1001 | 10248 | 70 | B |
| GCC, YEMEN & IRAN | UAE (DUBAI) | DXBKRT | Y | 0 | 1085 | 1001 | 6300 | 84 | Q |
| GCC, YEMEN & IRAN | UAE (DUBAI) | DXBKRT | TL | 0 | 1085 | 1001 | 6300 | 84 | Q |
| Grand Total | | | | 0 | 2156 | 2002 | 16548 | 154 | |

## FIG. 48

EP 1 477 921 A1

Revenue Planning System - Microsoft Internet Explorer

File  Edit  View  Favorites  Tools  Help

Back  Forward  Stop  Refresh  Home  Search  Favorites  History  Mail  Print  Edit

Address  C:\emirates\Rps04-05\RegionSummary.htm  Go  Links

**Region Summary**

Summary  Detailed

F   J   Y   TL

| Region Name | | Total | | |
|---|---|---|---|---|
| | | Actual | Target | Var |
| Region Totals | Pax (Nos) | 141,398 | 186,577 | 32% |
| | Avg Fare | 2,559 | 2,599 | 2% |
| | Rev(AED) | 361,856 | 484,902 | 34% |
| EUROPE & AMERICAS | Pax (Nos) | 14,575 | 19,161 | 31% |
| | Avg Fare | 4,438 | 4,639 | 5% |
| | Rev (AED) | 64,689 | 88,894 | 37% |
| GCC, YEMEN & IRAN | Pax (Nos) | 84,523 | 111,021 | 31% |
| | Avg Fare | 2,160 | 2,111 | -2% |
| | Rev (AED) | 182,597 | 234,407 | 28% |
| MIDDLE EAST & AFRICA | Pax (Nos) | 17,867 | 24,280 | 36% |
| | Avg Fare | 2,189 | 2,284 | 4% |
| | Rev (AED) | 39,117 | 55,465 | 42% |
| WEST ASIA & PACIFIC RIM | Pax (Nos) | 24,433 | 32,115 | 31% |
| | Avg Fare | 3,088 | 3,305 | 7% |
| | Rev (AED) | 75,452 | 106,136 | 41% |

**Compartment Wise**

First 8%
Economy 71%

**Region Wise Revenu**

WAPR 25%
MEA 10%
GCC 28%

Done  My Computer

Start  6:13 PM

**FIG. 49AA**

FIG. 49AB

FIG. 49B

**FIG. 49C**

**Revenue Planning System - Microsoft Internet Explorer**

File   Edit   View   Favorites   Tools   Help

Back   Forward   Stop   Refresh   Home   Search   Favorites   History   Mail   Print   Edit

Address  C:\emirates\Rps04-05\review1.htm     Go   Links »

Review

F   J   Y

UAE (DUBAI)                          EMIRATES COMMERCIAL TARGET REPORT (AREAWISE)
Currency :AED                              Actuals : 2002-2003 Budgets :2003-2004

| O&D | | Total | | | April | | | May | | | |
|---|---|---|---|---|---|---|---|---|---|---|---|---|
| | | Actual | Target | Var | Actual | Target | Var | Actual | Target | Var | Actual |
| Area Totals | Pax (Nos) | 649,067 | 691,118 | 6% | 43,777 | 47,713 | 9% | 46,066 | 49,443 | 7% | 55,059 |
| | Avg Fare | 697 | 672 | -4% | 706 | 709 | 0% | 681 | 669 | -2% | 719 |
| | Rev | 452,130 | 464,688 | 3% | 30,902 | 33,816 | 9% | 31,363 | 33,095 | 6% | 39,608 |
| DXBLHR | Pax (Nos) | 14,117 | 15,197 | 8% | 961 | 1,065 | 11% | 827 | 909 | 10% | 1,423 |
| | Avg Fare | 1,360 | 1,284 | -6% | 1,610 | 1,540 | -4% | 1,448 | 1,376 | -5% | 1,387 |
| | Rev | 19,201 | 19,518 | 2% | 1,547 | 1,640 | 6% | 1,198 | 1,250 | 4% | 1,974 |
| LHRDXB | Pax (Nos) | 13,056 | 14,704 | 13% | 656 | ⚑ 755 | | | | E-Dialogue Details | |
| | Avg Fare | 1,275 | 1,199 | -6% | 1,370 | 1,311 | Raised By | | Description | | |
| | Rev | 16,641 | 17,634 | 6% | 898 | 990 | Nick Rees | | Reduce 100 Pax for Apr-2003 | | Agre Upda |
| DXBBOM | Pax (Nos) | 29,802 | 27,609 | -7% | 2,361 | 2,370 | -5% | 616 | 585 | -5% | 788 |
| | Avg Fare | 668 | 626 | -6% | 590 | 561 | -5% | 1,416 | 1,331 | -6% | 1,928 |
| | Rev | 19,897 | 17,288 | -13% | 1,392 | 1,328 | 4% | 1,704 | 1,733 | 2% | 1,973 |
| BOMDXB | Pax (Nos) | 26,494 | 24,929 | -6% | 2,085 | 2,175 | -5% | 579 | 550 | -5% | 609 |
| | Avg Fare | 648 | 613 | -5% | 568 | 540 | -1% | 987 | 953 | -3% | 1,202 |
| | Rev | 17,167 | 15,282 | -11% | 1,183 | 1,174 | | | | | |

file:///C:/emirates/Rps04-05/review1.htm#                                    My Computer

Start   ...   9:37 AM

**FIG. 49D**

Revenue Planning System - Microsoft Internet Explorer

File   Edit   View   Favorites   Tools   Help

Back   Forward   Stop   Refresh   Home   Search   Favorites   History   Mail   Print   Edit

Address  C:\emirates\Rps04-05\review1.htm                                                    Go   Links

Print report

### EMIRATES COMMERCIAL TARGET REPORT (AREAWISE)
Actuals : 2002-2003 Budgets :2003-2004

Revenue in Thousan
Compartment      Y

| | Total | | | April | | | May | | | June | | |
|---|---|---|---|---|---|---|---|---|---|---|---|---|
| | Actual | Target | Var | Actual | Target | Var | Actual | Target | Var | Actual | Target | Var |
| ax (Nos) | 649,067 | 691,118 | 6% | 43,777 | 47,713 | 9% | 46,066 | 49,443 | 7% | 55,059 | 59,848 | 9% |
| vg Fare | 697 | 672 | -4% | 706 | 709 | 0% | 681 | 669 | -2% | 719 | 705 | -2% |
| ev | 452,130 | 464,688 | 3% | 30,902 | 33,816 | 9% | 31,363 | 33,095 | 6% | 39,608 | 42,176 | 6% |
| ax (Nos) | 14,117 | 15,197 | 8% | 961 | 1,065 | 11% | 827 | 909 | 10% | 1,423 | 1,462 | 3% |
| vg Fare | 1,360 | 1,284 | -6% | 1,610 | 1,540 | -4% | 1,448 | 1,376 | -5% | 1,387 | 1,318 | -5% |
| ev | 19,201 | 19,518 | 2% | 1,547 | 1,640 | 6% | 1,198 | 1,250 | 4% | 1,974 | 1,926 | -2% |

E-Dialogue Details

| ax (Nos) | 13,056 | 14,704 | 13% | 656 | 755 | Raised By | Description | | Status | | |
|---|---|---|---|---|---|---|---|---|---|---|---|
| vg Fare | 1,275 | 1,199 | -6% | 1,370 | 1,311 | Nick Rees | Reduce 100 Pax for Apr-2003 | | Agreed by Murali and Updated in Database | | |
| ev | 16,641 | 17,634 | 6% | 898 | 990 | | | | | | |
| ax (Nos) | 29,802 | 27,609 | -7% | 2,361 | 2,370 | | | | | | |
| vg Fare | 668 | 626 | -6% | 590 | 561 | -5% | 616 | 585 | -5% | 788 | 749 | -5% |
| ev | 19,897 | 17,288 | -13% | 1,392 | 1,328 | -5% | 1,416 | 1,331 | -6% | 1,926 | 1,720 | -11% |
| ax (Nos) | 26,494 | 24,929 | -6% | 2,085 | 2,175 | 4% | 1,704 | 1,733 | 2% | 1,973 | 2,106 | 7% |
| vg Fare | 648 | 613 | -5% | 568 | 540 | -5% | 579 | 550 | -5% | 609 | 579 | -5% |
| ev | 17,167 | 15,282 | -11% | 1,183 | 1,174 | -1% | 987 | 953 | -3% | 1,202 | 1,218 | 1% |

file:///C:/emirates/Rps04-05/review1.html                                      My Computer

Start   R..   M..   e..   In..   C..   M..   Gr..   Mi..   N..   R..   M..   9:38 AM

## FIG. 49E

Back   Forward   Stop   Refresh   Home   Search   Favorites   History   Mail   Print   Edit

Address  C:\emirates\Rps04-05\detailedPos.htm                                    Go   Links

**Detailed POS Report**

Region:  Europe        Currency:   Local ⦿   AED ●            Revenue %  80

F    J    Y    TL

EUROPE & AMERICAS                    EMIRATES COMMERCIAL TARGET OUTSTATION REPORT (AREA SUMMARY)
                                              Actuals : 2002-2003 Budgets :2003-2004

| AreaName | | Total | | | April | | | May | | | Jr |
|---|---|---|---|---|---|---|---|---|---|---|---|---|
| | | Actual | Target | Var | Actual | Target | Var | Actual | Target | Var | Actual | |
| UNITED KINGI | Pax (Nos) | 742,700 | 916,115 | 23% | 54,876 | 66,757 | 22% | 45,508 | 60,207 | 32% | 44,333 | |
| | Avg Fare | 267 | 270 | 1% | 277 | 287 | 4% | 253 | 260 | 3% | 235 | |
| | Rev (GBP) | 198,350 | 247,257 | 25% | 15,225 | 19,170 | 26% | 11,518 | 15,678 | 36% | 10,420 | |
| GERMANY | Pax (Nos) | 364,757 | 456,303 | 25% | 25,168 | 37,587 | 49% | 20,468 | 32,068 | 57% | 15,470 | |
| | Avg Fare | 306 | 310 | 1% | 313 | 322 | 3% | 285 | 297 | 4% | 300 | |
| | Rev (EUR) | 111,761 | 141,594 | 27% | 7,868 | 12,099 | 54% | 5,842 | 9,520 | 63% | 4,648 | |
| FRANCE | Pax (Nos) | 94,972 | 131,143 | 38% | 6,750 | 12,163 | 80% | 6,849 | 10,321 | 51% | 5,469 | |
| | Avg Fare | 361 | 360 | 0% | 357 | 351 | -2% | 328 | 337 | 3% | 353 | |
| | Rev (EUR) | 34,260 | 47,171 | 38% | 2,411 | 4,275 | 77% | 2,243 | 3,475 | 55% | 1,932 | |
| ITALY | Pax (Nos) | 96,687 | 98,737 | 2% | 7,764 | 8,566 | 10% | 6,179 | 7,059 | 14% | 5,735 | |
| | Avg Fare | 341 | 346 | 1% | 335 | 345 | 3% | 333 | 344 | 3% | 322 | |
| | Rev (EUR) | 32,966 | 34,187 | 4% | 2,600 | 2,953 | 14% | 2,056 | 2,425 | 18% | 1,845 | |
| SWITZERLAN | Pax (Nos) | 77,894 | 86,920 | 12% | 6,889 | 8,207 | 19% | 5,734 | 7,184 | 25% | 3,841 | |
| | Avg Fare | 534 | 543 | 2% | 525 | 543 | 3% | 477 | 505 | 6% | 468 | |
| | Rev (CHF) | 41,579 | 47,167 | 13% | 3,613 | 4,460 | 23% | 2,735 | 3,625 | 33% | 1,798 | |

Done                                                        My Computer

Start  ...                                                          9:33 AM

**FIG. 50A**

Revenue Planning System - Microsoft Internet Explorer

File Edit View Favorites Tools Help

Back | Forward | Stop | Refresh | Home | Search | Favorites | History | Mail | Print | Edit

Address C:\emirates\Rps04-05\detailedPos.htm | Go | Links »

Currency: Local ○ AED ● | Revenue % 80 | Print report

Y TL

RICAS

**EMIRATES COMMERCIAL TARGET OUTSTATION REPORT (AREA SUMMARY)**
**Actuals : 2002-2003 Budgets :2003-2004**

| | Total | | | April | | | May | | | June | | |
|---|---|---|---|---|---|---|---|---|---|---|---|---|
| | Actual | Target | Var | Actual | Target | Var | Actual | Target | Var | Actual | Target | Var |
| ax (Nos) | 742,700 | 916,115 | 23% | 54,876 | 66,757 | 22% | 45,608 | 60,207 | 32% | 44,333 | 61,441 | 39% |
| g Fare | 267 | 270 | 1% | 277 | 287 | 4% | 253 | 260 | 3% | 235 | 245 | 4% |
| ev (GBP) | 198,350 | 247,257 | 25% | 15,225 | 19,170 | 26% | 11,518 | 15,678 | 36% | 10,420 | 15,045 | 44% |
| ax (Nos) | 364,757 | 456,303 | 25% | 25,168 | 37,587 | 49% | 20,468 | 32,068 | 57% | 15,470 | 24,215 | 57% |
| g Fare | 306 | 310 | 1% | 313 | 322 | 3% | 285 | 297 | 4% | 300 | 320 | 7% |
| ev (EUR) | 111,761 | 141,594 | 27% | 7,868 | 12,099 | 54% | 5,842 | 9,520 | 63% | 4,648 | 7,745 | 67% |
| ax (Nos) | 94,972 | 131,143 | 38% | 6,750 | 12,163 | 80% | 6,849 | 10,321 | 51% | 5,469 | 9,001 | 65% |
| g Fare | 361 | 360 | 0% | 357 | 351 | -2% | 328 | 337 | 3% | 353 | 357 | 1% |
| ev (EUR) | 34,260 | 47,171 | 38% | 2,411 | 4,275 | 77% | 2,243 | 3,475 | 55% | 1,932 | 3,218 | 67% |
| ax (Nos) | 96,687 | 98,737 | 2% | 7,764 | 8,566 | 10% | 6,179 | 7,059 | 14% | 5,735 | 6,693 | 17% |
| g Fare | 341 | 346 | 1% | 335 | 345 | 3% | 333 | 344 | 3% | 322 | 328 | 2% |
| ev (EUR) | 32,966 | 34,187 | 4% | 2,600 | 2,953 | 14% | 2,056 | 2,425 | 18% | 1,845 | 2,198 | 19% |
| ax (Nos) | 77,894 | 86,920 | 12% | 6,889 | 8,207 | 19% | 5,734 | 7,184 | 25% | 3,841 | 5,010 | 30% |
| g Fare | 534 | 543 | 2% | 525 | 543 | 3% | 477 | 505 | 6% | 468 | 517 | 10% |
| ev (CHF) | 41,579 | 47,167 | 13% | 3,613 | 4,460 | 23% | 2,735 | 3,625 | 33% | 1,798 | 2,588 | 44% |

Done | My Computer

Start | R... | M... | e... | In... | (C) | M... | Gr... | Mi... | h... | R... | M... | 9:34 AM

**FIG. 50B**

Revenue Planning System - Microsoft Internet Explorer

File   Edit   View   Favorites   Tools   Help

Back   Forward   Stop   Refresh   Home   Search   Favorites   History   Mail   Print   Edit

Address   C:\emirates\Rps04-05\review1.htm   Go   Links »

| | | WPGF | 3% | |
| HOME | Revenue Plan | E-Dialogue | TMS | 10% | dget Pack |
| | | | CTG | 13% | |
| | | | CAP GF | 5% | |
| | | | EDF | 13% | |

Review

Pax Demand Details

| F | J | Y |

UAE (DUBAI)   EMIRATES COMMERC   Average Fare GF   0%   SE)   Re
Currency :AED   Actuals : 2002 2   Co
Average Fare GF Details

| O&D | | Total | | | April | | | | Var | Actual | Jt |
|---|---|---|---|---|---|---|---|---|---|---|---|
| | | Actual | Target | Var | Actual | Tai | Fare Type Details | | 7% | 55,059 | |
| Area Totals | Pax (Nos) | 649,067 | 691,118 | 6% | 43,777 | 47 | | | -2% | 719 | |
| | Avg Fare | 697 | 672 | -4% | 706 | | Fare Distribution | | 6% | 39,608 | |
| | Rev | 452,130 | 464,688 | 3% | 30,902 | 33 | | | 10% | 1,423 | |
| DXBLHR | Pax (Nos) | 14,117 | 15,197 | 8% | 961 | 1 | Seat Factor | 94 | -5% | 1,387 | |
| | Avg Fare | 1,360 | 1,284 | -6% | 1,610 | 1 | | | 4% | 1,974 | |
| | Rev | 19,201 | 19,518 | 2% | 1,547 | 1 | | | | | |
| LHRDXB | Pax (Nos) | 13,056 | 14,704 | 13% | 656 | | | E-Dialogue Details | | | |
| | Avg Fare | 1,275 | 1,199 | -6% | 1,370 | 1,311 | Raised By | Description | | | S |
| | Rev | 16,641 | 17,634 | 6% | 898 | 990 | Nick Rees | Reduce 100 Pax for Apr-2003 | | Agreed L Updated | |
| DXBBOM | Pax (Nos) | 29,802 | 27,809 | -7% | 2,361 | 2,370 | -5% | 616 | 585 | -5% | 788 |
| | Avg Fare | 668 | 626 | -6% | 590 | 561 | -5% | 1,416 | 1,331 | -6% | 1,926 |
| | Rev | 19,897 | 17,288 | -13% | 1,392 | 1,328 | 4% | 1,704 | 1,733 | 2% | 1,973 |
| BOMDXB | Pax (Nos) | 26,494 | 24,929 | -6% | 2,085 | 2,175 | | | | | |

file:///C:/emirates/Rps04-05/review1.html   My Computer

Start   R...   M...   e...   In...   C   M   Gr.   M.   R...   R...   M   N   9:39 AM

**FIG. 51A**

Revenue Planning System - Microsoft Internet Explorer

File   Edit   View   Favorites   Tools   Help

Back   Forward   Stop   Refresh   Home   Search   Favorites   History   Mail   Print   Edit

Address   C:\emirates\Rps04-05\review1.htm   Go   Links

| Revenue Plan | E-Dialogue | | dget Pack | | Help |

| WPGF | 3% |
| TMS | 10% |
| CTG | 13% |
| CAP GF | 5% |
| EDF | 13% |

Pax Demand Details

Print report

Average Fare GF   0%

EMIRATES COMMERC
Actuals : 2002-2

Average Fare GF Details

Fare Type Details

Fare Distribution

Seat Factor   94

Revenue in Thousan
Compartment   Y

| | Total | | | April | | | | June | | |
| | Actual | Target | Var | Actual | Ta | | Var | Actual | Target | Var |
| ax (Nos) | 649,067 | 691,118 | 6% | 43,777 | 47 | | 7% | 55,059 | 59,848 | 9% |
| vg Fare | 697 | 672 | -4% | 706 | | | -2% | 719 | 705 | -2% |
| ev | 452,130 | 464,688 | 3% | 30,902 | 33 | | 6% | 39,608 | 42,176 | 6% |
| ax (Nos) | 14,117 | 15,197 | 8% | 961 | 1 | | 10% | 1,423 | 1,462 | 3% |
| vg Fare | 1,360 | 1,284 | -6% | 1,610 | 1 | | -5% | 1,387 | 1,318 | -5% |
| ev | 19,201 | 19,518 | 2% | 1,547 | 1 | | 4% | 1,974 | 1,926 | -2% |
| ax (Nos) | 13,056 | 14,704 | 13% | 656 | | | | | | |
| vg Fare | 1,275 | 1,199 | -6% | 1,370 | 1,311 | | | | | |
| ev | 16,641 | 17,634 | 6% | 898 | 990 | | | | | |
| ax (Nos) | 29,802 | 27,609 | -7% | 2,361 | 2,370 | | | | | |
| vg Fare | 668 | 626 | -6% | 590 | 561 | -5% | 616 | 585 | -5% | 788 | 749 | -5% |
| ev | 19,897 | 17,288 | -13% | 1,392 | 1,328 | -5% | 1,416 | 1,331 | -6% | 1,926 | 1,720 | -11% |
| ax (Nos) | 26,494 | 24,929 | -6% | 2,085 | 2,175 | 4% | 1,704 | 1,733 | 2% | 1,973 | 2,106 | 7% |

E-Dialogue Details

| Raised By | Description | Status |
| Nick Rees | Reduce 100 Pax for Apr-2003 | Agreed by Murali and Updated in Database |

file:///C:/emirates/Rps04-05/review1.htm#   My Computer

Start   R..   M..   e..   In..   C   M..   Gr.   M..   N..   R..   M..   9:40 AM

**FIG. 51B**

Revenue Planning System - Microsoft Internet Explorer

File   Edit   View   Favorites   Tools   Help

Back   Forward   Stop   Refresh   Home   Search   Favorites   History   Mail   Print   Edit

Address  C:\emirates\Rps04-05\detailedPos.htm                     Go   Links »

**Detailed POS Report**

Region: Asia          Currency:  Local ○  AED ●          Revenue % 80

F   J   Y   TL

EUROPE & AMERICAS                     EMIRATES COMMERCIAL TARGET OUTSTATION REPORT (AREA SUMMARY)
                                      Actuals : 2002-2003 Budgets :2003-2004

| AreaName | | Total | | | April | | | May | | | J... |
|---|---|---|---|---|---|---|---|---|---|---|---|
| | | Actual | Target | Var | Actual | Target | Var | Actual | Target | Var | Actual |
| UNITED KING| Pax (Nos) | 742,700 | 916,115 | 23% | 54,876 | 66,757 | 22% | 45,508 | 60,207 | 32% | 44,333 |
| | Avg Fare | 267 | 270 | 1% | 277 | 287 | 4% | 253 | 260 | 3% | 235 |
| | Rev (GBP) | 198,350 | 247,257 | 25% | 15,225 | 19,170 | 26% | 11,518 | 15,678 | 36% | 10,420 |
| GERMANY | Pax (Nos) | 364,757 | 456,303 | 25% | 25,168 | 37,587 | 49% | 20,468 | 32,068 | 57% | 15,470 |
| | Avg Fare | 306 | 310 | 1% | 313 | 322 | 3% | 285 | 297 | 4% | 300 |
| | Rev (EUR) | 111,761 | 141,594 | 27% | 7,868 | 12,099 | 54% | 5,842 | 9,520 | 63% | 4,648 |
| FRANCE | Pax (Nos) | 94,972 | 131,143 | 38% | 6,750 | 12,163 | 80% | 6,849 | 10,321 | 51% | 5,469 |
| | Avg Fare | 361 | 360 | 0% | 357 | 351 | -2% | 328 | 337 | 3% | 353 |
| | Rev (EUR) | 34,260 | 47,171 | 38% | 2,411 | 4,275 | 77% | 2,243 | 3,475 | 55% | 1,932 |
| ITALY | Pax (Nos) | 96,687 | 98,737 | 2% | 7,764 | 8,566 | 10% | 6,179 | 7,059 | 14% | 5,735 |
| | Avg Fare | 341 | 346 | 1% | 335 | 345 | 3% | 333 | 344 | 3% | 322 |
| | Rev (EUR) | 32,966 | 34,187 | 4% | 2,600 | 2,953 | 14% | 2,056 | 2,425 | 18% | 1,845 |
| SWITZERLAN | Pax (Nos) | 77,894 | 86,920 | 12% | 6,889 | 8,207 | 19% | 5,734 | 7,184 | 25% | 3,841 |
| | Avg Fare | 534 | 543 | 2% | 525 | 543 | 3% | 477 | 505 | 6% | 468 |
| | Rev (CHF) | 41,579 | 47,167 | 13% | 3,613 | 4,460 | 23% | 2,735 | 3,625 | 33% | 1,798 |

Done                                                My Computer

Start   B...   M...   e...   In...   C)   M   Gi...   Mi...   h...   R...   M...        9:41 AM

**FIG. 52A**

Revenue Planning System - Microsoft Internet Explorer

File Edit View Favorites Tools Help

Back | Forward | Stop | Refresh | Home | Search | Favorites | History | Mail | Print | Edit

Address C:\emirates\Rps04-05\detailedPos.htm | Go | Links »

Currency: Local ○ AED ● | Revenue % 80 | Print report

Y TL

RICAS

## EMIRATES COMMERCIAL TARGET OUTSTATION REPORT (AREA SUMMARY)
### Actuals : 2002-2003 Budgets :2003-2004

| | Total | | | April | | | May | | | June | | |
|---|---|---|---|---|---|---|---|---|---|---|---|---|
| | Actual | Target | Var | Actual | Target | Var | Actual | Target | Var | Actual | Target | Var |
| ax (Nos) | 742,700 | 916,115 | 23% | 54,876 | 66,757 | 22% | 45,508 | 60,207 | 32% | 44,333 | 61,441 | 39% |
| vg Fare | 267 | 270 | 1% | 277 | 287 | 4% | 253 | 260 | 3% | 235 | 245 | 4% |
| ev (GBP) | 198,350 | 247,257 | 25% | 15,225 | 19,170 | 26% | 11,518 | 15,678 | 36% | 10,420 | 15,045 | 44% |
| ax (Nos) | 364,757 | 456,303 | 25% | 25,168 | 37,587 | 49% | 20,468 | 32,068 | 57% | 15,470 | 24,215 | 57% |
| vg Fare | 306 | 310 | 1% | 313 | 322 | 3% | 285 | 297 | 4% | 300 | 320 | 7% |
| ev (EUR) | 111,761 | 141,594 | 27% | 7,868 | 12,099 | 54% | 5,842 | 9,520 | 63% | 4,648 | 7,745 | 67% |
| ax (Nos) | 94,972 | 131,143 | 38% | 6,750 | 12,163 | 80% | 6,849 | 10,321 | 51% | 5,469 | 9,001 | 65% |
| vg Fare | 361 | 360 | 0% | 357 | 351 | -2% | 328 | 337 | 3% | 353 | 357 | 1% |
| ev (EUR) | 34,260 | 47,171 | 38% | 2,411 | 4,275 | 77% | 2,243 | 3,475 | 55% | 1,932 | 3,218 | 67% |
| ax (Nos) | 96,687 | 98,737 | 2% | 7,764 | 8,566 | 10% | 6,179 | 7,059 | 14% | 5,735 | 6,693 | 17% |
| vg Fare | 341 | 346 | 1% | 335 | 345 | 3% | 333 | 344 | 3% | 322 | 328 | 2% |
| ev (EUR) | 32,966 | 34,187 | 4% | 2,600 | 2,953 | 14% | 2,056 | 2,425 | 18% | 1,845 | 2,198 | 19% |
| ax (Nos) | 77,894 | 86,920 | 12% | 6,889 | 8,207 | 19% | 5,734 | 7,184 | 25% | 3,841 | 5,010 | 30% |
| vg Fare | 534 | 543 | 2% | 525 | 543 | 3% | 477 | 505 | 6% | 468 | 517 | 10% |
| ev (CHF) | 41,579 | 47,167 | 13% | 3,613 | 4,460 | 23% | 2,735 | 3,625 | 33% | 1,798 | 2,588 | 44% |

Done | My Computer

Start | 9:42 AM

## FIG. 52B

# O & D CAPACITY COMPARISON REPORT

Year Month : 200204    to 200303                    Orgn : LHR                Dstn : ALL                Comp :

| O&D | Cmp | 2002-03 | 2001-02 | VAR% | APR02 | APR01 | VAR% | MAY02 | MAY01 | VAR% | JUN02 | JUN01 | VAR% |
|---|---|---|---|---|---|---|---|---|---|---|---|---|---|
| LHRAHH | F | 5,814 | 5,904 | -2 | 540 | 486 | 11 | 558 | 522 | 7 | 450 | 522 | -14 |
| | J | 15,722 | 15,262 | 3 | 1,260 | 1,213 | 4 | 1,302 | 1,299 | | 1,295 | 1,141 | 13 |
| | Y | 72,485 | 71,870 | 1 | 5,490 | 5,815 | -6 | 5,673 | 5,863 | -3 | 6,095 | 5,737 | 6 |
| | TL | 94,021 | 93,036 | 1 | 7,290 | 7,514 | -3 | 7,533 | 7,684 | -2 | 7,840 | 7,400 | 6 |
| LHRAUH | F | 1,890 | 1,426 | 33 | 162 | 198 | -18 | 162 | 234 | -31 | 144 | 198 | -27 |
| | J | 6,568 | 3,748 | 75 | 574 | 543 | 6 | 623 | 578 | 8 | 532 | 434 | 23 |
| | Y | 33,645 | 18,380 | 83 | 2,863 | 2,602 | 10 | 3,167 | 2,631 | 20 | 2,680 | 2,454 | 9 |
| | TL | 42,103 | 23,554 | 79 | 3,599 | 3,343 | 8 | 3,952 | 3,443 | 15 | 3,356 | 3,086 | 9 |
| LHRBAH | F | 6,228 | 9,799 | -36 | 540 | 754 | -28 | 324 | 738 | -56 | 360 | 666 | -46 |
| | J | 32,441 | 15,235 | 113 | 2,698 | 1,627 | 66 | 2,812 | 2,105 | 34 | 2,753 | 2,002 | 38 |
| | Y | 182,503 | 133,389 | 37 | 14,610 | 11,715 | 25 | 16,458 | 13,333 | 23 | 15,767 | 12,756 | 24 |
| | TL | 221,172 | 158,423 | 40 | 17,848 | 14,096 | 27 | 19,594 | 16,176 | 21 | 18,880 | 15,424 | 22 |
| LHRBEY | F | 4,392 | 5,166 | -15 | 378 | 450 | -16 | 396 | 486 | -19 | 324 | 504 | -36 |
| | J | 15,787 | 15,200 | 4 | 1,323 | 1,165 | 14 | 1,365 | 1,293 | 6 | 1,344 | 1,239 | 8 |
| | Y | 80,058 | 74,319 | 8 | 6,579 | 5,656 | 16 | 6,762 | 6,031 | 12 | 6,942 | 5,827 | 19 |
| | TL | 100,237 | 94,685 | 6 | 8,280 | 7,271 | 14 | 8,523 | 7,810 | 9 | 8,610 | 7,570 | 14 |
| LHRBKK | F | | | | | | | | | | | | |
| | J | 21,707 | 18,174 | 19 | 1,470 | 1,470 | | 1,519 | 1,530 | -1 | 1,470 | 1,470 | |
| | Y | 164,237 | 141,922 | 16 | 11,550 | 11,550 | | 11,935 | 11,870 | 1 | 11,550 | 11,307 | 2 |
| | TL | 185,944 | 160,096 | 16 | 13,020 | 13,020 | | 13,454 | 13,400 | | 13,020 | 12,777 | 2 |

# FIG. 53

# SECTOR YIELD REPORT

EP 1 477 921 A1

Region: ALL

Area: ALL

Year Month from: Apr2002    To: Mar2003

Note: Revenue in Thousands/ Currency in RED

Comp: Y

Sector: ALL /ALL

| Sector | Totals | | | | Apr2002 | | May2002 | | Jun2002 | | Jul2002 | |
|--------|--------|--------|-----|-----|--------|--------|--------|--------|--------|--------|--------|--------|
| | Actual | Budget | Inc | | Actual | Budget | Actual | Budget | Actual | Budget | Actual | Budget |
| DXBDAC | 82,563 | 93,306 | 113 | Pax | 6,715 | 6,529 | 6,505 | 6,931 | 6,253 | 7,582 | 5,671 | 7,292 |
| | 527 | 521 | 99 | Yld | 534 | 530 | 520 | 512 | 514 | 505 | 524 | 517 |
| | 43,490 | 48,595 | 112 | Rev | 3,583 | 3,463 | 3,382 | 3,546 | 3,215 | 3,829 | 2,969 | 3,767 |
| DXBDAH | 30,282 | 45,807 | 151 | Pax | 2,152 | 2,922 | 2,796 | 4,303 | 3,113 | 5,088 | 3,652 | 5,924 |
| | 602 | 599 | 100 | Yld | 617 | 593 | 578 | 559 | 654 | 636 | 680 | 668 |
| | 18,231 | 27,428 | 150 | Rev | 1,327 | 1,732 | 1,617 | 2,407 | 2,035 | 3,238 | 2,484 | 3,960 |
| DXBDAR | 16,168 | 20,003 | 124 | Pax | 896 | 1,159 | 1,025 | 1,296 | 1,749 | 1,966 | 2,136 | 2,006 |
| | 689 | 679 | 99 | Yld | 765 | 718 | 760 | 713 | 669 | 645 | 624 | 643 |
| | 11,141 | 13,591 | 122 | Rev | 686 | 832 | 779 | 924 | 1,170 | 1,268 | 1,332 | 1,289 |
| DXBDEL | 61,651 | 64,938 | 105 | Pax | 4,558 | 5,508 | 4,154 | 5,231 | 4,678 | 5,779 | 5,321 | 5,558 |
| | 510 | 501 | 98 | Yld | 538 | 517 | 576 | 549 | 579 | 546 | 549 | 534 |
| | 31,462 | 32,559 | 103 | Rev | 2,452 | 2,846 | 2,393 | 2,872 | 2,711 | 3,156 | 2,923 | 2,967 |
| DXBDHA | 22,505 | 27,174 | 121 | Pax | 1,252 | 1,644 | 1,485 | 1,859 | 1,714 | 2,272 | 2,673 | 3,210 |
| | 267 | 239 | 90 | Yld | 281 | 263 | 249 | 244 | 253 | 242 | 247 | 240 |
| | 6,012 | 6,495 | 108 | Rev | 352 | 432 | 370 | 453 | 434 | 549 | 660 | 770 |
| DXBDOH | 84,108 | 104,665 | 124 | Pax | 5,778 | 7,545 | 5,801 | 7,572 | 6,228 | 8,165 | 7,016 | 8,963 |
| | 238 | 213 | 89 | Yld | 254 | 228 | 253 | 227 | 249 | 224 | 254 | 229 |
| | 20,057 | 22,303 | 111 | Rev | 1,466 | 1,721 | 1,465 | 1,720 | 1,551 | 1,830 | 1,780 | 2,048 |

## FIG. 54

**Revenue Planning System - Microsoft Internet Explorer**

File  Edit  View  Favorites  Tools  Help

Back | Forward | Stop | Refresh | Home | Search | Favorites | History | Mail | Print | Edit

Address: C:\emirates\Rps04-05\quicktargetreport.htm

**Quick Target Report**

Region: ALL    POS: ALL    YEAR MONTH: 200304    COMP: Y    OD: *LHR    Target Pass

| Point of Sale | O&D | Currency Code | Target Passengers | Target Fare Local Currency | Target Revenue Local Currency (000s) | Target Fare AED | Target Revenue AED (000s) |
|---|---|---|---|---|---|---|---|
| UNITED KINGDOM | DXBLHR | GBP | 4,579 | 174 | 796 | 973 | 4,453 |
| UNITED KINGDOM | MNLLHR | GBP | 1,358 | 233 | 317 | 1,306 | 1,773 |
| UNITED KINGDOM | BKKLHR | GBP | 1,338 | 215 | 288 | 1,204 | 1,610 |
| UNITED KINGDOM | MLELHR | GBP | 1,089 | 246 | 268 | 1,376 | 1,498 |
| UNITED KINGDOM | SYDLHR | GBP | 970 | 310 | 301 | 1,735 | 1,683 |
| UAE (DUBAI) | DXBLHR | AED | 877 | 1,610 | 1,412 | 1,610 | 1,412 |
| INDIA - HYDERABAD | HYDLHR | INR | 548 | 21,147 | 11,589 | 1,600 | 877 |
| UNITED KINGDOM | ISBLHR | GBP | 492 | 211 | 104 | 1,182 | 582 |
| UNITED KINGDOM | DELLHR | GBP | 485 | 213 | 103 | 1,193 | 579 |
| UNITED KINGDOM | HKGLHR | GBP | 478 | 210 | 101 | 1,177 | 562 |
| UNITED KINGDOM | MELLHR | GBP | 473 | 303 | 144 | 1,698 | 803 |

Jump to page: 1|2|3|4|5|   next >>

Query

Done    My Computer

Start | Gro... | Re... | Micr... | My... | (C) | emi... | Rps... | http... | IMA... | 10:46 AM

**FIG. 55**

## FIG. 56    POS REVENUE VARIANCE REPORT

EP 1 477 921 A1

region : ALL                                  Area :ALL                            Sort options :By Regionwise /TL Budget Revenue   Revenue in AED tho

| | | F | | | | | | J | | | | |
|---|---|---|---|---|---|---|---|---|---|---|---|---|---|
| | | Pax | | | Rev AED | | | Pax | | | Rev AED | |
| Region | Area | Act | Bud | Vari | Act | Bud | Vari | Act | Bud | Vari | Act | Bud |
| ENA | UK (SOUTHERN) | 4,222 | 6,599 | 56 | 20,471 | 31,468 | 54 | 39,789 | 50,151 | 26 | 151,201 | 184,232 |
| | GERMANY | 3,141 | 3,092 | -2 | 10,769 | 9,743 | -10 | 18,334 | 24,054 | 31 | 45,820 | 58,797 |
| | UK (NORTHERN) | 1,160 | 1,191 | 3 | 5,727 | 5,791 | 1 | 17,617 | 20,304 | 15 | 65,312 | 73,546 |
| | FRANCE | 657 | 937 | 43 | 2,423 | 2,663 | 10 | 4,440 | 6,387 | 44 | 13,954 | 18,398 |
| | ITALY | 167 | 248 | 49 | 363 | 344 | -5 | 5,644 | 6,705 | 19 | 13,130 | 15,430 |
| | SWITZERLAND | 895 | 1,085 | 21 | 2,998 | 3,487 | 16 | 6,956 | 8,682 | 25 | 17,453 | 21,624 |
| | USA (EASTERN) | 337 | 368 | 9 | 1,204 | 1,391 | 16 | 3,161 | 3,800 | 20 | 9,037 | 10,526 |
| | CANADA | 99 | 217 | 119 | 223 | 467 | 110 | 3,044 | 3,808 | 25 | 9,423 | 11,810 |
| | GREECE | 359 | 418 | 16 | 731 | 745 | 2 | 1,808 | 2,353 | 30 | 3,382 | 4,210 |
| | USA (SOUTHERN) | 213 | 228 | 7 | 1,009 | 1,167 | 16 | 1,410 | 1,709 | 21 | 5,066 | 6,098 |
| | USA (WESTERN) | 245 | 277 | 13 | 933 | 1,080 | 16 | 1,346 | 1,563 | 16 | 3,785 | 4,410 |

FIG. 57

EP 1 477 921 A1

EP 1 477 921 A1

132

**Revenue Planning System - Microsoft Internet Explorer**

File  Edit  View  Favorites  Tools  Help

Back  Forward  Stop  Refresh  Home  Search  Favorites  History  Mail  Print  Edit

Address: C:\emirates\Rps04-05\revvarmatdata.htm  Go  Links

## Variance Matrix

| AREA_NAME | Year Level | | | Actual | | | | | | | | Re-forecast | | | |
|---|---|---|---|---|---|---|---|---|---|---|---|---|---|---|---|
| | ACT REV | TGT REV | VAR% | Apr-02 | May-02 | Jun-02 | Jul-02 | Aug-02 | Sep-02 | Oct-02 | Nov-02 | Dec-02 | Jan-03 | Feb-03 | Mar-03 |
| UAE (DUBAI) | 438,102 | 486,243 | -10 | -13 | -12 | -9 | -10 | -9 | -6 | -3 | -13 | -17 | -13 | 0 | -18 |
| UAE (AUH) | 111,668 | 106,522 | 5 | -3 | 4 | -6 | -10 | 0 | -4 | 1 | 14 | 23 | 28 | 31 | 3 |
| UAE (SHJ) | 107,630 | 114,012 | -6 | -21 | -15 | -6 | -6 | -2 | -5 | 4 | -13 | -2 | 8 | 8 | -21 |

Graph

Done  My Computer

Start  9:46 AM

## FIG. 58

Route Wise Yield And Seat Factor Report

| | Revenue Planning System - Microsoft Internet Explorer |

File Edit View Favorites Tools Help

Back Forward Stop Refresh Home Search Favorites History Mail Print Edit

Address C:\emirates\Rps04-05\routeWiseYield.htm

**Route Wise Yield And Seat Factor Report**

F   J   Y   TL

Route Wise Yield and Seat Factor Report

| ROUTE | Actual Passengers | Budget Passengers | Var | Actual Revenue (000s) | Budget Revenue (000s) | Var | Actual RPKM (000s) | Budget RPKM (000s) | Var |
|---|---|---|---|---|---|---|---|---|---|
| DXBAMMDXB | 91,008 | 93,428 | 3% | 63,166 | 62,562 | -1% | 183,836 | 188,725 | 3% |
| DXBAUHAMMAUHDXB | 35,826 | 38,042 | 6% | 25,618 | 26,236 | 2% | 72,842 | 77,457 | 6% |
| DXBAUHBEYAUHDXB | 26,448 | 23,311 | -12% | 20,399 | 17,375 | -15% | 56,563 | 49,691 | -12% |
| DXBBAHDXB | 185,947 | 206,466 | 11% | 66,118 | 69,525 | 5% | 90,556 | 100,549 | 11% |
| DXBBEYDXB | 108,939 | 111,300 | 2% | 82,138 | 80,900 | -2% | 233,129 | 238,182 | 2% |
| DXBBHXDXB | 161,555 | 173,660 | 7% | 142,083 | 154,714 | 9% | 904,708 | 972,496 | 7% |
| DXBBKKDXB | 29,253 | 175,819 | 501% | 20,034 | 123,384 | 516% | 142,638 | 857,293 | 501% |
| DXBBKKHKGBKKDXB | 435,318 | 416,443 | -4% | 268,870 | 246,788 | -8% | 1,756,554 | 1,623,695 | -8% |
| DXBBOMDXB | 419,150 | 407,215 | -3% | 235,499 | 231,006 | -2% | 806,864 | 783,889 | -3% |
| DXBCAIDXB | 175,485 | 201,979 | 15% | 139,223 | 149,905 | 8% | 423,621 | 487,577 | 15% |

Done                                                    My Computer

Start

**FIG. 59A**

nd Seat Factor Report

**Route Wise Yield and Seat Factor Report**

| | Actual Passengers | Budget Passengers | Var | Actual Revenue (000s) | Budget Revenue (000s) | Var | Actual RPKM (000s) | Budget RPKM (000s) | Var | Actual ASKM (000s) | Budget ASKM (000s) |
|---|---|---|---|---|---|---|---|---|---|---|---|
| | 91,008 | 93,428 | 3% | 63,166 | 62,562 | -1% | 183,836 | 198,725 | 3% | 269,115 | 268. |
| HDXB | 35,826 | 38,042 | 6% | 25,618 | 26,236 | 2% | 72,842 | 77,457 | 6% | 116,078 | 119. |
| HDXB | 26,448 | 23,311 | -12% | 20,399 | 17,375 | -15% | 56,563 | 49,691 | -12% | 76,226 | 70. |
| | 185,947 | 206,466 | 11% | 66,118 | 69,525 | 5% | 90,556 | 100,549 | 11% | 202,088 | 187. |
| | 108,939 | 111,300 | 2% | 82,138 | 80,900 | -2% | 233,129 | 238,182 | 2% | 357,053 | 338. |
| | 161,555 | 173,660 | 7% | 142,083 | 154,714 | 9% | 904,708 | 972,496 | 7% | 1,169,991 | 1,168. |
| | 29,253 | 175,819 | 501% | 20,034 | 123,384 | 516% | 142,638 | 857,293 | 501% | 279,317 | 1,259. |
| KDXB | 435,318 | 416,443 | -4% | 268,870 | 246,788 | -8% | 1,756,554 | 1,623,695 | -8% | 2,073,303 | 2,084. |
| | 419,150 | 407,215 | -3% | 235,499 | 231,006 | -2% | 806,864 | 783,889 | -3% | 886,488 | 880. |
| | 175,485 | 201,979 | 15% | 139,223 | 149,905 | 8% | 423,621 | 487,577 | 15% | 484,596 | 560. |

**FIG. 59B**

EP 1 477 921 A1

Revenue Planning System - Microsoft Internet Explorer

File   Edit   View   Favorites   Tools   Help

Back   Forward   Stop   Refresh   Home   Search   Favorites   History   Mail   Print   Edit

Address   C:\emirates\Rps04-05\faredistribution.htm

**Frequency Distribution of Fares**

| FARES | PASSENGERS |
|---|---|
| 1 - 600 | 620 |
| 601- 800 | 729 |
| 801-1000 | 991 |
| 1001-1200 | 884 |
| 1201-1400 | 108 |
| 1401-1600 | 140 |
| 1601-1800 | 58 |
| 1801-2000 | 68 |

My Computer

Start ... 9:51 AM

**FIG. 60A**

FIG. 60B

**Revenue Planning System - Microsoft Internet Explorer**

File   Edit   View   Favorites   Tools   Help

Back   Forward   Stop   Refresh   Home   Search   Favorites   History   Mail   Print   Edit

Address   C:\emirates\Rps04-05\faredetails.htm

Details                    Point of Sale : UAE (DUBAI)          Compartment : Economy      Month :

| Measures | Economy Class Fare | | Normal Fare | | Special Fare | | Industry Rebate Fare | |
|---|---|---|---|---|---|---|---|---|
| | Actual | Target | Actual | Target | Actual | Target | Actual | Target |
| Passenger | 961 | 1,065 | 357 | 396 | 602 | 667 | 2 | 2 |
| Average Fare | 1,533 | 1,540 | 1,994 | 2,004 | 1,254 | 1,259 | 3,268 | 3,283 |
| Revenue | 1,473 | 1,640 | 712 | 793 | 755 | 840 | 7 | 7 |

Normal Fare Details          Special Fare Details          Industry Rebate Fare Details

Review Targets

My Computer

Start   Gr...   R...   M...   My...   (E)   em...   Rp...   ht...   M...   11:35 AM

**FIG. 61**

**Revenue Planning System - Microsoft Internet Explorer**

File   Edit   View   Favorites   Tools   Help

Back · Forward · Stop · Refresh · Home · Search · Favorites · History · Mail · Print · Edit

Address: file:///C:/emirates/Rps04-05/faredetails.htm#     Go   Links »

**Details**          **Point of Sale : UAE (DUBAI)          Compartment : Economy          Month:**

| Measures | Economy Class Fare | | Normal Fare | | Special Fare | | Industry Rebate Fare | |
|---|---|---|---|---|---|---|---|---|
| | Actual | Target | Actual | Target | Actual | Target | Actual | Target |
| Passenger | 961 | 1,065 | 357 | 396 | 602 | 667 | 2 | 2 |
| Average Fare | 1,533 | 1,540 | 1,994 | 2,004 | 1,254 | 1,259 | 3,268 | 3,283 |
| Revenue | 1,473 | 1,640 | 712 | 793 | 755 | 840 | 7 | 7 |

Normal Fare Details       Special Fare Details       Industry Rebate Fare Details

**Normal Fare Details**

| Measures | Normal Economy Fare | | Fare Types | | | | | | | |
| | | | Y | | Y2 | | YL | | YD | |
|---|---|---|---|---|---|---|---|---|---|---|
| | Actual | Target | Actual | Target | Actual | Target | Actual | Target | Actual | Target |
| Passenger | 357 | 396 | 340 | 377 | 3 | 3 | 12 | 13 | 2 | 2 |
| Average Fare | 1,994 | 2,004 | 1,983 | 1,993 | 2,415 | 2,427 | 2,249 | 2,260 | 1,137 | 1,142 |
| Revenue | 712 | 793 | 674 | 751 | 7 | 8 | 27 | 30 | 2 | 3 |

Review Targets

My Computer

Start   Gr...   R...   Mi...   My...   C:   em.   Rp...   htt   M...      11:35 AM

## FIG. 62

## Details　　　Point of Sale : UAE (DUBAI)　　Compartment : Economy　　Month :

| Measures | Economy Class Fare Actual | Target | Normal Fare Actual | Target | Special Fare Actual | Target | Industry Rebate Fare Actual | Target |
|---|---|---|---|---|---|---|---|---|
| Passenger | 961 | 1,065 | 357 | 396 | 602 | 667 | 2 | 2 |
| Average Fare | 1,533 | 1,540 | 1,994 | 2,004 | 1,254 | 1,259 | 3,268 | 3,283 |
| Revenue | 1,473 | 1,640 | 712 | 793 | 755 | 840 | 7 | 7 |

[Normal Fare Details] [Special Fare Details] [Industry Rebate Fare Details]

### Special Fare Details

| Measures | Normal Economy Fare Actual | Target | YE Actual | Target | YECH Actual | Target | YIT Actual | Target | YITCH Actual | Target | YOTHERS00 Actual | Target |
|---|---|---|---|---|---|---|---|---|---|---|---|---|
| Passenger | 602 | 667 | 340 | 377 | 14 | 16 | 81 | 90 | 2 | 2 | 35 | 39 |
| Average Fare | 1,254 | 1,259 | 1,983 | 1,991 | 1,132 | 1,137 | 919 | 923 | 450 | 452 | 0 | 0 |
| Revenue | 755 | 840 | 674 | 750 | 16 | 18 | 74 | 83 | 1 | 1 | 0 | 0 |

| Measures | YAP Actual | Target | YCH Actual | Target | YPEX Actual | Target | YSC Actual | Target | YAPCH Actual | Target |
|---|---|---|---|---|---|---|---|---|---|---|
| Passenger | 13 | 14 | 13 | 14 | 2 | 2 | 2 | 2 | 1 | 1 |
| Average Fare | 1,250 | 1,255 | 1,572 | 1,579 | 1,477 | 1,483 | 1,216 | 1,221 | 1,107 | 1,112 |
| Revenue | 16 | 18 | 20 | 23 | 3 | 3 | 2 | 3 | 1 | 1 |

[Review Targets]

My Computer

Start ... 11:36 AM

EP 1 477 921 A1

**FIG. 63**

FIG. 64A

```
┌──────────────────────┐
│  Identify Network Route │  6401
│       Demand           │
└──────────────────────┘
           │
           ▼
┌──────────────────────┐
│  Identify currency value │  6402
└──────────────────────┘
           │
           ▼
┌──────────────────────┐
│   Select value or volume │  6403
│     based strategy       │
└──────────────────────┘
           │
           ▼
┌──────────────────────┐
│    Select routes that    │  6404
│     account for X% of    │
│     network revenue      │
└──────────────────────┘
           │
           ▼
┌──────────────────────┐
│   Display routes of the  │  6405
│  network and color code  │
│    based on selected     │
│        strategy          │
└──────────────────────┘
        │         │
        ▼         ▼
┌──────────────┐   ┌──────────────────────┐
│ Display on map│   │ Display hub and spoke │
│     6406      │   │         6407          │
└──────────────┘   └──────────────────────┘
```

**FIG. 64B**

EP 1 477 921 A1

**FIG. 65A**

**Revenue Planning System - Microsoft Internet Explorer**

File  Edit  View  Favorites  Tools  Help

Back    Forward    Stop    Refresh    Home    Search    Favorites    History    Mail    Print    Edit

Address  C:\emirates\Rps04-05\monthlydistribution.htm    Go    Links

**MONTHLY DISTRIBUTION :**

⊙ Revenue    ● Leg Pax    ● Sector Avg Fare    ● Leg Seat Factor    ● Seat Factor    ● Yld Per RPKM

**MONTHLY DISTRIBUTION OF REVENUE**

| MONTH | Actual | Target | %Var |
|-------|--------|--------|------|
| Apr-03 | 432,709 | 592,272 | 37 |
| May-03 | 429,054 | 577,326 | 35 |
| Jun-03 | 453,749 | 599,238 | 32 |
| Jul-03 | 534,742 | 698,577 | 31 |
| Aug-03 | 558,003 | 715,086 | 28 |
| Sep-03 | 528,001 | 641,945 | 22 |
| Oct-03 | 560,386 | 633,947 | 13 |
| Nov-03 | 509,503 | 599,969 | 18 |
| Dec-03 | 553,622 | 638,183 | 15 |
| Jan-04 | 571,648 | 664,129 | 16 |
| Feb-04 | 519,647 | 612,115 | 18 |
| Mar-04 | 561,620 | 654,971 | 17 |
| Total | 6,212,684 | 7,627,758 | 23 |

MONTHLY DISTRIBUTION OF REVENUE

Start    My Computer    9:55 AM

**FIG. 65B**

**Revenue Planning System - Microsoft Internet Explorer**

File  Edit  View  Favorites  Tools  Help

Back    Forward    Stop    Refresh    Home    Search    Favorites    History    Mail    Print    Edit

Address  C:\emirates\Rps04-05\monthlydistribution.htm    Go   Links »

**MONTHLY DISTRIBUTION :**

● Revenue    ● Leg Pax    ● Sector Avg Fare    ● Leg Seat Factor    ● Seat Factor    ● Yld Per RPKM

**MONTHLY DISTRIBUTION OF LEG PAX**

| MONTH | Actual | Target | %Var |
|---|---|---|---|
| Apr-03 | 660,280 | 849,996 | 29 |
| May-03 | 684,732 | 871,978 | 27 |
| Jun-03 | 712,244 | 895,472 | 26 |
| Jul-03 | 830,741 | 1,023,476 | 23 |
| Aug-03 | 847,547 | 1,039,883 | 23 |
| Sep-03 | 791,017 | 943,860 | 19 |
| Oct-03 | 825,416 | 965,301 | 17 |
| Nov-03 | 758,310 | 907,322 | 20 |
| Dec-03 | 820,353 | 955,095 | 16 |
| Jan-04 | 842,187 | 985,379 | 17 |
| Feb-04 | 783,868 | 930,477 | 19 |
| Mar-04 | 838,853 | 981,348 | 17 |
| TOTAL | 9,395,548 | 11,349,587 | 21 |

My Computer

Start    9:56 AM

**FIG. 65C**

**FIG. 65D**

MONTHLY DISTRIBUTION OF LEG SEAT FACTOR

| Month | Actual Seat Factor % | Target Seat Factor % | Variance |
|-------|---------------------|---------------------|----------|
| APR | 69 | 71 | 2 |
| MAY | 66 | 69 | 3 |
| JUN | 71 | 73 | 2 |
| JUL | 78 | 78 | 0 |
| AUG | 78 | 78 | 0 |
| SEP | 70 | 72 | 2 |
| OCT | 68 | 72 | 4 |
| NOV | 68 | 70 | 2 |
| DEC | 71 | 72 | 1 |
| JAN | 73 | 74 | 1 |
| FEB | 75 | 75 | 0 |
| MAR | 72 | 74 | 2 |
| TOTAL | 72 | 73 | 1 |

**FIG. 65E**

**FIG. 65F**

FIG. 65G

EP 1 477 921 A1

**FIG. 66**

**POS Summary Report**

Region

Point of Sale

Preview    Generate to Excel    Clear    Exit

**FIG. 67**

**Revenue Planning System - Microsoft Internet Explorer**

File   Edit   View   Favorites   Tools   Help

Back    Forward    Stop    Refresh    Home    Search    Favorites    History    Mail    Print    Edit

Address  file:///C:/emirates/Rps04-05/connectionreport.htm#     Go   Links

onnection Report

Station LHR ▾    Flight 2 ▾    Region Asia ▾         Inbound ●    Outbound ●

INBOUND    OUTBOUND

| | | | | | EMIRATES OUTBOUND CONNECTION AT DXB | | | | | | | | |
|---|---|---|---|---|---|---|---|---|---|---|---|---|---|---|
| | | | | | Conn. Flight | | | DOW(CONN.TIME) | | | | | | |
| Carr | Fltno | Dep | Orgn | Arr | Carr | Fltno | Dstn | Mon | Tue | Wed | Thu | Fri | Sat | Sun |
| EK | 501 | 04:30 | BOM | 06:00 | EK | 001 | LHR | 01:45 | 01:45 | 01:45 | 01:45 | 01:45 | 01:45 | 01:45 |
| | | | | | EK | 003 | LHR | 08:45 | 08:45 | 08:45 | 08:45 | 08:45 | 08:45 | 08:45 |
| | | | | | EK | 015 | LGW | 02:05 | 02:05 | 02:05 | 02:05 | 02:05 | 02:05 | 02:05 |
| | | | | | EK | 017 | MAN | 01:35 | 01:35 | 01:35 | 01:35 | 01:35 | 01:35 | 01:35 |
| | | | | | EK | 019 | MAN | 09:20 | 09:20 | 09:20 | 09:20 | 09:20 | 09:20 | 09:20 |
| | | | | | EK | 039 | BHX | 01:50 | 01:50 | 01:50 | 01:50 | 01:50 | 01:50 | 01:50 |
| | | | | | EK | 043 | FRA | 08:00 | 08:00 | 08:00 | 08:00 | 08:00 | 08:00 | 08:00 |
| | | | | | EK | 045 | FRA | 02:25 | 02:25 | 02:25 | 02:25 | 02:25 | 02:25 | 02:25 |
| | | | | | EK | 051 | MUC | 02:05 | 02:05 | 02:05 | 02:05 | 02:05 | 02:05 | 02:05 |
| | | | | | EK | 053 | MUC | 09:55 | 09:55 | 09:55 | 09:55 | 09:55 | 09:55 | 09:55 |
| | | | | | EK | 055 | DUS | 02:50 | 02:50 | 02:50 | 02:50 | 02:50 | 02:50 | 02:50 |
| | | | | | EK | 073 | CDG | 02:00 | 02:00 | 02:00 | 02:00 | 02:00 | 02:00 | 02:00 |
| | | | | | EK | 075 | CDG | 09:30 | 09:30 | | 09:30 | 09:30 | | |
| | | | | | EK | 089 | ZRH | 02:45 | 02:45 | 02:45 | 02:45 | 02:45 | 02:45 | 02:45 |
| | | | | | EK | 095 | FCO | 01:20 | | | | 01:20 | | 01:20 |
| | | | | | EK | 095 | NCE | 01:20 | | | | 01:20 | | 01:20 |

My Computer

Start         1:28 PM

**FIG. 68**

**Revenue Planning System - Microsoft Internet Explorer**

File   Edit   View   Favorites   Tools   Help

Back   Forward   Stop   Refresh   Home   Search   Favorites   History   Mail   Print   Edit

Address  C:\emirates\Rps04-05\StationSummary.htm     Go   Links »

## Station Summary

### Overview

The revenue target for 2003-04 when compared to 2002-03 is up by 25%, passenger numbers are up by 23% and average fare is up by 1%.

The class-wise growth is as follows

|  | F | J | Y |
|---|---|---|---|
| Revenue | 29% | 31% | 22% |
| Passengers | 25% | 31% | 23% |
| Average Fare | 3% | 0% | 0% |

### Region Objectives

- Improve First Class traffic by 31%
- Improve Business Class traffic by 32%
- Improve traffic to Gulf and ME by 21%

### Ek Objectives

- Improve First class traffic by 31 %
- Improve Business class traffic by 32 %
- Improve traffic to Gulf and ME by 21 %

### Station Objectives

**Core Markets**
SYD, BKK, MLE, MNL, PER

**Highlights**
- LHR-DXB revenue target is up by 14 % & avg fare is down by 5 %
- LGW-DXB revenue target is up by 22 % & avg fare is down by 2 %
- LHR-SYD revenue target is up by 47 % & avg fare is down by 1 %
- MAN-DXB revenue target is up by 28 % & avg fare is up by 1 %
- MAN-BKK revenue target is up by 55 % & avg fare is up by 1 %
- LHR-MNL revenue target is up by 11 % & avg fare is up by 1 %
- LHR-PER revenue target is up by 68 % & avg fare is at par
- LGWDXBLGW-Capacity increased by 13%
- LHRDXBLHR-Capacity increased by 12%
- MANDXBMAN -Capacity increased by 82%

**New Markets**
KIX, PVG, ISB, JNB, KUL

### Notes

- Core Market - Maintain average fare as per Revenue Plan.
- New Markets - Where incremental revenue can be generated.
- Revenue and average fare variation based on local currency.

Done                                    My Computer

Start  Gro...  Re...  Micr...  My...  (C:)  emir...  Rps...  http...  MA...   10:53 AM

## FIG. 69

## COREMARKET STRATEGY

UAE (DUBAI)

| OD PAIR | Apr-02 | May-02 | Jun-02 | Jul-02 | Aug-02 | Sep-02 | Oct-02 | Nov-02 | Dec-02 |
|---|---|---|---|---|---|---|---|---|---|
| AMMDXB | VOLUME | VOLUME | VOLUME | VOLUME | VALUE | VOLUME | VOLUME | VOLUME | VOLUME |
| BEYDXB | VOLUME | VOLUME | VOLUME | VOLUME | VALUE | VOLUME | VOLUME | VOLUME | VOLUME |
| BOMDXB | VOLUME | VOLUME | VOLUME | VOLUME | VALUE | VOLUME | VOLUME | VOLUME | VOLUME |
| CAIDXB | VOLUME | VOLUME | VOLUME | VOLUME | VALUE | VOLUME | VOLUME | VOLUME | VOLUME |
| DELDXB | VOLUME | VOLUME | VALUE | VOLUME | VALUE | VOLUME | VOLUME | VOLUME | VALUE |
| DXBAMM | VOLUME | VOLUME | VOLUME | VALUE | VOLUME | VOLUME | VOLUM E | VOLUME | VOLUME |
| DXBBAH | VOLUME | VOLUME | VOLUME | VOLUME | VOLUME | VOLUME | VOLUME | VOLUME | VOLUME |
| DXBBEY | VOLUME | VOLUME | VALUE | VALUE | VOLUME | VOLUME | VOLUME | VOLUME | VOLUME |

**FIG. 70**

ROUTE DEMAND FOR APRIL

INTO DUBAI

Legend

| | | |
|---|---|---|
| High Demand Route | (Seat Factor > 85%) | |
| Medium Demand Route | (Seat Factor 75 -85%) | |
| Low Demand Route | (Seat Factor <75%) | |

FIG. 71

EP 1 477 921 A1

EP 1 477 921 A1

FIG. 72

155

EP 1 477 921 A1

**ROUTE DEMAND REPORT**

| ORGN | DSTN | Apr-2003 | May-2003 | Jun-2003 | Jul-2003 | Aug-2003 | Sep-2003 | Oct-2003 | Nov-2003 | Dec-2003 |
|------|------|----------|----------|----------|----------|----------|----------|----------|----------|----------|
| AMM | AUH | | | | | | | | | |
| AMM | DXB | | | | | | | | | |
| ATH | DXB | | | | | | | | | |
| AUH | AMM | | | | | | | | | |
| AUH | BEY | | | | | | | | | |
| AUH | DXB | | | | | | | | | |
| BAH | DXB | | | | | | | | | |
| BEY | AUH | | | | | | | | | |
| BEY | DXB | | | | | | | | | |
| BHX | DXB | | | | | | | | | |
| BKK | DXB | | | | | | | | | |
| BKK | HKG | | | | | | | | | |

High Demand    Medium Demand    Low Demand

**FIG. 73**

EP 1 477 921 A1

**Revenue Planning System - Microsoft Internet Explorer**

File Edit View Favorites Tools Help

Back Forward Stop Refresh Home Search Favorites History Mail Print Edit

Address C:\emirates\Rps04-05\connectionreport.htm | Go | Links

**Connection Report**

Station LHR   Flight 2   Region Asia   Inbound ○   Outbound ●

INBOUND   OUTBOUND

| EMIRATES INBOUND CONNECTION AT DXB | | | | | | | | | | | | | | |
| Main flight | | | | | Conn. Flight | | | DOW(CONN.TIME) | | | | | | |
| Carr | Fltno | Dep | Dstn | Arr | Carr | Fltno | Orgn | Mon | Tue | Wed | Thu | Fri | Sat | Sun |
|---|---|---|---|---|---|---|---|---|---|---|---|---|---|---|
| EK | 500 | 22:30 | BOM | 02:45 | EK | 012 | LGW | 01:40 | 01:40 | 01:40 | 01:40 | 01:40 | 01:40 | 01:40 |
| | | | | | EK | 826 | DMM | 02:20 | | 02:20 | | | | |
| | | | | | EK | 834 | BAH | | | 02:30 | | | | |
| | | | | | EK | 842 | DOH | 09:55 | 09:55 | 09:55 | 09:55 | 09:55 | 09:55 | 09:55 |
| | | | | | EK | 844 | DOH | 05:30 | 05:30 | 05:30 | 05:30 | 02:55 | 05:30 | 05:30 |
| | | | | | EK | 858 | KWI | 01:50 | 01:50 | 01:50 | 01:50 | 01:50 | 01:50 | 01:50 |
| | | | | | EK | 904 | AMM | 01:15 | 01:15 | 07:00 | 01:15 | 01:15 | 01:15 | 07:00 |
| | | | | | EK | 904 | AUH | | | 07:00 | | | | 07:00 |
| | | | | | EK | 912 | DAM | | | | | 07:40 | | 07:40 |
| | | | | | EK | 956 | AUH | | 05:15 | | | | | |
| | | | | | EK | 956 | BEY | | 05:15 | | | 06:45 | | 06:45 |
| | | | | | EK | 972 | THR | 09:00 | | 09:00 | 09:00 | 09:00 | 09:00 | |
| | | | | | | | | | | | | | | |
| EK | 502 | 13:30 | BOM | 17:45 | EK | 004 | LHR | 06:45 | 06:45 | 06:45 | 06:45 | 06:45 | 06:45 | 06:45 |
| | | | | | EK | 006 | LHR | 04:25 | 04:25 | 04:25 | 04:25 | 04:25 | 04:25 | 04:25 |
| | | | | | EK | 020 | MAN | 05:40 | 05:40 | 05:40 | 05:40 | 05:40 | 05:40 | 05:40 |

Done | My Computer

Start ... 11:23 AM

**FIG. 74**

Yield Management
4502

Area of Sale

Area of Sale
206

Optimization Process
105

Area of Sale
206

Area of Sale
206

FIG. 75

EP 1 477 921 A1

**European Patent Office**

## DECLARATION

which under Rule 45 of the European Patent Convention shall be considered, for the purposes of subsequent proceedings, as the European search report

**Application Number**

EP 04 25 2847

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 31 August 2004 | Beatty, J |

EPO FORM 1504 (P04C37)